(19)

Europäisches Patentamt

European Patent Office

Office européen des brevets

(11) **EP 4 026 472 A1**

(12) **EUROPEAN PATENT APPLICATION**
published in accordance with Art. 153(4) EPC

(43) Date of publication:
**13.07.2022 Bulletin 2022/28**

(21) Application number: **20860446.2**

(22) Date of filing: **06.07.2020**

(51) International Patent Classification (IPC):
*A47L 11/28* (2006.01)          *B08B 1/00* (2006.01)
*G01N 21/27* (2006.01)          *G10L 15/22* (2006.01)

(52) Cooperative Patent Classification (CPC):
**A47L 11/28; B08B 1/00; G01N 21/27; G10L 15/22**

(86) International application number:
**PCT/CN2020/100471**

(87) International publication number:
**WO 2021/042861 (11.03.2021 Gazette 2021/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 04.09.2019  CN 201910831810
        11.09.2019  CN 201910859927
        09.10.2019  CN 201910955698
        29.11.2019  CN 201911205337
        18.12.2019  CN 201911310419
        24.12.2019  CN 201911348104

(71) Applicant: **Tineco Intelligent Technology Co., Ltd.**
**Suzhou, Jiangsu 215168 (CN)**

(72) Inventors:
• **ZHOU, Dehua**
  **Suzhou, Jiangsu 215168 (CN)**
• **LI, Anbo**
  **Suzhou, Jiangsu 215168 (CN)**

• **CHEN, Zhen**
  **Suzhou, Jiangsu 215168 (CN)**
• **ZHOU, Chunfeng**
  **Suzhou, Jiangsu 215168 (CN)**
• **SUN, Jian**
  **Suzhou, Jiangsu 215168 (CN)**
• **JIANG, Hongbin**
  **Suzhou, Jiangsu 215168 (CN)**
• **ZHANG, Hong**
  **Suzhou, Jiangsu 215168 (CN)**
• **HUANG, Jian**
  **Suzhou, Jiangsu 215168 (CN)**
• **LI, Chencheng**
  **Suzhou, Jiangsu 215168 (CN)**
• **LIU, Yonghai**
  **Suzhou, Jiangsu 215168 (CN)**

(74) Representative: **Viering, Jentschura & Partner
mbB**
**Patent- und Rechtsanwälte
Am Brauhaus 8
01099 Dresden (DE)**

(54) **CLEANING MACHINE, CLEANING DEVICE, CONTROL METHOD THEREFOR, INFORMATION
DISPLAY METHOD, AND STORAGE MEDIUM**

(57)      Provided are a cleaning machine, a cleaning device, an information display method thereof, and a storage medium. A display is additionally arranged on a main body of the cleaning machine to display working state information of at least one component on the cleaning machine, thereby visually displaying a working state of the cleaning machine. A user may know about a working state of a component on the cleaning machine visually, which contributes to improving user experiences.

FIG. 1a

EP 4 026 472 A1

**Description**

**CROSS-REFERENCE TO RELATED APPLICATIOS**

The present disclosure claims priority to Chinese Patent Disclosure No. 2019108318104, filed on September 4, 2019, and entitled "Cleaning Device, Control Method Thereof, and Storage Medium", Chinese Patent Disclosure No. 2019108599273, filed on September 11, 2019, and entitled "Cleanliness Detection Method, Cleaning Device, and Storage Medium", Chinese Patent Disclosure No. 2019109556985, filed on October 9, 2019, and entitled "Cleaning Machine, Cleaning Device, Information Display Method Thereof, and Storage Medium", Chinese Patent Disclosure No. 2019112053375, filed on November 29, 2019, and entitled "Voice Interaction Method for Cleaning Device, and Cleaning Device", Chinese Patent Disclosure No. 2019113104196, filed on December 18, 2019, and entitled "Cleaning Device, Control Method for Cleaning Device, and Storage Medium", and Chinese Patent Disclosure No. 2019113481040, filed on December 24, 2019, and entitled "Operation Method and Movable Device", which are hereby incorporated by reference in their entirety.

**FIELD**

The present disclosure relates to the technical field of cleaning machines, and particularly to a cleaning machine, a cleaning device, control and information display methods thereof, and a storage medium.

**BACKGROUND**

At present, cleaning devices have been applied extensively to people's daily life. Users may use cleaning devices with different functions to complete corresponding cleaning operations. For example, a sweeping robot is used to clean a ground, a window cleaning robot is used to clean a wall, and a floor cleaning machine is used to clean a ground.
However, a state of the existing cleaning device may not be presented visually, and thus user experiences are not so good.

**SUMMARY**

Many aspects of the present disclosure provide a cleaning machine, a cleaning device, an information display method thereof, and a storage medium, so as to visually display a working state of a cleaning device and further help to improve user experiences.
An embodiment of the present disclosure provides a cleaning machine, which includes a handle assembly, a main body, a cleaning assembly, a processing system, and a display arranged on the main body. The display is electrically connected with the processing system, and is configured to display working state information of at least one component provided with the cleaning machine.
The embodiment of the present disclosure also provides a cleaning device, which includes a main body and a display arranged on the main body. The display is electrically connected with a processing system, and is configured to display related state information of the cleaning device during use. The related state information of the cleaning device during use includes at least one of:

(1) capacity information of a recycling tank;
(2) liquid level information of a solution tank;
(3) cleanliness information of a cleaning object achieved by a cleaning assembly;
(4) electric power information of a power supply unit;
(5) self-cleaning information of the cleaning device;
(6) power information of a main motor;
(7) blocking information of the cleaning assembly; and
(8) working state information of a communication assembly.

The embodiment of the present disclosure also provides an information display method, which includes:

acquiring working state information of at least one component on a cleaning device; and
displaying the working state information of the at least one component on a display.

The working state information of the at least one component includes at least one of:

(1) capacity information of a recycling tank;
(2) liquid level information of a solution tank;
(3) cleanliness information of a cleaning object achieved by a cleaning assembly;
(4) electric power information of a power supply unit;
(5) self-cleaning information of the cleaning device;
(6) power information of a main motor;
(7) blocking information of the cleaning assembly; and
(8) working state information of a communication assembly.

The embodiment of the present disclosure also provides a computer-readable storage medium storing a computer instruction. When the computer instruction is executed by one or more processors, the one or more processors are caused to execute the steps in the above-mentioned method.

In the embodiment of the present disclosure, the display is additionally arranged on the main body of the cleaning machine to display the working state information of the at least one component on the cleaning machine, thereby visually displaying a working state of the cleaning machine. A user may know about a working state of a component on the cleaning machine visually, which contributes to improving user experiences.

At present, cleaning devices have been applied extensively to people's daily life. Users may use cleaning devices with different functions to complete different cleaning operations. For example, a floor cleaning machine is used to clean a ground. A window cleaning device is used to clean glass.

Under a normal condition, a water storage tank such as a solution tank or a recycling tank is arranged on a cleaning device. When the cleaning device is used, a liquid level condition of the water storage tank may be monitored to detect a using state of the cleaning device.

In a conventional art, a liquid level in a water storage tank is usually monitored based on a buoyancy of liquid to a mechanical float. However, such a mechanical-float-based solution is easily affected by the stability of a liquid surface, and thus a liquid level detection result is not so reliable.

Many aspects of the present disclosure provide a cleaning device, a control method thereof, and a storage medium, so as to improve the liquid level detection reliability.

An embodiment of the present disclosure provides a cleaning device, which includes a liquid storage apparatus, a non-contact liquid detection apparatus, and a control apparatus. The non-contact liquid detection apparatus is arranged at an outer side of the liquid storage apparatus, and is configured to detect liquid level information of liquid in the liquid storage apparatus. The control apparatus is electrically connected with the non-contact liquid detection apparatus, and is configured to calculate a liquid storage state of the liquid storage apparatus according to the liquid level information and output a control instruction corresponding to the liquid storage state.

The embodiment of the present disclosure also provides a control method for a cleaning device, which includes: detecting liquid level information of liquid in a liquid storage apparatus through a non-contact liquid detection apparatus arranged at an outer side of the liquid storage apparatus; calculating a liquid storage state of the liquid storage apparatus according to the liquid level information; and outputting a control instruction corresponding to the liquid storage state.

The embodiment of the present disclosure also provides a computer-readable storage medium storing a computer program. When the computer program is executed, the steps in the control method for the cleaning device in the embodiments of the present disclosure may be implemented.

In the embodiment of the present disclosure, the non-contact liquid detection apparatus is arranged at the outer side of the liquid storage apparatus of the cleaning device. The liquid level information in the liquid storage apparatus is detected by the non-contact liquid detection apparatus. The non-contact liquid detection apparatus may implement liquid level detection without contacting with the liquid. Therefore, the influence of instability of a liquid surface on a liquid level detection result is reduced effectively, which contributes to improving the reliability of the liquid level detection result.

At present, cleaning devices have been applied extensively to people's daily life. Users may use cleaning devices with different functions to complete different cleaning operations. For example, a floor cleaning machine is used to clean a ground. A window cleaning device is used to clean glass.

Under a normal condition, a water storage tank such as a clean water tank, a cleaning agent tank or a mixture tank of clean water and a cleaning agent is arranged on a cleaning device. When the cleaning device is used, a liquid level condition of the water storage tank may be monitored to monitor a using state of the cleaning device, e.g., a water-filled or water-free state of the water storage tank.

It has been found by creative efforts of the inventor that a purpose of water-free detection is achieved in a related art by placing a detection module at a bottom or wall of a water storage tank and directly monitoring a water volume in the water storage tank. However, a size and arrangement position of the detection module are limited, while the water storage tank has a relatively large volume, so that using only one detection module may cause the mistaken transmission of information. For example, when a machine works, the machine is not in an upright state, and a liquid surface may fluctuate greatly. Due to the instable liquid surface, there may be no water in a detection range of the detection module, but there is water in the water storage tank in fact. As a result, the water-free detection apparatus makes misidentification.

In view of the above problem, the present disclosure discloses a cleaning device, a control method for a cleaning device, and a storage medium, to solve the above problem or at least partially solve the above problem.

A first aspect of an embodiment of the present disclosure provides a cleaning device, which includes:

a liquid storage apparatus;
a liquid spraying apparatus;
a liquid flow passage, connected between the liquid storage apparatus and the liquid spraying apparatus; and
a detection module, arranged at the liquid flow passage and configured to detect liquid in the liquid flow passage so as to determine whether the liquid flow passage is in a water-filled state or water-free state.

Further, a detection cavity is formed in the liquid flow passage. The detection module is arranged at the detection cavity.

Further, a cross-sectional area of the detection cavity is smaller than that at another position on the liquid flow passage.

Further, the detection module is arranged on a side wall or bottom wall of the detection cavity.

Further, the detection cavity includes a straight cavity. And/or, the detection cavity includes a curved cavity curved in a liquid flow direction.

Further, a thickness of the detection cavity ranges from 1 mm to 1.5 mm. A length of the detection cavity ranges from 15 mm to 25 mm. A width of the detection cavity ranges from 5 mm to 15 mm.

Further, a water pipe is arranged between the liquid storage apparatus and the liquid spraying apparatus. An inner cavity of the water pipe is communicated with that of the detection cavity to form the liquid flow passage.

Further, the detection cavity includes a water inlet end, a main portion, and a water outlet end.

A cross-sectional area of the water inlet end gradually decreases from a direction away from the main portion to a direction close to the main portion. A cross-sectional area of the water outlet end gradually increases from the direction close to the main portion to the direction away from the main portion.

Further, a first water outlet, a second water outlet and a third water outlet are formed in a bottom of the liquid storage apparatus. The second water outlet is located in the middle of the bottom of the liquid storage apparatus. The first water outlet and the third water outlet are located at front and rear sides of the second water outlet respectively.

Further, the cleaning device further includes a control element. The detection module is electrically connected with the control element.

The control element is configured to correspondingly control the cleaning device according to state information detected by the detection module, the state information including the water-filled state and the water-free state.

Further, the control element includes a circuit board. An opening is formed in a side portion of the detection cavity. A side cover is arranged at the opening. One side of the side cover is detachably connected with an open end of the detection cavity in a sealing manner. An accommodating space for accommodating the circuit board is formed at the other side of the side cover.

Further, the cleaning device further includes an alarming apparatus, electrically connected with the control element.

The control element controls the alarming apparatus to send an alarming signal when the liquid flow passage is in the water-free state.

Further, the detection module includes a liquid level detection sensor.

Further, the detection module is a contact liquid level detection sensor. The contact liquid level detection sensor includes a sensing electrode. The sensing electrode extends into the liquid flow passage, and is configured to contact with the liquid in the liquid flow passage.

Optionally, the detection module is a non-contact liquid level sensor. The non-contact liquid level sensor is arranged on an outer wall of the liquid flow passage.

A second aspect of the embodiment of the present disclosure provides a control method for a cleaning device. The cleaning device includes a liquid storage apparatus, a liquid spraying apparatus, a liquid flow passage connected between the liquid storage apparatus and the liquid spraying apparatus, a detection module, and a control element. The method includes:

acquiring, by the control element, state information of the liquid flow passage detected by the water-free detection module arranged at the liquid flow passage, the state information including a water-filled state and a water-free state; and
correspondingly controlling, by the control element, the cleaning device according to the state information.

Further, the correspondingly controlling, by the control element, the cleaning device according to the state information includes:

controlling, by the control element, an alarming apparatus to alarm when the state information is the water-free state; and/or, controlling the cleaning device to be turned off when the state information is the water-free state.

A third aspect of the embodiment of the present disclosure provides a computer-readable storage medium storing a computer program. When the computer program is executed, the steps in the above-mentioned method may be implemented. According to the technical solutions provided in the embodiment of the present disclosure, the detection module is arranged at the liquid flow passage between the liquid storage apparatus and the liquid spraying apparatus. Whether there is water in the liquid flow passage is detected by the detection module to further judge whether a water volume in the liquid storage apparatus may meet a spraying requirement. The cross-sectional area of the liquid flow passage is smaller than that of the liquid storage apparatus. Therefore, the liquid in the liquid flow passage may cover a detection module of the detection module even when the machine is inclined or topples, whether the liquid in the liquid storage apparatus is enough for the liquid spraying apparatus to spray may be reflected reliably, and a user may reliably judge whether liquid needs to be added into the liquid storage apparatus of the cleaning device.

In practical applications, a user needs to observe the cleanliness of a cleaning tool with naked eyes to judge whether a cleaning object is cleaned completely. Alternatively, a user observes the cleanliness of a cleaning object with naked eyes. Any one of the observation methods is relatively time-consuming and labor-consuming.

Many aspects of the present disclosure provide a cleanliness detection method, a cleaning device, and a storage medium, so as to automatically detect cleanliness of a cleaning object to help to improve user experiences.

An embodiment of the present disclosure provides a cleaning device, including a floor brush, a suction passage and a recycling tank, which are sequentially connected. Dirty liquid on a cleaning object is sucked by a suction nozzle on the floor brush and delivered into the recycling tank through the suction passage.

The cleaning device further includes a processing system and a first detector. The first detector is partially or completely arranged on a circulation path of the dirty liquid, and is configured to detect and provide a physical property value of the dirty liquid for the processing system. The processing system is configured to determine cleanliness of the cleaning object according to the physical property value.

The embodiment of the present disclosure also provides a cleanliness detection method, which is applied to a cleaning device and includes:

receiving a physical property value, provided by a first detector, of dirty liquid on a cleaning object; and determining cleanliness of the cleaning object according to the physical property value of the dirty liquid.

The dirty liquid is sucked by a suction nozzle on a floor brush of the cleaning device and delivered into a recycling tank of the cleaning device through a suction passage in the cleaning device. The first detector is partially or completely arranged on a circulation path of the dirty liquid.

The embodiment of the present disclosure also provides a computer-readable storage medium storing a computer instruction. When the computer instruction is executed by one or more processors, the one or more processors are caused to execute the steps in the cleanliness detection method.

In the embodiment of the present disclosure, the detector capable of detecting the physical property value of the dirty liquid on the cleaning object is additionally arranged on the cleaning device. That is, the detector is partially or completely arranged on the circulation path of the dirty liquid. Then, the processing system may determine the cleanliness of the cleaning object according to the physical property value of the dirty liquid detected by the detector. As such, the cleanliness of the cleaning object may be detected independently, and whether the cleaning object is clean needs not to be determined manually. Therefore, the improvement of user experiences is facilitated.

Many aspects of the present disclosure provide an operation method and a movable device, so as to reduce liquid residuals on a target object to further help to improve user experiences.

An embodiment of the present disclosure provides an operation method, which is applied to a movable device. The movable device includes a fluid supply apparatus for spraying first liquid out and a recycling apparatus responsible for recycling second liquid produced by the first liquid. The method includes:

responsive to an instruction of instructing the movable device to stop operation, controlling the fluid supply apparatus to stop spraying the first liquid to a target object, controlling the recycling apparatus to continue recycling the second liquid on the target object, and controlling the recycling apparatus to stop recycling the second liquid on the target object when a set condition is satisfied.

The embodiment of the present disclosure also provides an operation method, which is applied to a movable device. The movable device includes a fluid supply apparatus for spraying first liquid out and a recycling apparatus responsible for recycling second liquid produced by the first liquid. The method includes:

responsive to an instruction of instructing the movable device to stop operation, controlling the fluid supply apparatus to continue spraying the first liquid to a target object according to a reduced spraying amount, controlling the recycling apparatus to continue recycling the second liquid on the target object, and controlling the fluid supply apparatus and the recycling apparatus to stop operation at the same time when a set condition is satisfied.

The embodiment of the present disclosure also provides a movable device, which includes: a fluid supply apparatus for spraying first liquid out, a recycling apparatus responsible for recycling second liquid produced by the first liquid, and a control system. The control system is electrically connected with the fluid supply apparatus and the recycling apparatus.

The control system is configured to, responsive to an instruction of instructing the movable device to stop operation, control the fluid supply apparatus to stop spraying the first liquid to a target object, control the recycling apparatus to continue recycling the second liquid on the target object, and control the recycling apparatus to stop recycling the second liquid on the target object when a set condition is satisfied.

The embodiment of the present disclosure also provides a movable device, which includes: a fluid supply apparatus for spraying first liquid out, a recycling apparatus responsible for recycling second liquid produced by the first liquid, and a control system. The control system is electrically connected with the fluid supply apparatus and the recycling apparatus.

The control system is configured to, responsive to an instruction of instructing the movable device to stop operation, control the fluid supply apparatus to continue spraying the first liquid to a target object according to a reduced spraying amount, control the recycling apparatus to continue recycling the second liquid on the target object, and control the fluid supply apparatus and the recycling apparatus to stop operation at the same time when a set condition is satisfied.

In the embodiment of the present disclosure, the movable device, responsive to the instruction of instructing the movable device to stop operation, may control the fluid supply apparatus to stop spraying the liquid to the target object or control the fluid supply apparatus to reduce a spraying amount, and control the recycling apparatus to continue recycling the liquid on the target object. This helps to reduce liquid residuals on the target object and further helps to improve user experiences.

With the development of sciences and technologies, cleaning devices have become increasingly intelligent and provided more conveniences for cleaning in people's day life. In some typical scenes, a cleaning device may output a voice message to interact with a user.

When some cleaning devices work, loads on the cleaning devices may produce relatively loud noises, e.g., motor noises, water pump noises, and dust collection passage noises. The existence of these noises brings interferences to voice messages output by the cleaning devices. Therefore, a solution needs to be proposed.

Many aspects of the present disclosure provide a voice interaction method for a cleaning device and a cleaning device, so as to reduce interferences of a working noise of a cleaning device to a voice interaction process of the cleaning device and improve the voice interaction performance of the cleaning device.

An embodiment of the present disclosure provides a voice interaction method for a cleaning device, which includes: acquiring a voice interaction triggering event for the cleaning device; controlling a working noise of a load on the cleaning device in a set range; and controlling an audio component on the cleaning device to execute a voice interaction operation corresponding to the voice interaction triggering event.

The embodiment of the present disclosure also provides a cleaning device, which includes a body. A load, a controller and an audio component are mounted to the body. The controller is configured to, responsive to a voice interaction triggering event for the cleaning device, control a working noise of the load on the cleaning device in a set range and send a voice interaction instruction to the audio component. The audio component is configured to execute a voice interaction operation corresponding to the voice interaction triggering event according to the voice interaction instruction.

In the embodiment of the present disclosure, when the voice interaction triggering event for the cleaning device is acquired, the working noise of the load on the cleaning device is controlled in the set range, and then the audio component on the cleaning device is controlled to execute the voice interaction operation corresponding to the voice interaction triggering event. Furthermore, interferences of the working noise of the load to the voice interaction operation of the audio component may be reduced, which contributes to improving the voice interaction performance of the cleaning device.

**BRIEF DESCRIPTION OF THE DRAWINGS**

The drawings described herein are used to provide further understandings of the present disclosure and constitute a part of the present disclosure. Schematic embodiments of the present disclosure and descriptions thereof are used to explain the present disclosure and not intended to form improper limits to the present disclosure. In the drawings:

FIG. 1a is a structural schematic diagram of a cleaning machine according to an embodiment of the present disclosure;

FIGs. 1b and 1c are structural schematic diagrams of a display according to an embodiment of the present disclosure respectively;

FIG. 2a is a structural schematic diagram of another cleaning machine according to an embodiment of the present disclosure;

FIG. 2b is a structural schematic diagram of a cleanliness detector according to an embodiment of the present disclosure;

FIGs. 2c to 2f are schematic arrangement diagrams of a cleanliness detector according to an embodiment of the present disclosure;

FIG. 2g is a structural schematic diagram of another cleanliness detector according to an embodiment of the present disclosure;

FIGs. 2h to 2k are schematic arrangement diagrams of a first conductor group according to an embodiment of the present disclosure;

FIG. 21 is a structural schematic diagram of a first detection circuit according to an embodiment of the present disclosure;

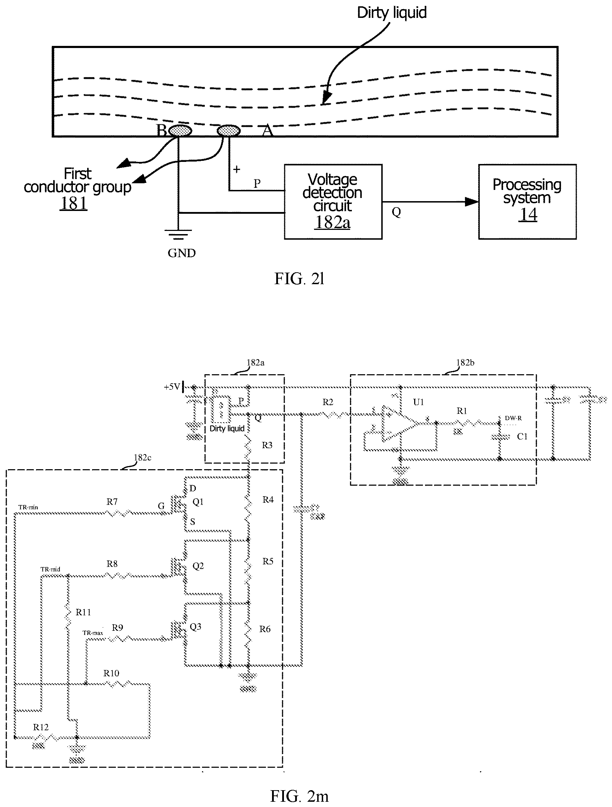

FIG. 2m is a schematic diagram of a working principle of a first detection circuit according to an embodiment of the present disclosure;

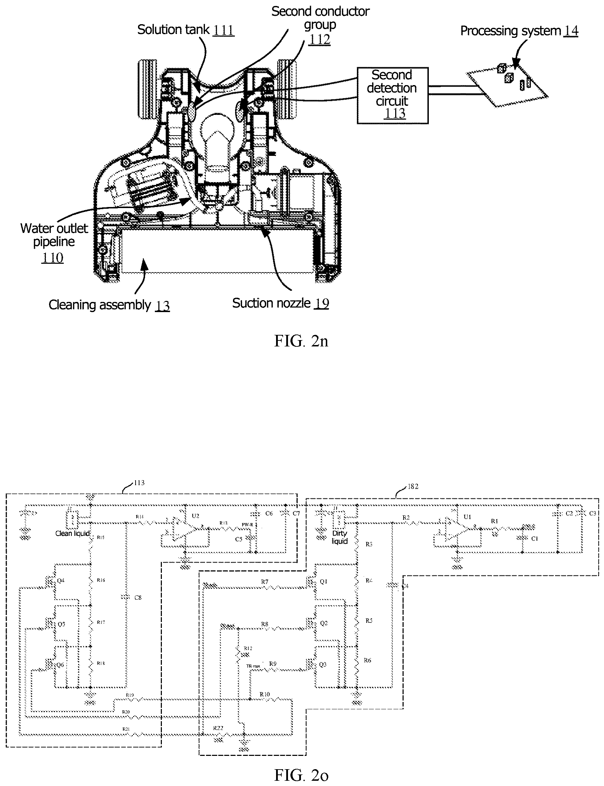

FIG. 2n is a structural schematic diagram of another cleaning machine according to an embodiment of the present disclosure;

FIG. 2o is a schematic diagram of a working principle of another detection circuit according to an embodiment of the present disclosure;

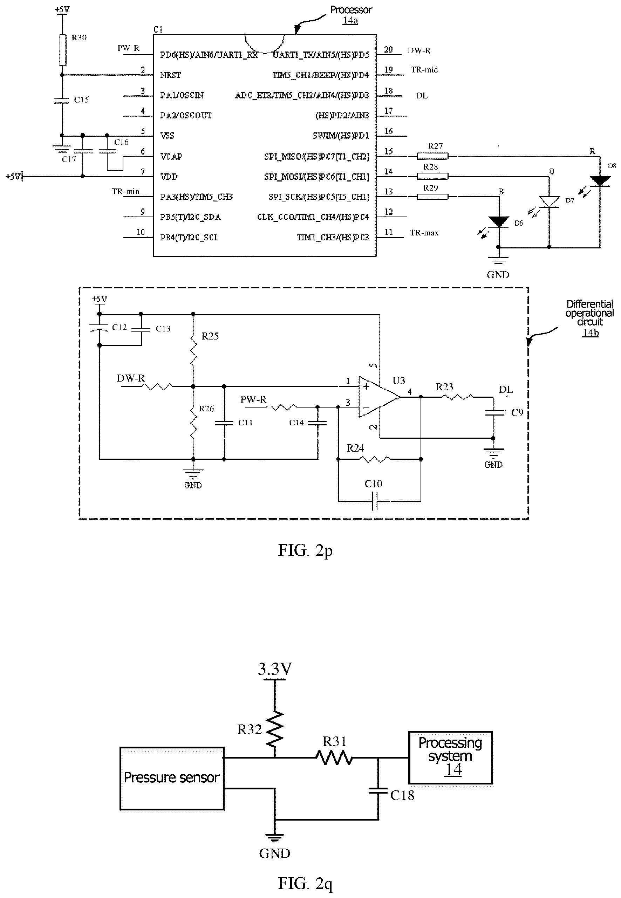

FIG. 2p is a schematic diagram of a working principle of a processing system according to an embodiment of the present disclosure;

FIG. 2q is a diagram of a working principle of a pressure detection circuit according to an embodiment of the present disclosure;

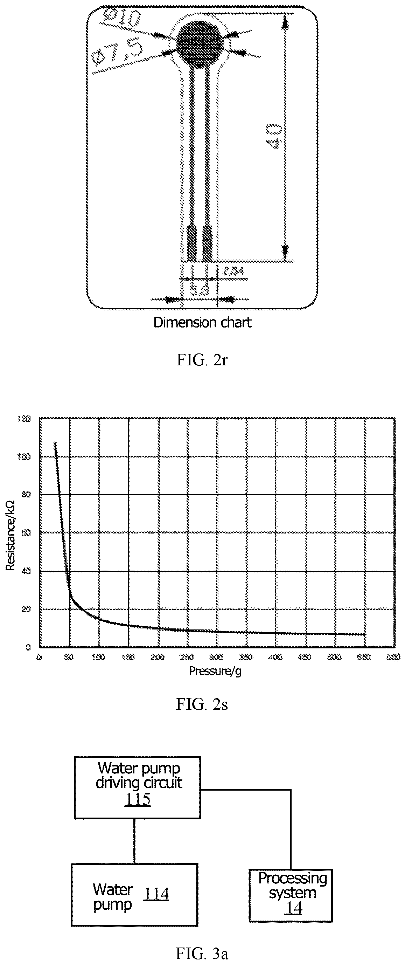

FIG. 2r is a dimension chart of a pressure detection circuit according to an embodiment of the present disclosure;

FIG. 2s is a schematic curve diagram of a corresponding relationship between resistance and pressure of a pressure sensor according to an embodiment of the present disclosure;

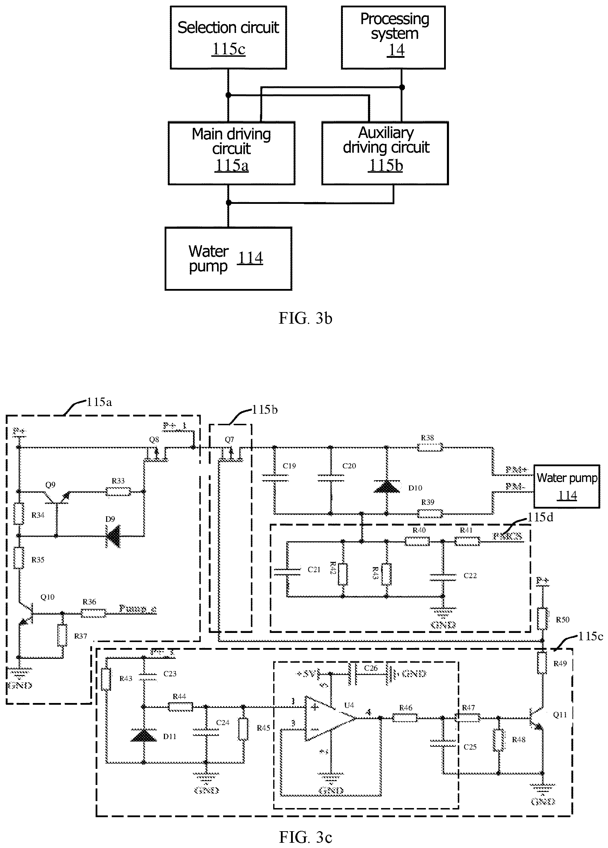

FIGs. 3a and 3b are schematic diagrams of a working principle of a water pump according to an embodiment of the present disclosure;

FIG. 3c is a diagram of a working principle of a water pump driving circuit according to an embodiment of the present disclosure;

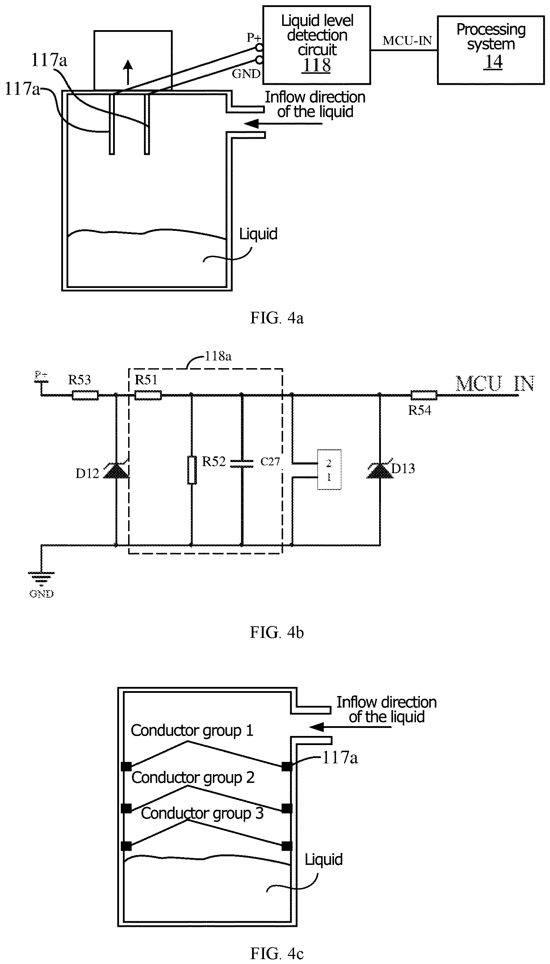

FIG. 4a is a structural schematic diagram of another cleaning machine according to an embodiment of the present disclosure;

FIG. 4b is a structural schematic diagram of a liquid level detection circuit according to an embodiment of the present disclosure;

FIGs. 4c to 4g are schematic arrangement diagrams of conductors according to an embodiment of the present disclosure;

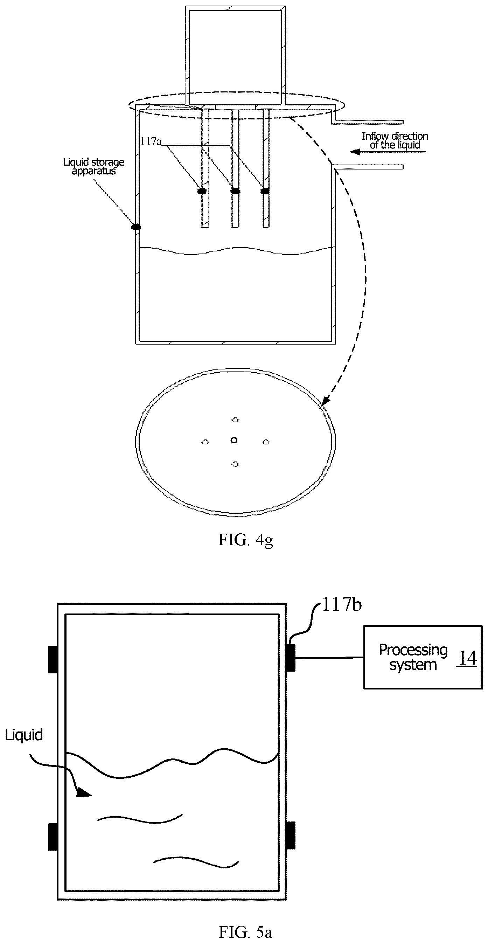

FIG. 5a is a structural schematic diagram of another cleaning machine according to an embodiment of the present disclosure;

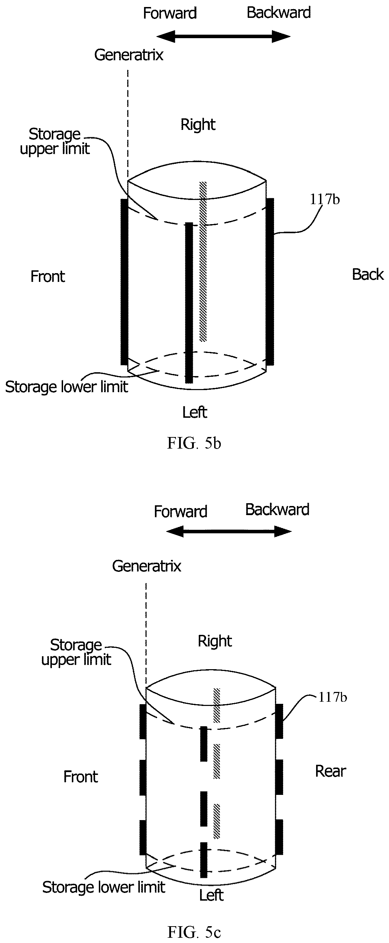

FIGs. 5b and 5c are schematic arrangement diagrams of a non-contact liquid level detector according to an embodiment of the present disclosure;

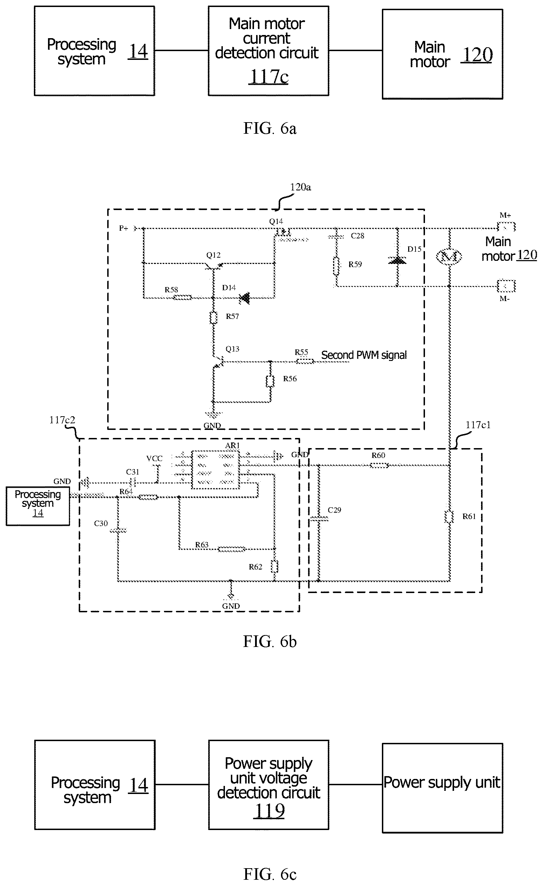

FIG. 6a is a schematic working diagram of a main motor according to an embodiment of the present disclosure;

FIG. 6b is a structural schematic diagram of a main motor current detection circuit according to an embodiment of the present disclosure;

FIG. 6c is a schematic diagram of voltage detection of a power supply unit according to an embodiment of the present disclosure;

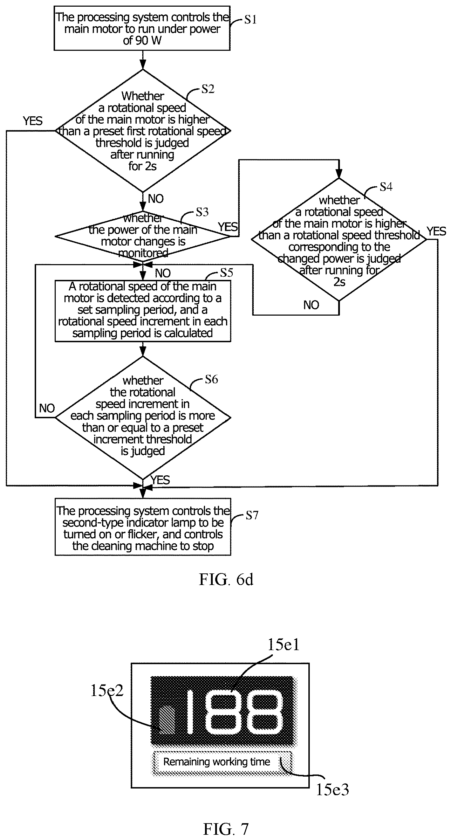

FIG. 6d is a schematic flowchart of a liquid level state detection method according to an embodiment of the present disclosure;

FIG. 7 is a schematic diagram of electric power displaying of a power supply unit according to an embodiment of the present disclosure;

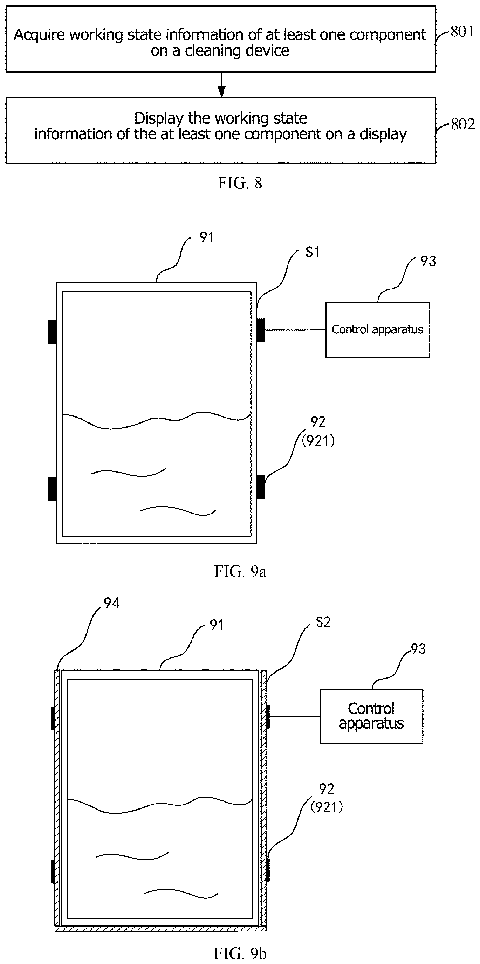

FIG. 8 is a schematic flowchart of an information display method according to an embodiment of the present disclosure;

FIGs. 9a to 9c are structural schematic diagrams of a cleaning device according to an embodiment of the present disclosure;

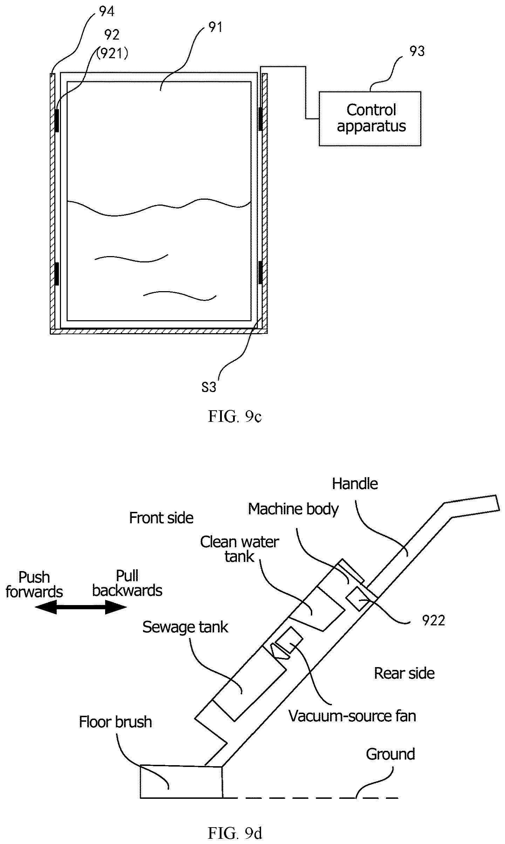

FIGs. 9d to 9f are schematic diagrams of directions of a cleaning device according to an embodiment of the present disclosure;

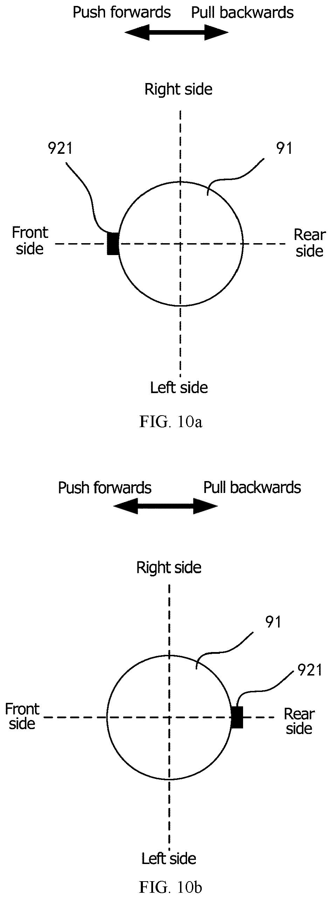

FIGs. 10a to 10f are schematic diagrams of an arrangement position of a liquid level detection sensor group on a liquid storage apparatus according to an embodiment of the present disclosure;

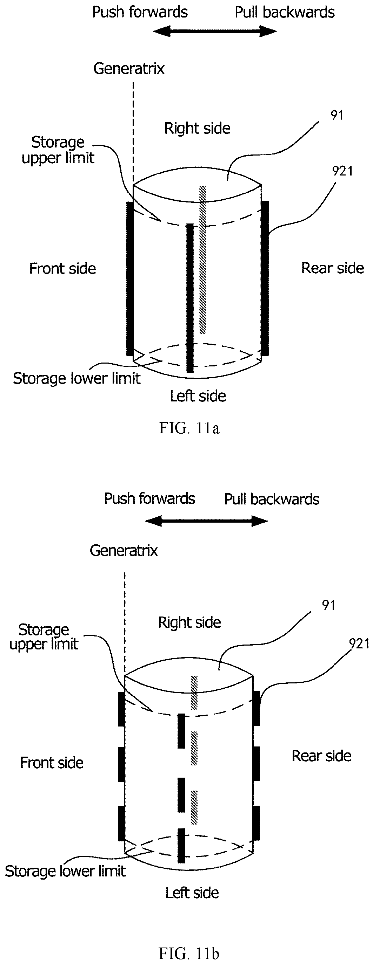

FIGs. 11a to 11b are schematic diagrams of arrangement of a capacitance sensor in a height direction of a liquid storage apparatus according to an embodiment of the present disclosure;

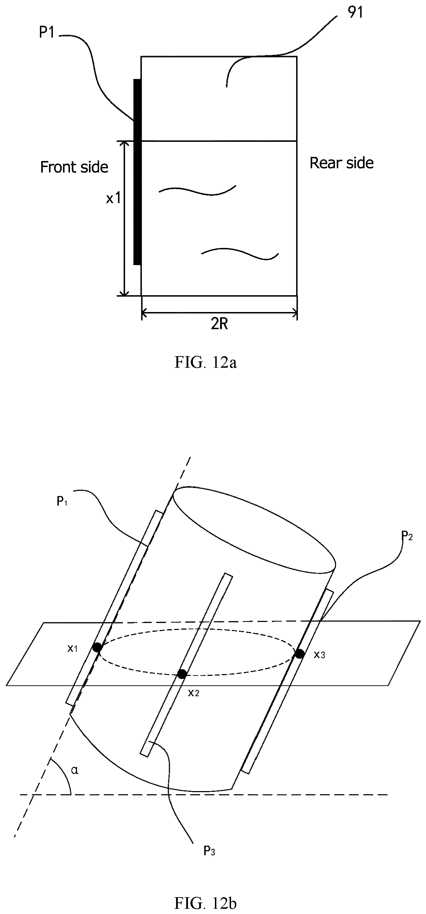

FIGs. 12a to 12e are schematic diagrams of a liquid level detection result according to an embodiment of the present disclosure;

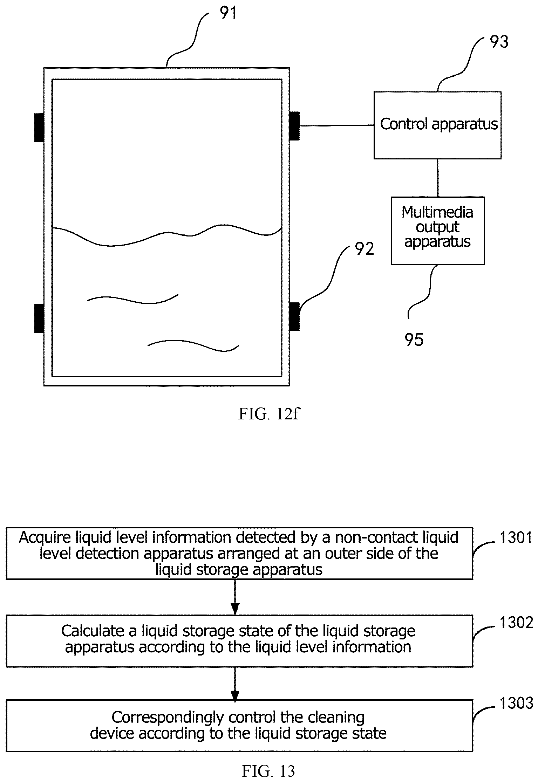

FIG. 12f is a structural schematic diagram of another cleaning device according to another embodiment of the present disclosure;

FIG. 13 is a schematic flowchart of a control method for a cleaning device according to an embodiment of the present disclosure;

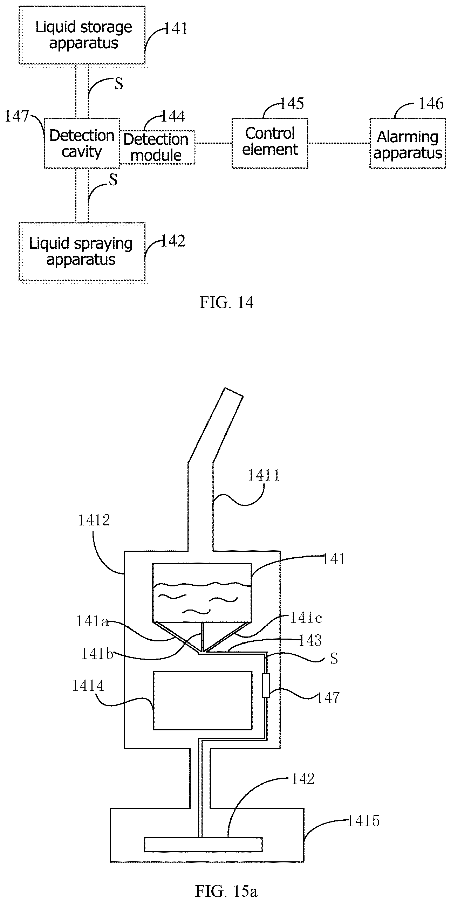

FIG. 14 is a principle diagram of a cleaning device according to an embodiment of the present disclosure;

FIG. 15a is a schematic state diagram of a cleaning device in an upright state according to an embodiment of the present disclosure;

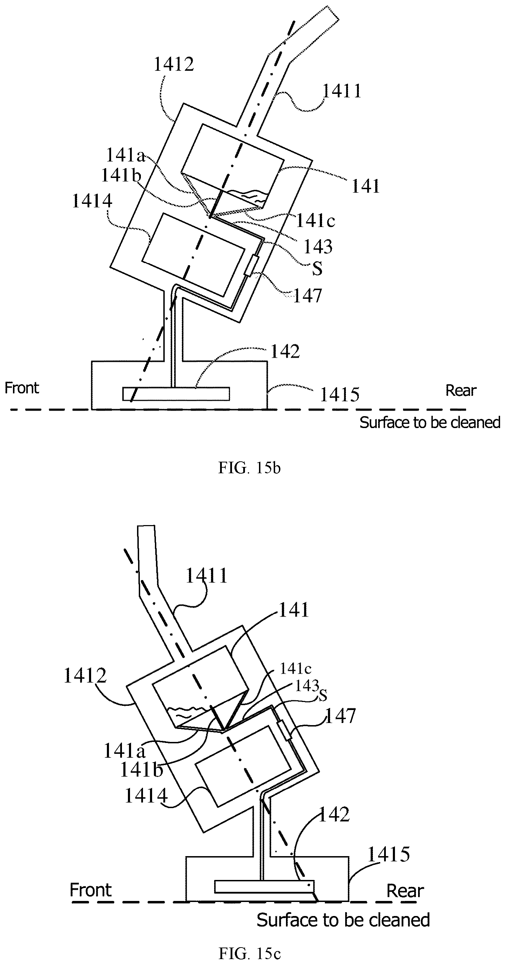

FIG. 15b is a schematic state diagram when a main body of a cleaning device is inclined backwards according to an embodiment of the present disclosure;

FIG. 15c is a schematic state diagram when a main body of a cleaning device is inclined forwards according to an embodiment of the present disclosure;

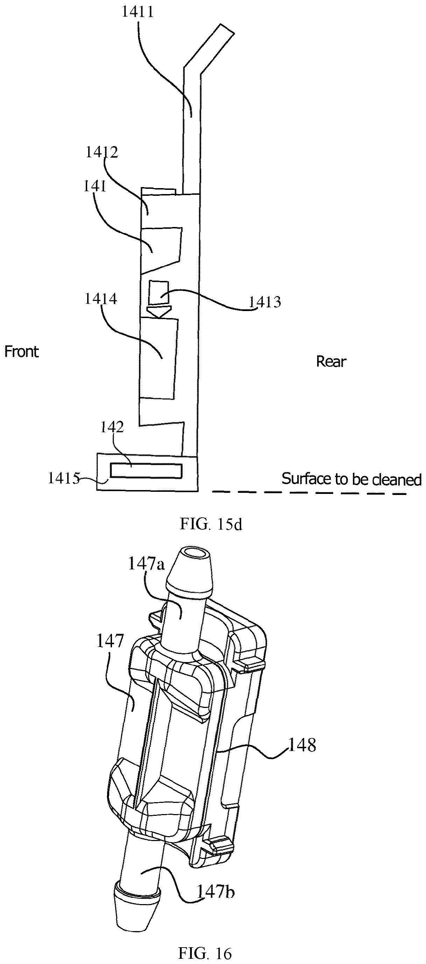

FIG. 15d is a structural schematic diagram of a cleaning device according to an embodiment of the present disclosure;

FIG. 16 is a structural schematic diagram of a detection cavity according to an embodiment of the present disclosure;

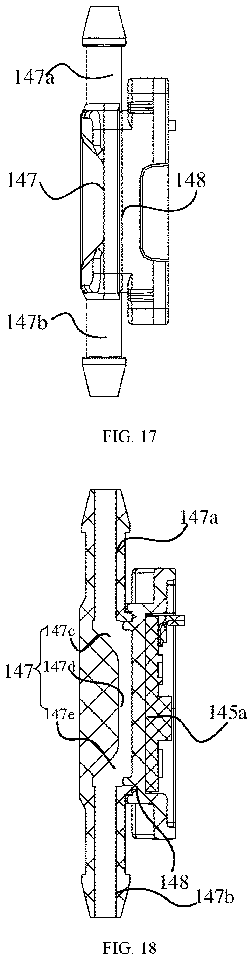

FIG. 17 is a side view of the detection cavity in FIG. 16;

FIG. 18 is a longitudinal sectional view of the detection cavity in FIG. 16;

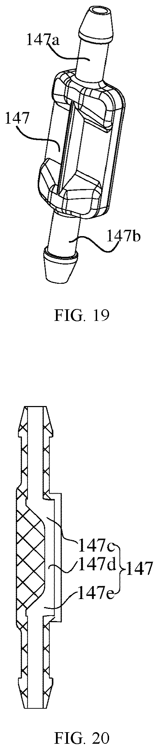

FIG. 19 is another structural schematic diagram of a detection cavity according to an embodiment of the present disclosure;

FIG. 20 is a longitudinal sectional view of the detection cavity in FIG. 19;

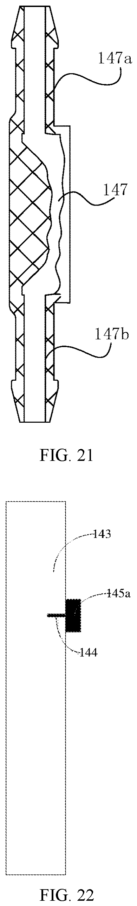

FIG. 21 is another structural schematic diagram of a detection cavity according to an embodiment of the present disclosure;

FIG. 22 is a schematic mounting diagram of a contact detection module according to an embodiment of the present disclosure;

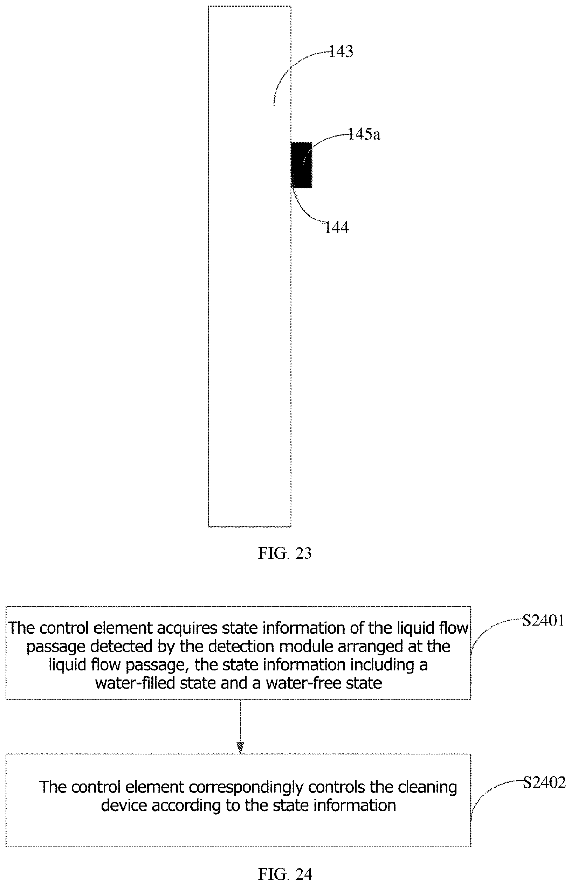

FIG. 23 is a schematic mounting diagram of a non-contact detection module according to an embodiment of the present disclosure;

FIG. 24 is a schematic flowchart of a control method for a cleaning device according to an exemplary embodiment of the present disclosure;

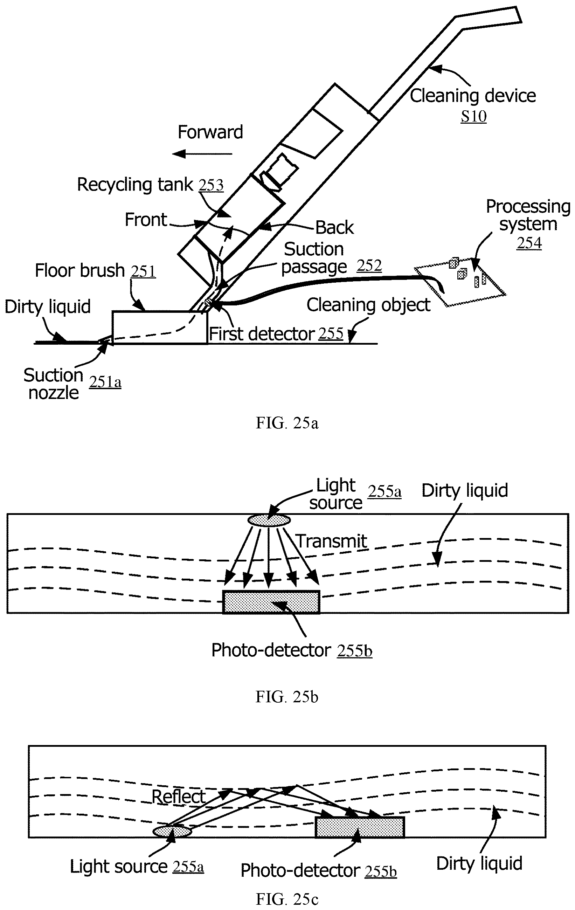

FIG. 25a is a structural schematic diagram of a cleaning device according to an embodiment of the present disclosure;

FIG. 25b is a structural schematic diagram of a first detector according to an embodiment of the present disclosure;

FIGs. 25c to 25f are schematic arrangement diagrams of a first detector according to an embodiment of the present disclosure;

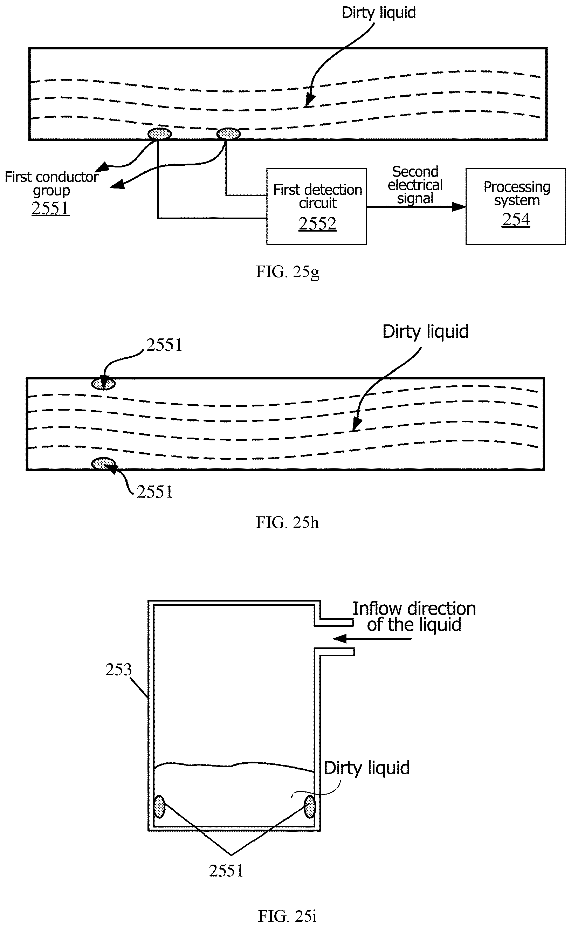

FIG. 25g is a structural schematic diagram of another first detector according to an embodiment of the present disclosure;

FIGs. 25h to 25k are schematic arrangement diagrams of a first conductor group according to an embodiment of the present disclosure;

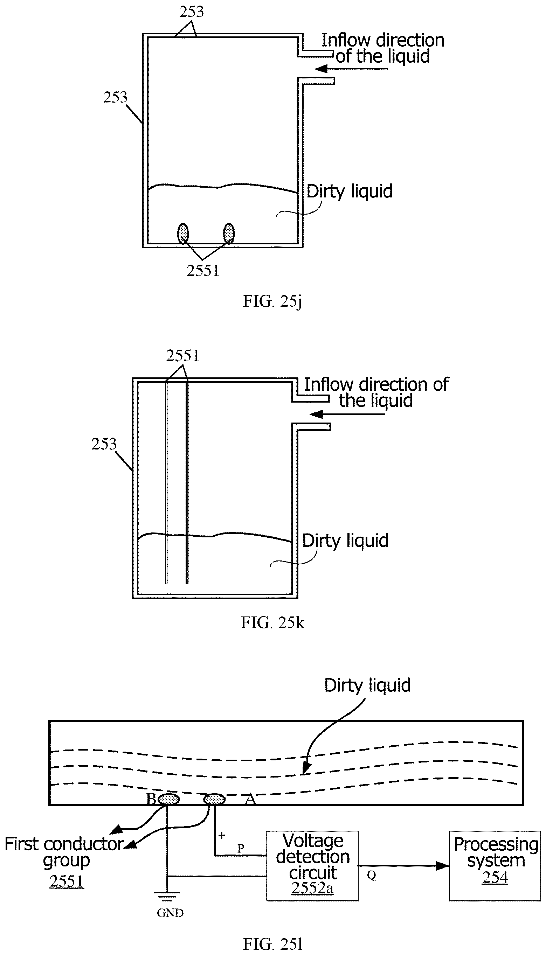

FIG. 25l is a structural schematic diagram of a first detection circuit according to an embodiment of the present disclosure;

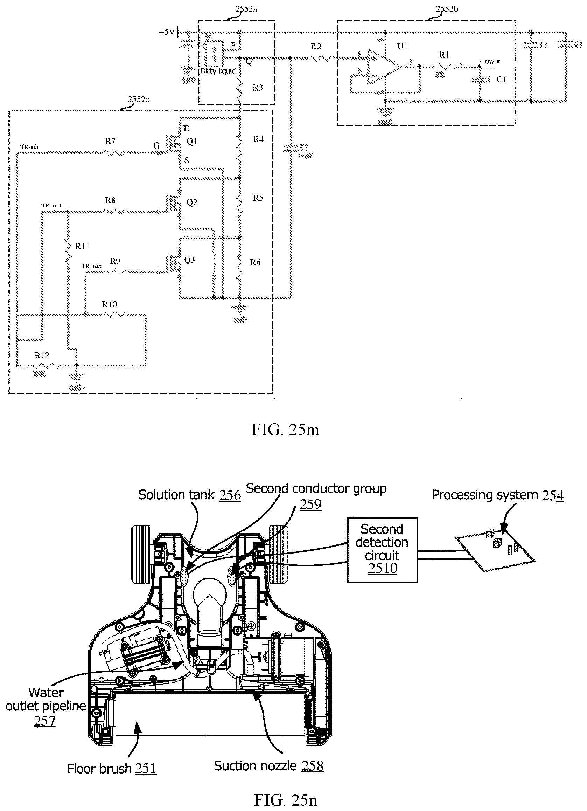

FIG. 25m is a first schematic diagram of a working principle of a first detection circuit according to an embodiment of the present disclosure;

FIG. 25n is a structural schematic diagram of another cleaning device according to an embodiment of the present disclosure;

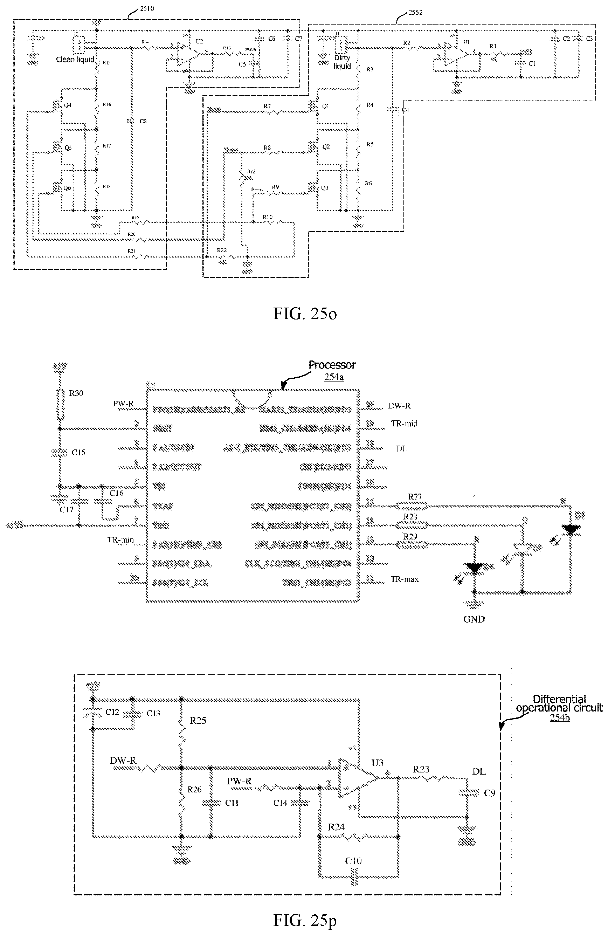

FIG. 25o is a schematic diagram of a working principle of another detection circuit according to an embodiment of the present disclosure;

FIG. 25p is a schematic diagram of a working principle of a processing system according to an embodiment of the present disclosure;

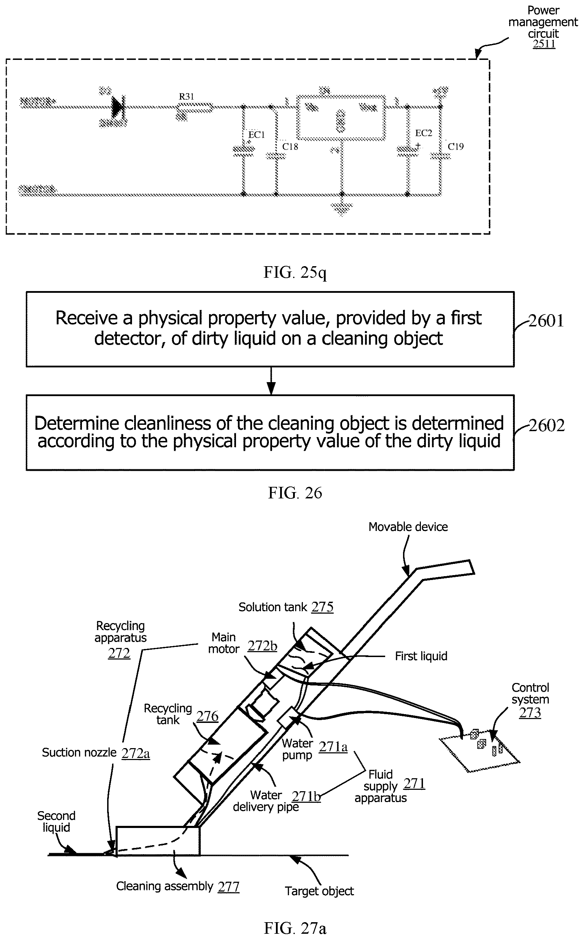

FIG. 25q is a schematic diagram of a working principle of a power management circuit according to an embodiment of the present disclosure;

FIG. 26 is a schematic flowchart of a cleanliness detection method according to an embodiment of the present disclosure;

FIG. 27a is a structural schematic diagram of a movable device according to an embodiment of the present disclosure;

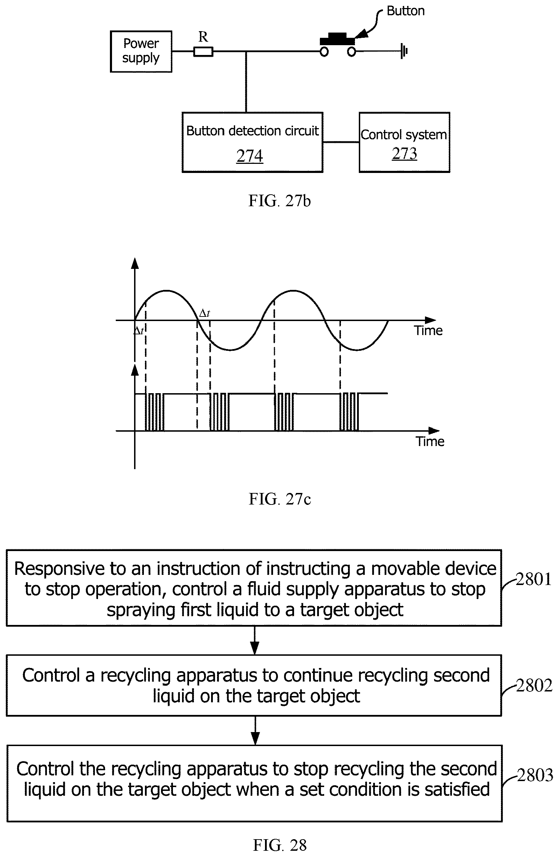

FIG. 27b is a structural schematic diagram of an internal circuit of a movable device according to an embodiment of the present disclosure;

FIG. 27c is a timing diagram of a driving signal of an alternating-current water pump according to an embodiment of the present disclosure;

FIG. 28 is a schematic flowchart of an operation method according to an embodiment of the present disclosure;

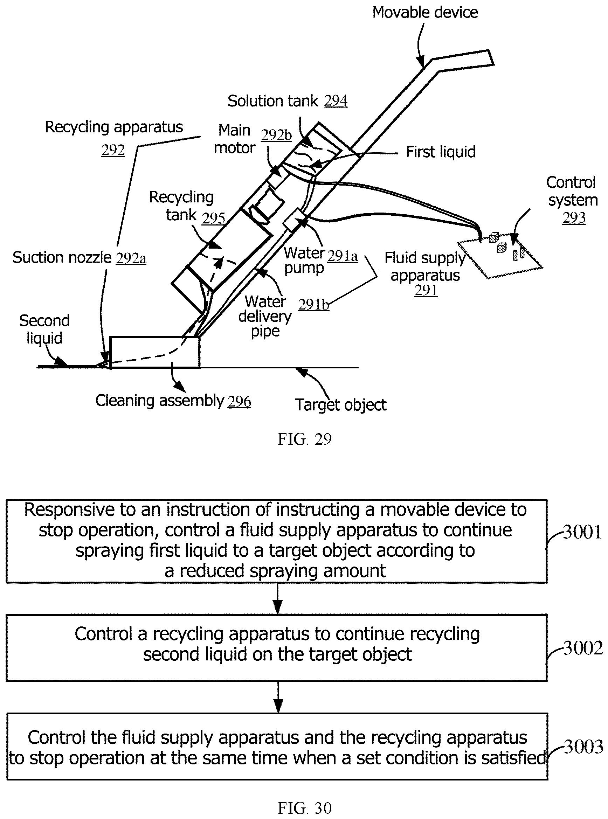

FIG. 29 is a structural schematic diagram of another movable device according to an embodiment of the present disclosure;

FIG. 30 is a schematic flowchart of another operation method according to an embodiment of the present disclosure;

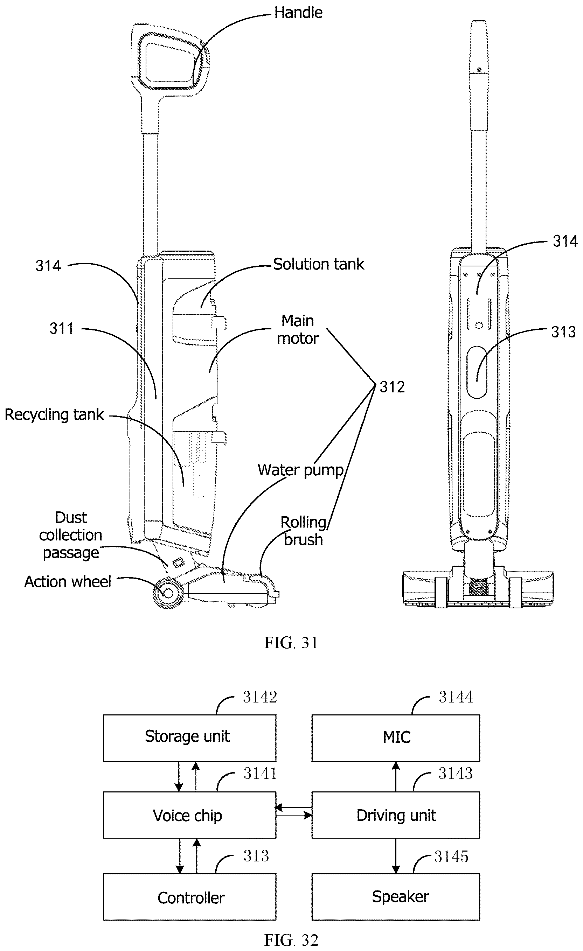

FIG. 31 is a structural schematic diagram of a cleaning device according to an exemplary embodiment of the present disclosure;

FIG. 32 is a structural schematic diagram of a control circuit of a cleaning device according to an exemplary embodiment of the present disclosure; and

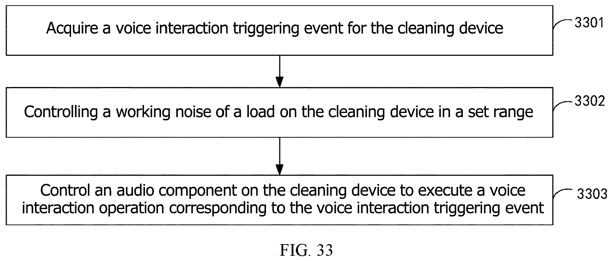

FIG. 33 is a schematic flowchart of a voice interaction method for a cleaning device according to an exemplary embodiment of the present disclosure.

## DETAILED DESCRIPTION OF EXAMPLE EMBODIMENTS

In order to make the objectives, technical solutions and advantages of the present disclosure clearer, the technical solutions of the present disclosure will be described below clearly and completely in combination with specific embodiments and corresponding drawings of the present disclosure. It is apparent that the described embodiments are not all but only part of embodiments of the present disclosure. All other embodiments obtained by those of ordinary skill in the art based on the embodiments in the present disclosure without creative work shall fall within the scope of protection of the present disclosure.

For the technical problem that a state of an existing cleaning device may not be presented visually, the embodiments of the present disclosure provide a solution. The basic idea is as follows. A display is additionally arranged on a main body of a cleaning machine to display working state information of at least one component on the cleaning machine, thereby visually displaying a working state of the cleaning machine. A user may know about a working state of a component on the cleaning machine visually, which contributes to improving user experiences.

The technical solution provided in each embodiment of the present disclosure will be described below in detail in combination with the drawings.

It is to be noted that the same reference signs represent the same objects in the following drawings and embodiments. Therefore, a certain object, once defined in a drawing or embodiment, needs not to be further discussed in subsequent drawings and embodiments.

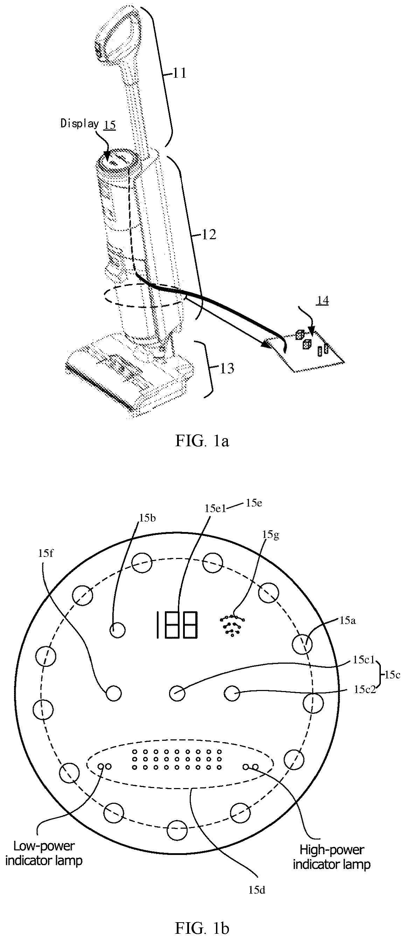

FIG. 1a is a structural schematic diagram of a cleaning machine according to an embodiment of the present disclosure. As shown in FIG. 1a, the cleaning machine includes a handle assembly 11, a main body 11, a cleaning assembly 13, a processing system 14, and a display 15 arranged on the main body. Both an implementation form and structure of the cleaning machine shown in FIG. 1a are exemplary, and no limits are made thereto.

It is to be noted that, in the embodiment of the present disclosure, for the ease of description and distinction, a part that a center-of-gravity direction of each component points to when the cleaning machine works uprightly (a working state shown in FIG. 1a) is defined as a lower end or bottom of the component, and a part that an opposite direction points to is defined as an upper end or top of the component. Further, a part that a forward direction of the cleaning machine points to in each component when the cleaning machine works uprightly is defined as a front of the component. Correspondingly, a side opposite to the forward direction of the cleaning machine in each component is defined as a back of the component. Furthermore, a left and right of each component are defined.

In the present embodiment, the handle assembly 11 may be arranged at an upper end of the main body 11, or may be arranged at a side (back, left, or right) of the main body 11. Optionally, if the handle assembly 11 is arranged at the upper end of the main body 11, an axial direction thereof (a direction that the center of gravity points to) is parallel to that of the main body 11.

Optionally, as shown in FIG. 1a, the handle assembly 11 may include a handle 11a and an extension rod 11b. Further, a length of the extension rod 11b may be fixed or adjustable. Optionally, if the length of the extension rod 11b is adjustable, a structure thereof is a telescopic structure. Correspondingly, a user may flexibly adjust the length of the extension rod 11b according to an own requirement.

In the present embodiment, the processing system 14 may be arranged in the main body, or may be arranged on a surface of the main body. Both an implementation form and arrangement position of the processing system 14 shown in FIG. 1a are exemplary, and no limits are made thereto. In the present embodiment, the processing system 14 is a control system of the cleaning machine, and may control using states and working states of the other components connected therewith.

In the present embodiment, the display 15 is electrically connected with the processing system 14, and is configured to display working state information of at least one component on the cleaning machine. In the embodiment of the present disclosure, a specific shape of the display 15 is not limited. Optionally, the display 15 may be in a regular shape such as a round, a square, an ellipse, a trapezoid or a polygon, or may be in any irregular shape. Enumerations are omitted herein. Optionally, the display 15 may be arranged at a top of the main body, or may be arranged at a front, left or right of the main body. Optionally, if the display 15 is arranged at the top of the main body 11, a plane where the display 15 is located may be perpendicular or at a certain angle to an axis of the main body 11. The main body includes a main motor and a liquid storage apparatus. Optionally, the display 15 is arranged above the liquid storage apparatus. That is, the display 15 is arranged above a solution tank or a recycling tank, preferably above the solution tank. Further, in order to satisfy a viewing angle of the user, the display 15 may be arranged in front of the handle assembly 11.

Optionally, the display 15 may be fixedly arranged on the surface of the main body 11 or retractably arranged on the main body 11. For example, the display 15 may be retractably arranged at the top, front, left or right of the main body 11.

Optionally, the main body 11 includes a cavity (not shown in FIG. 1a), configured to accommodate the display 15. Further, a connecting rod is arranged between a back surface of the display 15 and a bottom of the cavity. The connecting rod is of a telescopic structure.

Correspondingly, the connecting rod is electrically connected with the processing system 14. The processing system 14 may control the connecting rod to extend to drive the display 15 to extend from the surface of the main body 11 when the cleaning machine is turned on. Optionally, the processing system 14 may control the connecting rod to retract to drive the display 15 to retract into the cavity when the cleaning machine is turned off.

Optionally, a protective cover may further be arranged at a top of the cavity. The protective cover is opened when the display 15 extends from the surface of the main body 11. The protective cover is closed when the display 15 retracts into the main body 11.

Further, the protective cover may be of a mechanically opened and closed structure. That is, the user may manually open the protective cover such that the display 15 may be extend from the surface of the main body 11. Correspondingly, the user may manually close the protective cover when the display 15 retracts into the cavity. Alternatively, the protective cover may be electrically opened and closed. Correspondingly, the cleaning machine may further include a transmission structure. The transmission structure is electrically connected with the processing system 14, and is configured to drive the protective cover to be opened and closed.

Optionally, the protective cover may include N folding partition plates. Herein, N≥2, and N is an integer. The N folding partition plates are hinged to an inner wall or outer wall of the cavity through a rotating shaft. Correspondingly, the transmission structure may be connected with the N folding partition plates. The transmission structure is configured to drive the N folding partition plates to be unfolded or folded.

In the present embodiment, the display is additionally arranged on the main body of the cleaning machine to display the working state information of the at least one component on the cleaning machine, thereby visually displaying a working state of the cleaning machine. The user may know about a working state of a component on the cleaning machine visually, which contributes to improving user experiences. Further, the display 15 may include at least one display region, configured to display working state information of different components. Optionally, the working state information of the at least one component includes at least one of: (1) liquid level information of a liquid storage apparatus; (2) cleanliness information of a cleaning object achieved by the cleaning assembly; (3) electric power information of a power supply unit; (4) self-cleaning information of the cleaning machine; (5) power information of a main motor; (6) blocking information of the cleaning assembly; and (7) working state information of a communication assembly. The liquid storage apparatus may be a solution tank of the cleaning machine, or may be a recycling tank of the cleaning machine. An implementation form and structure of the display will be exemplarily described below.

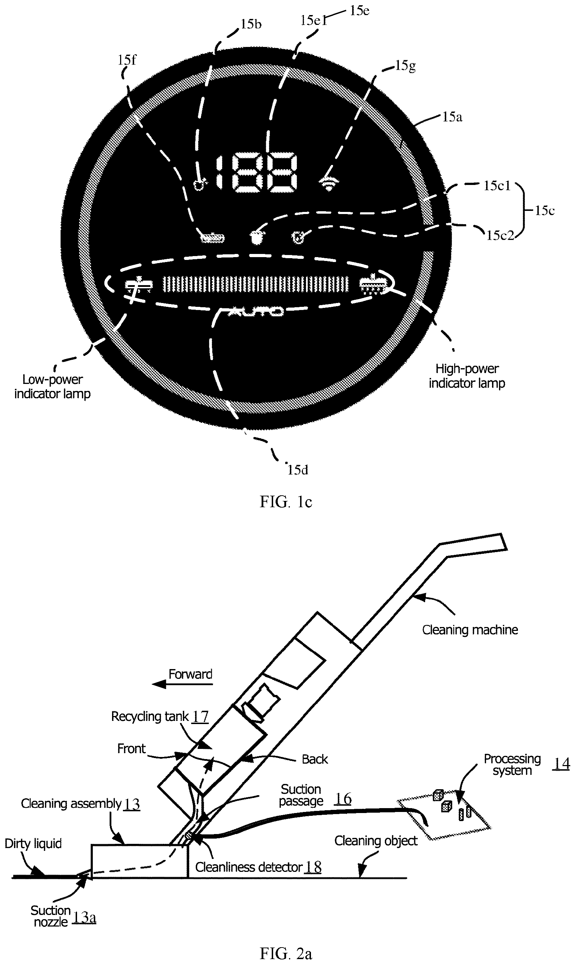

FIGs. 1b and 1c are structural schematic diagrams of a display according to an embodiment of the present disclosure. As shown in FIGs. 1b and 1c, the display 15 includes at least one display region, configured to display working state information of different components. Further, as shown in FIG. 1b, the at least one display region includes a first display region 15a formed by multiple first display tubes. The first display tube may be, but not limited to, a Light Emitting Diode (LED), an Organic Light Emitting Diode (OLED), a thin-film LED, etc.

The multiple first display tubes may be distributed in the display 15 in any form, thereby forming the first display region 15a. A shape of the first display region 15a is related to a distribution mode of the multiple first display tubes. For example, the multiple first display tubes may be distributed in an array form. The multiple first display tubes may be distributed in the display 15 in a rectangle, a round, a trapezoid, a heart shape, etc. Correspondingly, the shape of the first display region 15a may be, but not limited to, a rectangle, a round, a trapezoid, a heart shape, etc. Further, as shown in FIGs. 1b and 1c, the multiple first display tubes may be distributed along an edge of the display 15, thereby forming a circular or cambered first display region 15a. The shape of the first display region 15a formed by the multiple first display tubes is related to that of the display 15 to some extent. FIGs. 1b and 1c only show examples of a round display 15 and do not limit the shape of the display.

In the present embodiment, the first display region 15a may display the cleanliness information of the cleaning object achieved by the cleaning assembly 13 under the control of the processing system 14.

Optionally, the multiple first display tubes are different in color. In such case, the multiple first display tubes may display different color-brightness-shape (or pattern) combinations under the control of the processing system 14. Here, a shape displayed by the multiple first display tubes may also be understood as a pattern. The different color-brightness-shape combinations represent different cleanliness of the cleaning object achieved by the cleaning assembly 13. In the embodiment of the present disclosure, the different color-brightness-shape combinations include combinations of different colors but the same shape, the same color but different shapes, the same color but different brightness, the same shape but different brightness, or different colors, brightness and shapes. The shape displayed by the multiple first display tubes is mainly determined by the number and distribution positions of on-state first display tubes. Of course, in addition to representing the cleanliness of the cleaning object achieved by the cleaning assembly 13 by a color-brightness-shape combination displayed by the multiple first display tubes, the cleanliness of the cleaning object achieved by the cleaning assembly may also be represented by the number of on-state display tubes. In an optional embodiment, the cleanliness of the cleaning object achieved by the cleaning assembly is represented by the number of on-state display tubes. For example, if the number of the on-state display tubes in the multiple first display tubes is larger, it indicates that the cleanliness of the cleaning object achieved by the cleaning assembly 13 is lower. That is, if the number of the on-state display tubes in the multiple first display tubes is larger, the cleaning object is dirtier. In another optional embodiment, the cleanliness of the cleaning object achieved by the cleaning assembly 13 is represented by a color-shape combination displayed by the multiple first display tubes. Color in the color-shape combination plays a more important role in representing the cleanliness than shape. For example, if the multiple first display tubes include red, yellow and green, shapes "I", "L" and "K" may be combined. Cleanliness represented by red, yellow and green sequentially increases. Under the same color, if a shape combination is more complex, it indicates that the cleanliness is lower, and the cleaning object is dirtier. Compared with a yellow shape "I", a red shape "I" represents that the cleanliness is lower and the cleaning object is dirtier. Compared with the red shape "I", a red shape "K" represents that the cleanliness is lower and the cleaning object is dirtier.

Optionally, the multiple first display tubes are the same in color. In such case, the multiple first display tubes may display different shapes and different brightness under the control of the processing system 14, or different numbers of display tubes are on. The shape and brightness displayed by the multiple first display tubes or the number of on-state display tubes may represent cleanliness of the cleaning object achieved by the cleaning assembly. Optionally, different cleanliness is represented by different display brightness of the multiple first display tubes. Taking blue as an example for description, multiple blue display tubes display in full brightness. If the brightness is higher, it indicates that the cleanliness is higher. Optionally, the cleanliness may also be represented a shape-brightness combination. Taking blue as an example for description, part of blue display tubes are in full brightness, brightness of part of blue display tubes decreases progressively according to a predetermined rule, and the other blue display tubes are off. The cleanliness may also be represented in such a scene. Optionally, the shape displayed by the multiple first display tubes is mainly determined by the number and distribution positions of on-state first display tubes. In an optional embodiment, the cleanliness of the cleaning object achieved by the cleaning assembly is represented by the number of on-state display tubes. For example, if the number of the on-state display tubes in the multiple first display tubes is larger, it indicates that the cleanliness of the cleaning object achieved by the cleaning assembly 13 is lower. That is, if the number of the on-state display tubes in the multiple first display tubes is larger, the cleaning object is dirtier. However, the embodiment is not limited thereto. In another optional embodiment, the cleanliness of the cleaning object achieved by the cleaning assembly is represented by a shape that the multiple first display tubes may display. For example, if the shape that the multiple first display tubes may display is more complex, it indicates that the cleanliness of the cleaning object achieved by the cleaning assembly 13 is lower. That is, if the shape that the multiple first display tubes may display is more complex, the cleaning object is dirtier. However, the embodiment is not limited thereto. If the multiple first display tubes may display shapes "I", "L" and "K", shape "I" represents that the cleaning object is the cleanest, and "K" represents that the cleaning object is the most dirty.

Optionally, the multiple first display tubes are different in brightness under the control of the processing system 14. The brightness and number of the first display tubes are positively related to the cleanliness of the cleaning object achieved by the cleaning assembly. That is, if the cleanliness is higher, the number of on-state first display tubes is larger, and the brightness of each first display tube is higher. When the cleanliness is medium, part of the multiple first display tubes display blue, and the other part displays red. At a gradient portion from blue to red, brightness of multiple blue display tubes progressively decreases in sequence, brightness of multiple red display tubes progressively increases in sequence, and the multiple blue display tubes and red display tubes are staggered and overlapped. As such, a gradient effect from blue to red is presented. Optionally, a light guide plate is arranged on the display. The light guide plate is the same as the display in shape. The light guide plate is fixed to an outer surface of the display by adhesion or buckling. The light guide plate may enhance an optical display effect on one hand, including, but not limited to, gradient displaying, and on the other hand, may serve as a protective cover to protect a display screen.

The displaying of a color-brightness-shape combination adapted to the cleanliness of the cleaning object by the multiple first display tubes will be exemplarily described below with a round display 15 as an example in combination with several optional implementation modes.

In implementation mode A1, the cleanliness of the cleaning object may be divided into Y grades. Herein, $Y \geq 2$, and Y is an integer. The multiple first display tubes are of two colors, i.e., red and blue. Optionally, the red display tubes and the blue display tubes form a circular ring. Correspondingly, all of the red display tubes are on when the cleanliness is of the lowest grade, i.e., grade 0. All of the blue display tubes are on when the cleanliness is of the highest grade, i.e., grade Y. When the cleanliness of the cleaning object is between grades 0 and Y, adjacent red display tubes and blue display tubes are on in a staggered and overlapped manner, and brightness increases or decreases progressively so as to present a gradient effect. In such case, one end of the first display tube displays red, while the other end displays blue, and a gradient effect from red to blue is presented in the middle. Alternatively, when the cleanliness of the cleaning object is between grades 0 and Y, non-adjacent red display tubes and blue display tubes are on, and no gradient effect is presented.

In implementation mode A2, the cleanliness of the cleaning object may be divided into Y grades. Herein, Y≥2, and Y is an integer. The multiple first display tubes are of one color, hypothetically blue. Optionally, the blue display tubes form a circular ring. Correspondingly, all of the blue display tubes are off when the cleanliness is of the lowest grade, i.e., grade 0. All of the blue display tubes are on so as to form a blue circular ring when the cleanliness is of the highest grade, i.e., grade Y. When the cleanliness of the cleaning object is between grades 0 and Y, part of the blue display tubes are on, and brightness increases or decreases progressively to present a gradient effect so as to form a blue gradient circular ring.

In implementation mode A3, the cleanliness of the cleaning object may be divided into Y grades. Herein, Y≥2, and Y is an integer. The multiple first display tubes are of two colors, i.e., red and blue. Optionally, the red display tubes and the blue display tubes form a circular ring. Correspondingly, all of the red display tubes are on so as to form a red on-state circular ring when the cleanliness is of the lowest grade, i.e., grade 0. All of the blue display tubes are on so as to form a blue on-state circular ring when the cleanliness is of the highest grade, i.e., grade Y. When the cleanliness of the cleaning object is between grades 0 and Y, all of the blue display tubes and the red display tubes are on, but brightness of the blue display tubes and the red display tubes is different, and the brightness tends to increase or decrease progressively so as to form a circular ring with a red-blue gradient effect.

In implementation mode A4, the cleanliness of the cleaning object may be divided into 100 grades. The multiple first display tubes are of two colors, i.e., red and blue. Optionally, the red display tubes and the blue display tubes form a row of continuous circular rings respectively. The two rows of circular rings are the same in shape and close. The circular ring is a non-closed circular ring. Correspondingly, when the cleanliness is 0, all of the red display tubes are on and the blue display tubes are off, so as to form a red circular arc. When the cleanliness is 100, all of the blue display tubes are on and the red display tubes are off, so as to form a blue circular arc. When the cleanliness is 50, the 1st to 25th display tubes counted in a counterclockwise direction in the blue display tubes display blue in 100% brightness. Brightness of blue displayed by the 26th to 75th display tubes progressively decreases in sequence. For example, the 26th displays in 98% brightness, the 27th displays in 96% brightness, ..., the 74th displays in 2% brightness, and the 75th displays in brightness of 0. Brightness of blue displayed by the 76th to 100th display tubes is 0. That is, the display tubes are off. The 1st to 25th display tubes counted in a clockwise direction in the red display tubes display red in 100% brightness. Brightness of red displayed by the 26th to 75th display tubes progressively decreases in sequence. For example, the 26th displays in 98% brightness, the 27th displays in 96% brightness, ..., the 74th displays in 2% brightness, and the 75th displays in brightness of 0. Brightness of red displayed by the 76th to 100th display tubes is 0. That is, the display tubes are off. The first display tubes present a gradient circular arc effect for displaying the cleanliness by combining the shape, the color, the brightness and the number. The first portion totally displays blue. The second portion presents gradient displaying from blue to red. The third portion displays red. The above is only exemplary description. The shape of the first display tube, the color combination of red and blue, the number of the on-state display tubes and the brightness percentage may be adjusted according to a practical condition, and will not be limited herein.

It is to be noted that the shapes formed by the first display tubes, the colors, the display effects adapted to the cleanliness of the cleaning object and the grades of the cleanliness in implementation modes A1 to A4 are all exemplary. In practical applications, the cleanliness may be displayed by flexible settings. Enumerations are omitted herein.

In the embodiment of the present disclosure, the cleanliness of the cleaning object achieved by the cleaning assembly 13 may be detected in many manners. Exemplary descriptions will be made below in combination with several implementation modes. FIG. 2a is a structural schematic diagram of another cleaning machine according to an embodiment of the present disclosure. As shown in FIG. 2a, the cleaning machine includes a suction passage 16 and a recycling tank 17, which are sequentially connected with the cleaning assembly 13. Dirty liquid on the cleaning object is sucked by a suction nozzle 13a on the cleaning brush 13 and delivered into the recycling tank 17 through the suction passage 16. As shown by the dotted line in FIG. 2a, the dirty liquid enters the recycling tank 17 from the suction nozzle 13a on the cleaning assembly 13 through the suction passage 16, so as to form a circulation path of the dirty liquid.

Further, as shown in FIG. 2a, the cleaning machine further includes a cleanliness detector 18. The cleanliness detector 18 is partially or completely arranged on the circulation path of the dirty liquid. That the cleanliness detector 18 is partially arranged on the circulation path of the dirty liquid refers to that part of components of the cleanliness detector 18 are arranged on the circulation path of the dirty liquid and other components are arranged at other parts except the circulation path of the dirty liquid on the cleaning machine.

Optionally, the cleanliness detector 18 may be arranged in a cavity of the cleaning assembly 13, the suction nozzle 13a of the cleaning assembly 13, the suction passage 16 or the recycling tank 17, or may be arranged in multiple of these parts. In the embodiment of the present disclosure, multiple refers to two or more than two. For example, the cleanliness detector 18 may be arranged in the suction nozzle 13a of the cleaning assembly 13 and the suction passage 16. Alternatively, at least one cleanliness detector 18 may be arranged in the cavity of the cleaning assembly 13 and the recycling tank 17. However, the embodiment is not limited thereto. FIG. 2a only shows an example of arranging the cleanliness detector 18 in the suction passage 16 and does not limit an arrangement position of the cleanliness detector.

Optionally, one or more cleanliness detectors 18 may be arranged at each part.

In the present embodiment, the cleanliness detector 18 is configured to detect a physical property value of the dirty liquid and provide the physical property value of the dirty liquid for the processing system 14. Correspondingly, the processing system 14 may determine the cleanliness of the cleaning object according to the physical property value of the dirty liquid.

In the present embodiment of the present disclosure, the detector capable of detecting the physical property value of the dirty liquid on the cleaning object is additionally arranged on the cleaning machine. That is, the detector is partially or completely arranged on the circulation path of the dirty liquid. Then, the processing system may determine the cleanliness of the cleaning object according to the physical property value of the dirty liquid detected by the detector. As such, the cleanliness of the cleaning object may be detected independently, and whether the cleaning object is clean needs not to be determined manually. Therefore, the improvement of user experiences is facilitated.

In the present embodiment, different physical properties of the dirty liquid may be detected if the cleanliness detection component 18 uses different working principles. For example, some optical detectors may detect optical property values of the dirty liquid. For another example, some electrical detectors may detect electrical property values of the dirty liquid. In the embodiment of the present disclosure, a physical property of the dirty liquid includes an optical property and/or electrical property thereof. The optical property of the dirty liquid may be a color, turbidity, transparency or the like of the dirty liquid. The electrical property of the dirty liquid may be resistance, resistivity, current, voltage or the like of the dirty liquid.

The cleanliness detection component 18 provided in the embodiment of the present disclosure will be exemplarily described below with the detection of the optical property value and electrical property value of the dirty liquid by the cleanliness detection component 18 as examples respectively.

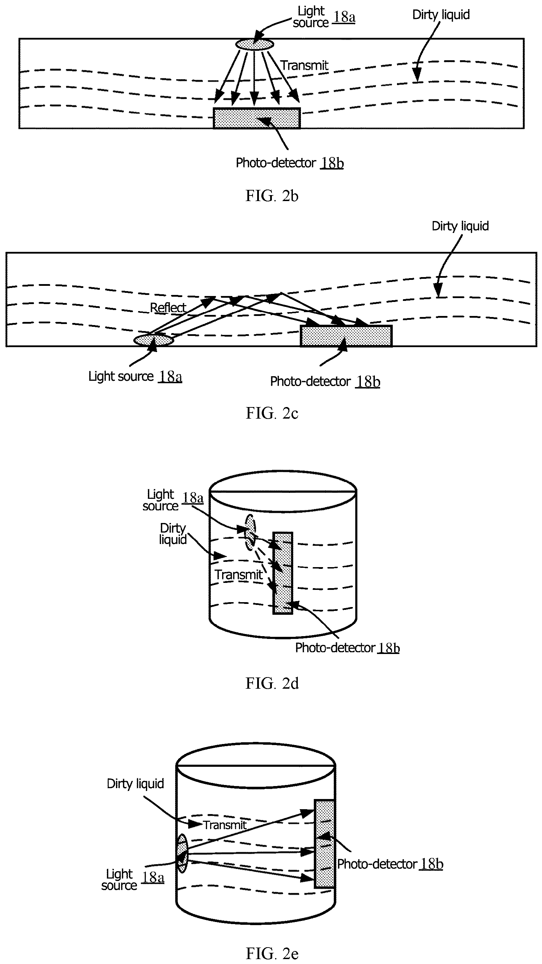

FIG. 2b is a structural schematic diagram of a cleanliness detector according to an embodiment of the present disclosure. As shown in FIG. 2b, the cleanliness detection component 18 includes a light source 18a and a photo-detector 18b. An optical signal emitted by the light source 18a may arrive at the photo-detector 18b after passing through the dirty liquid. Further, the photo-detector 18b converts the arriving optical signal into an electrical signal and outputs the electrical signal to the processing system 14. The electrical signal output by the photo-detector 18b may reflect an optical property of the dirty liquid. For the ease of description and distinction, the electrical signal output by the photo-detector 18b is defined as a first electrical signal in the present embodiment. Correspondingly, the processing system 14 may calculate an optical property value of the dirty liquid according to the first electrical signal and determine the cleanliness of the cleaning object according to the optical property value of the dirty liquid.

Optionally, the processing system 14 may match the optical property value of the dirty liquid in a known corresponding relationship between an optical property value and a cleanliness grade and determine a cleanliness grade corresponding to the optical property value of the dirty liquid as a cleanliness grade of the cleaning object. The cleanliness grade of the cleaning object may reflect the cleanliness thereof. Optionally, as shown in FIG. 2b, the light source 18a may be arranged opposite to the photo-detector 18b. That the light source 18a is arranged opposite to the photo-detector 18b refers to that a light receiving surface of the photo-detector 18b is opposite to the light source 18a through the dirty liquid. That is, light emitted by the light source 18a is transmitted to the photo-detector 18b by the dirty liquid. As such, the optical signal emitted by the light source 18a may be transmitted to the photo-detector 18b by the dirty liquid.

Alternatively, as shown in FIG. 2c, the light source 18a may be arranged at the same side as the photo-detector 18b. That the light source 18a is arranged opposite to the photo-detector 18b refers to that a light receiving surface of the photo-detector 18b is located at the same side of the dirty liquid as the light source 18a. That is, light emitted by the light source 18a is reflected to the photo-detector 18b by the dirty liquid. As such, the optical signal emitted by the light source 18a may be reflected to the photo-detector 18b by the dirty liquid.

For the suction passage 16, that the light source 18a is arranged opposite to the photo-detector 18b may be understood as that the light source 18a and the photo-detector 18b are arranged at the front and back of the suction passage respectively, or are arranged at the left and right of the suction passage respectively. That the light source 18a is arranged at the same side as the photo-detector 18b may be understood as that both the light source 18a and the photo-detector 18b are arranged at the front, back, left or right of the suction passage.

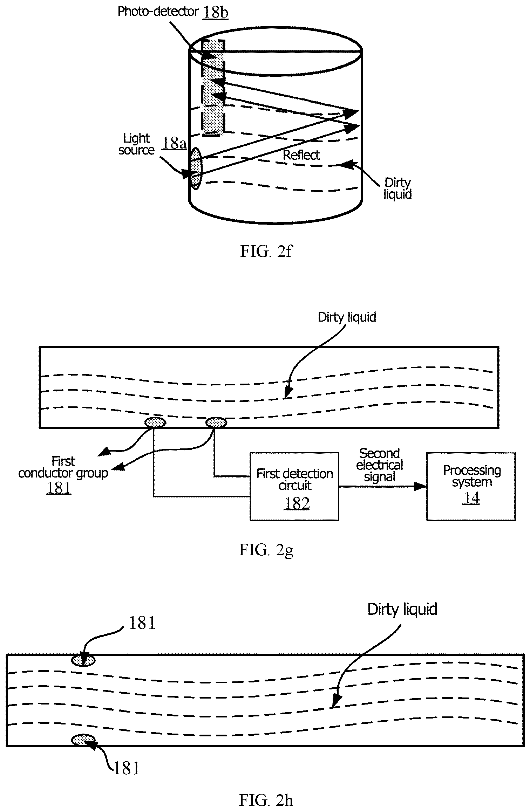

For the recycling tank 17, the light source 18a and the photo-detector 18b may be arranged at the front and back of the recycling tank 17 respectively (as shown in FIG. 2d). Alternatively, the light source 18a and the photo-detector 18b are arranged at the left and right of the recycling tank 17 respectively (as shown in FIG. 2e). That the light source 18a is arranged at the same side as the photo-detector 18b may be understood as that both the light source 18a and the photo-detector 18b are arranged at the front, back, left or right of the recycling tank 17. FIG. 2f only shows an example of arranging both the light source 18a and the photo-detector 18b at the left of the recycling tank 17. Preferably, both the light source 18a and the photo-detector 18b are arranged at a bottom of the recycling tank 17, which contributes to increasing the detection rate of the optical property value of the dirty liquid. The structural form of the recycling tank 17 is only exemplary, and no limits are made thereto.

It is to be noted that, in the embodiment of the present disclosure, a wavelength of the light emitted by the light source 18a is within an optical wavelength range that may be detected by the photo-detector 18b. The light source 18a may be light sources of various optical wavelengths. Correspondingly, the photo-detector 18b may be an optical receiver capable of receiving the optical wavelength of the light emitted by the light source 18a. Optionally, the photo-detector 18b may be an infrared receiving tube if the light source 18a is an infrared light source. The photo-detector 18b may be a laser diode if the light source 18a is a laser light source. The photo-detector 18b may be a color sensor if the light source 18a is an LED light source. However, the embodiment is not limited thereto. A working principle of the cleanliness detection component 18 will be exemplarily described below with the condition that the light source 18a is an LED light source and the photo-detector 18b is a color sensor as an example. When light emitted by the LED light source arrives at the color sensor through the dirty liquid, the color sensor may convert a received optical signal into a Red Green Blue (RGB) voltage and output the RGB voltage to the processing system 14. Correspondingly, the processing system 14 may calculate a color of the dirty liquid according to the RGB voltage and determine the cleanliness of the cleaning object according to the color of the dirty liquid.

Optionally, a corresponding relationship between a liquid color and a cleanliness grade may be preset in the processing system 14. Correspondingly, the processing system 14 may match the color of the dirty liquid in the corresponding relationship between the liquid color and the cleanliness grade and determine a cleanliness grade corresponding to the color of the dirty liquid as a cleanliness grade of the cleaning object. The cleanliness grade of the cleaning object may reflect the cleanliness of the cleaning object.

In practical applications, the circulation path of the dirty liquid may have some dirts, and such dirts affect the first electrical signal received by the photo-detector to some extent to further cause a certain judgment error of the cleanliness of the cleaning object. In the embodiment of the present disclosure, in order to reduce the influence of the dirts of the circulation path of the dirty liquid on a detection result, brightness of the light source 18a may be adjusted before the cleaning machine executes a cleaning task on the cleaning object until a reference electrical signal output by the photo-detector 18b meets a set requirement. That the reference electrical signal output by the photo-detector 18b meets the set requirement refers to that a difference between strength of the reference electrical signal output by the photo-detector 18b and preset reference strength is within a preset difference range. For example, if the reference electrical signal output by the photo-detector 18b is a voltage signal, that the voltage signal output by the photo-detector 18b meets a set requirement refers to that a voltage difference between a voltage value output by the photo-detector 18b and a preset reference voltage value is within a preset voltage difference range.

Further, if the reference electrical signal output by the photo-detector 18b does not meet the set requirement when the brightness of the light source is adjusted to a maximum, the processing system 14 may output first prompting information so as to prompt a user to clean the circulation path of the dirty liquid, namely prompt the user to clean the parts related to the circulation path of the dirty liquid.

In the embodiment of the present disclosure, a manner the processing system 14 outputs the first prompting information is not limited. In some embodiments, the cleaning machine includes an audio component. In such case, the processing system 14 may play the first prompting information through the audio component. In some other embodiments, the processing system 14 may display the first prompting information through the display 15. In some other embodiments, the cleaning machine includes a buzzer. The buzzer is electrically connected with the processing system 14. Correspondingly, if the reference electrical signal output by the photo-detector 18b does not meet the set requirement when the brightness of the light source is adjusted to a maximum, the processing system 14 may control the buzzer to buzz so as to prompt a user to clean the circulation path of the dirty liquid. In some other embodiments, the cleaning machine further includes an indicator lamp. The indicator lamp is electrically connected with the processing system 14. Correspondingly, if the reference electrical signal output by the photo-detector 18b does not meet the set requirement when the brightness of the light source is adjusted to a maximum, the processing system 14 may control the cleanliness indicator lamp (not shown in FIGs. 1b and 1c) to give a prompting signal so as to prompt a user to clean the circulation path of the dirty liquid. Optionally, the processing system 14 may, but not limited to, further control the cleanliness indicator lamp to flicker, display a set color, etc. Alternatively, the cleaning machine in the embodiment of the present disclosure may provide self-cleaning function. The self-cleaning function refers to that the cleaning machine cleans the circulation path of the dirty liquid on its own. Correspondingly, as shown in FIGs. 1b and 1c, the at least one display region further includes a second display region 15b. Optionally, the second display region may be formed by a first indicator lamp. The first indicator lamp is on when the self-cleaning function of the cleaning machine is used.

Optionally, the processing system 14 may start the self-cleaning function of the cleaning machine when cleanliness, detected by the cleanliness detector 18, of the circulation path of the dirty liquid does not meet a set requirement, and control the first indicator lamp to be turned on. That the cleanliness of the circulation path of the dirty liquid does not meet the set requirement refers to that the reference electrical signal output by the photo-detector 18b does not meet the set requirement when the brightness of the light source is adjusted to the maximum.

Alternatively, the processing system 14 may start the self-cleaning function of the cleaning machine when time that the cleaning machine executes a cleaning task on the cleaning object reaches preset time, and control the first indicator lamp to be turned on. Alternatively, the processing system 14 may give the user a prompt that self-cleaning is needed when time that the cleaning machine executes a cleaning task on the cleaning object reaches preset time, start the self-cleaning function of the cleaning machine when the user triggers a self-cleaning button, and control the first indicator lamp to be turned on.

Alternatively, the user may trigger a corresponding self-cleaning function control switch to start the self-cleaning function. Correspondingly, the processing system 14 starts the self-cleaning function of the cleaning machine when detecting that a self-cleaning function control switch is turned on, and controls the first indicator lamp to be turned on.

In addition to the above-mentioned optical detector, the cleanliness detector provided in the embodiment of the present disclosure may also be implemented as an electrical detector. Exemplary descriptions will be made below in combination with FIG. 2g.

As shown in FIG. 2g, the cleanliness detector 18 includes a first conductor group 181 and a first detection circuit 182. The first conductor group 181 is arranged on the circulation path of the dirty liquid. The first detection circuit 182 is electrically connected between the first conductor group 181 and the processing system 14. A conductor group refers to a group of conductors. For the ease of description and distinction, a group of conductors are defined as a conductor group somewhere in the embodiment of the present disclosure. The conductor is of an integrated structure, has a good conductive property in liquid, not only reacts chemically with the liquid, but also may be made from a metal material or nonmetal material with certain hardness. In some preferred embodiments, the conductor is preferably a stainless steel wire.

Further, the first detection circuit 182 may generate and output a second electrical signal to the processing system 14 when the first conductor group 181 contacts with the dirty liquid. The second electrical signal may reflect an electrical property of the dirty liquid. The first conductor group 181 includes at least two conductors not contacting with each other. FIGs. 2g to 2l only show two conductors as an example. Further, part of conductors in the first conductor group 181 is electrically connected with a positive electrode of a power supply unit of the cleaning machine so as to form positive conductors. The other part is grounded so as to form grounded conductors. As such, a closed circuit is formed between the positive conductors and the grounded conductors when the positive conductors and the grounded conductors contact with the dirty liquid. Correspondingly, the first detection circuit 182 may generate and output a second electrical signal to the processing system 14 when the closed circuit is formed between the positive conductors and the grounded conductors.

In the embodiment of the present disclosure, the power supply unit is configured to supply power to each component of the cleaning machine or a cleaning device. The power supply unit may include a power management system, one or more power supplies, and other components associated with the generation, management and distribution of power for a device with the power supply unit. Optionally, the power supply unit may further include a battery pack. The battery pack may be a storage battery or a rechargeable battery.

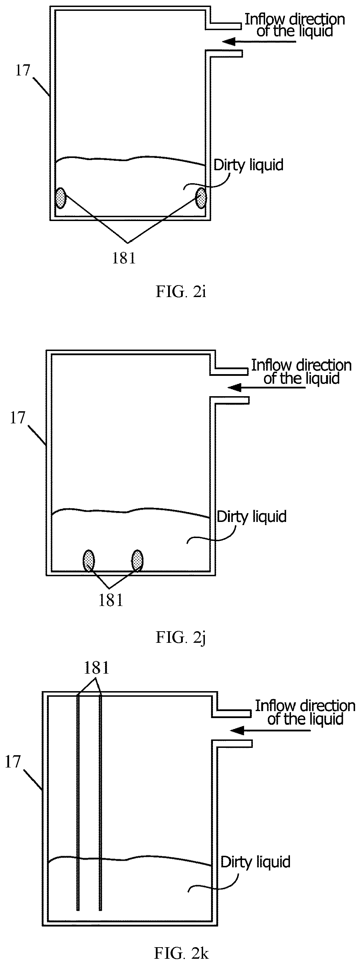

In the present embodiment, the conductor may be, but not limited to, a conductive probe, a conductive patch, a conductive contact, etc. The conductor may be made of stainless steel. Each conductor in the first conductor group 181 may be arranged oppositely or at the same side. As shown in FIGs. 2g and 2h, each conductor in the first conductor group 181 may be arranged on an inside wall of the suction passage if the first conductor group 181 is arranged in the suction passage. Each conductor in the first conductor group 181 may be arranged on an inner wall of the recycling tank 17 if the first conductor group 181 is arranged in the recycling tank. Optionally, as shown in FIG. 2i, the first conductor group 181 may be arranged on an inside wall of the recycling tank 17. Preferably, the first conductor group 181 is arranged at a bottom of the inside wall. Alternatively, as shown in FIG. 2j, the first conductor group 181 is arranged at the bottom of the recycling tank 17. Further, the conductor, if being a conductive probe, may be suspended in the recycling tank 17, as shown in FIG. 2k. Preferably, the conductive probe extends to the bottom of the recycling tank 17. As such, the conductive probe may detect the electrical property value of the dirty liquid once the dirty liquid is sucked into the recycling tank 17.

Further, the conductor, if being a conductive probe, may be a rigid conductive probe. Therefore, positive conductors may be prevented from directly contacting with negative conductors to cause a short circuit.

A working principle and structure of the first detection circuit 182 will be exemplarily described below with the condition that the first conductor group 181 includes conductors A and B not contacting with each other as an example in combination with schematic circuit diagrams shown in FIGs. 2l and 2m.

As shown in FIG. 2l, the first detection circuit 182 includes a voltage detection circuit 182a. A power supply end P of the voltage detection circuit 182a is electrically connected with a conductor A. The power supply end P is also electrically connected with the positive electrode of the power supply unit. Further, a grounding end and output end Q of the voltage detection circuit 182a are electrically connected with a conductor B respectively. The output end Q of the voltage detection circuit 182a is electrically connected to the processing system 14. The grounding end of the voltage detection circuit 182a is electrically connected with the ground.

Optionally, as shown in FIG. 2m, the voltage detection circuit 182a further includes a reference sampling resistor R3. Two ends of the reference sampling resistor R3 are electrically connected with the conductor B and the ground. Optionally, a connection point of the conductor B and the reference sampling resistor R3 may be taken as the output end Q of the voltage detection circuit 182a. A closed circuit is formed between the conductor A and the conductor B when the conductor A and the conductor B contact with the dirty liquid. As such, the processing system 14 may detect voltages at the two ends of the reference sampling resistor R3 to further obtain a voltage of the closed circuit formed between the conductor A and the conductor B, i.e., a voltage of the dirty liquid (a second electrical signal). Since resistance of the reference sampling resistor R3 is known, a current of the closed circuit formed between the conductor A and the conductor B may be obtained. Therefore, resistance of the dirty liquid is obtained.

Further, in order to reduce harms to the processing system 14 brought by an over-voltage output by the voltage detection circuit 182a due to the change of the resistance of the dirty liquid, a buffer circuit 182b may be connected to the output end of the voltage detection circuit 182a, as shown in FIG. 2m. An input end of the buffer circuit 182b is electrically connected with the output end Q of the voltage detection circuit 182a. An output end (DW-R) of the buffer circuit 182b is electrically connected to the processing system 14.

Optionally, as shown in FIG. 2m, the buffer circuit 182b may include an operational amplifier U1 and a Resistance-Capacitance (RC) filter circuit. The RC filter consists of a series-wound resistor R1 and capacitor C1. Further, an in-phase input end 1 of the operational amplifier U1 is electrically connected with the output end Q of the voltage detection circuit 182a, while an inverting input end 3 and an output end 4 are electrically connected. Further, the RC filter circuit is connected in parallel between the output end 4 of the operational amplifier and the ground. The ungrounded end of the RC filter circuit is electrically connected with the processing system 14. That is, a series-connection point of the resistor R1 and capacitor C1 in the RC filter circuit is electrically connected with the processing system 14.

Further, clean liquid sprayed by the cleaning machine may contain certain impurities, and there may be a certain error if the cleanliness of the cleaning object is determined directly by use of the electrical signal output by the first detection circuit 182.

Therefore, a reference electrical signal of the clean liquid sprayed by the cleaning machine may be measured in advance in practical applications. The clean liquid may be clean water, a cleaning solution, a disinfectant, or the like. For the ease of description and distinction, in the present embodiment, a detection circuit that measures the reference electrical signal of the clean liquid sprayed by the cleaning machine is defined as a reference detection circuit, and overall resistance of the reference detection circuit is defined as reference resistance. The overall resistance of the reference detection circuit is own overall resistance of the reference detection circuit, and does not include resistance of the clean liquid. The reference detection circuit may be the first detection circuit or another detection circuit, e.g., a second detection circuit in the following embodiment.

Further, in order to simplify subsequent calculations of the processing system 14, overall resistance of the first detection circuit 182 is set to reference resistance when the electrical property value of the dirty liquid is measured. Based on this, a variable resistance circuit 182c may be arranged in the first detection circuit 182. As shown in FIG. 2m, the first detection circuit 182 further includes a variable resistance circuit 182c. Further, a first end E1 of the variable resistance circuit 182c is electrically connected with the reference sampling resistor R3 in the voltage detection circuit, while a second end E2 is electrically connected with the processing system 14, and a third end E3 is grounded.

Correspondingly, the processing system 14 may adjust resistance of the variable resistance circuit 182c so as to adjust overall resistance of the first detection circuit 182 to reference resistance.

Further, the variable resistance circuit 182c may be implemented as a variable resistor, e.g., a slide rheostat and a potentiometer. An adjustable end of the variable resistor is a second end E2 electrically connected with the processing system 14, while other two nonadjustable ports are electrically connected with the reference sampling resistor R3 and the ground respectively. The processing system 14 may adjust the adjustable end of the variable resistor to adjust resistance of the variable resistor to further adjust the overall resistance of the first detection circuit 182. Alternatively, as shown in FIG. 2m, the variable resistance circuit 182c may further include multiple series-wound sampling resistors. In the present embodiment, multiple refers to two or more than two. For the ease of description and distinction, the sampling resistor in the variable resistance circuit 182c is defined as an optional sampling resistor. The multiple optional sampling resistors are connected in series between the reference sampling resistor R3 and the ground. An N-channel Metal Oxide Semiconductor (N-MOS) transistor is connected in parallel with each series-connection point of the resistors. A drain D of each N-MOS transistor is electrically connected with the series-connection point. Further, as shown in FIG. 2m, a source S of each N-MOS transistor is grounded as a third end E3 of the variable resistance circuit 182c. A gate G of each N-MOS transistor is electrically connected with the processing system 14 as the second end E2 of the variable resistance circuit 182c. Then, the processing system 14 may adjust states of the multiple N-MOS transistors, determine whether to connect the optional sampling resistors to the first detection circuit 182 and determine the specific optional sampling resistor or resistors to be connected to the first detection circuit 182, thereby adjusting the overall resistance of the first detection circuit 182 to the reference resistance. For example, in FIG. 2m, if an N-MOS transistor N1 is turned on, optional sampling resistors R4, R5 and R6 are short-circuited. That is, all of the optional sampling resistors R4, R5 and R6 are not connected to the first detection circuit 182. If the N-MOS transistor N1 is turned off and an N-MOS transistor Q2 is turned on, the optional sampling resistor R4 may be connected to the first detection circuit 182. If all of the N-MOS transistors Q1, Q2 and Q3 are turned off, all of the optional sampling resistors R4, R5 and R6 may be connected to the first detection circuit 182.

Each component in the structural schematic diagram of the circuit provided in the embodiment of the present disclosure may be replaced with a component with the same or similar function. For example, the N-MOS transistor may be replaced with a P-channel Metal Oxide Semiconductor (P-MOS) transistor or a triode (an NPN triode or a PNP triode). Connection relations between each component may be adaptively adjusted with reference to the diagram of the working principle of the circuit shown in FIG. 2m.

In the embodiment of the present disclosure, the reference electrical signal may be measured before the delivery of the cleaning machine, and the measured reference electrical signal is preset in the cleaning machine. Alternatively, a detector for the reference electrical signal may be arranged in the cleaning machine, and the detector is partially arranged on a circulation path of the clean liquid. Therefore, the processing system 14 may determine the cleanliness of the cleaning object according to a difference between the second electrical signal and the reference electrical signal. Further, in the embodiment of the present disclosure, as shown in FIG. 2n, the cleaning machine further includes a water outlet pipeline 110 and solution tank 111 which are sequentially connected with a spray nozzle 19 of the cleaning assembly 13. Clean liquid in the solution tank 111 is delivered into the spray nozzle 19 through the water outlet pipeline 110 so as to be sprayed onto the cleaning object by the spray nozzle 19. Correspondingly, as shown in FIG. 2n, the cleaning machine further includes a second conductor group 112 and a second detection circuit 113. The second conductor group 112 is arranged on a circulation path of the dirty liquid. The second detection circuit 113 is electrically connected between the second conductor group 112 and the processing system 14.

Optionally, the second conductor group 112 may be arranged in at least one part of the solution tank 111, the water outlet pipeline 110 and the spray nozzle 19. An arrangement manner thereof may refer to the related contents about the first conductor group, and will not be elaborated herein. Each part may be provided with one or more second conductor groups.

Optionally, a transitional solution tank (not shown in FIG. 2n) may further be arranged between the solution tank 111 and the spray nozzle 19. For the ease of description, in the embodiment of the present disclosure, the transitional solution tank is called a transitional tank for short. The water outlet pipeline between the solution tank 111 and the transitional tank is defined as a first water outlet pipeline. The water outlet pipeline between the transitional tank and the spray nozzle is defined as a second water outlet pipeline. In such case, the clean liquid in the solution tank 111 flows into the transitional tank through the first water outlet pipeline, and then is delivered into the spray nozzle 19 through the second water outlet pipeline so as to be sprayed onto the cleaning object by the spray nozzle 19. Correspondingly, the second conductor group 112 is arranged on a circulation path of the clean liquid. Further, the second conductor group 112 may also be arranged in the transitional tank.

In the present embodiment, the second conductor group 112 includes at least two conductors not contacting with each other. FIG. 2n only shows two conductors as an example. Further, part of conductors in the second conductor group 112 is electrically connected with the positive electrode of the power supply unit so as to form positive conductors. The other part is grounded so as to form grounded conductors. As such, a closed circuit is formed between the positive conductors and the grounded conductors when the positive conductors and the grounded conductors contact with the clean liquid. Correspondingly, the second detection circuit 113 may generate and output a reference electrical signal to the processing system 14 when the closed circuit is formed between the positive conductors and the grounded conductors. The second detection circuit 113 may generate and output the reference electrical signal to the processing system 14 when the second conductor group 112 contacts with the clean liquid.

Optionally, a circuit structure of the second detection circuit 113 may be implemented into a circuit structure shown in FIG. 2o. Descriptions about the circuit structure of the second detection circuit 113 may refer to the related contents about the first detection circuit 182. Elaborations are omitted herein.

Based on the second detection circuit 113 shown in FIG. 2o, the processing system 14 may adjust states of multiple N-MOS transistors in the second detection circuit 113 to keep the reference electrical signal output by the second detection circuit 113 in a stable range. For example, the processing system 14 may, but not limited to, adjust the states of the multiple N-MOS transistors in the second detection circuit 113 such that a reference voltage output by the second detection circuit 113 is a median voltage of a voltage of the power supply unit. Correspondingly, the processing system 14 may adjust the states of the multiple N-MOS transistors in the first detection circuit 182 to make the states of the multiple N-MOS transistors in the first detection circuit 182 the same as those of the multiple N-MOS transistors in the second detection circuit 182. As such, the overall resistance of the first detection circuit 182 may be made the same as that of the second detection circuit 113 to help to reduce subsequent calculations of the processing system 14 for determining the cleanliness of the cleaning object according to the difference between the second electrical signal and the reference electrical signal.

In the embodiment of the present disclosure, the processing system 14 may determine the cleanliness of the cleaning object according to a difference between the second electrical signal and the reference electrical signal.

Further, in each embodiment of the present disclosure, the processing system 14 may include a processor 14a, as shown in FIG. 2p. The processor 14a may be any hardware processing device. Optionally, the processor may be a Central Processing Unit (CPU), a Graphics Processing Unit (GPU), or a Microcontroller Unit (MCU). Alternatively, the processor may be a programmable device such as a Field-Programmable Gate Array (FPGA), a Programmable Array Logic (PAL), a General Array Logic (GAL), and a Complex Programmable Logic Device (CPLD). Alternatively, the processor is an Advanced Reduced Instruction Set Computer (RISC) Machine (ARM), a System on Chip (SOC), or the like. However, the processor is not limited thereto.

Correspondingly, the processor 14a may match the difference between the second electrical signal and the reference electrical signal in a known corresponding relationship between an electrical signal difference and a cleanliness grade so as to determine a cleanliness grade of the cleaning object. That is, a cleanliness grade corresponding to the difference between the second electrical signal and the reference electrical signal is determined as the cleanliness grade of the cleaning object. Optionally, the processor 14a may calculate the difference between the second electrical signal and the reference electrical signal. Alternatively, as shown in FIG. 2p, the processing system 14 may further include a differential operational circuit 14b. A first input end DW-R of the differential operational circuit 14b is connected to an output end of the first detection circuit 182, and is configured to receive the second electrical signal. A second input end PW-R of the differential operational circuit 14b receives the reference electrical signal. Further, an output end DL of the differential operational circuit 14b is electrically connected with the processor 14a, and is configured to output the difference between the second electrical signal and the reference electrical signal to the processor 14a. Correspondingly, the processor 14a may determine the cleanliness of the cleaning object according to the difference between the second electrical signal and the reference electrical signal.

Optionally, as shown in FIG. 2p, the differential operational circuit 14b may include an operational amplifier U3 and an RC filter circuit. An in-phase input end 1 of the operational amplifier U3 is electrically connected with the output end of the first detection circuit 182 as the first input end of the differential operational circuit, and is configured to receive the second electrical signal. An inverting input end 3 of the operational amplifier U3 receives the reference electrical signal as the second input end of the differential operational circuit 14b. Further, an RC shunt circuit is connected in parallel between the inverting input end 3 and output end 4 of the operational amplifier U3. The RC shunt circuit consists of a shunt-wound resistor R24 and capacitor C10. Further, an RC filter circuit is connected in parallel between the output end 4 of the operational amplifier U3 and the ground. The RC filter circuit consists of a series-wound resistor R23 and capacitor C9. A series-connection point of the resistor R23 and the capacitor C9 is electrically connected with the processing system 14 as the output end DL of the differential operational circuit 14b. Optionally, the operational amplifier U3 further includes positive and negative power supply unit power supply ends 2 and 5. The positive power supply unit power supply end 2 is electrically connected with the positive electrode of the power supply unit of the cleaning machine. The negative power supply unit power supply end 5 is grounded.

It is to be noted that, in some embodiments, in order to improve the accuracy of cleanliness detection for the cleaning object, the cleanliness of the cleaning object may be determined by the optical property value and the second electrical signal together. A specific implementation mode may refer to the related contents in the above-mentioned embodiment, and will not be elaborated herein.

It is to be noted that the cleanliness detection manner shown in FIGs. 2a to 2p is applicable to a cleaning machine as well as other cleaning devices, such as, but not limited to, a handheld dust collector, a window cleaning robot, a wall cleaning machine, or an autonomous mobile dust collector. It is to be further noted that, in some embodiments, the cleanliness detection result obtained by FIGs. 2a to 2p may not be displayed visually. That is, the cleaning device may perform cleanliness detection on the cleaning object in the manner provided in FIGs. 2a to 2p but does not display the result. In some other embodiments, the processing system 14 may perform other operations, in addition to controlling the multiple first display tubes to display different color-brightness-shape combinations according to the cleanliness detection result obtained by FIGs. 2a to 2p. For example, the processing system 14 may further adjust a working state of the cleaning machine, etc., according to the cleanliness of the cleaning object.

In some embodiments, considering behavioral characteristics of the user when executing a cleaning task by use of the cleaning machine, some sensors for sensing the behavioral characteristics may further be arranged for the cleaning machine provided in the embodiment of the present disclosure. For example, in some application scenes, the user may usually increase the force to clean the cleaning object if the cleaning object is relatively dirty. Based on this, a pressure sensor may be arranged on the handle 11a of the cleaning machine. Optionally, the pressure sensor is arranged at a holding position of the handle 11a. Alternatively, a pressure sensor is arranged on the cleaning assembly. Optionally, the pressure sensor is arranged at a bottom of a floor brush, and is pressed against the cleaning object. A resistance strain gauge used for the pressure sensor is made according to a "strain effect". That is, resistance of a conductor or semiconductor material correspondingly changes when the material is mechanically deformed under an external force. Therefore, resistance of the pressure sensor may change when the pressure sensor is subjected to different strains.

The present embodiment also provides a pressure detection circuit. As shown in FIG. 2q, the pressure detection circuit includes an RC filter circuit. The RC filter circuit is connected in parallel between an output end of the pressure sensor and the ground, and may filter and provide a voltage value output by the pressure sensor for the processing system 14. When the pressure sensor is subjected to different strains, resistance thereof may change, and a voltage at a connection of the processing system 14 and the pressure sensor may correspondingly change. Therefore, the processing system 14 may obtain a force change of the user during use according to the change of the resistance of the pressure sensor.

Optionally, a corresponding relationship between resistance of a pressure sensor and pressure may be preset in the processing system 14. Optionally, the corresponding relationship between the resistance of the pressure sensor and the pressure may be in form of a table, a curve chart, etc. FIG. 2s only shows the corresponding relationship between the resistance of the pressure sensor and the pressure in form of a curve chart.

Correspondingly, the processing system 14, when acquiring a pressure value of the pressure sensor, may use an Analog-to-Digital Converter (ADC) function of the processing system 14 to collect 100 sets of voltage values within 10 ms, select middle 80 pieces of data by sequencing and then average the data to obtain an ADC value. A chip ADC uses 12-bit sampling and has a working voltage is 3.3V. Therefore, a voltage is calculated according to $V1=ADC*3300/4095$ (1). $R0/(R0+R32)=V1/3300$ (2) may be obtained according to a circuit principle. R32 is fixed resistance. V1 may be calculated according to formula (1). Therefore, resistance R0 of the pressure sensor may be obtained. Further, the processing system 14 may match the resistance R0 of the pressure sensor in the preset corresponding relationship between the resistance of the pressure sensor and the pressure to further obtain a pressure value P1 corresponding to the resistance R0 of the pressure sensor, and determine the pressure value P1 as a pressure value corresponding to the pressure sensor.

Optionally, the pressure sensor may be a flexible thin-film pressure sensor, which contributes to reducing the foreign body sensation when the user holds the handle tightly. Optionally, a thickness of the flexible thin-film pressure sensor may be smaller than 0.3 mm. Optionally, a dimension chart of the pressure sensor may be shown in FIG. 2r. In FIG. 2r, φ10 represents that a diameter of the pressure sensor is 10 mm, φ7.5 represents that a diameter of a sensing surface of the pressure sensor is 7.5 mm, 40 represents that a length of a thin film of the pressure sensor is 40 mm, 5.8 represents that a width of the thin film of the pressure sensor is 5.8 mm, and 2.54 represents that a distance between two output pins of the pressure sensor is 2.54 mm. In the present embodiment, the pressure sensor may detect and provide a pressure value on the handle for the processing system 14. Correspondingly, the processing system 14 may control the first display region to display the pressure value. A magnitude of the pressure value represents the cleanliness of the cleaning object achieved by the cleaning assembly. The cleanliness of the cleaning object is lower if the pressure value is larger. Alternatively, a corresponding relationship between a pressure value and cleanliness is preset in the processing system 14. Based on this, the processing system 14 may determine the cleanliness of the cleaning object achieved by the cleaning assembly according to a pressure value on the handle detected by the pressure sensor and the corresponding relationship between the pressure value and the cleanliness, and control the multiple first display tubes to display a color-brightness-shape combination corresponding to the cleanliness.

Optionally, different users have different using habits, and apply different forces to the handle 11a. In order to improve the accuracy of the cleanliness of the cleaning object, the cleanliness of the cleaning object may be represented by a relative pressure value. The relative pressure value is a pressure difference ΔP between a pressure value measured in real time and a reference pressure value.

Based on this, when a user uses the cleaning machine, initial pressure of the user on the handle 11a may be measured at first. A measured initial pressure value is determined as a reference pressure value. Then, pressure applied to the handle 11a by the user is measured in real time when the cleaning machine executes a cleaning task on a cleaning object. A pressure difference ΔP between the pressure applied to the handle 11a by the user during use and the reference pressure value is calculated. Optionally, the processing system 14 may determine cleanliness of the cleaning object according to a preset corresponding relationship between a pressure difference and cleanliness.

Further, the processing system 14 may further adjust a working state of the cleaning machine according to the pressure difference ΔP between the pressure applied to the handle 11a by the user during use and the reference pressure value. For example, the processing system 14 may adjust power of a main motor 120 of the cleaning machine, a motor of a water pump 114 and a motor of the cleaning assembly 13 to that adapted to the pressure value ΔP, etc., according to the pressure difference ΔP between the pressure applied to the handle 11a by the user during use and the reference pressure value.

For another example, in some other application scenes, the user may usually repeatedly clean the cleaning object if the cleaning object is relatively dirty. In such a application scene, the cleaning machine is driven by the user to keep changing an operation direction. Based on this, an acceleration sensor may be arranged on the cleaning machine.

The acceleration sensor may detect acceleration information of the cleaning machine during use and provide the detected acceleration information for the processing system 14. Correspondingly, the processing system 14 may determine an operation direction change frequency of the cleaning machine according to the acceleration information. Further, the processing system 14 may control the multiple first display tubes to display the operation direction change frequency. The operation direction change frequency represents the cleanliness of the cleaning object achieved by the cleaning assembly. If the operation direction change frequency is higher, the cleanliness of the cleaning object is lower. Alternatively, a corresponding relationship between an operation direction change frequency and cleanliness is preset in the processing system 14. Based on this, the processing system 14 may determine the cleanliness of the cleaning object achieved by the cleaning assembly according to the corresponding relationship between the operation direction change frequency of the cleaning machine and the cleanliness, and control the multiple first display tubes to display a color-brightness-shape combination corresponding to the cleanliness. Further, the processing system 14 may further adjust a working state of the cleaning machine according to the operation direction change frequency of the cleaning machine. For example, the processing system 14 may adjust power of a main motor 120 of the cleaning machine, a motor of a water pump 114 and a motor of the cleaning assembly 13 to that adapted to the operation direction change frequency of the cleaning machine, etc., according to the operation direction change frequency of the cleaning machine. Optionally, the processing system may not change the power of the main motor 120, the motor of the water pump 114 and the motor of the cleaning assembly 13 when the operation direction change frequency of the cleaning machine is less than or equal to a set first frequency. The processing system may adjust the power of the main motor 120, the motor of the water pump 114 and the motor of the cleaning assembly 13 to that adapted to the operation direction change frequency of the cleaning machine, etc., when the operation direction change frequency of the cleaning machine is higher than the set first frequency.

Optionally, the acceleration sensor may be arranged on each component of the cleaning machine. For example, the acceleration sensor may be arranged at the bottom of the cleaning assembly or on the main body or the handle assembly.

In the embodiment of the present disclosure, no matter the manner used to detect the cleanliness of the cleaning object achieved by the cleaning assembly, the processing system 14 may display the cleanliness of the cleaning object through the display 15 on one hand, and on the other hand, may adjust the working state of the cleaning machine according to the cleanliness of the cleaning object.

For example, the processing system 14 may adjust the power of the water pump 114 of the cleaning machine to that adapted to the cleanliness of the cleaning object according to the cleanliness of the cleaning object. Correspondingly, the processing system 14 may preset a corresponding relationship between a cleanliness grade and power of the water pump. Based on the corresponding relationship, the processing system 14 may determine power of the water pump according to a cleanliness grade of the cleaning object. Preferably, if the cleanliness grade is higher, the power of the water pump is lower, a water discharge of the cleaning device is smaller, and it indicates that the cleaning object is cleaner.

For another example, the processing system 14 may adjust the power of the main motor of the cleaning device and/or the motor of the cleaning assembly to that adapted to the cleanliness of the cleaning object according to the cleanliness of the cleaning object. Correspondingly, the processing system 14 may preset a corresponding relationship between a cleanliness grade and power of the main motor and/or the motor of the cleaning assembly. Based on the corresponding relationship, the processing system 14 may determine power of the main motor and/or the motor of the cleaning assembly according to a cleanliness grade of the cleaning object. Preferably, if the cleanliness grade is higher, the power of the main motor and/or the motor of the cleaning assembly is lower, a water suction capacity of the cleaning device is lower, and it indicates that the cleaning object is cleaner. In the embodiment of the present disclosure, the main motor sucks the dirty liquid by the suction nozzle 13a on the cleaning assembly of the cleaning device and delivers the dirty liquid into the recycling tank of the cleaning device through the suction passage in the cleaning device. The motor of the cleaning assembly drives the cleaning assembly to perform a cleaning operation on the cleaning object.

For another example, the processing system 14 may adjust task execution time of the cleaning device to that adapted to the cleanliness of the cleaning object according to the cleanliness of the cleaning object. Correspondingly, the processing system 14 may preset a corresponding relationship between a cleanliness grade and cleaning time. Based on the corresponding relationship, the processing system 14 may determine cleaning time according to a cleanliness grade of the cleaning object. Preferably, if the cleanliness grade is higher, the power of the main motor and/or the motor of the cleaning assembly is lower, cleaning time is shorter, and it indicates that the cleaning object is cleaner.

Optionally, the cleaning machine may be controlled to stop working if the processing system 14 determines that the cleanliness of the cleaning object reaches a standard. That the cleanliness of the cleaning object reaches the standard may refer to that the cleanliness grade of the cleaning object is the highest cleanliness grade. Optionally, the processing system 14 may control the water pump, the main motor and/or the motor of the cleaning assembly to stop, etc., if the cleanliness grade of the cleaning object is the highest cleanliness grade.

Correspondingly, as shown in FIG. 3a, the cleaning machine further includes a water pump driving circuit 115.

The water pump driving circuit 115 is electrically connected between the water pump 114 and the processing system 14. The processing system 14, when adjusting the working state of the cleaning machine, may determine a signal parameter according to the cleanliness of the cleaning object and input a first Pulse Width Modulation (PWM) signal with the signal parameter to the water pump driving circuit 115 so as to control the water pump to output a water discharge meeting a cleaning requirement. The signal parameter includes a frequency and duty ratio of the first PWM signal. Optionally, voltages of power supply units may be different for cleaning machines with different performance. Therefore, the processing system 14 may also determine the signal parameter according to the voltage of the power supply unit and the cleanliness of the cleaning object. For example, a corresponding relationship between a voltage of a power supply unit and a signal parameter of a first PWM signal may be shown in the following Table 1.

Table 1 Corresponding Relationship Between Voltage of Power Supply Unit and Signal Parameter of First PWM Signal

| Voltage (DC) of the power supply unit | 20 cc/min | | 30 cc/min | |
|---|---|---|---|---|
| | Frequency (Hz) | On-mode duty ratio (%) | Frequency (Hz) | On-mode duty ratio (%) |
| 18.0 V | 5 | 6 | 6 | 13 |
| 19.0V | 5 | 6 | 6 | 12 |
| 20.0V | 5 | 5 | 6 | 10 |
| 21.0V | 5 | 5 | 7 | 8 |
| 22.0V | 5 | 5 | 7 | 8 |
| 23.0V | 5 | 5 | 7 | 6 |
| 24.0V | 5 | 4 | 6 | 6 |
| 25.0V | 5 | 4 | 6 | 6 |

Correspondingly, the embodiment of the present disclosure also provides a water pump driving circuit. As shown in FIG. 3b, the water pump driving circuit 115 includes a main driving circuit 115a, an auxiliary driving circuit 115b, and a selection circuit 115c. Both the main driving circuit 115a and the auxiliary driving circuit 115b are electrically connected with the processing system 14, the selection circuit, and the water pump 114. Optionally, the main driving circuit 115a may be electrically connected with the water pump 114 directly, or may be electrically connected with the water pump through the auxiliary driving circuit 115b.

Optionally, the auxiliary driving circuit 115b may be electrically connected with the processing system 14 directly, or may be electrically connected with the processing system 14 through the main driving circuit 115a.

In the present embodiment, the main driving circuit 115a may drive the water pump 114 to work according to the first PWM signal sent by the processing system 14. When the main driving circuit 115 fails, the selection circuit 115c may turn off the auxiliary driving circuit 115b so as to avoid the water pump 114 being damaged after a direct-current voltage is applied to the water pump 114.

A working principle of the water pump driving circuit provided in the present embodiment will be described in detail below in combination with a specific circuit structure. FIG. 3c is a diagram of a working principle of a water pump driving circuit according to an embodiment of the present disclosure. As shown in FIG. 3c, an input end of the main driving circuit 115a is electrically connected with the processing system 14, and is configured to receive the first PWM signal sent by the processing system 14. An output end thereof is electrically connected with the water pump 114 through the auxiliary driving circuit 115b. A power supply end thereof is electrically connected with the power supply unit. The main driving circuit 115a may drive the water pump 114 to work according to the first PWM signal.

The selection circuit 115c is electrically connected with a connection point of the output end of the main driving circuit115a and an input end of the auxiliary driving circuit 115b. When the main driving circuit 115a fails, the selection circuit 115c may turn off the auxiliary driving circuit 115b so as to avoid the water pump 114 being damaged after a direct-current voltage is applied to the water pump 114.

As shown in FIG. 3c, the main driving circuit 115a may include an NPN triode Q10, an NPN triode Q9, and a P-MOS transistor Q8. A base of the NPN triode Q10 is electrically connected with the processing system 14, while a collector is connected in series with resistors R34 and R35 and then electrically connected with a positive electrode P+ of the power supply, and an emitter is grounded. A base of the NPN triode Q9 is electrically connected with a series-connection point of the resistors R34 and R35, while a collector is electrically connected with the positive electrode P+ of the power supply, and an emitter is electrically connected with a gate of the P-MOS transistor Q8. A source S of the P-MOS transistor Q8 is electrically connected with the positive electrode P+ of the power supply unit, while a drain D is electrically connected with the input end of the auxiliary driving circuit 115b.

Further, as shown in FIG. 3c, the auxiliary driving circuit 115b includes a P-MOS transistor Q7. A source S of the P-MOS transistor Q7 is electrically connected with the output end of the main driving circuit 115a, while a gate G is connected in series with a resistor R50 and then electrically connected with the positive electrode P+ of the power supply unit, and a drain D is electrically connected with a positive electrode PM+ of the water pump 114.

As shown in FIG. 3c, the selection circuit includes a capacitor C23, a diode D11, and an NPN triode Q11. One end of the capacitor C23 is electrically connected with the connection point of the output end of the main driving circuit 115a and the input end of the auxiliary driving circuit 115b, while the other end is electrically connected with a cathode of the diode D11. An anode of the diode D11 is grounded. Further, a base of the NPN triode Q11 is electrically connected with a series-connection point of the capacitor C23 and the diode D11, while a collector is electrically connected with the positive electrode P+ of the power supply unit, and an emitter is grounded. Optionally, the selection circuit 115c may further include a buffer circuit 115c1. The buffer circuit is electrically connected between the series-connection point of the capacitor C23 and the diode D11 and the base of the NPN triode Q11.

Further, the buffer circuit 115c1 includes an operational amplifier U4 and an RC filter circuit. An in-phase input end of the operational amplifier U4 is connected in series with R44 and then electrically connected with the series-connection point of the capacitor C23 and the diode D11, while an inverting input end and an output end are electrically connected. Further, the RC filter circuit is connected in parallel between an output end of the operational amplifier U4 and the ground, and consists of a series-wound resistor R46 and capacitor C25. A series-connection point of the resistor R46 and the capacitor C25 is connected in series with R47 and then electrically connected with the base of the NPN triode Q11.

Further, the water pump driving circuit 115 may further include a water pump current detection circuit 115d. The water pump current detection circuit 115d is electrically connected between a negative electrode of the water pump 114 and the processing system 14, and is configured to detect and provide a current flowing through the water pump 114 for the processing system 14. As shown in FIG. 3c, a port PMCS of the water pump current detection circuit 115d is electrically connected with the processing system 14. Further, if the current flowing through the water pump is more than or equal to a preset current threshold, the processing system 14 stops inputting the first PWM signal to the water pump driving circuit 115 so as to stop the water pump 114. The preset current threshold may be a current value when the water pump works abnormally.

Optionally, as shown in FIG. 3c, the water pump current detection circuit 115d includes shunt-wound sampling resistors R42 and R43. Further, as shown in FIG. 3c, the water pump current detection circuit 115d may further include an RC filter circuit consisting of a resistor R40 and a capacitor C22, configured to filter ripples of an output voltage of the water pump 114.

The working principle of the water pump driving circuit 115 will be exemplarily described below in combination with a schematic circuit diagram shown in FIG. 3c.

As shown in FIG. 3c, the processing system 14 inputs the first PWM signal to the NPN triode Q10 through a Pump-c port. The NPN triode Q10 is turned on when the processing system 14 outputs a high level to the NPN triode Q10. Then, a voltage of the gate G of the P-MOS transistor Q8 is pulled down, and a voltage of the source S is the voltage of the power supply unit. The voltage of the source S is higher than that of the gate G, so the P-MOS transistor Q8 is turned on. Correspondingly, the P-MOS transistor Q8 is turned off when the processing system 14 outputs a low level to the NPN triode Q10. Therefore, when the processing system 14 inputs the first PWM signal to the NPN triode Q10, the two ends of the capacitor C23 receive an alternating-current signal, and the capacitor C23 is turned on. An output voltage of the capacitor is input to the NPN triode Q11 after followed by the operational amplifier U4 to turn on the NPN triode Q11. The gate of the P-MOS transistor Q7 is pulled down, while a voltage of the source S is the voltage of the power supply unit. Therefore, the P-MOS transistor Q7 is turned on. In such case, the power supply unit starts supplying power to the water pump 114, and the water pump 114 works. A current flows into the water pump from the positive electrode PM+ of the water pump, then flows out from the negative electrode PM- of the water pump, and then is grounded through the sampling resistors R42 and R43. A voltage value at the PMCS port is U=I*R. Resistance R is shunt resistance of the sampling resistors R42 and R43. The processing system 14 detects the voltage value at the PMCS port, and then may calculate a current value flowing through the water pump 114.

Optionally, the P-MOS transistor Q8 is kept on when the main driving circuit 115a is short-circuited. In such case, the capacitor C23 receives a direct-current signal, and the capacitor C23 is in a charged state, equivalently short-circuited. Therefore, the NPN triode Q11 is turned off, and the gate G of the P-MOS transistor Q7 is further electrically connected with the positive electrode P+ of the power supply unit through the resistor R50. Since the main driving circuit 115a is short-circuited, the voltage of the source S of Q7 is equal to that of the gate G. Therefore, Q7 may not be turned on, and the water pump may be protected from being burnt out.

It is to be noted that the implementation form of the circuit structure of the water pump driving circuit shown in FIG. 3c is only exemplary and not intended to limit the circuit structure.

In some embodiments, the at least one display region further includes a third display region 15c. The third display region 15c is configured to display liquid level information of a liquid storage apparatus of the cleaning machine. The liquid storage apparatus is a solution tank and/or a recycling tank. Optionally, as shown in FIGs. 1b and 1c, the third display region 15c is located in a middle region of the display 15.

In the present embodiment, the liquid level information of the liquid storage apparatus may be a liquid level value of the liquid storage apparatus or a liquid level state in the liquid storage apparatus. The liquid level state in the liquid storage apparatus refers to whether the liquid storage apparatus is in a full-liquid-level state or a liquid-deficient state. Correspondingly, the third display region 15c may include a first subregion 15c1 formed by at least one second indicator lamp. The at least one second indicator lamp displays different liquid level states in the liquid storage apparatus under the control of the processing system 14.

In an embodiment, the liquid storage apparatus of the cleaning machine includes a solution tank and a recycling tank. In such case, the at least one second indicator lamp may include a first-type indicator lamp and a second-type indicator lamp. Optionally, the first-type indicator lamp and the second-type indicator lamp may be distributed, but not limited to, in the same row, in the same column, in a staggered manner, or the like. In the present embodiment, the first-type indicator lamp is configured to be turned on or flicker when clean liquid in the solution tank of the cleaning machine is lower than a set first liquid level threshold so as to give a user a prompt that the solution tank is in the liquid-deficient state. The second-type indicator lamp is configured to be turned on or flicker when the dirty liquid in the recycling tank of the cleaning machine is higher than a set second liquid level threshold so as to give the user a prompt that the recycling tank is in the full-liquid-level state. The first liquid level threshold refers to a minimum liquid level, permitted by the cleaning machine, of the clean liquid in the solution tank. The solution tank is in the liquid-deficient state if the clean liquid in the solution tank is lower than the first liquid level threshold. The second liquid level threshold refers to a maximum liquid level of the dirty liquid permitted by the recycling tank. If the clean liquid in the recycling tank is higher than the liquid level, it indicates that the recycling tank is in full-liquid-level state. Optionally, the first liquid level threshold is lower than the second liquid level threshold. Further, the second liquid level threshold is less than or equal to a height of the recycling tank. Of course, the first-type indicator lamp may also indicate that the solution tank is in the full-liquid-level state when the clean liquid is injected into the solution tank so as to prompt the user to stop injecting the clean liquid into the solution tank.

In some embodiments, the third display region may further include a second subregion (not shown in FIGs. 1b and 1c). The second subregion may be formed by at least one first nixie tube, and is configured to display the liquid level value of the liquid storage apparatus under the control of the processing system 14, e.g., 1, 2 or 3.

Optionally, the at least one first nixie tube may be located between the first-type indicator lamp and the second-type indicator lamp. That is, the first-type indicator lamp and the second-type indicator lamp are arranged on two sides of the at least one first nixie tube respectively.

It is to be noted that, no matter whether the third display region displays the liquid level state of the liquid storage apparatus or the liquid level value of the liquid storage apparatus, the cleaning machine may include a liquid level detector 117. The liquid level detector 117 may be arranged on an inner side and/or outer side of the liquid storage apparatus, and is configured to detect liquid level information of liquid in the liquid storage apparatus. The liquid level information may reflect the liquid level state and/or liquid level value of the liquid storage apparatus.

Correspondingly, the processing system 14 is electrically connected with the liquid level detector 117, and may calculate the liquid level state or liquid level value of the liquid storage apparatus according to the liquid level information of the liquid in the liquid level storage apparatus. In addition, the processing system 14 may further correspondingly control the liquid storage apparatus according to the liquid level information.

In the embodiment of the present disclosure, the liquid level detector 117 may be a contact liquid level detector or a non-contact liquid level detector. Exemplary descriptions will be made below respectively. FIG. 4a is a structural schematic diagram of another cleaning machine according to an embodiment of the present disclosure. As shown in FIG. 4a, at least one third conductor group 117a (contact liquid level detector) is arranged in the liquid storage apparatus. The at least one third conductor group 117a is connected with the processing system 14. The at least one third conductor group 117a is configured to detect the liquid level information of the liquid in the liquid storage apparatus and report the detected liquid level information to the processing system 14. The processing system 14 may display the liquid level information in the third display region 15c on one hand, and on the hand, may correspondingly control the liquid storage apparatus according to the liquid level information.

In the present embodiment, detecting the liquid level information of the liquid in the liquid storage apparatus by use of conductors may implement liquid level detection without using a buoyancy of the liquid. No only may the influence of the stability of a liquid surface on a liquid level detection result be reduced, but also the liquid level detection reliability and timeliness may be improved.

It is to be noted that the shapes, numbers, implementation forms and arrangement positions of the liquid storage apparatus, the processing system and the conductors in the present embodiment shown in FIG. 4a are all exemplary, and no limits are made thereto.

In an optional embodiment, as shown in FIG. 4a, the cleaning machine further includes at least one liquid level detection circuit 118. The at least one third conductor group 117a is connected with the processing system 14 through the at least one liquid level detection circuit 118. The at least one liquid level detection circuit 118 is configured to convert the liquid level information detected by the at least one third conductor group 117a into an electrical signal and output the electrical signal to the processing system 14 such that the processing system 14 correspondingly controls the liquid storage apparatus according to the electrical signal. An arrangement position and number of the liquid level detection circuit 118 in FIG. 4a are only exemplary, and no limits are made thereto.

Further, as shown in FIG. 4a, each liquid level detection circuit 118 includes a power supply end P+, a grounding end GND, and a signal output end MCU-IN connected with the processing system 14. As shown in FIG. 4b, each liquid level detection circuit 118 further includes a mutually insulated first terminal 1 and second terminal 2. The first terminal 1 and the second terminal 2 are configured to connect the at least one third conductor group 117a at the same liquid level. Each third conductor group 117a includes a first conductor and second conductor which do not contact with each other. The first conductors and second conductors in a plurality of groups of conductors configured to detect the same liquid level in the at least one third conductor group 117a are electrically connected with the first terminal 1 and second terminal 2 of the same detection circuit respectively. Each third conductor group 117a may include one or more first conductors and one or more second conductors. The number of the first conductors may be the same as or different from that of the second conductors. FIG. 4b is a schematic circuit diagram of a liquid level detection circuit according to an embodiment of the present disclosure. As shown in FIG. 4b, besides the power supply end P+, the grounding end GND and the signal output end MCU-IN connected with the processing system 14, the liquid level detection circuit further includes a filter circuit 118a located at one side of the power supply end P+. The filter circuit 118a is connected in parallel with a plurality of groups of conductors connected to the corresponding detection circuit, and is configured to filter noise interferences brought by the fluctuation of a liquid surface of the liquid.

The first conductor in each conductor group may be electrically connected with the first terminal 1 of the liquid level detection circuit 118, or may be electrically connected with the second terminal 2 of the liquid level detection circuit 118. The second conductor is electrically connected with the second terminal 2 of the liquid level detection circuit 118 when the first conductor is electrically connected with the first terminal 1 of the liquid level detection circuit 118. Correspondingly, the second conductor is electrically connected with the first terminal 1 of the liquid level detection circuit 118 when the first conductor is electrically connected with the second terminal 2 of the liquid level detection circuit 118. For the ease of description and distinction, a conductor electrically connected with the second terminal 2 of the liquid level detection circuit 118 is called a positive conductor hereinafter, and a conductor electrically connected with the first terminal 1 of the liquid level detection circuit 118 is called a grounded conductor. Optionally, as shown in FIG. 4b, the positive conductor is electrically connected with the second terminal 2 of the liquid level detection circuit 118, and the grounded conductor is electrically connected with the first terminal 1 of the liquid level detection circuit 118.

Optionally, as shown in FIG. 4b, the filter circuit 118a may be an RC circuit. A resistor R51, a resistor R52 and a capacitor C27 form a filter. In order to improve a noise filtering effect, capacitance of the capacitor C27 may preferably be of a μf or pf level.

Further, as shown in FIG. 4b, in order to improve the stability of the liquid level detection circuit 118, the liquid level detection circuit 118 further includes a first voltage regulator tube D12. A cathode and anode of the first voltage regulator tube D12 are electrically connected with the power supply end P+ and grounding end GND of the corresponding detection circuit respectively, and are located between an RC series-parallel circuit and the power supply end P+.

In order to further improve the stability of the liquid level detection circuit 118, the liquid level detection circuit 118 further includes a second voltage regulator tube D13 arranged at a side of the signal output end MCU-IN. A cathode and anode of the second voltage regulator tube D13 are electrically connected with the power supply end P+ and grounding end GND of the corresponding detection circuit respectively. Optionally, as shown in FIG. 4b, resistance of part of conductors between the first terminal 1 and the second terminal 2 may change, so a current limiting resistor R53 connected in series between the power supply end P+ and the RC circuit and a current limiting resistor R54 connected in series between the signal output end MCU-IN and the positive conductor are arranged in the liquid level detection circuit 118. Both the resistor R53 and the resistor R54 are current limiting resistors, and mainly play a role of protection. The resistor R53 protects the first voltage regulator tube D12. The resistor R54 protects the processing system 14. Further, the first voltage regulator tube D12 and the second voltage regulator tube D13 may make signals output more stably. For the liquid level detection circuit shown in FIG. 4b, a predetermined full liquid level of the liquid storage apparatus is detected by the detection circuit. When the liquid in the liquid storage apparatus reaches a liquid level detected by the first conductor and second conductor connected with the liquid level detection circuit 118, the first conductor and the second conductor are turned on under the action of the liquid, a voltage of the signal output end MCU-IN changes, and the signal output end MCU-IN further outputs a third electrical signal to the processing system 14. Then, the processing system 14 correspondingly controls the liquid storage apparatus according to the third electrical signal.

Correspondingly, a predetermined remaining liquid level of the liquid storage apparatus may also be detected by the liquid level detection circuit. When the liquid in the liquid storage apparatus is lower than the liquid level detected by the first conductor and second conductor connected with the liquid level detection circuit 118, the first conductor and the second conductor are not turned on, the voltage of the signal output end MCU-IN changes, and the signal output end MCU-IN further outputs a fourth electrical signal to the processing system 14. Then, the processing system 14 may obtain that the predetermined remaining liquid level of the liquid storage apparatus is lower than the predetermined liquid level (for the solution tank, the predetermined liquid level is the above-mentioned first liquid level threshold) according to the second electrical signal, and may also correspondingly control the liquid storage apparatus according to the second signal.

In the embodiment of the present disclosure, the number of the at least one liquid level detection circuit 118 and the number of the at least one third conductor group 117a may be set flexibly as practically required. The number of the liquid level detection circuit 118 may be the same as or different from that of the conductor group 117a, and may specifically be set flexibly according to a practical liquid level detection requirement. A setting condition of the number of the liquid level detection circuit 118 and the number of the conductor group 117a will be exemplarily described below in combination with several optional liquid level detection manners.

In a first manner, as shown in FIG. 4c, one conductor group 117a is arranged at the same liquid level to detect the liquid level. The conductor group is electrically connected with a detection circuit corresponding to the liquid level. In this manner, the number of the detection circuit is equal to that of the conductor group.

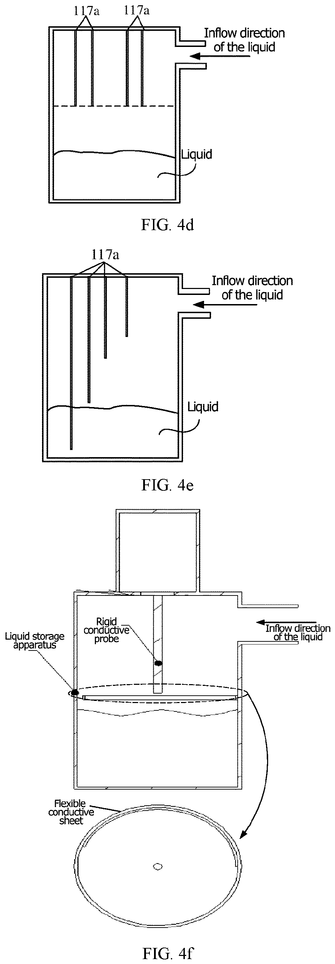

In a second manner, as shown in FIG. 4d, multiple conductor groups 117a are arranged at the same liquid level to detect the liquid level. These conductor groups may be connected with the same detection circuit. In this manner, the number of the detection circuit may be smaller than that of the conductor group.

In a third manner, as shown in FIG. 4e, the same conductor group is configured to detect multiple liquid levels. Conductors detecting different liquid levels in a conductor group are electrically connected with different detection circuits respectively. In this manner, the number of the detection circuit is larger than that of the conductor group.

In the embodiment of the present disclosure, the liquid level of the liquid in the liquid storage apparatus may be detected according to whether the at least one third conductor group 117a connected between the first terminal 1 and second terminal 2 of the liquid level detection circuit 118 is turned on. Therefore, distances between the first conductor and/or second conductor in the at least one third conductor group 117a and the bottom of the liquid storage apparatus may be controlled to implement the detection of different liquid levels. Optionally, a tail end of each conductor in a plurality of groups of conductors configured to detect the same liquid level in the at least one third conductor group 117a is at the same distance from the bottom of the liquid storage apparatus. Alternatively, tail ends of first conductors and second conductors in a plurality of groups of conductors configured to detect the same liquid level in the at least one third conductor group 117a are at different distances from the bottom of the liquid storage apparatus. However, the tail ends of all the first conductors in the plurality of groups of conductors configured to detect the same liquid level are at the same distance from the bottom of the liquid storage apparatus, and the tail ends of the second conductors in the plurality of groups of conductors configured to detect the same liquid level are at the same distance from the bottom of the liquid storage apparatus.

Conductors detecting different liquid levels are at different distances from the bottom of the liquid storage apparatus.

Further, in the embodiment of the present disclosure, the at least one third conductor group 117a may be arranged at different positions of the liquid storage apparatus so as to control the distance thereof from the bottom of the liquid storage apparatus. An arrangement position of the at least one third conductor group 117a will be exemplarily described below in combination with several optional liquid level detection manners.

In implementation mode 1, all conductors in each conductor group may be arranged on an inside wall of the liquid storage apparatus.

In implementation mode 2, part of conductors in each conductor group are arranged on an inside wall of the liquid storage apparatus, while the other part of conductors are arranged at the bottom of the liquid storage apparatus.

In implementation mode 3, all conductors in each conductor group are suspended at an inner side of the top of the liquid storage apparatus.

In implementation mode 4, part of conductors in each conductor group is suspended at an inner side of the top of the liquid storage apparatus, while the other part of conductors are arranged at the bottom of the liquid storage apparatus.

In implementation mode 5, part of conductors in each conductor group is suspended at an inner side of the top of the liquid storage apparatus, while the other part of conductors are arranged at an inside wall of the liquid storage apparatus.

In implementation mode 6, all conductors in each conductor group are arranged at the bottom of the liquid storage apparatus.

Further, a conductor suspended at the inner side of the top of the liquid storage apparatus may be a rigid conductive probe, and one end thereof is fixedly arranged at the inner side of the top of the liquid storage apparatus. Therefore, a short circuit between conductors caused by the swing of the conductor driven by the liquid may be prevented when the liquid in the liquid storage apparatus flows. A conductor arranged on the inside wall of the liquid storage apparatus may be, but not limited to, a flexible conductive sheet, a conductive contact, a conductive terminal, etc. Further, the conductor, when being a rigid conductive probe, may be integrated into a linear structure.

Further, it can be seen according to implementation modes 1 to 6 that, in an optional implementation mode, each conductor group may include at least one rigid conductive probe arranged in the center of the liquid storage apparatus and at least one flexible conductive sheet, conductive contact, conductive terminal, etc., arranged on the inside wall of the liquid storage apparatus, as shown in FIG. 4f. In such case, conductors detecting the same liquid level include at least one conductor connected with the first terminal 1 of the detection circuit and at least one conductor connected with the second terminal 2 of the detection circuit. The at least one rigid conductive probe and the at least one flexible conductive sheet, conductive contact, conductive terminal, etc., arranged on the inside wall of the liquid storage apparatus may be arranged in the following implementation modes.

In implementation mode a1, the at least one rigid conductive probe arranged in the center of the liquid storage apparatus may extend to the bottom of the liquid storage apparatus. The conductor (flexible conductive sheet, conductive contact or conductive terminal) arranged on the inside wall of the liquid storage apparatus is fixedly arranged on the inside wall of the liquid storage apparatus according to a sequence from short to long distances from the bottom of the liquid storage apparatus.

In implementation mode a1, when the liquid level of the liquid storage apparatus reaches a liquid level detected by the conductor arranged on the inside wall of the liquid storage apparatus, the at least one rigid conductive probe and the conductor arranged on the inside wall of the liquid storage apparatus are turned on. The signal output end MCU-IN of the detection circuit connected with the conductor arranged on the inside wall of the liquid storage apparatus outputs a third electrical signal to the processing system 14. Then, the processing system 14 correspondingly controls the liquid storage apparatus according to the first electrical signal.

Correspondingly, when the liquid level of the liquid storage apparatus is lower than the liquid level detected by the conductor arranged on the inside wall of the liquid storage apparatus, the at least one rigid conductive probe and the conductor arranged on the inside wall of the liquid storage apparatus are not turned on. The signal output end MCU-IN of the detection circuit connected with the conductor arranged on the inside wall of the liquid storage apparatus outputs a fourth electrical signal to the processing system 14. Then, the processing system 14 correspondingly controls the liquid storage apparatus according to the second electrical signal.

In implementation mode a2, the at least one rigid conductive probe is suspended at the inner side of the top of the liquid storage apparatus according to a sequence from short to long distances between tail ends thereof and the bottom of the liquid storage apparatus. The conductor (flexible conductive sheet, conductive contact or conductive terminal) arranged on the inside wall of the liquid storage apparatus is fixedly arranged on the inside wall of the liquid storage apparatus according to a sequence from short to long distances from the bottom of the liquid storage apparatus. Each conductor detecting the same liquid level is at the same distance from the bottom of the liquid storage apparatus.

In implementation mode a2, when the liquid level of the liquid storage apparatus reaches a liquid level detected by the conductor arranged on the inside wall of the liquid storage apparatus and the at least one rigid conductive probe, the rigid conductive probe configured to detect the liquid level and the conductor arranged on the inside wall of the liquid storage apparatus are turned on. The signal output end MCU-IN of the detection circuit connected with the rigid conductive probe detecting the liquid level and the conductor arranged on the inside wall of the liquid storage apparatus outputs a third electrical signal to the processing system 14. Then, the processing system 14 correspondingly controls the liquid storage apparatus according to the third electrical signal.

Correspondingly, when the liquid level of the liquid storage apparatus is lower than the liquid level detected by the conductor arranged on the inside wall of the liquid storage apparatus and the at least one rigid conductive probe, the rigid conductive probe configured to detect the liquid level and the conductor arranged on the inside wall of the liquid storage apparatus are not turned on. The signal output end MCU-IN of the detection circuit connected with the rigid conductive probe detecting the liquid level and the conductor arranged on the inside wall of the liquid storage apparatus outputs a fourth electrical signal to the processing system 14. Then, the processing system 14 correspondingly controls the liquid storage apparatus according to the fourth electrical signal.

It is to be noted that, in implementation modes a1 and a2, a specific relative arrangement position of the conductor on the inside wall of the liquid storage apparatus is not limited. That is, the conductor arranged on the inside wall of the liquid storage apparatus may, but not limited to, be arranged along any straight line on the inside wall of the liquid storage apparatus, along any helical line on the inside wall of the liquid storage apparatus, etc.

In another optional implementation mode, as shown in FIG. 4g, each conductor group includes multiple rigid conductive probes suspended at an inner side of the top of the liquid storage apparatus. One of the multiple rigid conductive probes is located in the center of the liquid storage apparatus. The other rigid conductive probes surround the conductor in the center. Each conductor group may be arranged in the following several implementation modes.

In implementation mode b1, tail ends of the rigid conductive probes in each conductor group are at the same distance from the bottom of the liquid storage apparatus. In this implementation mode, each group of rigid conductive probes may be configured to detect the same liquid level.

In implementation mode b2, a tail end of a first conductive probe in each conductor group contacts with the bottom of the liquid storage apparatus or the tail end extends to a position at a first distance from the bottom of the liquid storage apparatus. The position may be a minimum liquid level of the liquid storage apparatus. When the liquid level of the liquid in the liquid storage apparatus is lower than the minimum liquid level, namely there is no liquid at the minimum liquid level, the liquid storage apparatus is in a liquid-deficient state. Further, the other conductive probes except the conductive probe in the center in each conductor group are at the same distance from the bottom of the liquid storage apparatus. In this implementation mode, each group of rigid conductive probes may be configured to detect the same liquid level.

It is to be noted that, since the other conductive probes except the first conductive probe are arranged around the conductive probe in the center in implementation mode b1 and implementation mode b2, a liquid level that this group of conductors may detect may be detected no matter an inclination direction of the liquid storage apparatus. Therefore, the condition that the liquid level may not be detected due to the inclination of the liquid storage apparatus may be prevented, and the detection accuracy of the conductors for the liquid storage apparatus is improved.

In implementation mode b3, a tail end of a first conductive probe in each conductor group contacts with the bottom of the liquid storage apparatus or the tail end extends to a position at a first distance from the bottom of the liquid storage apparatus. The other conductive probes except the first conductive probe in each conductor group are at different distances from the bottom of the liquid storage apparatus. The distances between the other conductive probes except the first conductive probe in each conductor group and the bottom of the liquid storage apparatus may be set according to different inclination degrees of the liquid storage apparatus. Therefore, the liquid level of the liquid in the liquid storage apparatus may be detected no matter an inclination angle of the liquid storage apparatus, and the liquid level measurement accuracy in case of inclination of the liquid storage apparatus is further improved.

In implementation mode b4, a tail end of a first conductive probe in each conductor group contacts with the bottom of the liquid storage apparatus or the tail end extends to a position at a first distance from the bottom of the liquid storage apparatus. The other conductive probes except the first conductive probe in each conductor group are at different distances from the bottom of the liquid storage apparatus. The distances between the other conductive probes except the first conductive probe in each conductor group and the bottom of the liquid storage apparatus are set according to a sequence from long to short distances. The minimum distance is the first distance. In this implementation mode, each group of rigid conductive probes may be configured to detect multiple liquid levels.

In another optional implementation mode, each conductor group includes multiple rigid conductive probes suspended at an inner side of the top of the liquid storage apparatus. The multiple rigid conductive probes are arranged around a top center of the liquid storage apparatus. The number of the rigid conductive probes may be, but not limited to, 3, 4, 5, 6, 8, etc.

In another optional implementation mode, a specific implementation mode of the present embodiment is the same as the above-mentioned embodiment. The difference is that each conductor group includes multiple conductive probes arranged at the bottom of the liquid storage apparatus. These conductive probes extend from the bottom to top of the liquid storage apparatus. Top end portions of the conductive probes of each group are conductive, while bodies are insulated by an insulating material and thus are non-conductive. In such an embodiment that the conductors are arranged at the bottom of the liquid storage apparatus, the multiple conductive probes of each group may be configured to detect a preset minimum liquid level of the liquid storage apparatus when extending by the same first length. The multiple conductive probes of each group may be configured to detect an intermediate liquid surface height of the liquid storage apparatus, i.e., an intermediate liquid level, when extending by different second lengths. The multiple conductive probes of each group may be configured to detect a preset maximum liquid level of the liquid storage apparatus when extending by the same third length. In the implementation mode, the first length is smaller than the second length, and the second length is smaller than the third length.

FIG. 5a is a structural schematic diagram of another cleaning machine according to an embodiment of the present disclosure. As shown in FIG. 5a, the cleaning machine further includes a liquid level detector 117 arranged at an outer side of the liquid storage apparatus. The liquid level detector 117 includes at least one liquid level detection sensor 117b. The liquid level detection sensor 117b includes a component (e.g., capacitor). A physical property of the component (e.g., capacitor) may change as the liquid gets away or close (without contact). The liquid level detection sensor 117b may detect a liquid level change by use of the principle that the physical property of the component may change when the liquid gets away or close. Each liquid level detection sensor 117b may sense a liquid level change of the liquid storage apparatus, convert the sensed liquid level change into an electrical signal and output the electrical signal to the processing system 14 such that the processing system 14 calculates the liquid level information of the liquid storage apparatus according to the electrical signal.

In an optional embodiment, the at least one liquid level detection sensor 117b is arranged on an outer wall of the liquid storage apparatus so as to sense the liquid level change in the liquid storage apparatus.

In another optional embodiment, the main body 11 usually wraps a bottom surface and partial or complete lateral surface of the liquid storage apparatus, and is configured to fix or support the liquid storage apparatus. Optionally, an inside wall of the main body 11 may be against the liquid storage apparatus, or may keep a small air gap with the liquid storage apparatus. No limits are made in the present embodiment.

In the optional embodiment, the at least one liquid level detection sensor 117b may be arranged on a side wall (inside wall or outside wall) of the main body 11 of the cleaning device. Of course, the at least one liquid level detection sensor 117b may be arranged on an outer wall of the liquid storage apparatus. Alternatively, part of liquid level detection sensors are arranged on a side wall (inside wall or outside wall) of the main body 11 of the cleaning device, and part of liquid level detection sensors are arranged on an outer wall of the liquid storage apparatus.

It is to be understood that FIG. 5a illustrates an arrangement position of the at least one liquid level detection sensor 117b for exemplary description and does not limit other optional arrangement positions. In another optional embodiment of the present disclosure, the arrangement position of the at least one liquid level detection sensor 117b may be set flexibly as practically required.

In some exemplary embodiments, in order to further improve the reliability of the liquid level detection result, the at least one liquid level detection sensor 117b may be grouped, and each liquid level detection sensor group is scattered taking group as the unit on an outer wall of the liquid storage apparatus or a side wall of the main body 11, so as to comprehensively detect the liquid level information in the liquid storage apparatus in multiple directions.

Optionally, the at least one liquid level detection sensor 117b may be divided into at least one liquid level detection sensor group. The at least one liquid level detection sensor group may be scattered on an outer wall of the liquid storage apparatus in at least one direction, or scattered on a side wall of the main body 11 of the cleaning device in at least one direction. The at least one direction includes at least one of the front, the back, the left and the right.

It is to be understood that a liquid surface height in the liquid storage apparatus usually increases or decreases in a height direction of the liquid storage apparatus. Therefore, each liquid level detection sensor group may be arranged on the outer wall of the liquid storage apparatus or the side wall of the main body 11 of the cleaning device in the height direction of the liquid storage apparatus, to ensure that each liquid level detection sensor group senses an increase/decrease change of the liquid surface height in the height direction of the liquid storage apparatus. For example, as shown in FIGs. 5b and 5c, the at least one liquid level detection sensor group may be arranged on the outer wall of the liquid storage apparatus in a generatrix direction of the liquid storage apparatus when the liquid storage apparatus is implemented into a cylindrical apparatus. Arrangement heights between different liquid level detection sensor groups may be the same or different. No limits are made in the present embodiment. Optionally, in each of the above-mentioned embodiments, each liquid level detection sensor 117b may be implemented into a capacitance, resistance, photoelectric or electromagnetic sensor. The present embodiment includes but is not limited to this.

Optionally, each capacitance sensor may be implemented into a self-capacitor consisting of a metal foil. The metal foil may be attached to the outer wall of the liquid storage apparatus or the side wall of the main body of the cleaning device. The structure is simple, and the cost is relatively low. There is relatively low parasitic capacitance between the metal foil and the ground when no liquid gets close. When the liquid gets close to the pin, the parasitic capacitance may change, and the liquid surface height may be detected according to the change of the parasitic capacitance. Of course, in another optional implementation mode, a capacitance sensor of another type may be used. No limits are made thereto in the present embodiment.

In some other embodiments, for the recycling tank, the liquid level detector 117 includes a float valve and a motor current detection circuit 117c. The float valve is arranged in the recycling tank, and is configured to be opened when a liquid level in the recycling tank exceeds a preset second liquid level threshold.

As shown in FIG. 6a, the motor current detection circuit 117c is connected between the main motor 120 and processing system 14 of the cleaning machine, and is configured to detect a current flowing through the main motor 120 and provide the current flowing through the main motor 120 for the processing system 14. Correspondingly, the processing system 14 may determine a liquid level state in the recycling tank according to the current of the main motor.

Optionally, as shown in FIG. 6b, the motor current detection circuit 117c includes a current sampling circuit 117c1. The current sampling circuit 117c1 is electrically connected between the main motor 120 and the processing system 14. Optionally, as shown in FIG. 6a, the current sampling circuit 117c1 includes a sampling resistor R60 and an RC filter circuit connected in parallel with the sampling resistor R60. A series-connection point of a resistor R59 and capacitor C29 in the RC filter circuit is electrically connected with the processing system. The sampling resistor R60 is connected between a negative electrode M- of the main motor 120 and the ground. The processing system 14 may acquire voltages at two ends of the sampling resistor R60 and determine a liquid level state in the recycling tank according to the voltages at the two ends of the sampling resistor R60.

Optionally, the processing system may calculate a current flowing through the main motor 120 according to the voltages at the two ends of the sampling resistor R60 and determine the liquid level state in the recycling tank according to the current flowing through the main motor 120. Alternatively, the processing system 14 may calculate a rotational speed of the main motor according to a change frequency of a voltage of the sampling resistor R60 and determine the liquid level state in the recycling tank according to the rotational speed of the main motor 120 and present power of the main motor 120.

Further, the processing system 14 may set a fixed current threshold if the voltage of the power supply unit is constant. That is, when a current of the sampling resistor R60 is lower than the set current threshold, it is determined that the float valve is opened, namely it is determined that the recycling tank is in the full-liquid-level state. Optionally, if the power supply unit is a rechargeable battery such as a lithium battery, a voltage of a battery pack may decrease gradually with the discharge time, and a motor current decreases correspondingly. Therefore, the processing system may not judge an opening condition of the float valve effectively if only one voltage limit is set. For example, when the current threshold is set to be slightly high and the voltage of the battery pack decreases, a normal working current of the sampling resistor R60 may be lower than the current threshold under the condition that the float valve is not opened, and a false alarm is given. Alternatively, when the current threshold is set to be slightly low and when the voltage of the battery pack is relatively high, under the condition that float valve has been opened, a current of the sampling resistor R60 after the opening of the float valve may be higher than the current threshold, and no alarm is given. Based on this, in the embodiment of the present disclosure, a current threshold may be set in each voltage interval of the power supply unit, and whether the float valve is opened, namely whether the recycling tank is in the full-liquid-level state, is determined according to the voltage of the power supply unit and the current of the main motor.

Based on the above analysis, as shown in FIG. 6c, under the condition that processing system 14 determines the liquid level state in the recycling tank according to the current flowing through the main motor, the cleaning machine may further include a power supply unit voltage detection circuit 119. The power supply unit voltage detection circuit 119 is connected between the power supply unit and the processing system 14, and is configured to provide a detected voltage of the power supply unit for the processing system 14.

Further, the processing system 14, when determining the liquid level state in the recycling tank 17, is specifically configured to determine a main motor current threshold corresponding to a present voltage of the power supply unit according to the present voltage of the power supply unit and a preset corresponding relationship between a voltage of the power supply unit and a main motor current threshold, and determine that the liquid level state in the recycling tank 17 is the full-liquid-level state if a current flowing through the main motor is lower than the main motor current threshold corresponding to the present voltage of the power supply unit.

Optionally, if the power supply unit is a rechargeable battery such as a lithium battery, and the cleaning machine is constant in suction power, effective judgments may not be made by use of an ordinary sampling principle. Since the cleaning machine is constant in suction power, the current of the main motor is a modulated current and changes periodically. The liquid level state in the recycling tank may not be determined accurately if acquired data is directly compared with the current threshold set by the processing system. Since the current is modulated, the sampled data may be maximum or minimum in a period, and cannot be used as valid data. Based on this, in the present embodiment, the voltages at the two ends of the sampling resistor R60 may be sampled using a Nyquist sampling theorem. Then, the acquired data is sequenced from large to small data. The first N pieces of data are averaged as a piece of valid data. Then, a difference between the valid data and a next piece of valid data is calculated. An opening state of the float valve is judged according to the difference. Herein, $N \geq 2$, and N is an integer.

Optionally, as shown in FIG. 6b, the motor current detection circuit 117c further includes a buffer circuit 117c2. The buffer circuit 117c2 includes an operational amplifier chip AR1 and an RC filter circuit. The RC filter consists of a series-wound resistor R64 and capacitor C30. Further, an in-phase input end IN+ of the operational amplifier chip AR1 is electrically connected with an output end of the current sampling circuit 117c1, while an inverting input end IN- and output end OUT are electrically connected. Further, the RC filter circuit is connected in parallel between the output end OUT of the operational amplifier and the ground. The ungrounded end of the RC filter circuit is electrically connected with the processing system 14. That is, a series-connection point of the resistor R64 and capacitor C30 in the RC filter circuit is electrically connected with the processing system 14.

Optionally, as shown in FIG. 6b, the embodiment of the present disclosure also provides a main motor driving circuit 120a. A structure and working principle of the main motor driving circuit 120a refer to the related contents about the main driving circuit in the water pump driving circuit, and will not be elaborated herein. Alternatively, under the condition that the processing system 14 determines the liquid level state in the recycling tank according to the rotational speed of the main motor 120 and the present current of the main motor 120, the processing system 14 is specifically configured to judge whether a rotational speed within a certain time period when the main motor 120 runs under the present power is higher than a rotational speed threshold corresponding to the present power, and if a judgment result is YES, determine that the liquid level state in the recycling tank is the full-liquid-level state. The certain time period when the main motor 120 runs under the present power refers to a period of time counted after the main motor 120 starts running a preset time period under the present power, or a period of time counted when the main motor 120 starts running under the present power. The certain time period may be set flexibly according to the present power of the motor 120. For example, for the condition that the present power of the main motor 120 is 90 W, the certain time period may refer, but not limited, to 1 s, 2 s, 5 s, or the like after the main motor 120 runs for 2 s under the present power of 90 W. For another example, for the condition that the present power of the main motor 120 is 120 W and 150 W, the certain time period may refer, but not limited, to 1 s and the like after the main motor 120 runs for 2 s under the present power.

For example, for the condition that the present power of the main motor 120 is 90 W, whether a rotational speed within 1 s after the main motor 120 runs for 2 s is higher than 50,000 rpm may be judged. If a judgment result is YES, it is determined that the recycling tank 17 is in the full-liquid-level state. Alternatively, whether a rotational speed within 5 s after the main motor 120 runs for 2 s is higher than 48,000 rpm may be judged. If a judgment result is YES, it is determined that the recycling tank 17 is in the full-liquid-level state.

For another example, for the condition that the present power of the main motor 120 is 120 W, whether a rotational speed within 1 s after the main motor 120 runs for 2 s is higher than 55,000 rpm may be judged. If a judgment result is YES, it is determined that the recycling tank 17 is in the full-liquid-level state.

For another example, for the condition that the present power of the main motor 120 is 150 W, whether a rotational speed within 1 s after the main motor 120 runs for 2 s is higher than 59,000 rpm may be judged. If a judgment result is YES, it is determined that the recycling tank 17 is in the full-liquid-level state.

For another example, for the condition that the present power of the main motor 120 is 90 W, 120 W and 150 W, whether a rotational speed increment within 1 s after the main motor 120 runs for 2 s is higher than 4,000 rpm may be judged. If a judgment result is YES, it is determined that the recycling tank 17 is in the full-liquid-level state.

Further, that the rotational speed within the certain time period when the main motor 120 runs under the present power is higher than the rotational speed threshold corresponding to the present power may refer to that the rotational speed within the certain time period when the main motor 120 runs under the present power is kept higher than the rotational speed threshold corresponding to the present power, or may refer to that an average rotational speed within the certain time period when the main motor 120 runs under the present power is higher than the rotational speed threshold corresponding to the present power, or may refer to that a probability that the rotational speed within the certain time period when the main motor 120 runs under the present power is higher than the rotational speed threshold corresponding to the present power is more than or equal to a preset probability threshold. Optionally, the preset probability threshold is higher than $\dfrac{1}{2}$.

A process of determining the liquid level state of the recycling tank 117 according to the rotational speed of the main motor 120 will be exemplarily described below in combination with FIG. 6d. The following main determination steps are included.

At S1, the processing system 14 controls the main motor 120 to run under power of 90 W.

At S2, whether a rotational speed of the main motor 120 is higher than a preset first rotational speed threshold is judged after the main motor 120 runs for 2 s under the power of 90 W. If a judgment result is YES, it is determined that a liquid level state of the recycling tank 117 is a full-liquid-level state, and S7 is executed. If the judgment result is NO, S3 is executed.

Optionally, the first rotational speed threshold is 50,000 rpm.

At S3, whether the power of the main motor 120 changes is monitored. If a judgment result is YES, S4 is executed. If the judgment result is NO, S7 is executed.

At S4, after the main motor 120 runs for 2 s under changed power, whether a rotational speed of the main motor 120 is higher than a rotational speed threshold corresponding to the changed power is judged. If a judgment result is YES, it is determined that the liquid level state of the recycling tank 117 is the full-liquid-level state, and S7 is executed. If the judgment result is NO, S5 is executed.

At S5, a rotational speed of the main motor 120 is detected according to a set sampling period, and a rotational speed increment in each sampling period is calculated. Optionally, the sampling period is, but not limited to, 0.2 s, etc.

At S6, whether the rotational speed increment in each sampling period is more than or equal to a preset increment threshold is judged. If a judgment result is YES, it is determined that the liquid level state of the recycling tank 117 is the full-liquid-level state, and S7 is executed. If the judgment result is NO, S5 is re-executed.

At S7, the processing system 14 controls the second-type indicator lamp to be turned on or flicker, and controls the cleaning machine to stop.

In the embodiment of the present disclosure, the processing system 14 may further calculate the present power of the main motor 120 according to a signal parameter of a second PWM signal presently input to the main motor 120.

Further, as shown in FIGs. 1b and 1c, the at least one display region may further include a fourth display region 15d formed by multiple second display tubes. In the present embodiment, the multiple second display tubes may display power of the main motor under the control of the processing system 14. The number of on-state second display tubes in the multiple second display tubes is positively related to the power of the main motor. That is, if the power of the main motor 120 is higher, the number of the on-state second display tubes is larger.

Optionally, as shown in FIGs. 1a and 1c, the fourth display region 15d may be located below the third display region 15c.

Optionally, the multiple second display tubes may be distributed in rows, in columns, annularly, or in a matrix. FIGs. 1a and 1c only show the matrix distribution of the multiple second display tubes.

Optionally, the multiple second display tubes may further include high-power indicator lamps and low-power indicator lamps. The high-power indicator lamp and the low-power indicator lamp are configured to indicate that the main motor presently works in a high-power state and a low-power state respectively. Correspondingly, the processing system 14 may control the high-power indicator lamp to be turned on when the power of the main motor is more than or equal to a set first power threshold, and control the low-power indicator lamp to be turned on when the power of the main motor is less than or equal to a set second power threshold. The first power threshold is higher than the second power threshold.

In the embodiment of the present disclosure, the at least one display region may further include a fifth display region 15e. The fifth display region 15e may display electric power of the power supply unit of the cleaning machine under the control of the processing system 14.

Optionally, as shown in FIGs. 1b and 1c, the fifth display region includes a third subregion 15e1 formed by multiple second nixie tubes, configured to display a percentage of the electric power of the power supply unit under the control of the processing system 14.

Further, as shown in FIG. 7, the fifth display region further includes a fourth subregion 15e2 formed by multiple third indicator lamps of different colors, configured to display a color adapted to the electric power of the power supply unit under the control of the processing system 14. Correspondingly, the processing system 14 may determine brightness of the multiple third indicator lamps according to the electric power of the power supply unit such that the fourth subregion presents a color adapted to the electric power of the power supply unit. Alternatively, the processing system 14 may control indicator lamps of a color adapted to the electric power of the power supply unit in the multiple third indicator lamps to be turned on such that the fourth subregion presents the color adapted to the electric power of the power supply unit.

Optionally, the fourth subregion is located in an adjacent region of the third subregion. For example, the fourth subregion may be located on the left of the third subregion (as shown in FIG. 7). Alternatively, the fourth subregion may be located above, below or on the right of the third subregion.

In some embodiments, the fifth display region further includes a fifth subregion 15e3 formed by multiple third display tubes, configured to display remaining working time of the power supply unit. Optionally, as shown in FIG. 7, the fifth subregion 15e3 may be located in a region below the third subregion 15e1 and the fourth subregion 15e2.

Correspondingly, the processing system 14 may calculate the remaining working time of the power supply unit according to the electric power of the power supply unit and control the multiple third display tubes to display the remaining working time of the power supply unit according to working time of the power supply unit.

Optionally, as shown in FIGs. 1b and 1c, the display 15 may further include a sixth display region 15f formed by a fourth indicator lamp, configured to indicate a blocked state of the cleaning assembly 13 when the cleaning assembly 13 is blocked. Optionally, the processing system 14 may control the fourth indicator lamp to be turned on or flicker when the cleaning assembly 13 is blocked so as to give the user a prompt that the cleaning assembly 13 is blocked.

Optionally, the processing system 14 may detect a current of the cleaning assembly 13, and determine that the cleaning assembly 13 is blocked if the current is more than or equal to a preset current threshold. Further, the fourth indicator lamp is controlled to be turned on or flicker when the cleaning assembly 13 is blocked.

Optionally, as shown in FIGs. 1b and 1c, the display 15 may further include a seventh display region 15g formed by multiple fourth display tubes, configured to display a working state of a communication assembly of the cleaning machine. Optionally, the multiple fourth display tubes are scattered in an arc. The communication assembly is configured to facilitate wired or wireless communication between the cleaning machine and another device. The cleaning machine may access a communication-standard-based wireless network, such as Wireless Fidelity (WiFi), 2nd-Generation (2G), 3rd-Generation (3G), 4th-Generation (4G), 5th-Generation (5G), or a combination thereof. In an exemplary embodiment, the communication assembly receives a broadcast signal or broadcast related information from an external broadcast management system through a broadcast channel. In an exemplary embodiment, the communication assembly may be implemented based on a Near Field Communication (NFC) technology, a Radio Frequency Identification (RFID) technology, an Infrared Data Association (IrDA) technology, an Ultra-Wideband (UWB) technology, a Bluetooth (BT) technology, or other technologies.

Optionally, the display 15 may also display information of the date, the time, the brand name, the model, the user name, or the like.

In addition, in the embodiment of the present disclosure, the display 15 may be a liquid crystal display screen, an LED display screen, an OLED display screen, or the like. Optionally, in the present embodiment, the display 15 may also play animated sequences. For example, the display 15 plays, but not limited to, instructions, cautions, troubleshooting guides and the like of the cleaning machine.

It is to be noted that the implementation mode of displaying the related state information of the cleaning machine provided in the embodiment of the present disclosure during use is applicable not only to cleaning machines but also to various cleaning devices, such as, but not limited to, a handheld dust collector, a window cleaning robot, a sweeping robot (dry cleaning or wet cleaning) and a wall cleaning robot. The cleaning device may include a main body and a display arranged on the main body. The display is electrically connected with a processing system, and is configured to display related state information of the cleaning device during use. The related state information of the cleaning device during use includes at least one of: (1) capacity information of a recycling tank; (2) liquid level information of a solution tank; (3) cleanliness information of a cleaning object achieved by a cleaning assembly; (4) electric power information of a power supply unit; (5) self-cleaning information of the cleaning device; (6) power information of a main motor; (7) blocking information of the cleaning assembly; and (8) working state information of a communication assembly. The capacity information of the recycling tank may be a used capacity of the recycling tank or an available capacity of the recycling tank. For the condition that a recycled object in the recycling tank is dirty liquid, the capacity information of the recycling tank may be liquid level information of the recycling tank. The detection of cleanliness of the cleaning object, the liquid level information of the solution tank and the capacity information of the recycling tank may refer to the related contents in the above-mentioned embodiments, and will not be elaborated herein.

The disclosure of the display to different cleaning devices will be exemplarily described below in combination with several common cleaning devices.

Application scene 1

A handheld dust collector includes an air inlet located at a front side of the handheld dust collector, a handle located at a rear side of the handheld dust collector, a main body located between the air inlet and the handle, and a cyclone separator located in the main body. The handheld dust collector further includes the main body and a display located on the main body. The display is electrically connected with a processing system, and is configured to display related state information of the handheld dust collector during use. The related state information of the cleaning device during use includes at least one of: (1) capacity information of a recycling tank; (2) liquid level information of a solution tank; (3) cleanliness information of a cleaning object achieved by a cleaning assembly; (4) electric power information of a power supply unit; (5) self-cleaning information of the handheld dust collector; (6) power information of a main motor; (7) blocking information of a floor brush; and (8) working state information of a communication assembly.

Specifically, the display is arranged above the cyclone separator and at an outer side of the main body such that a user may acquire display information of the display conveniently. Under the control of the processing system, there are multiple display regions on the display. Each display region consists of multiple LEDs. A first display region includes a dust bucket icon displaying the capacity information of the recycling tank, and may display the capacity information of the recycling tank of the handheld dust collector. If the recycling tank is full, the first display region is turned on or flickers, and it indicates that a capacity of the recycling tank reaches a predetermined range and the recycling tank needs to be cleaned.

A second display region includes circular arcs displaying cleanliness information of a floor achieved by the floor brush and presenting a gradient effect in color and brightness, and may display the cleanliness information. By the detection of a sensor, the processing system displays cleanliness of the cleaning object through the second display region to represent the cleanliness of the floor achieved by the handheld dust collector. If there are more blue circular arcs, the floor is cleaner. If there are red circular arcs, the floor is dirtier.

A third display region includes a numeral displaying the electric power information of the power supply unit, and displays a present battery percentage. The battery percentage gradually decreases from 100 to 0 with the decrease of a battery capacity. A fourth display region includes an icon displaying self-cleaning information. The self-cleaning icon is turned on or flickers when the handheld dust collector is in a self-cleaning state. The self-cleaning icon is turned on or flickers when the handheld dust collector needs self-cleaning. The self-cleaning icon represents a prompt that the dust collector needs self-cleaning or a state that the dust collector is being self-cleaned.

A fifth display region includes square icons displaying motor power. If the square icons are all or partially on, different power motor of the handheld dust collector is represented. The square icons are all on when the handheld dust collector is in a maximum-power state. The square icons are partially on when the motor power is at a certain intermediate grade. A fifth display region represents different motor power grades of the handheld dust collector according to the number of on-state square icons.

A sixth display region includes an icon displaying that the floor brush is blocked. When the floor brush has a failure of blocking and the like during the running of the handheld dust collector, the floor brush blocking icon in the sixth display region is turned on or flickers to represent failure information of blocking and the like of the floor brush.

A seventh display region includes an icon displaying a working state of the communication module. When the communication assembly of the handheld dust collector is electrical signal connection with an external wireless network, for example, the handheld dust collector is connected to a wireless network through WiFi, the icon in the seventh display region is turned on or flickers to represent that the communication assembly of the handheld dust collector succeeds in network configuration.

The display of the handheld dust collector includes the above-mentioned seven display regions, and of course, is not limited thereto. There may be other display regions on the display of the handheld dust collector to represent working state information of the dust collector, such as information of the date, the time, the brand, the user name, a failure, historical accumulated working time, a battery recharge cycle count, and a self-cleaning count.

Application scene 2

A sweeping robot includes a main body, a motion portion at a bottom of the main body, and a display at a top of the main body. The display is electrically connected with a processing system in the main body, and is configured to display related state information of the handheld dust collector during use. The related state information of the cleaning device during use includes at least one of: (1) capacity information of a recycling tank; (2) cleanliness information of a cleaning object achieved by a floor brush; (3) battery capacity information; (4) self-cleaning information of the sweeping robot; (5) power information of a main motor; (6) blocking information of the floor brush; and (7) working state information of a communication assembly.

Specifically, the display is arranged on an outer surface of the top of the main body such that a user may acquire the working state information of the sweeping robot conveniently and timely. Under the control of the processing system, there are multiple display regions on the display. Each display region consists of multiple LEDs. A first display region represents capacity information of the recycling tank. A second display region represents cleanliness information of a floor achieved by the floor brush. A third display region represents remaining battery capacity information. A fourth display region represents the self-cleaning information of the sweeping robot. A fifth display region represents the power information of the main motor. A sixth display region represents the blocking information of the floor brush. A seventh display region represents information of a network connection state of the sweeping robot. The display of the sweeping robot includes the above-mentioned seven display regions, and of course, is not limited thereto. There may be other display regions on the display of the sweeping robot to represent working state information of the dust collector, such as information of the date, the time, the brand, the user name, a failure, a map of regions to be cleaned of an object to be cleaned, a map of cleaned regions of the object to be cleaned, a historical cleaning map, a historical cleaning count, historical accumulated working time, a battery recharge cycle count, and a self-cleaning count.

In addition to the above-mentioned device embodiments, the embodiment of the present disclosure also provides an information display method. Exemplary descriptions will be made below in combination with the drawings.

FIG. 8 is a schematic flowchart of an information display method according to an embodiment of the present disclosure. As shown in FIG. 8, the method includes the following steps.

At 801, working state information of at least one component on a cleaning device is acquired.

At 802, the working state information of the at least one component is displayed on a display.

In the present embodiment, the cleaning device may be, but not limited to, a handheld dust collector, a window cleaning robot, a sweeping robot (dry cleaning or wet cleaning), a wall cleaning robot, etc. If the cleaning device is a handheld dust collector, an arrangement position, shape and implementation mode of the display may all refer to the related contents in the above-mentioned embodiments, and will not be elaborated herein.

In the present embodiment, the working state information of the at least one component includes at least one of: (1) capacity information of a recycling tank; (2) liquid level information of a solution tank; (3) cleanliness information of a cleaning object achieved by a cleaning assembly; (4) electric power information of a power supply unit; (5) self-cleaning information of the cleaning device; (6) power information of a main motor; (7) blocking information of the cleaning assembly; and (8) working state information of a communication assembly. For the condition that a recycled object in the recycling tank is dirty liquid, the capacity information of the recycling tank may be liquid level information of the recycling tank.

The disclosure of the information display method will be exemplarily described below in combination with several common cleaning devices.

Application scene 3

The cleaning device is a cleaning machine. In such case, the present embodiment may provide an information display method for a cleaning machine. Working state information of at least one component on the cleaning machine is acquired at first. Then, the working state information of the at least one component is displayed on a display of the cleaning machine. Working state information of multiple components includes at least one of: (1) capacity information of a recycling tank; (2) cleanliness information of a cleaning object achieved by a floor brush; (3) battery capacity information; (4) self-cleaning information of the cleaning machine; (5) power information of a main motor; (6) blocking information of the floor brush; and (7) working state information of a communication assembly. The working state information of the cleaning machine is presented to a user such that the user may acquire a working state and using state of the cleaning machine timely.

Application scene 4

The cleaning device is a handheld dust collector. In such case, the present embodiment may provide an information display method for a handheld dust collector. Working state information of at least one component on the handheld dust collector is acquired at first. Then, the working state information of the at least one component is displayed on a display of the handheld dust collector. Working state information of multiple components includes at least one of: (1) capacity information of a dust bucket; (2) liquid level information of a solution tank; (3) cleanliness information of a cleaning object achieved by a floor brush; (4) battery capacity information; (5) self-cleaning information of the handheld dust collector; (6) power information of a main motor; (7) blocking information of the floor brush; and (8) working state information of a communication assembly. The working state information of the handheld dust collector is presented to a user such that the user may acquire a working state and using state of the cleaning machine timely. The floor brush is a cleaning assembly of the handheld dust collector, and is also called a cleaning brush.

In the embodiment of the present disclosure, the display is additionally arranged on the cleaning device to display the working state information of the at least one component on the cleaning device, thereby visually displaying a working state of the cleaning device. The user may know about a working state of a component on the cleaning device visually, which contributes to improving user experiences.

In some embodiments, the display includes at least one display region, configured to display working state information of different components. Further, as shown in FIG. 1b, the at least one display region includes a first display region formed by multiple first display tubes. The first display tube may be, but not limited to, an LED, an OLED, a thin-film LED, etc. Correspondingly, in an optional implementation mode of Step 801, the first display region is controlled to display the cleanliness information of the cleaning object achieved by the cleaning assembly.

Further, the multiple first display tubes are different in color. A processing system may control the multiple first display tubes to be different in color when controlling the first display region to display the cleanliness information of the cleaning object achieved by the cleaning assembly. Different color-brightness-shape combinations may be displayed under the control of the processing system. The different color-brightness-shape combinations represent different cleanliness of the cleaning object achieved by the cleaning assembly. Descriptions about the different color-brightness-shape combinations may refer to the related contents in the above-mentioned embodiments, and will not be elaborated herein.

In some embodiments, dirty liquid enters the recycling tank from a suction nozzle on the cleaning assembly through a suction passage to form a circulation path of the dirty liquid. A cleanliness detector is arranged to detect cleanliness of the cleaning object achieved by the cleaning assembly. The cleanliness detector is partially or completely arranged on the circulation path of the dirty liquid.

In the present embodiment, the cleanliness detector may detect a physical property value of the dirty liquid and provide the physical property value of the dirty liquid for the processing system. Correspondingly, the processing system may determine the cleanliness of the cleaning object according to the physical property value of the dirty liquid. An arrangement position and implementation form of the cleanliness detector and specific implementation modes that the processing system determines the cleanliness of the cleaning object according to the physical property value of the dirty liquid may all refer to the related contents in the above-mentioned embodiments, and will not be elaborated herein.

In some other embodiments, considering behavioral characteristics of the user when executing a cleaning task by use of the cleaning device, some sensors for sensing the behavioral characteristics may further be arranged. For example, in some application scenes, the user may usually increase the force to clean the cleaning object if the cleaning object is relatively dirty. Based on this, a pressure sensor may be arranged on a handle of the cleaning device. Correspondingly, the processing system may determine the cleanliness of the cleaning object achieved by the cleaning assembly according to a pressure value on the handle. A specific implementation mode may refer to the related contents in the above-mentioned embodiments, and will not be elaborated herein.

For another example, in some other application scenes, the user may usually repeatedly clean the cleaning object if the cleaning object is relatively dirty. In such a application scene, the cleaning device is driven by the user to keep changing an operation direction. Based on this, an acceleration sensor may be arranged on the cleaning device. The acceleration sensor may detect acceleration information of the cleaning device during use and provide the detected acceleration information for the processing system. Correspondingly, the processing system may determine an operation direction change frequency of the cleaning device according to the acceleration information. Further, the processing system may control the multiple first display tubes to display the operation direction change rate. The operation direction change frequency represents the cleanliness of the cleaning object achieved by the cleaning assembly.

Further, the processing system may further adjust a working state of the cleaning device according to the operation direction change frequency of the cleaning device. For example, the processing system may adjust power of a main motor of the cleaning device, a motor of a water pump and a motor of the cleaning assembly to that adapted to the operation direction change frequency of the cleaning device, etc., according to the operation direction change frequency of the cleaning device.

In the embodiment of the present disclosure, no matter the manner used to detect the cleanliness of the cleaning object achieved by the cleaning assembly, the processing system may adjust the working state of the cleaning device according to the cleanliness of the cleaning object.

For example, the processing system 14 may adjust the power of the water pump of the cleaning device to that adapted to the cleanliness of the cleaning object according to the cleanliness of the cleaning object. Correspondingly, the processing system may preset a corresponding relationship between a cleanliness grade and power of the water pump. Based on the corresponding relationship, the processing system may determine power of the water pump according to a cleanliness grade of the cleaning object. Preferably, if the cleanliness grade is higher, the power of the water pump is lower, a water discharge of the cleaning device is smaller, and it indicates that the cleaning object is cleaner.

For another example, the processing system may adjust the power of the main motor of the cleaning device and/or the motor of the cleaning assembly to that adapted to the cleanliness of the cleaning object according to the cleanliness of the cleaning object. Correspondingly, the processing system may preset a corresponding relationship between a cleanliness grade and power of the main motor and/or the motor of the cleaning assembly. Based on the corresponding relationship, the processing system may determine power of the main motor and/or the motor of the cleaning assembly according to a cleanliness grade of the cleaning object. Preferably, if the cleanliness grade is higher, the power of the main motor and/or the motor of the cleaning assembly is lower, a water suction capacity of the cleaning device is lower, and it indicates that the cleaning object is cleaner. In the embodiment of the present disclosure, the main motor sucks the dirty liquid by the suction nozzle 13a on the cleaning assembly of the cleaning device and delivers the dirty liquid into the recycling tank of the cleaning device through the suction passage in the cleaning device. The motor of the cleaning assembly drives the cleaning assembly to perform a cleaning operation on the cleaning object.

For another example, the processing system may adjust task execution time of the cleaning device to that adapted to the cleanliness of the cleaning object according to the cleanliness of the cleaning object. Correspondingly, the processing system may preset a corresponding relationship between a cleanliness grade and cleaning time. Based on the corresponding relationship, the processing system may determine cleaning time according to a cleanliness grade of the cleaning object. Preferably, if the cleanliness grade is higher, the power of the main motor and/or the motor of the cleaning assembly is lower, cleaning time is shorter, and it indicates that the cleaning object is cleaner.

Optionally, the cleaning device may be controlled to stop working if the processing system determines that the cleanliness of the cleaning object reaches a standard. That the cleanliness of the cleaning object reaches the standard may refer to that the cleanliness grade of the cleaning object is the highest cleanliness grade. Optionally, the processing system may control the water pump, the main motor and/or the motor of the cleaning assembly to stop, etc., if the cleanliness grade of the cleaning object is the highest cleanliness grade.

Correspondingly, the processing system, when adjusting the working state of the cleaning device, may determine a signal parameter according to the cleanliness of the cleaning object and input a first PWM signal with the signal parameter to a water pump driving circuit so as to control the water pump to output a water discharge meeting a cleaning requirement. The signal parameter includes a frequency and duty ratio of the first PWM signal.

In the present embodiment, the display may further display liquid level information of a liquid storage apparatus of the cleaning device. The at least one display region further includes a third display region. The third display region is configured to display the liquid level information of the liquid storage apparatus of the cleaning device. The liquid storage apparatus is a solution tank and/or a recycling tank.

In the present embodiment, the liquid level information of the liquid storage apparatus may be a liquid level value of the liquid storage apparatus or a liquid level state in the liquid storage apparatus. The liquid level state in the liquid storage apparatus refers to whether the liquid storage apparatus is in a full-liquid-level state or a liquid-deficient state.

The liquid storage apparatus includes a solution tank and a recycling tank. At least one second indicator lamp includes a first-type indicator lamp and a second-type indicator lamp. In the present embodiment, the processing system controls the first-type indicator lamp to be turned on or flicker when clean liquid in the solution tank is lower than a set first liquid level threshold so as to give the user a prompt that the solution tank is in the liquid-deficient state, and controls the second-type indicator lamp to be turned on or flicker when the dirty liquid in the recycling tank is higher than a set second liquid level threshold so as to give the user a prompt that the recycling tank is in the full-liquid-level state. The first liquid level threshold refers to a minimum liquid level of the clean liquid in the solution tank. The solution tank is in the liquid-deficient state if the clean liquid in the solution tank is lower than the first liquid level threshold. The second liquid level threshold refers to a maximum liquid level of the dirty liquid permitted by the recycling tank. If the clean liquid in the recycling tank is higher than the liquid level, it indicates that the recycling tank is in full-liquid-level state. Optionally, the first liquid level threshold is lower than the second liquid level threshold. Further, the second liquid level threshold is less than or equal to a height of the recycling tank.

Correspondingly, the processing system may further calculate the liquid level state of the liquid level storage apparatus according to liquid level information of liquid in the liquid level storage apparatus. A specific implementation mode that the processing system acquires the liquid level information of the liquid in the liquid level storage apparatus may refer to the related contents in the above-mentioned embodiments, and will not be elaborated herein.

In the embodiment of the present disclosure, a transitional solution tank may further be arranged between the solution tank and a spray nozzle. For the ease of description, in the embodiment of the present disclosure, the transitional solution tank is called a transitional tank for short. A water outlet pipeline between the solution tank and the transitional tank is defined as a first water outlet pipeline. The water outlet pipeline between the transitional tank and the spray nozzle is defined as a second water outlet pipeline. In such case, the clean liquid in the solution tank flows into the transitional tank through the first water outlet pipeline, and then is delivered into the spray nozzle through the second water outlet pipeline so as to be sprayed onto the cleaning object by the spray nozzle. Correspondingly, a second conductor group is arranged on a circulation path of the clean liquid. Optionally, the liquid storage apparatus may be a transitional tank. A liquid level state in the transitional tank may reflect a liquid level state of the solution tank. That is, if the transitional tank is in the liquid-deficient state, it may indicate that the solution tank is also in the liquid-deficient state.

In some embodiments, the processing system may determine a liquid level state in the recycling tank according to the current of the main motor. Optionally, the processing system may calculate a current flowing through the main motor according to voltages at two ends of a sampling resistor and determine the liquid level state in the recycling tank according to the current flowing through the main motor.

Further, the processing system, when determining the liquid level state in the recycling tank, may determine a main motor current threshold corresponding to a present voltage of the power supply unit according to the present voltage of the power supply unit and a preset corresponding relationship between a voltage of the power supply unit and a main motor current threshold, and determine that the liquid level state in the recycling tank is the full-liquid-level state if a current flowing through the main motor is lower than the main motor current threshold corresponding to the present voltage of the power supply unit.

Alternatively, the processing system may calculate a rotational speed of the main motor according to a change frequency of a voltage of a sampling resistor and determine the liquid level state in the recycling tank according to the rotational speed of the main motor and present power of the main motor.

Further, the processing system may judge whether a rotational speed within a certain time period when the main motor runs under the present power is higher than a rotational speed threshold corresponding to the present power, and if a judgment result is YES, determine that the liquid level state in the recycling tank is the full-liquid-level state.

Specific implementation modes of each step in the method embodiment may refer to the related contents in the device embodiment, and will not be elaborated herein. Correspondingly, the embodiment of the present disclosure also provides a computer-readable storage medium storing a computer instruction. When the computer instruction is executed by one or more processors, the one or more processors are caused to execute each step in the information display method.

It is to be noted that execution bodies for each step of the method provided in the above-mentioned embodiment may be the same device. Alternatively, different devices may be involved in the method as execution bodies. For example, the execution bodies for Steps 801 and 802 may be device A. For another example, the execution body for Step 801 may be device A, and the execution body for Step 802 may be device B.

In addition, some flows described in the above-mentioned embodiments and the drawings include multiple operations executed according to a specific sequence. However, it is to be clearly understood that these operations may be executed in sequences different from those specified herein or concurrently. The sequence numbers of the operations, such as 801 and 802, are only for distinguishing different operations and do not represent any execution sequence. In addition, these flows may include more or fewer operations, and these operations may be executed in sequence or concurrently.

In the conventional art, liquid level detection is performed on a liquid storage apparatus on a cleaning device mainly through a mechanical float. In such an implementation mode, buoyancies of liquid to the float are different in case of different liquid surface heights. That is, the float may move to different positions under a thrust changing with the liquid surface height. Therefore, a position of the float may be detected to detect a liquid level in the liquid storage apparatus. However, such a liquid level detection method is easily affected by the stability of a liquid surface, and thus a liquid level detection result is not so reliable. For example, the liquid surface in the liquid storage apparatus is instable when airflow in the liquid storage apparatus is relatively complex or a user repeatedly pushes and pulls the cleaning device. In such case, the mechanical float is very likely to move in advance to further make the liquid level detection result large.

For this technical problem, some embodiments of the present disclosure provide a cleaning device. The cleaning device includes a liquid storage apparatus, a non-contact liquid detection apparatus, and a control apparatus. The non-contact liquid detection apparatus is arranged at an outer side of the liquid storage apparatus, and may detect liquid level information in the liquid storage apparatus without contacting with liquid in the liquid storage apparatus. The control apparatus is electrically connected with the liquid detection apparatus, and is configured to calculate a liquid storage state of the liquid storage apparatus according to the liquid level information and output a control instruction corresponding to the liquid storage state. In the implementation mode of the present disclosure, the liquid level information in the liquid storage apparatus is detected by the non-contact liquid detection apparatus. The non-contact liquid detection apparatus may implement liquid level detection without contacting with the liquid. Therefore, the influence of instability of a liquid surface on a liquid level detection result is reduced effectively, which contributes to improving the reliability of the liquid level detection result.

The technical solution provided in each embodiment of the present disclosure will be described below in detail in combination with the drawings.

FIG. 9a is a structural schematic diagram of a cleaning device according to an embodiment of the present disclosure. As shown in FIG. 9a, the cleaning device includes a liquid storage apparatus 91, a non-contact liquid detection apparatus 92, and a control apparatus 93.

In the present embodiment, the non-contact liquid detection apparatus 92 is arranged at an outer side of the liquid storage apparatus 91, and may detect liquid level information of liquid in the liquid storage apparatus 91 without contacting with the liquid in the liquid storage apparatus 91.

In the present embodiment, the control apparatus 93 is electrically connected with the non-contact liquid detection apparatus 92, and is configured to calculate a liquid storage state of the liquid storage apparatus 91 according to the liquid level information and output a control instruction corresponding to the liquid storage state. The control apparatus 93 may output the control instruction corresponding to the liquid storage state to another apparatus on the cleaning device so as to control the other apparatus according to the liquid storage state.

In some embodiments, the control apparatus 93 may be implemented by various Disclosure Specific Integrated Circuits (ASICs), Digital Signal Processors (DSPs), Digital Signal Processing Devices (DSPDs), Programmable Logic Devices (PLDs), FPGAs, micro central controllers, microprocessors, or other electronic components. No limits are made in the present embodiment.

In the present embodiment, the cleaning device may be, but not limited to, a cleaning machine for cleaning a ground, a wall, a ceiling, glass, a motor vehicle, and the like, a cleaning dust collector, and various other cleaning devices such as a washing machine and a dish washing machine.

In the present embodiment, the liquid storage apparatus 91 may be a solution tank of the cleaning device, configured to store a cleaning agent and/or clean water, or may be a recycling tank of the cleaning device, configured to store recycled waste liquid, sewage, etc. In the present embodiment, the liquid may be at least one of clean water, a mixture of clean water and a cleaning agent, wastewater, sewage, etc.

In the cleaning device provided in the present embodiment, the liquid level information in the liquid storage apparatus is detected by the non-contact liquid detection apparatus. The non-contact liquid detection apparatus may implement liquid level detection without contacting with the liquid. Therefore, the influence of instability of a liquid surface on a liquid level detection result is reduced effectively, which contributes to improving the reliability of the liquid level detection result.

It is to be noted that the shapes, numbers, implementation forms and arrangement positions of the liquid storage apparatus, the non-contact liquid detection apparatus and the control apparatus in the present embodiment shown in FIG. 9a are all exemplary. No limits are made thereto in the present embodiment.

In some exemplary embodiments, the non-contact liquid detection apparatus 92 may include at least one liquid level detection sensor 921 arranged at the outer side of the liquid storage apparatus 91. The liquid level detection sensor 921 includes a component (e.g., capacitor). A physical property of the component (e.g., capacitor) may change as the liquid gets away or close (without contact). The liquid level detection sensor 921 may detect a liquid level change by use of the principle that the physical property of the component may change when the liquid gets away or close. Each liquid level detection sensor 921 may sense a liquid level change in the liquid storage apparatus 91, convert the sensed liquid level change into an electrical signal and output the electrical signal to the control apparatus 93 such that the control apparatus 93 calculates the liquid storage state of the liquid storage apparatus 91 according to the electrical signal.

In an optional embodiment, the at least one liquid level detection sensor 921 is arranged on an outer wall of the liquid storage apparatus 91 so as to sense the liquid level change in the liquid storage apparatus 91.

In another optional embodiment, the cleaning device further includes a machine body 94. A side wall of the machine body 94 is close to the outer wall of the liquid storage apparatus 91. The machine body 94 of the cleaning device usually wraps a bottom surface and partial or complete lateral surface of the liquid storage apparatus 91, and is configured to fix or support the liquid storage apparatus 91. Optionally, the side wall of the machine body 94 may be against the liquid storage apparatus 91, or may keep a small air gap with the liquid storage apparatus 91. No limits are made in the present embodiment. In the optional embodiment, the at least one liquid level detection sensor 921 may be arranged on the side wall of the machine body 94 of the cleaning device. Of course, the at least one liquid level detection sensor 921 may be arranged on the outer wall of the liquid storage apparatus 91. Alternatively, part of liquid level detection sensors 921 are arranged on the side wall of the machine body 94 of the cleaning device, and part of liquid level detection sensors 921 are arranged on the outer wall of the liquid storage apparatus 91.

An arrangement position of the at least one liquid level detection sensor will be exemplarily described below in combination with the drawings.

In some embodiments, the at least one liquid level detection sensor 921 may be arranged on an outer wall S1 of the liquid storage apparatus 91, as shown in FIG. 9a. In some other embodiments, the at least one liquid level detection sensor 921 may be arranged on an outer wall S2 of a side wall of the machine body of the cleaning device, as shown in FIG. 9b.

In some other embodiments, the at least one liquid level detection sensor 921 may be arranged on an inner wall S3 of a side wall of the machine body, as shown in FIG. 9c. Of course, in some embodiments, the at least one liquid level detection sensor 921 may be arranged on multiple walls of S1, S2, and S3 respectively. For example, part of liquid level detection sensors in the at least one liquid level detection sensor 921 are arranged on the outer wall S2 of the side wall of the machine body, and the other part is arranged on the inner wall S3 of the side wall of the machine body. This mode will not be illustrated. It is to be noted that, in order to ensure that each liquid level detection sensor 921 has the same detection sensitivity, the at least one liquid level detection sensor 921 may be preferably arranged on S1, S2 or S3. As such, each liquid level detection sensor 921 has the same detection condition.

It is to be understood that FIGs. 9a, 9b and 9c illustrate arrangement positions of the at least one liquid level detection sensor 921 for exemplary description and do not limit other optional arrangement positions. In another optional embodiment of the present disclosure, the arrangement position of the at least one liquid level detection sensor 921 may be set flexibly as practically required.

In some exemplary embodiments, in order to further improve the reliability of the liquid level detection result, the at least one liquid level detection sensor 921 may be grouped, and each liquid level detection sensor group is scattered taking group as the unit on the outer wall of the liquid storage apparatus 91 or the side wall of the machine body, so as to comprehensively detect the liquid level information in the liquid storage apparatus 91 in multiple directions.

Optionally, the at least one liquid level detection sensor 921 may be divided into at least one liquid level detection sensor group. The at least one liquid level detection sensor group may be scattered on an outer wall of the liquid storage apparatus 91 in at least one direction, or scattered on a side wall of the machine body of the cleaning device in at least one direction. The at least one direction includes at least one of a front-side direction, a rear-side direction, a left-side direction, and a right-side direction.

The liquid storage apparatus 91 is usually designed to move with the whole cleaning device. Therefore, directions of the liquid storage apparatus 91 and the cleaning device may be defined in the same manner. The front-side direction refers to a direction consistent with a direction that a user pushes out the cleaning device forwards when the user performs a forward-backward push-pull operation on the cleaning device. The rear-side direction refers to a direction consistent with a direction that the user pulls back the cleaning device backwards when the user uses the cleaning device. The left-side direction and the right-side direction refer to two directions perpendicular to the direction that the user pushes out the cleaning device or pulls back the cleaning device. The directions are relative to the user.

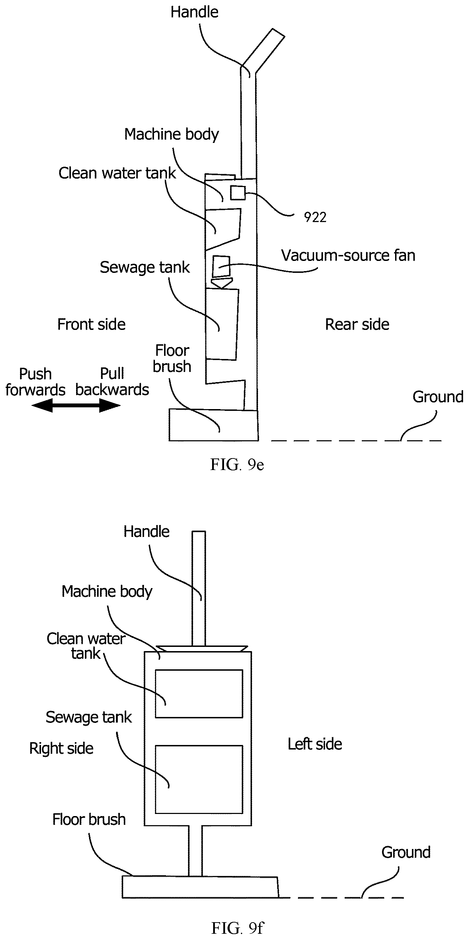

For example, in some scenes, as shown in FIGs. 9d, 9e and 9f, the liquid storage apparatus 91 is implemented into a solution tank or recycling tank on the cleaning device. The user needs to perform forward-push and backward-pull operations in a movement direction of the body of the user when using the cleaning device. In such case, the front-side directions of the cleaning device and the liquid storage apparatus 91 are consistent with the front of the user, the rear-side directions are consistent with the back of the user, the left-side directions are consistent with the left-hand direction of the user, and the right-side directions are consistent with the right-hand direction of the user.

Optionally, if the at least one liquid level detection sensor group is scattered on the outer wall of the liquid storage apparatus 91 in the at least one direction, the following optional arrangement manners may be used for the at least one liquid level detection sensor group.

In manner a1, as shown in FIG. 10a, the at least one liquid level detection sensor group is arranged on an outer wall of a front side of the liquid storage apparatus 91.

In manner a2, as shown in FIG. 10b, the at least one liquid level detection sensor group is arranged on an outer wall of a rear side of the liquid storage apparatus 91.

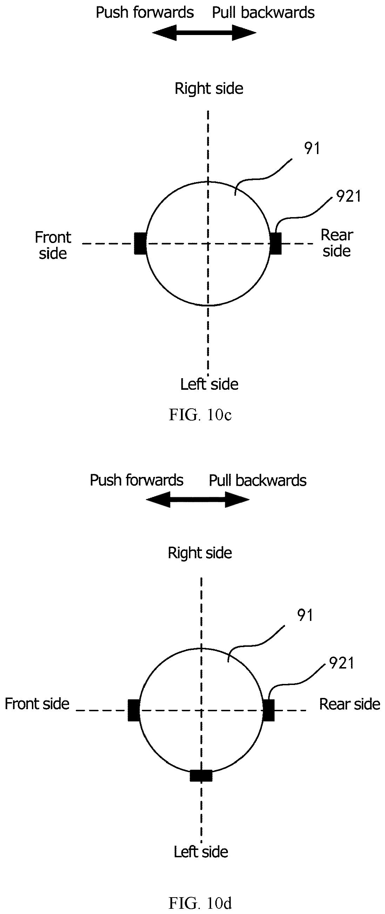

In manner a3, as shown in FIG. 10c, part of liquid level detection sensor groups are arranged on the outer wall of the front side of the liquid storage apparatus 91. Part of liquid level detection sensor groups are arranged on the outer wall of the rear side of the liquid storage apparatus 91.

In manner a4, as shown in FIG. 10d, part of liquid level detection sensor groups are arranged on the outer wall of the front side of the liquid storage apparatus 91. Part of liquid level detection sensor groups are arranged on the outer wall of the rear side of the liquid storage apparatus 91. Part of liquid level detection sensor groups are arranged on an outer wall of a left side of the liquid storage apparatus 91.

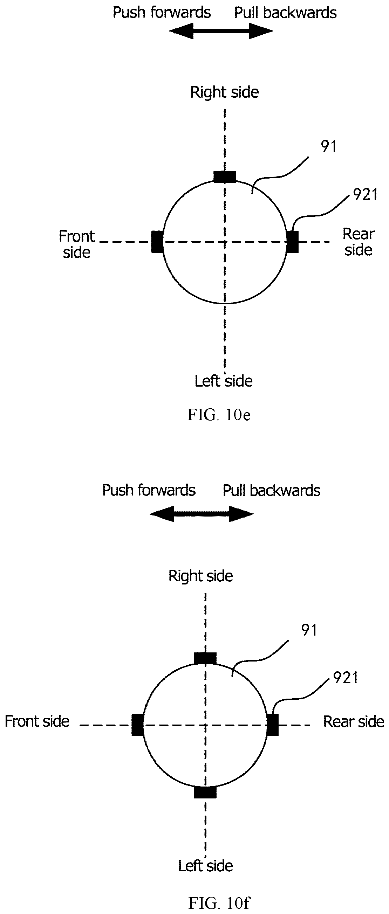

In manner a5, as shown in FIG. 10e, part of liquid level detection sensor groups are arranged on the outer wall of the front side of the liquid storage apparatus 91. Part of liquid level detection sensor groups are arranged on the outer wall of the rear side of the liquid storage apparatus 91. Part of liquid level detection sensor groups are arranged on an outer wall of a right side of the liquid storage apparatus 91.

In manner a6, as shown in FIG. 10f, part of liquid level detection sensor groups are arranged on the outer wall of the front side of the liquid storage apparatus 91. Part of liquid level detection sensor groups are arranged on the outer wall of the rear side of the liquid storage apparatus 91. Part of liquid level detection sensor groups are arranged on the outer wall of the left side of the liquid storage apparatus 91. Part of liquid level detection sensor groups are arranged on the outer wall of the right side of the liquid storage apparatus 91.

Optionally, if the at least one liquid level detection sensor group is scattered on the side wall of the machine body of the cleaning device in the at least one direction, the following optional arrangement manners may be used for the at least one liquid level detection sensor group.

In manner b1, the at least one liquid level detection sensor group is arranged on a front-side outer wall (or inner wall) of the side wall of the machine body of the cleaning device.

In manner b2, the at least one liquid level detection sensor group is arranged on a rear-side outer wall (or inner wall) of the side wall of the machine body of the cleaning device.

In manner b3, part of liquid level detection sensor groups are arranged on the front-side outer wall (or inner wall) of the side wall of the machine body of the cleaning device. Part of liquid level detection sensor groups are arranged on the rear-side outer wall (or inner wall) of the side wall of the machine body of the cleaning device.

In manner b4, part of liquid level detection sensor groups are arranged on the front-side outer wall (or inner wall) of the side wall of the machine body of the cleaning device. Part of liquid level detection sensor groups are arranged on the rear-side outer wall (or inner wall) of the side wall of the machine body of the cleaning device. Part of liquid level detection sensor groups are arranged on a left-side outer wall (or inner wall) of the side wall of the machine body of the cleaning device.

In manner b5, part of liquid level detection sensor groups are arranged on the front-side outer wall (or inner wall) of the side wall of the machine body of the cleaning device. Part of liquid level detection sensor groups are arranged on the rear-side outer wall (or inner wall) of the side wall of the machine body of the cleaning device. Part of liquid level detection sensor groups are arranged on a right-side outer wall (or inner wall) of the side wall of the machine body of the cleaning device.

In manner b6, part of liquid level detection sensor groups are arranged on the front-side outer wall (or inner wall) of the side wall of the machine body of the cleaning device. Part of liquid level detection sensor groups are arranged on the rear-side outer wall (or inner wall) of the side wall of the machine body of the cleaning device. Part of liquid level detection sensor groups are arranged on the left-side outer wall (or inner wall) of the side wall of the machine body of the cleaning device. Part of liquid level detection sensor groups are arranged on the right-side outer wall (or inner wall) of the side wall of the machine body of the cleaning device.

The multiple optional arrangement manners of the liquid level detection sensor group will not be illustrated in the present embodiment. The outer wall recorded in each of manner b1 to manner b6 may be replaced with the inner wall recorded in brackets. Repeated enumerations are omitted herein.

It is to be understood that a liquid surface height in the liquid storage apparatus 91 usually increases or decreases in a height direction of the liquid storage apparatus 91. Therefore, each liquid level detection sensor group may be arranged on the outer wall of the liquid storage apparatus 91 or the side wall of the machine body of the cleaning device in the height direction of the liquid storage apparatus 91, to ensure that each liquid level detection sensor group senses an increase/decrease change of the liquid surface height in the height direction of the liquid storage apparatus 91. For example, as shown in FIGs. 11a and 11b, the at least one liquid level detection sensor group may be arranged on the outer wall of the liquid storage apparatus 91 in a generatrix direction of the liquid storage apparatus 91 when the liquid storage apparatus 91 is implemented into a cylindrical apparatus. Arrangement heights between different liquid level detection sensor groups may be the same or different. No limits are made in the present embodiment.

Optionally, in each of the above-mentioned embodiments, each liquid level detection sensor 921 may be implemented into a capacitance, resistance, photoelectric or electromagnetic sensor. The present embodiment includes but is not limited to this. Exemplary descriptions will be made in the following embodiments with the implementation of the liquid level detection sensor 921 into a capacitance sensor as an example.

In exemplary embodiment A, each liquid level detection sensor group may include one capacitance sensor. The capacitance sensor has a relatively large detection range and may sense continuous liquid level changes. Optionally, an arrangement manner of the capacitance sensor may be implemented into one of arrangement manners listed below such that the detection range of the capacitance sensor covers at least one of a storage upper limit position and storage lower limit position of the liquid storage apparatus 91.

Optionally, in an arrangement manner of the capacitance sensor, the detection range of the capacitance sensor may cover the storage upper limit position of the liquid storage apparatus 91. For example, the capacitance sensor may be arranged at a position corresponding to a storage upper limit on the outer wall of the liquid storage apparatus 91. For another example, the capacitance sensor may be arranged at a position corresponding to the storage upper limit of the liquid storage apparatus 91 on the side wall of the machine body of the cleaning device. Further, in some application scenes, the capacitance sensor may sense whether the liquid in the liquid storage apparatus 91 has reached the storage upper limit position so as to avoid the overflow of the liquid.

Optionally, in another arrangement manner of the capacitance sensor, the detection range of the capacitance sensor covers the storage lower limit position of the liquid storage apparatus 91. For example, the capacitance sensor may be arranged at a position corresponding to a storage lower limit on the outer wall of the liquid storage apparatus 91. For another example, the capacitance sensor may be arranged at a position corresponding to the storage lower limit of the liquid storage apparatus 91 on the side wall of the machine body of the cleaning device. Further, in some application scenes, the capacitance sensor may sense whether the liquid in the liquid storage apparatus 91 has gotten close to the storage lower limit position so as to make a prompt of supplementing liquid.

Optionally, in another arrangement manner of the capacitance sensor, the detection range of the capacitance sensor covers the storage upper limit position and storage lower limit position of the liquid storage apparatus 91. For example, a capacitance sensor with a measurement range larger than a distance difference between the storage upper limit and storage lower limit of the liquid storage apparatus 91 may be selected. When the capacitance sensor is arranged on the outer wall of the liquid storage apparatus 91, a starting end of the measurement range of the capacitance sensor may correspond to the storage lower limit position or be lower than the storage lower limit position, while an ending end of the measurement range may correspond to the storage upper limit position or be higher than the storage upper limit position, as shown in FIG. 11a. Further, in some application scenes, the capacitance sensor may sense whether the liquid in the liquid storage apparatus 91 has gotten close to the storage lower limit position or the storage upper limit position.

In exemplary embodiment B, each liquid level detection sensor group may include multiple capacitance sensors. The multiple capacitance sensors may be implemented into capacitance sensors with relatively small detection ranges or single-point capacitance sensors. Point liquid level measurement may be implemented when each liquid level detection sensor group includes a relatively small number of capacitance sensors. Continuous liquid level measurement may be implemented when each liquid level detection sensor group includes a relatively large number of capacitance sensors which are arranged closely. An arrangement manner of the multiple capacitance sensors may be implemented into one of the following manners.

Optionally, in an arrangement manner of the capacitance sensors, a detection range of at least one capacitance sensor may cover the storage upper limit position of the liquid storage apparatus 91. For example, one or more capacitance sensors are arranged at positions corresponding to a storage upper limit on the outer wall of the liquid storage apparatus 91. For another example, one or more capacitance sensors are arranged at positions corresponding to the storage upper limit of the liquid storage apparatus 91 on the side wall of the machine body of the cleaning device. Further, in some application scenes, the one or more capacitance sensors may sense whether the liquid in the liquid storage apparatus 91 has reached the storage upper limit position so as to avoid the overflow of the liquid.

Optionally, in another arrangement manner of the capacitance sensors, a detection range of at least one capacitance sensor may cover the storage lower limit position of the liquid storage apparatus 91. For example, one or more capacitance sensors are arranged at positions corresponding to a storage lower limit on the outer wall of the liquid storage apparatus 91. For another example, one or more capacitance sensors are arranged at positions corresponding to the storage lower limit of the liquid storage apparatus 91 on the side wall of the machine body of the cleaning device. Further, in some application scenes, the capacitance sensor may sense whether the liquid in the liquid storage apparatus 91 has gotten close to the storage lower limit position so as to give a prompt of supplementing liquid.

Optionally, in another arrangement manner of the capacitance sensors, a detection range of at least one capacitance sensor may cover the storage upper limit position of the liquid storage apparatus 91, and at least one capacitance sensor may cover the storage lower limit position of the liquid storage apparatus 91. For example, as shown in FIG. 11b, a capacitance sensor may be arranged at a position corresponding to the storage lower limit on the outer wall of the liquid storage apparatus 91, and a capacitance sensor may be arranged at a position corresponding to the storage upper limit on the outer wall of the liquid storage apparatus 91. Further, in some application scenes, the capacitance sensor may sense whether the liquid in the liquid storage apparatus 91 has gotten close to the storage lower limit position or the storage upper limit position.

Optionally, each capacitance sensor in implementation mode A and implementation B may be implemented into a self-capacitor consisting of a metal foil. The metal foil may be attached to the outer wall of the liquid storage apparatus 91 or the side wall of the machine body of the cleaning device. The structure is simple, and the cost is relatively low. There is relatively low parasitic capacitance between the metal foil and the ground when no liquid gets close. When the liquid gets close to the pin, the parasitic capacitance may change, and the liquid surface height may be detected according to the change of the parasitic capacitance. Of course, in another optional implementation mode, a capacitance sensor of another type may be used. No limits are made thereto in the present embodiment.

Based on each of the above-mentioned embodiments, the control apparatus 93 may calculate the liquid storage state of the liquid storage apparatus 91 according to the liquid level information detected by the non-contact liquid detection apparatus 92. Further descriptions will be made below in combination with the drawings.

In some exemplary embodiments, the control apparatus 93 may calculate at least one of a liquid surface position, liquid volume and liquid surface inclination angle of the liquid in the liquid storage apparatus 91 according to the electrical signal output by the at least one liquid level detection sensor group 921 in the non-contact liquid detection apparatus 92.

Optionally, in this implementation mode, the control apparatus 93 may calculate the liquid volume in the liquid storage apparatus 91 according to a volume function $V=F_V(x_1, x_1, x_3...x_i)$, where $x_i$ represents a liquid level detected by the liquid level detection sensor group in an i-th direction, and i is a positive integer.

Optionally, in this implementation mode, the control apparatus 93 may calculate the liquid volume in the liquid storage apparatus 91 according to an angle function $\alpha=F_\alpha(x_1, x_1, x_3...x_i)$, where $x_i$ represents a liquid level detected by the liquid level detection sensor group in an i-th direction, and i is a positive integer.

Optionally, considering the existence of an error of the liquid level detection sensor, $V=F_V(x_1, x_2, x_3...x_i)\pm\Delta M\%$, and $\alpha=F_\alpha(x_1, x_2, x_3...x_i)\pm\Delta N\%$. Herein, M and N may be valued according to a practical condition. No limits are made in the present embodiment. In some embodiments, it may be set that M=1 and N=2.

First, exemplary descriptions will be made in combination with manner a1 and manner b1 recorded in the above-mentioned embodiment.

For manner a1 and manner b1 recorded in the above-mentioned embodiment, the at least one liquid level detection sensor group may detect a liquid level at the front side of the liquid storage apparatus 91. For manner a2 and manner b2 recorded in the above-mentioned embodiment, the at least one liquid level detection sensor group may detect a liquid level at the rear side of the liquid storage apparatus 91. In the two implementation modes, the control apparatus 93 may roughly estimate the liquid surface position according to the liquid level in one direction and estimate the liquid volume in the liquid storage apparatus 91.

Then, exemplary descriptions will be made in combination with FIG. 12a. As shown in FIG. 12a, a liquid level detection sensor group $P_1$ is arranged on the outer wall of the front side of the liquid storage apparatus 91. The control apparatus 93, when receiving an electrical signal output by Pi, may determine according to capacitance corresponding to the electrical signal that the liquid level in the liquid storage apparatus 91 is xi. In such case, the control apparatus 93 may estimate that a liquid surface is on a plane at a height of xi. Then, the control apparatus 93 may calculate the liquid volume in the liquid storage apparatus 91 according to $V=F_V(x_1)\pm\Delta M\%=\pi R^2 x_1\pm\Delta M\%$ in combination with a sectional radius R of the liquid storage apparatus 91.

When multiple liquid level detection sensor groups are arranged according to manner a3, manner b3, manner a4, manner b4, manner a5, manner b5, manner a6 or manner b6 recorded in the above-mentioned embodiment, the multiple liquid level detection sensor groups may detect liquid levels in multiple (i.e., two or more than two) directions. Based on this, the control apparatus 93 may determine the liquid surface position relatively accurately according to the liquid levels in the multiple directions and calculate the liquid volume and liquid surface inclination angle in the liquid storage apparatus 91 relatively accurately. As shown in FIG. 12b, liquid levels $x_1$, $x_2$ and $x_3$ in three directions may be detected based on a liquid level detection sensor group Pi, a liquid level detection sensor group $P_2$ and a liquid level detection sensor group $P_3$. The control apparatus 93 may calculate the liquid surface position relatively accurately based on the liquid levels in the three directions, which contributes to the relatively accurate calculation of the liquid volume.

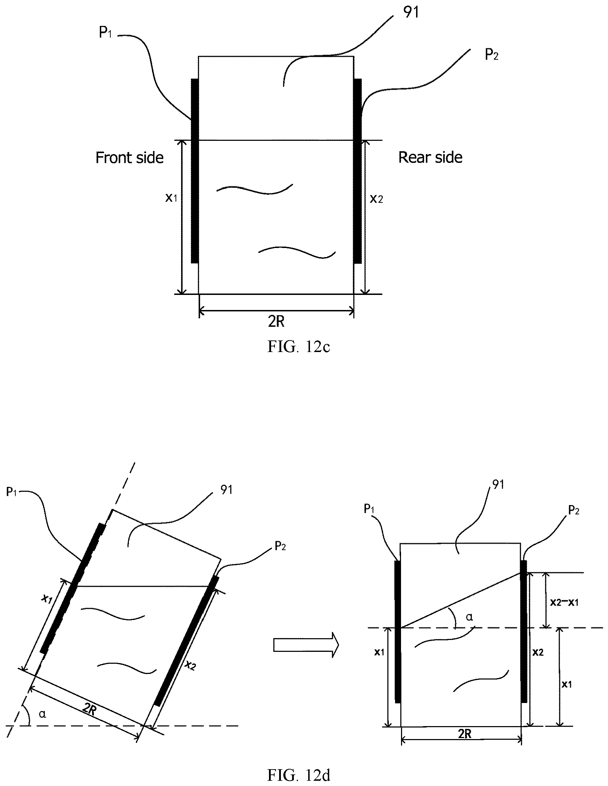

Next, exemplary descriptions will be made with manner a3 as an example in combination with FIGs. 12c and 12d.

As shown in FIGs. 12c and 12d, a liquid level sensor group $P_1$ is arranged on the outer wall of the front side of the liquid storage apparatus 91, and a liquid level detection sensor group $P_2$ is arranged on the outer wall of the rear side. The control apparatus 93, when receiving electrical signals output by $P_1$ and $P_2$, may determine according to capacitance corresponding to the electrical signals that a liquid level at the front side in the liquid storage apparatus 91 is $x_1$ and a liquid level at the rear side is $x_2$.

Based on this, the control apparatus 93 may calculate the liquid volume according to $V=F_V(x_1, x_2)\pm\Delta M\%=\pi R^2 x_1+0.5^*\pi R^{2*}(x_2-x_1)\pm\Delta M\%=0.5^*\pi R^2(x_2+x_1)\pm\Delta M\%$, where R represents a sectional radius of an effective volume of the liquid storage apparatus 91. The control apparatus 93 may calculate the liquid surface inclination angle according to $\alpha=F_\alpha(x_1, x_1)\pm\Delta N\% =arc[(x_2-x_1)/d]\pm\Delta N\%$, where d represents a sectional diameter of the effective volume of the liquid storage apparatus 91, and d=2R.

When the control apparatus 93 acquires liquid levels in two than two directions, the liquid surface position may be determined at first according to the liquid levels in the more than two directions. Then, according to the liquid surface position, a maximum value of the liquid surface is calculated as $x_2$, and a minimum value of the liquid surface is calculated as $x_1$. Next, the liquid volume is calculated based on $V=0.5^*\pi R^2(x_2+x_1)\pm\Delta M\%$, and the liquid surface inclination angle is calculated based on $\alpha=arc[(x_2-x_1)/d]\pm\Delta N\%$. Elaborations are omitted herein.

For manner a1, manner b1, manner a2 and manner b2 recorded in the above-mentioned embodiment, the at least one liquid level detection sensor group may output a liquid level in one direction. If the liquid storage apparatus 91 is inclined, the control apparatus 93 may not calculate the liquid surface position, the liquid surface inclination angle and a relatively accurate liquid volume relatively accurately in combination with a liquid level in one direction.

Therefore, in order to calculate the liquid surface position, the liquid surface inclination angle and a relatively accurate liquid volume in combination with a liquid level in one direction, the non-contact liquid detection apparatus 92 provided in the embodiment of the present disclosure further includes at least one angle sensor 922. The at least one angle sensor 922 may be arranged at the outer side of the liquid storage apparatus 91 or on the cleaning device. FIGs. 9e and 9e illustrate the arrangement of the at least one angle sensor 922 on the cleaning device. The present embodiment includes but is not limited to this. The at least one angle sensor 922 is configured to detect an inclination angle of the liquid storage apparatus 91 and output the detected inclination angle to the control apparatus 93 such that the control apparatus 93 calculates the liquid storage state in the liquid storage apparatus.

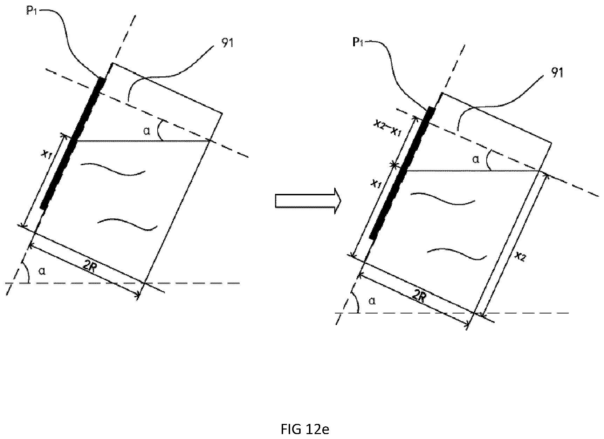

Based on this, in some exemplary embodiments, the control apparatus 93 may calculate at least one of a liquid surface position, liquid volume and liquid surface inclination angle of the liquid in the liquid storage apparatus 91 according to the electrical signal output by the at least one liquid level detection sensor group 921 in the non-contact liquid detection apparatus 92 and the angle detected by the at least one angle sensor 922. Exemplary descriptions will be made below with manner a1 as an example in combination with FIG. 12e.

As shown in FIG. 12e, a liquid level detection sensor group $P_1$ is mounted to the outer wall of the front side of the liquid storage apparatus 91. It may be determined according to capacitance output by $P_1$ that a detected liquid level in the front-side direction is $x_1$. The control apparatus 93 determines that the liquid surface inclination angle is $\alpha$ when acquiring the angle $\alpha$ detected by the at least one angle sensor 922. The liquid surface is not inclined in case of $\alpha=0$. In such case, the liquid volume in the liquid storage apparatus 91 may be calculated according to the manner recorded in the above-mentioned embodiment. Elaborations are omitted herein.

The liquid surface is inclined in case of $\alpha\neq0$. In such case, the control apparatus 93 may calculate a liquid level $x_2$ in the rear-side direction according to the angle $\alpha$ and the liquid level $x_1$ in the front-side direction. As shown in FIG. 12e, $\tan(\alpha)=(x_2-x_1)/d$, and $x_2=d\tan(\alpha)+x_1$. Then, the liquid surface position may be determined relatively accurately based on the liquid levels in the two directions. The liquid volume may be calculated relatively accurately according to $V=0.5*\pi R^2(x_2+x_1)\pm\Delta M\%$ recorded in the above-mentioned embodiment.

It is to be noted that, when the at least one liquid level detection sensor group is arranged according to manner a4, manner b4, manner a5, manner b5, manner a6 or manner b6 recorded in the above-mentioned embodiment, the control apparatus 93, after calculating the liquid surface inclination angle according to multiple liquid levels, may further correct the calculated liquid surface inclination angle according to the angle detected by the at least one angle sensor 922. Elaborations are omitted herein.

Based on each of the above-mentioned embodiments, as shown in FIG. 12f, in some exemplary embodiments, the cleaning device further includes a multimedia output apparatus 95 connected with the control apparatus 93. The multimedia output apparatus 95 is configured to output the liquid storage state of the liquid storage apparatus 91 in a voice broadcast or display manner according to the control instruction output by the control apparatus 93 and corresponding to the liquid storage state of the liquid storage apparatus 91. Furthermore, the user of the cleaning device may conveniently acquire the liquid storage state in the liquid storage apparatus 91 according to voice content or display content output by the multimedia output apparatus.

Optionally, in some embodiments, the multimedia output apparatus 95 may include at least one of a display screen, a nixie tube, and an audio device. The display screen and the nixie tube are configured to give the user a visual prompt. The audio device is configured to give the user a voice prompt. The display screen may include a liquid crystal display screen, an LED display screen, etc. The present embodiment includes but is not limited to this. The audio device may include a device capable of producing sounds, such as a speaker or a buzzer.

Optionally, in some embodiments, the control apparatus 93 may output a first instruction to the multimedia output apparatus 95 according to the liquid volume in the liquid storage apparatus 91. The first instruction is configured to control the multimedia output apparatus 95 to output a used capacity and/or remaining capability of the liquid storage apparatus 91. Further, the multimedia output apparatus 95 may display the used capacity and/or remaining capacity of the liquid storage apparatus 91 through the display screen or the nixie tube.

Optionally, in some embodiments, the control apparatus 93 may output a second instruction when the liquid volume in the liquid storage apparatus 91 reaches a set upper limit threshold $V_{max}$. The second instruction is configured to control a power supply of the cleaning device or a power supply of a vacuum-source fan of the cleaning device to be turned off. The upper limit threshold $V_{max}$ may be calculated according to the storage upper limit position of the liquid storage apparatus 91. In this implementation mode, the power supply of the cleaning device or the vacuum-source fan may be turned off automatically when the liquid volume reaches an upper limit capacity value of the liquid storage apparatus 91. Therefore, the problem that the liquid in the liquid storage apparatus 91 is sucked by the vacuum-source fan and thus flows out from an outlet fan on the cleaning device is solved effectively.

It is to be noted that, in some embodiments, the control apparatus 93 may output an instruction of prompting the user to dispose the liquid to the multimedia output apparatus 95 when the liquid volume in the liquid storage apparatus 91 is close to the set upper limit threshold $V_{max}$ (for example, a difference between the liquid volume and $V_{max}$ is smaller than a set threshold). Elaborations are omitted herein.

Optionally, in some embodiments, the control apparatus 93 may output a third instruction when the liquid volume in the liquid storage apparatus 91 reaches a set lower limit threshold $V_{min}$. The third instruction is configured to control a power supply of the cleaning device or a power supply of a vacuum-source fan of the cleaning device to be turned off. The lower limit threshold $V_{min}$ may be calculated according to the storage lower limit position of the liquid storage apparatus 91. In this implementation mode, the power supply of the cleaning device or the vacuum-source fan is turned off automatically when the liquid volume is lower than a minimum capacity value of the liquid storage apparatus 91. Therefore, the cleaning device may be prevented from keeping working with a poor cleaning effect.

It is to be noted that, in some embodiments, the control apparatus 93 may output an instruction of prompting the user to supplement liquid to the multimedia output apparatus 95 when the liquid volume in the liquid storage apparatus 91 is close to the set lower limit threshold $V_{min}$ (for example, a difference between the liquid volume and $V_{min}$ is smaller than a set threshold). Elaborations are omitted herein.

In some typical application scenes, the liquid storage apparatus 91 is implemented into the recycling tank on the cleaning device shown in FIGs. 9d to 9f. Sewage sucked by the cleaning device is stored in the recycling tank. An inlet of the recycling tank, a front-end air duct, an air outlet of the recycling tank, the vacuum-source fan, an air outlet duct and an air outlet fan are communicated with the air outside. If a liquid surface inclination angle in the recycling tank is excessively large when the recycling tank of the cleaning device is inclined with the inclination of the cleaning device, the sewage may flow back into the inlet of the recycling tank or be sucked into the vacuum-source fan due to the high fluidity of the sewage.

In order to avoid the above defect, optionally, in some embodiments, the control apparatus 93 may output a fourth instruction when the liquid surface inclination angle of the liquid in the liquid storage apparatus 91 is larger than a set angle threshold $\alpha_{max}$. The fourth instruction is configured to control the multimedia output apparatus 95 to output a liquid surface inclination risk early-warning. Further, the multimedia output apparatus 95 may give a visual risk alert to the user through the display screen or the nixie tube. For example, "Danger! Do not incline excessively!" is displayed on the display. Alternatively, the multimedia output apparatus 93 may play a risk notification voice through the audio device. Elaborations are omitted herein.

It is to be noted that, in some embodiments, the control apparatus 93 may output a fifth instruction when time that the liquid surface inclination angle of the liquid in the liquid storage apparatus 91 is kept larger than the set angle threshold $\alpha_{max}$ is greater than a first time threshold. The fifth instruction is configured to control the power supply of the vacuum-source fan of the cleaning device to be turned off so as to protect the cleaning device.

In some embodiments, the control apparatus 93 may further judge whether the cleaning device is in use according to a fluctuation condition of the liquid surface position in the liquid storage apparatus 91. For example, if the liquid surface position in the liquid storage apparatus 91 keeps fluctuating, it may be determined that the fluctuation is caused by the work of the cleaning device. If time that the liquid surface position in the liquid storage apparatus 91 is kept in a rest state is greater than a second time threshold, the control apparatus 93 may determine that the cleaning device does not work. In such case, the control apparatus 93 may output a sixth instruction. The sixth instruction is configured to control the cleaning device to be turned off so as to reduce the energy consumption.

It is to be noted that descriptions such as "first", "second" are used to distinguish different instructions and do not represent any sequence and limit "first" and "second" to be different in type.

The wet cleaning device shown in FIGs. 9d to 9f mainly includes components such as the handle, the machine body, the vacuum-source fan, the solution tank, the recycling tank, and the floor brush. The vacuum-source fan may provide a vacuum suction for the whole cleaning device. The vacuum-source fan is turned on when the user uses the cleaning device. With forward-push and backward-pull operations of the user, sewage and the like on the floor may be sucked into the floor brush by the vacuum-source fan and enter the recycling tank through an air duct or pipeline in the cleaning device. The sewage is separated from the air by a separator in the recycling tank. The sewage is recycled and stored in the recycling tank. Clean air is sucked away by the vacuum-source fan and discharged through the air outlet fan on the cleaning device. A working principle of the cleaning device provided in the embodiment of the present disclosure will be exemplarily described below with the implementation of the liquid storage apparatus 91 into the solution tank and recycling tank of the cleaning device as examples respectively.

In application scene 5, the liquid storage apparatus 91 is implemented into the recycling tank of the cleaning device. There is made such a hypothesis that a capacitance sensor group is mounted to an outer wall of a front side of the recycling tank, another capacitance sensor group is mounted to an outer wall of a rear side of the recycling tank and detection ranges of both capacitance sensor groups cover a storage upper limit position of the recycling tank. When the cleaning device is used, the control apparatus 93 may control the vacuum-source fan to recycle sewage into the recycling tank and receive electrical signals sent by the two capacitance sensor groups. Then, the received electrical signals are converted into height information of a liquid level. The control apparatus 93 may output a control instruction to the display screen on the cleaning device when the liquid level of the sewage in the recycling tank does not reach the storage upper limit position of the recycling tank. The control instruction is configured to control the display screen to display a used liquid capacity or remaining available capacity of the recycling tank. The control apparatus 93 may output a control instruction to the audio device when the liquid level of the sewage in the recycling tank is close to the storage upper limit position of the recycling tank. The instruction is configured to control the audio device to output prompting information that the recycling tank is full so as to prompt the user to dispose the sewage. The control apparatus 93 may control the vacuum-source fan to be powered off so as to avoid the sewage being sucked out when the liquid level of the sewage in the recycling tank reaches the storage upper limit position of the recycling tank.

In application scene 6, the liquid storage apparatus 91 is the solution tank of the cleaning device. There is made such a hypothesis that a capacitance sensor group is mounted to an outer wall of a front side of the solution tank, another capacitance sensor group is mounted to an outer wall of a rear side of the solution tank and detection ranges of both capacitance sensor groups cover a storage lower limit position of the solution tank. When the cleaning device is used, the control apparatus 93 may control a water pump or a switch to pump out liquid in the solution tank and receive electrical signals sent by the two capacitance sensor groups. Then, the received electrical signals are converted into height information of a liquid level. The control apparatus 93 may output a control instruction to the display screen on the cleaning device when the liquid level of the clean water in the solution tank does not reach the storage lower limit position of the solution tank. The control instruction is configured to control the display screen to display a remaining available liquid capacity of the solution tank. The control apparatus 93 may output a control instruction to the audio device when the liquid level of the clean water in the solution tank is close to the storage lower limit position of the solution tank. The instruction is configured to control the audio device to output prompting information that liquid needs soon to be supplemented into the solution tank so as to prompt the user to supplement liquid. The control apparatus 93 may control the water pump or the switch to be turned off when the liquid level of the clean water in the solution tank reaches the storage lower limit position of the solution tank.

In addition to the cleaning device recorded in each of the above-mentioned embodiments, the embodiment of the present disclosure also provides a control method for a cleaning device. Descriptions will be made below in combination with the drawings.

FIG. 13 is a schematic flowchart of a control method for a cleaning device according to an exemplary embodiment of the present disclosure. The cleaning device includes a liquid storage apparatus. As shown in FIG. 13, the method includes the following steps.

At Step 1301, liquid level information detected by a non-contact liquid level detection apparatus arranged at an outer side of the liquid storage apparatus is acquired.

At Step 1302, a liquid storage state of the liquid storage apparatus is calculated according to the liquid level information.

At Step 1303, the cleaning device is correspondingly controlled according to the liquid storage state.

In some exemplary embodiments, a mode that liquid level information detected by a non-contact liquid level detection apparatus arranged at an outer side of the liquid storage apparatus is acquired includes at least one of the following operations. An electrical signal output by at least one liquid level detection sensor in the non-contact liquid detection apparatus and changing with a liquid level is acquired. An angle detected by at least one angle sensor in the non-contact liquid detection apparatus is acquired.

In some exemplary embodiments, a mode that a liquid storage state of the liquid storage apparatus is calculated according to the liquid level information includes the following operation. At least one of a liquid surface position, liquid volume and liquid surface inclination angle of liquid in the liquid storage apparatus is calculated according to the electrical signal output by the at least one liquid level detection sensor and changing with the liquid level and the angle detected by the at least one angle sensor.

In some exemplary embodiments, the operation that the cleaning device is correspondingly controlled according to the liquid storage state includes at least one of the following operations. A multimedia output apparatus of the cleaning device is controlled according to the liquid volume in the liquid storage apparatus to output a used capacity and/or remaining capacity of the liquid storage apparatus. A power supply of the cleaning device is turned off when the liquid volume in the liquid storage apparatus reaches a set upper limit threshold or lower limit threshold. A power supply of a vacuum-source fan of the cleaning device is turned off when the liquid volume in the liquid storage apparatus reaches the set upper limit threshold or lower limit threshold. The multimedia output apparatus of the cleaning device is controlled to output liquid surface inclination risk early-warning information when the liquid surface inclination angle of the liquid in the liquid storage apparatus is larger than a set angle threshold. The power supply of the vacuum-source fan of the cleaning device is turned off when time that the liquid surface inclination angle of the liquid in the liquid storage apparatus is kept larger than the set angle threshold is greater than a first time threshold. The cleaning device is turned off when time that the liquid surface position in the liquid storage apparatus is kept in a rest state is greater than a second time threshold.

In the present embodiment, the liquid level information in the liquid storage apparatus is detected by the non-contact liquid detection apparatus. The non-contact liquid detection apparatus may implement liquid level detection without contacting with the liquid. Therefore, the influence of instability of a liquid surface on a liquid level detection result is reduced effectively, which contributes to improving the reliability of the liquid level detection result.

The embodiment of the present disclosure also provides a computer-readable storage medium storing a computer program. When the computer program is executed, the steps in the control method for the cleaning device in the embodiments of the present disclosure may be implemented.

It is to be noted that execution bodies for each step of the method provided in the above-mentioned embodiment may be the same device. Alternatively, different devices may be involved in the method as execution bodies. For example, the execution bodies for Steps 1301 to 1302 may be device A. For another example, the execution bodies for Steps 1301 and 1302 may be device A, and the execution body for Step 1303 may be device B.

In addition, some flows described in the above-mentioned embodiments and the drawings include multiple operations executed according to a specific sequence. However, it is to be clearly understood that these operations may be executed in sequences different from those specified herein or concurrently. The sequence numbers of the operations, such as 1301 and 1302, are only for distinguishing different operations and do not represent any execution sequence.

At present, cleaning devices have been applied extensively to people's daily life. Users may use cleaning devices with different functions to complete different cleaning operations. For example, a floor cleaning machine is used to clean a ground. A window cleaning device is used to clean glass.

Under a normal condition, a water storage tank such as a solution tank, a cleaning agent tank or a mixture tank of clean water and a cleaning agent is arranged on a cleaning device. When the cleaning device is used, a liquid level condition of the water storage tank may be monitored to monitor a using state of the cleaning device, e.g., a water-filled or water-free state of the water storage tank.

It has been found by creative efforts of the inventor that a purpose of water-free detection is achieved in a related art by placing a detection module at a bottom or wall of a water storage tank and directly monitoring a water volume in the water storage tank. However, a size and arrangement position of the detection module are limited, while the water storage tank has a relatively large volume, so that using only one detection module may cause the mistaken transmission of information. For example, when a machine works, the machine is not in an upright state, and a liquid surface may fluctuate greatly. Due to the instable liquid surface, there may be no water in a detection range of the detection module, but there is water in the water storage tank in fact. As a result, the water-free detection apparatus makes misidentification.

In view of the above problem, the present disclosure discloses a cleaning device, a control method for a cleaning device, and a storage medium, to solve the above problem or at least partially solve the above problem.

The technical solutions in the embodiments of the present disclosure will be described clearly and completely below in combination with the drawings in the embodiments of the present disclosure. It is apparent that the described embodiments are not all but only part of embodiments of the present disclosure. All other embodiments obtained by those skilled in the art based on the embodiments in the present disclosure without creative work shall fall within the scope of protection of the present disclosure.

"Include" mentioned throughout the specification and the claims is an open term, and thus may be explained as "include, but not limited to". "Roughly" refers to that, within an acceptable error range, those skilled in the art may solve the technical problem within a certain error range and substantially achieve the technical effect.

In addition, term "connect" includes any direct and indirection connection means herein. Therefore, description "a first apparatus is connected to a second apparatus" herein represents that the first apparatus may be connected to the second apparatus directly or connected to the second apparatus indirectly through another apparatus. The subsequent descriptions of the specification are preferred implementation modes of the present disclosure. However, the descriptions are still for a purpose of describing the general principle of the present disclosure and not intended to limit the scope of the present disclosure. The scope of protection of the present disclosure should be as defined in the appended claims.

It is to be understood that term "and/or" used herein only describes an association relationship of associated objects and represents that three relationships may exist. For example, A and/or B may represent three conditions: independent existence of A, existence of both A and B, and independent existence of B. In addition, character "/" herein usually represents an "or" relationship of previous and next associated objects. Those skilled in the art may combine different embodiments or examples described in the specification and features of different embodiments or examples without conflicts.

Embodiment 1

FIG. 14 is a principle diagram of a cleaning device according to an embodiment of the present disclosure. FIG. 15a is a schematic state diagram of a cleaning device in an upright state according to an embodiment of the present disclosure. Referring to FIGs. 14 and 15a, the present embodiment provides a cleaning device, which includes a liquid storage apparatus 141 and a liquid spraying apparatus 142. Specifically, in the present embodiment, the cleaning device may be, but not limited to, a cleaning machine capable of cleaning a ground, a wall, a ceiling, glass, a motor vehicle, and the like, a dust collector, a sweeping robot, a dish washing machine, etc.

The liquid storage apparatus 141 is provided with a liquid chamber. Liquid in the liquid chamber may be clean water, a cleaning agent, or a mixture of clean water and a cleaning agent. A liquid flow passage 143 may be formed between the liquid spraying apparatus 142 and the liquid storage apparatus 141. The liquid flow passage 143 is connected between the liquid storage apparatus and the liquid spraying apparatus. That is, the liquid flow passage 143 is configured to communicate the liquid chamber and the liquid spraying apparatus 142. The liquid flow passage 143 delivers the liquid in the liquid chamber to the liquid spraying apparatus 142. The liquid spraying apparatus 142 is configured to spray out the liquid in the liquid chamber. For example, for a cleaning machine, the liquid spraying apparatus 142 may spray liquid to a rolling brush so as to wet the rolling brush. For a sweeping robot, the liquid spraying apparatus 142 may spray liquid to a cleaning unit such as cleaning cloth arranged at a bottom of the sweeping robot so as to wet the cleaning unit. Of course, in another embodiment, the liquid spraying apparatus 142 may directly spray a cleaning solution to a surface to be cleaned. No limits are made in the present embodiment.

The liquid storage apparatus 141 may be connected with the liquid spraying apparatus 142 through a water pipe S. The liquid flow passage 143 is formed in the water pipe S. The water pipe S may specifically be a rigid pipe extending according to a predetermined path or a hose capable of changing a path, and may be selected specifically according to a type of the cleaning device and a structural design of the cleaning device. For example, when the cleaning device is a sweeping robot, an overall form of the sweeping robot may not change during work. Therefore, a form of the water pipe S needs not to be changed, and the water pipe S may be a rigid pipe or a hose. When the cleaning device is a handheld dust collector, the handheld dust collector includes a main unit and a floor brush. When the liquid storage apparatus 141 is located on the main unit and the liquid spraying apparatus 142 is located on the floor brush, the water pipe S connects the liquid storage apparatus 141 with the liquid spraying apparatus 142. For a cleaning machine, for the ease of use, a relative angle and/or relative position between a main unit and a floor brush may change during use. In such case, the water pipe S should be a hose such that the form thereof may change with the change of the relative angle and/or relative position between the main unit and the floor brush.

Moreover, preferably, one end of the water pipe S may be connected with a bottom end of the liquid storage apparatus 141 such that liquid in the liquid storage apparatus 141 may flow into the liquid flow passage 143 of the water pipe S smoothly under gravity. Furthermore, as long as there is liquid in the liquid storage apparatus 141, there is liquid passing through the liquid flow passage 143. Of course, it can be understood that the liquid in the liquid storage apparatus 141 may be discharged to the liquid flow passage 143 by means of another power device, in addition to the gravity. For example, a water pump may be arranged in the middle of the water pipe S. The water pump may suck the liquid in the liquid storage apparatus 141 into the liquid flow passage 143.

A detection module 144 is arranged at the liquid flow passage 143. The detection module 144 is configured to detect the liquid in the liquid flow passage 143 so as to determine whether the liquid flow passage 143 is in a water-filled state or water-free state. "Water" in the water-free state and water-filled state described in the embodiment of the present disclosure includes clean water, a cleaning agent, or a mixture of clean water and a cleaning agent.

It can be understood that, when no liquid in the liquid storage apparatus 141 enters the liquid flow passage 143, the liquid spraying apparatus 142 may not spray liquid, and the whole cleaning device may not work normally and may resume work only after a user adds liquid into the liquid storage apparatus 141. In the conventional art, a liquid level in the liquid storage apparatus 141 is detected to judge whether the liquid level in the liquid storage apparatus 141 may meet the liquid spraying requirement of the liquid spraying apparatus 142. However, the liquid storage apparatus 141 is relatively large, and a detection element for liquid level detection is usually small and limited in arrangement position. Therefore, a liquid level condition of the liquid storage apparatus 141 may not be reflected reliably, and is often misidentified. For example, the liquid in the liquid storage apparatus 141 is enough to cover a detection area of the detection element in fact. However, the machine is inclined, and the liquid storage apparatus 141 is also inclined, so that the liquid moves out of the effective detection area of the detection element, and the detection element may not detect the liquid. As a result, the liquid storage apparatus 141 may be misjudged to be in the water-free state, and user experiences are affected seriously.

It is to be noted that no liquid may be detected in the liquid flow passage 143 when there is totally no liquid in the liquid storage apparatus 141 or the liquid in the liquid storage apparatus 141 is not enough to enter the liquid flow passage 143.

When using the cleaning device, the user may incline the cleaning device as needed (namely a central axis of a main body is at an acute angle or an obtuse angle to the surface to be cleaned). In such case, the liquid level in the liquid storage apparatus 141 may change. When there is a relatively small amount of water in the liquid storage apparatus 141, the liquid may be accumulated in a front-side corner or a rear-side corner. However, a water outlet of the liquid storage apparatus 141 is usually formed at a middle position. Therefore, the liquid in the liquid storage apparatus 141 may not enter the liquid flow passage 143 when the cleaning device is inclined. Specifically, in order to solve the above problem, a first water outlet 141a, a second water outlet 141b and a third water outlet 141c are formed in a bottom of the liquid storage apparatus 141. The second water outlet 141b is located in the middle of the bottom of the liquid storage apparatus 141. The first water outlet 141a and the third water outlet 141c are located at front and rear sides of the second water outlet 141b respectively. "Front" refers to a forward direction of the cleaning device. "Rear" refers to a backward direction of the cleaning device.

As shown in FIG. 15a, when the cleaning device is an upright state (namely the central axis of the main body is at a right angle to the surface to be cleaned), the liquid in the liquid storage apparatus 141 may flow into the liquid flow passage 143 through one or more of the first water outlet 141a, the second water outlet 141b and the third water outlet 141c.

FIG. 15b is a schematic state diagram when a main body of a cleaning device is inclined backwards according to an embodiment of the present disclosure. As shown in FIG. 15b, when the cleaning device is inclined backwards and there is no enough liquid in the liquid storage apparatus 141, a small amount of liquid is accumulated in the rear-side corner. The liquid may not be discharged through the first water outlet 141a and the second water outlet 141b, and is discharged to the liquid flow passage 143 through the third water outlet 141c.

FIG. 15c is a schematic state diagram when a main body of a cleaning device is inclined forwards according to an embodiment of the present disclosure. As shown in

FIG. 15c, when the cleaning device is inclined forwards and there is no enough liquid in the liquid storage apparatus 141, a small amount of liquid is accumulated in the front-side corner. The liquid may not be discharged through the second water outlet 141b and the third water outlet 141c, and is discharged to the liquid flow passage 143 through the first water outlet 141a.

Accordingly, the first water outlet 141a, the second water outlet 141b and the third water outlet 141c are formed in the bottom of the liquid storage apparatus 141. The three water outlets are distributed in the front, middle and rear of the liquid storage apparatus 141. Therefore, no matter whether the cleaning device is inclined or upright and no matter how severely the liquid in the liquid storage apparatus 141 fluctuates or how violent the operations of the user are, the liquid in the liquid storage apparatus 141 may flow into the liquid flow passage 143 smoothly. Therefore, the water-filled or water-free state of the liquid flow passage 143 may fully reflect the water-filled or water-free state of the liquid storage apparatus 141.

According to the cleaning device of the present embodiment, the detection module 144 is arranged at the liquid flow passage between the liquid storage apparatus and the liquid spraying apparatus. Since the liquid flow passage 143 is communicated with the liquid storage apparatus 141, whether there is water in the liquid flow passage is detected by the detection module 144 to further judge whether the water in the liquid storage apparatus 141 may still meet a spraying requirement. Since a cross-sectional area of the liquid flow passage 143 is much smaller than that of the liquid storage apparatus 141, the liquid may fill most of the volume of the liquid flow passage 143, and the liquid in the liquid flow passage 143 fluctuates to relatively small extents when the whole cleaning device is in a non-upright state. This is favorable for ensuring that the liquid may always cover a detection area of the detection module 144. Therefore, as long as the detection module may detect liquid in the liquid flow passage, it indicates that the water in the liquid storage apparatus 141 is enough for the liquid spraying apparatus 142 to spray. When the detection module determines that there is no water in the liquid flow passage, it indicates that the water in the liquid storage apparatus 141 is no more enough for the liquid spraying apparatus 142 to spray, and the user needs to add liquid into the liquid storage apparatus 141. With the adoption of the technical solution of the present embodiment, false detections in the conventional art may be avoided effectively, whether the liquid in the liquid storage apparatus is enough for the liquid spraying apparatus to spray may be reflected reliably, and the user may reliably judge whether the liquid storage apparatus of the cleaning device needs additional liquid.

Specifically, the cleaning device further includes a control element 145. The detection module 144 is electrically connected with the control element 145. The detection module 144 is configured to detect the liquid in the liquid flow passage 143. The control element 145 is configured to correspondingly control the cleaning device according to state information detected by the detection module 144. The state information includes a water-filled state and a water-free state. When the detection module 144 may detect liquid in the liquid flow passage 143, a sensed signal of the detection module 144 is transmitted to the control element 145, and the control element 145 obtains a high level such that the control element 145 may know that the liquid flow passage 143 is in the water-filled state. When the detection module 144 may not detect liquid in the liquid flow passage 143, a sensed signal of the detection module 144 is transmitted to the control element 145, and the control element 145 obtains a low level such that the control element 145 may know that the liquid flow passage 143 is in the water-free state.

Of course, in some embodiments, when the detection module 144 may detect liquid in the liquid flow passage 143, the control element 145 may obtain a low level such that the control element 145 may know that the liquid flow passage 143 is in the water-filled state. When the detection module 144 may not detect liquid in the liquid flow passage 143, the control element 145 may obtain a high level such that the control element 145 knows that the liquid flow passage 143 is in the water-free state. In some embodiments, the control element 145 may be implemented by various ASICs, DSPs, DSPDs, PLDs, FPGAs, micro central controllers, microprocessors, or other electronic components. No limits are made in the present embodiment. Preferably, the control element 145 includes a circuit board 145a and an MCU. The circuit board converts the sensed signal into a high/low level. The MCU judges a state of the liquid flow passage 143 according to the high/low level and correspondingly controls the cleaning device. Further, the detection module 144 may be integrated to the circuit board 145a. The circuit board 145a may be arranged against an outer wall of the liquid flow passage 143 so as to ensure an optimum sensing distance of the detection module 144. The detection module 144 senses a liquid level signal. The signal is converted into an electrical signal by the circuit board 145a. Then, the electrical signal is transmitted to the MCU. The MCU executes a control operation. However, the embodiment is not limited thereto. For example, an electrical signal conversion function may be integrated to the MCU. That is, the sensed signal may be transmitted to the MCU directly. It is to be noted that, in another optional implementation mode, the detection module 144 and the circuit board 145a may be arranged separately and electrically connected.

The detection module 144 may be a contact detection module or a non-contact detection module. FIG. 22 is a schematic mounting diagram of a contact detection module according to an embodiment of the present disclosure. As shown in FIG. 22, when the detection module 144 is a contact detection module, the circuit board 145a may be fixed to the outer wall of the liquid flow passage 143, while a sensing electrode of the detection module 144 on the circuit board 145a may extend into the liquid flow passage 143. FIG. 23 is a schematic mounting diagram of a non-contact detection module according to an embodiment of the present disclosure. As shown in FIG. 23, when the detection module 144 is a non-contact detection module, the circuit board 145a together with the detection module 144 may be fixed to the outer wall of the liquid flow passage 143, and the detection module 144 does not extend into the liquid flow passage 143.

Specifically, the detection module 144 may include a liquid level detection sensor. The liquid level detection sensor detects a liquid level of liquid in a container to reflect a liquid state in the container, specifically including the water-filled state and the water-free state.

In the present embodiment, preferably, the detection module 144 is a contact liquid level detection sensor. As shown in FIG. 22, the sensing electrode extends into the liquid flow passage 143, and is configured to contact with the liquid in the liquid flow passage 143. A liquid level in the liquid flow passage 143 is measured directly through the sensing electrode, thereby reflecting a liquid level state of the liquid flow passage, at least including the water-filled state and the water-free state.

A non-contact detection module may specifically be a non-contact liquid level sensor. The non-contact liquid level sensor is arranged on the outer wall of the liquid flow passage 143. The non-contact liquid level sensor includes a component (e.g., capacitor). A physical property of the component (e.g., capacitor) may change as the liquid gets away or close (without contact). The non-contact liquid level sensor may detect a liquid level change by use of the principle that the physical property of the component may change when the liquid gets away or close. Each non-contact liquid level sensor may sense a liquid level change in the liquid flow passage 143 and transmit a sensed signal to the control element 145. The control element 145 converts the sensed signal into an electrical signal and judges the liquid level state of the liquid flow passage 143 according to the electrical signal to further reflect a liquid level state of the liquid storage apparatus 141 indirectly.

Liquid level information in the liquid flow passage 143 is detected by the non-contact liquid level sensor. The non-contact liquid detection apparatus may implement liquid level detection without contacting with the liquid. Therefore, the influence of instability of a liquid surface on a liquid level detection result is reduced effectively, which contributes to improving the reliability of the liquid level detection result.

A specific non-contact liquid level sensor may be a capacitance liquid level sensor. The capacitance liquid level sensor may be implemented into a self-capacitor consisting of a metal foil. The metal foil may be attached to the outer wall of the liquid flow passage 143. The structure is simple, and the cost is relatively low. There is relatively low parasitic capacitance between the metal foil and the ground when no liquid gets close. When the liquid gets close to the pin, the parasitic capacitance may change, and a liquid surface height may be detected according to the change of the parasitic capacitance. Of course, in another optional implementation mode, a capacitance sensor of another type may be used. No limits are made thereto in the present embodiment.

In addition, as shown in FIG. 14, the cleaning device may further include an alarming apparatus 146. The alarming apparatus 146 is electrically connected with the control element 145. The control element 145 is configured to control the alarming apparatus 146 to send an alarming signal when the liquid flow passage 143 is in the water-free state. The alarming apparatus 146 may be arranged at any position on the cleaning device, and may specifically prompt the user by, for example, voice broadcast, flashing, displaying on a display screen, or any combination thereof. In a preferred implementation mode, an indicator lamp and a speaker are arranged on the cleaning device (for example, the liquid storage apparatus 141). When the control element 145 determines that the liquid flow passage 143 is in the water-free state, the indicator lamp is controlled to flicker, and meanwhile, the speaker may be controlled to give a voice prompt. Then, the user may add liquid into the liquid storage apparatus 141 according to the alarming information.

Embodiment 2

FIG. 16 is a structural schematic diagram of a detection cavity according to an embodiment of the present disclosure. FIG. 17 is a side view of the detection cavity in FIG. 16. FIG. 18 is a longitudinal sectional view of the detection cavity in FIG. 16. Referring to FIGs. 14 to 18, the cleaning device of the present disclosure is further optimized in the present embodiment based on embodiment 1. Specifically, a detection cavity 147 may be formed in the liquid flow passage 143. The "detection cavity" refers to that an additional shell is arranged on the liquid flow passage 143 and a detection cavity for detection of the water-free detection module 144 is formed in the additional shell.

Preferably, a cross-sectional area of the detection cavity 147 is smaller than that at another position on the liquid flow passage 143. The detection module 144 is arranged at the detection cavity 147. The detection cavity 147 may be formed at any position of the liquid flow passage 143. The liquid in the liquid storage apparatus 141 may pass through the detection cavity 147 when delivered to the liquid spraying apparatus 142. In the present embodiment, an inner cavity of the water pipe S arranged between the liquid storage apparatus 141 and the liquid spraying apparatus 142 may be communicated with that of the detection cavity 147 to form the liquid flow passage 143.

The cross-sectional area of the detection cavity 147 is smaller than that at another position of the liquid flow passage 143, which is more favorable for the water to fill most of the detection cavity after flowing into the detection cavity such that a liquid level of the liquid in the detection cavity 147 is relatively high in a vertical direction. In such case, it is ensured that the detection module 144 may detect the liquid even under the fluctuation of the liquid level when arranged at the bottom and even side of the detection cavity 147, limits to the arrangement position of the detection module 144 are reduced, and the detection accuracy is relatively high.

Of course, in some optional embodiments, the cross-sectional area of the detection cavity 147 is larger than that at another position of the liquid flow passage 143. However, the cross-sectional area of the detection cavity 147 is far smaller than that of the liquid storage apparatus 141. Compared with the conventional art, the embodiment has the advantage that the water-free detection accuracy may be improved.

In the present embodiment, preferably, a thickness of the detection cavity 147 ranges from 1 mm to 1.5 mm. A length of the detection cavity 147 ranges from 15 mm to 25 mm. A width of the detection cavity 147 ranges from 5 mm to 15 mm. With the adoption of such a dimensional design, the detection cavity 147 is flat. The flat design ensures that air in the detection cavity 147 may be discharged better after the water in the liquid flow passage 143 flows into the detection cavity 147, so as to avoid the influence of bubbles and the like on the detection of the detection module 144. Therefore, the accuracy of the sensing result is improved from the other aspect. Compared with the direct arrangement of the detection module 144 on the water pipe S, the present embodiment has the advantage that a flow velocity of the water in the detection cavity 147 is lower than that in the water pipe S, so that enough detection time is provided for the detection module 144, and the detection result is more accurate and reliable.

It is to be noted that, in order to improve the detection reliability of the detection module 144, the detection module 144 may be arranged on a bottom wall or side wall of the detection cavity 147, and may be arranged at a middle or lower portion of the side wall when arranged on the side wall. The number of the detection module 144 is not limited to one. In order to reflect the liquid level state of the liquid flow passage 143 more accurately, multiple detection modules 144 may specifically be arranged at the detection cavity. The multiple detection modules 144 may be scattered at multiple positions of the detection cavity 147. For example, the detection modules 144 may be arranged on the bottom wall or side wall of the detection cavity 147.

In the present embodiment, the detection cavity 147 may include a straight cavity. And/or, the detection cavity 147 may include a curved cavity curved in a liquid flow direction. As shown in FIG. 18 or 20, the detection cavity 147 is a straight cavity. FIG. 21 is another structural schematic diagram of a detection cavity according to an embodiment of the present disclosure. The detection cavity in FIG. 21 is a curved cavity. Of course, it can be understood that the detection cavity 147 may be a cavity formed combining a straight cavity portion and a curved cavity portion. No limits are made in the present embodiment. Compared with the straight cavity, the curved cavity has the advantages that the liquid is subjected to higher resistance when flowing in the curved cavity, so that the reduction of the flow velocity of the liquid is facilitated, there is more sensing time for the detection module 144, and the detection result is more accurate and reliable.

As shown in FIG. 18 or 20, a water inlet joint 147a and a water outlet joint 147b are arranged at two ends of the detection cavity 147 respectively. The water inlet joint 147a is configured to be butted with the water pipe S of the liquid storage apparatus 141. The water outlet joint 147b is configured to be butted with the water pipe S of the spraying apparatus 142. The water inlet joint 147a and the water outlet joint 147b may be integrated with the detection cavity 147. The detection cavity 147 may include a water inlet end 147c, a main portion 147d, and a water outlet end 147e. A cross-sectional area of the water inlet end 147c gradually decreases from a direction away from the main portion 147d to a direction close to the main portion 147d. Therefore, a large amount of liquid in the water pipe S may flow into the detection cavity 147 and slowly fill the detection cavity 147. A cross-sectional area of the water outlet end 147e gradually increases from the direction close to the main portion 147d to the direction away from the main portion 147d. Therefore, the liquid in the detection cavity 147 may slowly flows into the water pipe S from the detection cavity 147. Further, it is ensured that the flow velocity of the liquid in the detection cavity 147 is relatively low. Therefore, enough detection time is provided for the detection module 144.

In the present embodiment, preferably, as shown in FIGs. 17 and 18, when the cleaning device of the present embodiment is provided with the circuit board 145a, an opening may be formed in a side portion of the detection cavity 147. A side cover 148 may be arranged at the opening. The side cover 148 may be detachably connected with an open end of the detection cavity 147. The detection cavity 147 may be sealed by one side of the side cover 148 to accommodate the circuit board 145 in the other side of the side cover 148 so as to effectively save the space and protect the circuit board 145a to some extent. When the circuit board 145a needs to be replaced or maintained, the side cover 148 may be dismounted from the opening of the detection cavity 147. Of course, the side cover 148 may be non-detachably connected, e.g., integrated, with the detection cavity 147. The circuit board 145a may be fixed to another position, not limited to be arranged in the side cover 148.

FIG. 19 is another structural schematic diagram of a detection cavity according to an embodiment of the present disclosure. FIG. 20 is a longitudinal sectional view of the detection cavity in FIG. 19. As shown in FIGs. 19 and 20, the detection cavity 147 may be integrated and is not provided with the side cover 148. In such case, the circuit board 145a may be fixed to another position.

FIG. 15d is a structural schematic diagram of a cleaning device according to an embodiment of the present disclosure. The cleaning device shown in FIG. 15d mainly includes components such as a handle 1411, a machine body 1412, a vacuum-source fan 1413, a liquid storage apparatus 141 (e.g., solution tank), a recycling tank 1414, a liquid spraying apparatus 142, and a rolling brush 1415. The vacuum-source fan may provide a vacuum suction for the whole cleaning device. When the user uses the cleaning device, the vacuum-source fan is turned on, and the liquid spraying apparatus is turned on. With forward-push and backward-pull operations of the user, sewage and the like on the floor may be sucked into the floor brush by the vacuum-source fan and enter the recycling tank through an air duct or pipeline in the cleaning device. The sewage is separated from the air by a separator in the recycling tank. The sewage is recycled and stored in the recycling tank. Clean air is sucked away by the vacuum-source fan and discharged through an air outlet in the cleaning device.

The cleaning device provided in the present disclosure will be described below through a specific application scene.

Application scene 7

The cleaning device is a cleaning machine. Water in a liquid storage tank on a main body of the cleaning machine flows to a water spraying plate on a rolling brush through a water pipe. Generally, a water pump or an air pump may be arranged in the middle of the water pipe so as to meet a large-flow water spraying requirement of the cleaning machine. The water is pumped to the liquid spraying apparatus (e.g., water spraying plate) by the water pump by boosting. A plurality of water spray orifices are formed in the water spraying plate. The water is sprayed to the rolling brush by the water spray orifices. A detection cavity is formed at the water pipe. A detection module is arranged at the detection cavity. The detection module is electrically connected with a control element. The detection module detects a liquid level in the detection cavity, thereby indirectly reflecting whether there is water in the water storage tank. When the detection module may not detect the liquid level in the detection cavity, all the water in the liquid storage tank has flowed out. The detection module is connected with an alarming apparatus through the control element. The alarming apparatus gives a prompt whether there is water in the water storage tank.

Application scene 8

The cleaning device is a sweeping robot. Water in a water storage tank arranged on a main body of the sweeping robot flows to a cleaning unit (e.g., cleaning cloth) through a water pipe. A water pump or an air pump may be arranged in the middle of the water pump. Of course, since the space is limited, and the sweeping robot sprays a small flow of water, the sweeping robot may not be provided with the water pump or the air pump, and the water may seep the cleaning unit (e.g., cleaning cloth) under gravity. A detection cavity is formed at the water pipe. A detection module is arranged at the detection cavity. The detection module is electrically connected with a control element. The detection module detects a liquid level in the detection cavity, thereby indirectly reflecting whether there is water in the water storage tank. When the detection module may not detect the liquid level in the detection cavity, all the water in the liquid storage tank has flowed out. The detection module is connected with an alarming apparatus through the control element. The alarming apparatus gives a prompt whether there is water in the water storage tank.

Application scene 9

The cleaning device is a dust collector. Water in a liquid storage tank on a floor brush of the dust collector flows to a water spraying plate on a rolling brush through a water pipe. Generally, a water pump or an air pump may be arranged in the middle of the water pipe so as to meet a large-flow water spraying requirement of the cleaning machine. The water is pumped to the liquid spraying apparatus (e.g., water spraying plate) by the water pump by boosting. A plurality of water spray orifices are formed in the water spraying plate. The water is sprayed to the rolling brush by the water spray orifices. A detection cavity is formed at the water pipe. A detection module is arranged at the detection cavity. The detection module is electrically connected with a control element. The detection module detects a liquid level in the detection cavity, thereby indirectly reflecting whether there is water in the water storage tank. When the detection module may not detect the liquid level in the detection cavity, all the water in the liquid storage tank has flowed out. The detection module is connected with an alarming apparatus through the control element. The alarming apparatus gives a prompt whether there is water in the water storage tank.

In addition to the cleaning device recorded in each of the above-mentioned embodiments, the embodiment of the present disclosure also provides a control method for a cleaning device. Descriptions will be made below in combination with the drawings.

Embodiment 3

FIG. 24 is a schematic flowchart of a control method for a cleaning device according to an exemplary embodiment of the present disclosure. The cleaning device includes a liquid storage apparatus, a liquid spraying apparatus, a liquid flow passage connected between the liquid storage apparatus and the liquid spraying apparatus, a detection module, and a control element. As shown in FIG. 24, the method includes the following steps.

At S2401, the control element acquires state information of the liquid flow passage detected by the detection module arranged at the liquid flow passage, the state information including a water-filled state and a water-free state.

At S2402, the control element correspondingly controls the cleaning device according to the state information.

Specifically, the operation that the cleaning device is correspondingly controlled according to the state information includes the following operations.

The control element controls an alarming apparatus to alarm when the state information is the water-free state.

And/or, the control element controls the cleaning device to be turned off when the state information is the water-free state.

In the present embodiment, whether there is water in the liquid flow passage is detected through the detection module of the liquid flow passage, thereby indirectly knowing about a liquid level condition of the liquid storage apparatus. Since a cross-sectional area of the liquid flow passage is relatively small, compared with the direct arrangement of the detection module at the liquid storage apparatus, the present embodiment has the advantage that the water-free detection accuracy and reliability may be improved effectively.

It is to be noted that the liquid flow passage in the present embodiment may be formed by a water pipe or a detection cavity, and may specifically refer to the descriptions in embodiment 1 and embodiment 3.

The cleaning device in the present embodiment may use the cleaning devices in embodiment 1 and embodiment 2, and may specifically refer to the descriptions in embodiment 1 and embodiment 2.

Embodiment 4

The embodiment of the present disclosure also provides a computer-readable storage medium storing a computer program. When the computer program is executed, the steps in the control method for the cleaning device in embodiment 3 of the present embodiment may be implemented.

The cleaning device in the present embodiment may use the cleaning devices in embodiment 1 and embodiment 2, and may specifically refer to the descriptions in embodiment 1 and embodiment 2.

For the technical problem of an existing cleaning device that cleanliness of a cleaning object may be determined only by the naked eyes of a user, the embodiments of the present disclosure provide a solution. The basic idea is as follows. A detector capable of detecting a physical property value of dirty liquid on the cleaning object is additionally arranged on the cleaning device. That is, the detector is partially or completely arranged on a circulation path of the dirty liquid. Then, a processing system may determine the cleanliness of the cleaning object according to the physical property value of the dirty liquid detected by the detector. As such, the cleanliness of the cleaning object may be detected independently, and whether the cleaning object is clean needs not to be determined manually. Therefore, the improvement of user experiences is facilitated.

The technical solution provided in each embodiment of the present disclosure will be described below in detail in combination with the drawings.

It is to be noted that the same reference signs represent the same objects in the following drawings and embodiments, and thus a certain object, once defined in a drawing or embodiment, needs not to be further discussed in subsequent drawings and embodiments.

FIG. 25a is a structural schematic diagram of a cleaning device according to an embodiment of the present disclosure. As shown in FIG. 25a, the cleaning device S10 includes a floor brush 251, a suction passage 252 and a recycling tank 253, which are sequentially connected. Dirty liquid on a cleaning object is sucked by a suction nozzle 251a on the floor brush 251 and delivered into the recycling tank 253 through the suction passage 252. As shown by the dotted line in FIG. 25a, the dirty liquid enters the recycling tank 253 from the suction nozzle 251a on the floor brush 251 through the suction passage 252, so as to form a circulation path of the dirty liquid. The floor brush 251 refers to a cleaning assembly on the cleaning device S10, and may also be called a cleaning brush.

Further, as shown in FIG. 25a, the cleaning device S10 further includes a processing system 254 and a first detector 255. The first detector 255 is partially or completely arranged on the circulation path of the dirty liquid. That the first detector 255 is partially arranged on the circulation path of the dirty liquid refers to that part of components of the first detector 255 are arranged on the circulation path of the dirty liquid and other components are arranged at other parts except the circulation path of the dirty liquid.

Optionally, the first detector 255 may be arranged in a cavity of the floor brush 251, the suction nozzle 251a of the floor brush 251, the suction passage 252 or the recycling tank 253, or may be arranged in multiple of these parts. In the embodiment of the present disclosure, multiple refers to two or more than two. For example, the first detector 255 may be arranged in the suction nozzle 251a of the floor brush 251 and the suction passage 252. Alternatively, at least one first detector 255 may be arranged in the cavity of the floor brush 251 and the recycling tank 253. However, the embodiment is not limited thereto. FIG. 25a only shows an example of arranging the first detector 255 in the suction passage 252 and does not limit an arrangement position of the first detector.

Optionally, one or more first detectors 255 may be arranged at each part.

In the present embodiment, the first detector 255 is configured to detect a physical property value of the dirty liquid and provide the physical property value of the dirty liquid for the processing system 254. Correspondingly, the processing system 254 may determine cleanliness of the cleaning object according to the physical property value of the dirty liquid.

In the present embodiment, an implementation form of the cleaning device S10 shown in FIG. 25a is only exemplary. The cleaning device S10 may be an autonomous mobile cleaning device, or a handheld cleaning device shown in FIG. 25a. Further, the cleaning device S10 may be, but not limited to, a cleaning machine configured to clean a region such as a ground, a floor, a carpet, a wall, a ceiling, or glass.

In the present embodiment, the detector capable of detecting the physical property value of the dirty liquid on the cleaning object is additionally arranged on the cleaning device. That is, the detector is partially or completely arranged on the circulation path of the dirty liquid. Then, the processing system may determine the cleanliness of the cleaning object according to the physical property value of the dirty liquid detected by the detector. As such, the cleanliness of the cleaning object may be detected independently, and whether the cleaning object is clean needs not to be determined manually. Therefore, the improvement of user experiences is facilitated.

In the present embodiment, different physical properties of the dirty liquid may be detected if the first detector 255 uses different working principles. For example, some optical detectors may detect optical property values of the dirty liquid. For another example, some electrical detectors may detect electrical property values of the dirty liquid. In the embodiment of the present disclosure, a physical property of the dirty liquid includes an optical property and/or electrical property thereof. The optical property of the dirty liquid may be a color, turbidity, transparency or the like of the dirty liquid. The electrical property of the dirty liquid may be resistance, resistivity, current, voltage or the like of the dirty liquid.

The first detector 255 provided in the embodiment of the present disclosure will be exemplarily described below with the detection of the optical property value and electrical property value of the dirty liquid by the first detector 255 as examples respectively.

FIG. 25b is a structural schematic diagram of a first detector according to an embodiment of the present disclosure. As shown in FIG. 25b, the first detector 255 includes a light source 255a and a photo-detector 255b. An optical signal emitted by the light source 255a may arrive at the photo-detector 255b after passing through the dirty liquid. Further, the photo-detector 255b converts the arriving optical signal into an electrical signal and outputs the electrical signal to the processing system 254. The electrical signal output by the photo-detector 255b may reflect an optical property of the dirty liquid. For the ease of description and distinction, the electrical signal output by the photo-detector 255b is defined as a first electrical signal in the present embodiment. Correspondingly, the processing system 254 may calculate an optical property value of the dirty liquid according to the first electrical signal and determine the cleanliness of the cleaning object according to the optical property value of the dirty liquid.

Optionally, the processing system 254 may match the optical property value of the dirty liquid in a known corresponding relationship between an optical property value and a cleanliness grade and determine a cleanliness grade corresponding to the optical property value of the dirty liquid as a cleanliness grade of the cleaning object. The cleanliness grade of the cleaning object may reflect the cleanliness thereof. Optionally, as shown in FIG. 25b, the light source 255a may be arranged opposite to the photo-detector 255b. That the light source 255a is arranged opposite to the photo-detector 255b refers to that a light receiving surface of the photo-detector 255b is opposite to the light source 255a through the dirty liquid. That is, light emitted by the light source 255a is transmitted to the photo-detector 255b by the dirty liquid. As such, the optical signal emitted by the light source 255a may be transmitted to the photo-detector 255b by the dirty liquid.

Alternatively, as shown in FIG. 25c, the light source 255a may be arranged at the same side as the photo-detector 255b. That the light source 255a is arranged opposite to the photo-detector 255b refers to that a light receiving surface of the photo-detector 255b is located at the same side of the dirty liquid as the light source 255a. That is, light emitted by the light source 255a is reflected to the photo-detector 255b by the dirty liquid. As such, the optical signal emitted by the light source 255a may be reflected to the photo-detector 255b by the dirty liquid.

In the embodiment of the present disclosure, for the ease of description and distinction, a part that a center-of-gravity direction of each component points to when the cleaning device S10 works uprightly (working state shown in FIG. 25a) is defined as a bottom of the component. For example, a part of the recycling tank 253 that a center-of-gravity direction of the recycling tank 253 points to is defined as a bottom of the recycling tank 253. Further, a part that a forward direction of the cleaning device S10 points to in each component during the work of the cleaning device S10 is defined as a front of the component. Correspondingly, a side opposite to the forward direction of the cleaning device S10 in each component is defined as a back of the component. Furthermore, a left and right of each component are defined.

Based on the front, back, left and right of each component, for the suction passage 252, that the light source 255a is arranged opposite to the photo-detector 255b may be understood as that the light source 255a and the photo-detector 255b are arranged at the front and back of the suction passage respectively, or are arranged at the left and right of the suction passage respectively. That the light source 255a is arranged at the same side as the photo-detector 255b may be understood as that both the light source 255a and the photo-detector 255b are arranged at the front, back, left or right of the suction passage.

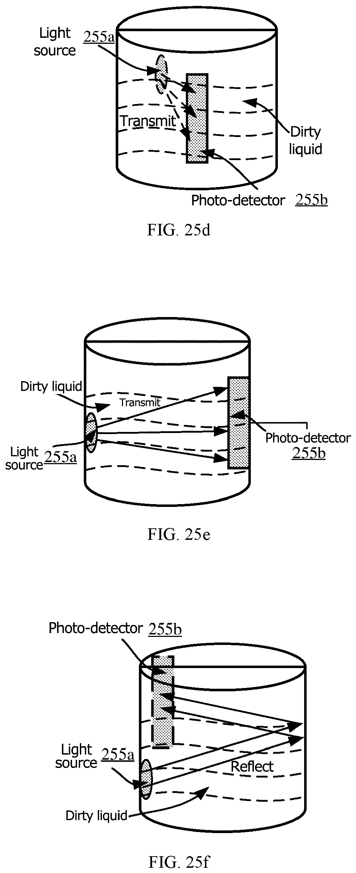

For the recycling tank 253, the light source 255a and the photo-detector 255b may be arranged at the front and back of the recycling tank 253 respectively (as shown in FIG. 25d). Alternatively, the light source 255a and the photo-detector 255b are arranged at the left and right of the recycling tank 253 respectively (as shown in FIG. 25e). That the light source 255a is arranged at the same side as the photo-detector 255b may be understood as that both the light source 255a and the photo-detector 255b are arranged at the front, back, left or right of the recycling tank 253. FIG. 25f only shows an example of arranging both the light source 255a and the photo-detector 255b at the left of the recycling tank 253. Preferably, both the light source 255a and the photo-detector 255b are arranged at a bottom of the recycling tank 253, which contributes to increasing the detection rate of the optical property value of the dirty liquid. The structural form of the recycling tank 253 is only exemplary, and no limits are made thereto.

It is to be noted that, in the embodiment of the present disclosure, a wavelength of the light emitted by the light source 255a is within an optical wavelength range that may be detected by the photo-detector 255b. The light source 255a may be light sources of various optical wavelengths. Correspondingly, the photo-detector 255b may be an optical receiver capable of receiving the optical wavelength of the light emitted by the light source 255a. Optionally, the photo-detector 255b may be an infrared receiving tube if the light source 255a is an infrared light source. The photo-detector 255b may be a laser diode if the light source 255a is a laser light source. The photo-detector 255b may be a color sensor if the light source 255a is an LED light source. However, the embodiment is not limited thereto. A working principle of the first detector 255 will be exemplarily described below with the condition that the light source 255a is an LED light source and the photo-detector 255b is a color sensor as an example. When light emitted by the LED light source arrives at the color sensor through the dirty liquid, the color sensor may convert a received optical signal into an RGB voltage and output the RGB voltage to the processing system 254. Correspondingly, the processing system 254 may calculate a color of the dirty liquid according to the RGB voltage and determine the cleanliness of the cleaning object according to the color of the dirty liquid.

Optionally, a corresponding relationship between a liquid color and a cleanliness grade may be preset in the processing system 254. Correspondingly, the processing system 254 may match the color of the dirty liquid in the corresponding relationship between the liquid color and the cleanliness grade and determine a cleanliness grade corresponding to the color of the dirty liquid as a cleanliness grade of the cleaning object. The cleanliness grade of the cleaning object may reflect the cleanliness of the cleaning object.

In practical applications, the circulation path of the dirty liquid may have some dirts, and such dirts affect the first electrical signal received by the photo-detector to some extent to further cause a certain judgment error of the cleanliness of the cleaning object. In the embodiment of the present disclosure, in order to reduce the influence of the dirts of the circulation path of the dirty liquid on a detection result, brightness of the light source 255a may be adjusted before the cleaning device S10 executes a cleaning task on the cleaning object until a reference electrical signal output by the photo-detector 255b meets a set requirement. That the reference electrical signal output by the photo-detector 255b meets the set requirement refers to that a difference between strength of the reference electrical signal output by the photo-detector 255b and preset reference strength is within a preset difference range. For example, if the reference electrical signal output by the photo-detector 255b is a voltage signal, that the voltage signal output by the photo-detector 255b meets a set requirement refers to that a voltage difference between a voltage value output by the photo-detector 255b and a preset reference voltage value is within a preset voltage difference range. Further, if the reference electrical signal output by the photo-detector 255b does not meet the set requirement when the brightness of the light source is adjusted to a maximum, the processing system 254 may output first prompting information so as to prompt a user to clean the circulation path of the dirty liquid, namely prompt the user to clean the parts related to the circulation path of the dirty liquid.

In the embodiment of the present disclosure, a manner the processing system 254 outputs the first prompting information is not limited. In some embodiments, the cleaning device S10 includes an audio component. In such case, the processing system 254 may play the first prompting information through the audio component. In some other embodiments, the cleaning device S10 includes a display screen. In such case, the processing system 254 may display the first prompting information through the display screen. In some other embodiments, the cleaning device S10 includes a display screen and provides a corresponding man-machine interaction interface. In such case, the processing system 254 may display the first prompting information on the man-machine interaction interface. In some other embodiments, the cleaning device S10 includes a buzzer. The buzzer is electrically connected with the processing system 254. Correspondingly, if the reference electrical signal output by the photo-detector 255b does not meet the set requirement when the brightness of the light source is adjusted to a maximum, the processing system 254 may control the buzzer to buzz so as to prompt a user to clean the circulation path of the dirty liquid. In some other embodiments, the cleaning device S10 further includes an indicator lamp. The indicator lamp is electrically connected with the processing system 254. Correspondingly, if the reference electrical signal output by the photo-detector 255b does not meet the set requirement when the brightness of the light source is adjusted to a maximum, the processing system 254 may control the indicator lamp to send a prompting signal so as to prompt a user to clean the circulation path of the dirty liquid. Optionally, the processing system 254 may, but not limited to, further control the indicator lamp to flicker, display a set color, etc.

In addition to the above-mentioned optical detector, the first detector provided in the embodiment of the present disclosure may also be implemented as an electrical detector. Exemplary descriptions will be made below in combination with FIG. 25g.

As shown in FIG. 25g, the first detector 255 includes a first conductor group 2551 and a first detection circuit 2552. The first conductor group 2551 is arranged on the circulation path of the dirty liquid. The first detection circuit 2552 is electrically connected between the first conductor group 2551 and the processing system 254. A conductor group refers to a group of conductors. For the ease of description and distinction, a group of conductors are defined as a conductor group somewhere in the embodiment of the present disclosure. The conductor is of an integrated structure, has a good conductive property in liquid, not only reacts chemically with the liquid, but also may be made from a metal material or nonmetal material with certain hardness. In some preferred embodiments, the conductor is preferably a stainless steel wire. Further, the first detection circuit 2552 may generate and output a second electrical signal to the processing system 254 when the first conductor group 2551 contacts with the dirty liquid. The second electrical signal may reflect an electrical property of the dirty liquid. The first conductor group 2551 includes at least two conductors not contacting with each other. FIGs. 25g to 25l only show two conductors as an example. Further, part of conductors in the first conductor group 2551 is electrically connected with a positive electrode of a power supply of the cleaning device S10 so as to form positive conductors. The other part is grounded so as to form grounded conductors. As such, a closed circuit is formed between the positive conductors and the grounded conductors when the positive conductors and the grounded conductors contact with the dirty liquid. Correspondingly, the first detection circuit 2552 may generate and output a second electrical signal to the processing system 254 when the closed circuit is formed between the positive conductors and the grounded conductors.

The conductor may be, but not limited to, a conductive probe, a conductive patch, a conductive contact, etc. The conductor may be made of stainless steel. Each conductor in the first conductor group 2551 may be arranged oppositely or at the same side. As shown in FIGs. 25g and 25h, each conductor in the first conductor group 2551 may be arranged on an inside wall of the suction passage if the first conductor group 2551 is arranged in the suction passage. Each conductor in the first conductor group 2551 may be arranged on an inner wall of the recycling tank 253 if the first conductor group 2551 is arranged in the recycling tank. Optionally, as shown in FIG. 25i, the first conductor group 2551 may be arranged on an inside wall of the recycling tank 253. Preferably, the first conductor group 2551 is arranged at a bottom of the inside wall. Alternatively, as shown in FIG. 25j, the first conductor group 2551 is arranged at the bottom of the recycling tank 253. Further, the conductor, if being a conductive probe, may be suspended in the recycling tank 253, as shown in FIG. 25k. Preferably, the conductive probe extends to the bottom of the recycling tank 253. As such, the conductive probe may detect the electrical property value of the dirty liquid once the dirty liquid is sucked into the recycling tank 253.

Further, the conductor, if being a conductive probe, may be a rigid conductive probe. Therefore, positive conductors may be prevented from directly contacting with negative conductors to cause a short circuit.

A working principle and structure of the first detection circuit 2552 will be exemplarily described below with the condition that the first conductor group 2551 includes conductors A and B not contacting with each other as an example in combination with schematic circuit diagrams shown in FIGs. 25l and 25m.

As shown in FIG. 25l, the first detection circuit 2552 includes a voltage detection circuit 2552a. A power supply end P of the voltage detection circuit 2552a is electrically connected with a conductor A. The power supply end P is also electrically connected with the positive electrode of the power supply. Further, a grounding end and output end Q of the voltage detection circuit 2552a are electrically connected with a conductor B respectively. The output end Q of the voltage detection circuit 2552a is electrically connected to the processing system 254. The grounding end of the voltage detection circuit 2552a is electrically connected with the ground.

Optionally, as shown in FIG. 25m, the voltage detection circuit 2552a further includes a reference sampling resistor R3. Two ends of the reference sampling resistor R3 are electrically connected with the conductor B and the ground. Optionally, a connection point of the conductor B and the reference sampling resistor R3 may be taken as the output end Q of the voltage detection circuit 2552a. A closed circuit is formed between the conductor A and the conductor B when the conductor A and the conductor B contact with the dirty liquid. As such, the processing system 254 may detect voltages at the two ends of the reference sampling resistor R3 to further obtain a voltage of the closed circuit formed between the conductor A and the conductor B, i.e., a voltage of the dirty liquid (a second electrical signal). Since resistance of the reference sampling resistor R3 is known, a current of the closed circuit formed between the conductor A and the conductor B may be obtained. Therefore, resistance of the dirty liquid is obtained.

Further, in order to reduce harms to the processing system 254 brought by an over-voltage output by the voltage detection circuit 2552a due to the change of the resistance of the dirty liquid, a buffer circuit 2552b may be connected to the output end of the voltage detection circuit 2552a, as shown in FIG. 25m. An input end of the buffer circuit 2552b is electrically connected with the output end Q of the voltage detection circuit 2552a. An output end (DW-R) of the buffer circuit 2552b is electrically connected to the processing system 254.

Optionally, as shown in FIG. 25m, the buffer circuit 2552b may include an operational amplifier U1 and an RC filter circuit. The RC filter consists of a series-wound resistor R1 and capacitor C1. Further, an in-phase input end 1 of the operational amplifier U1 is electrically connected with the output end Q of the voltage detection circuit 2552a, while an inverting input end 3 and an output end 4 are electrically connected. Further, the RC filter circuit is connected in parallel between the output end 4 of the operational amplifier and the ground. The ungrounded end of the RC filter circuit is electrically connected with the processing system 254. That is, a series-connection point of the resistor R1 and capacitor C1 in the RC filter circuit is electrically connected with the processing system 254.

Further, clean liquid sprayed by the cleaning device S10 may contain certain impurities, and there may be a certain error if the cleanliness of the cleaning object is determined directly by use of the electrical signal output by the first detection circuit 2552. Therefore, a reference electrical signal of the clean liquid sprayed by the cleaning device S10 may be measured in advance in practical applications. The clean liquid may be clean water, a cleaning solution, a disinfectant, or the like. For the ease of description and distinction, in the present embodiment, a detection circuit that measures the reference electrical signal of the clean liquid sprayed by the cleaning device S10 is defined as a reference detection circuit, and overall resistance of the reference detection circuit is defined as reference resistance. The overall resistance of the reference detection circuit is own overall resistance of the reference detection circuit, and does not include resistance of the clean liquid. The reference detection circuit may be the first detection circuit or another detection circuit, e.g., a second detection circuit in the following embodiment.

Further, in order to simplify subsequent calculations of the processing system 254, overall resistance of the first detection circuit 2552 is set to reference resistance when the electrical property value of the dirty liquid is measured. Based on this, a variable resistance circuit 2552c may be arranged in the first detection circuit 2552. As shown in FIG. 25m, the first detection circuit 2552a further includes a variable resistance circuit 2552c. Further, a first end E1 of the variable resistance circuit 2552c is electrically connected with the reference sampling resistor R3 in the voltage detection circuit, while a second end E2 is electrically connected with the processing system 254, and a third end E3 is grounded.

Correspondingly, the processing system 254 may adjust resistance of the variable resistance circuit 2552c so as to adjust overall resistance of the first detection circuit 2552 to reference resistance.

Further, the variable resistance circuit 2552c may be implemented as a variable resistor, e.g., a slide rheostat and a potentiometer. An adjustable end of the variable resistor is a second end E2 electrically connected with the processing system 254, while other two nonadjustable ports are electrically connected with the reference sampling resistor R3 and the ground respectively. The processing system 254 may adjust the adjustable end of the variable resistor to adjust resistance of the variable resistor to further adjust the overall resistance of the first detection circuit 2552. Alternatively, as shown in FIG. 25m, the variable resistance circuit 2552c may further include multiple series-wound sampling resistors. In the present embodiment, multiple refers to two or more than two. For the ease of description and distinction, the sampling resistor in the variable resistance circuit 2552c is defined as an optional sampling resistor. The multiple optional sampling resistors are connected in series between the reference sampling resistor R3 and the ground. An N-MOS transistor is connected in parallel with each series-connection point of the resistors. A drain D of each N-MOS transistor is electrically connected with the series-connection point. Further, as shown in FIG. 25m, a source S of each N-MOS transistor is grounded as a third end E3 of the variable resistance circuit 2552c. A gate G of each N-MOS transistor is electrically connected with the processing system 254 as the second end E2 of the variable resistance circuit 2552c. Then, the processing system 254 may adjust states of the multiple N-MOS transistors, determine whether to connect the optional sampling resistors to the first detection circuit 2552 and determine the specific optional sampling resistor or resistors to be connected to the first detection circuit 2552, thereby adjusting the overall resistance of the first detection circuit 2552 to the reference resistance. For example, in FIG. 25m, if an N-MOS transistor N1 is turned on, optional sampling resistors R4, R5 and R6 are short-circuited. That is, all of the optional sampling resistors R4, R5 and R6 are not connected to the first detection circuit 2552. If the N-MOS transistor N1 is turned off and an N-MOS transistor Q2 is turned on, the optional sampling resistor R4 may be connected to the first detection circuit 2552. If all of the N-MOS transistors Q1, Q2 and Q3 are turned off, all of the optional sampling resistors R4, R5 and R6 may be connected to the first detection circuit 2552.

Each component in the structural schematic diagram of the circuit provided in the embodiment of the present disclosure may be replaced with a component with the same or similar function. For example, the N-MOS transistor may be replaced with a P-MOS transistor or a triode (an NPN triode or a PNP triode). Connection relations between each component may be adaptively adjusted with reference to the diagram of the working principle of the circuit shown in FIG. 25m.

In the embodiment of the present disclosure, the reference electrical signal may be measured before the delivery of the cleaning device S10, and the measured reference electrical signal is preset in the cleaning device S10. Alternatively, a detector for the reference electrical signal may be arranged in the cleaning device S10, and the detector is partially arranged on a circulation path of the clean liquid. Therefore, the processing system 254 may determine the cleanliness of the cleaning object according to a difference between the second electrical signal and the reference electrical signal. Further, in the embodiment of the present disclosure, as shown in FIG. 25n, the cleaning device S10 further includes a water outlet pipeline 257 and solution tank 256 which are sequentially connected with a spray nozzle 258 of the floor brush 251. Clean liquid in the solution tank 256 is delivered into the spray nozzle 258 through the water outlet pipeline 257 so as to be sprayed onto the cleaning object by the spray nozzle 258. Correspondingly, as shown in FIG. 25n, the cleaning device S10 further includes a second conductor group 259 and a second detection circuit 2510. The second conductor group 259 is arranged on a circulation path of the dirty liquid. The second detection circuit 2510 is electrically connected between the second conductor group 259 and the processing system 254.

Optionally, the second conductor group 259 may be arranged in at least one part of the solution tank 256, the water outlet pipeline 257 and the spray nozzle 258. An arrangement manner thereof may refer to the related contents about the first conductor group 2551, and will not be elaborated herein. Each part may be provided with one or more second conductor groups 259.

The second conductor group 259 includes at least two conductors not contacting with each other. FIG. 25n only shows two conductors as an example. Further, part of conductors in the second conductor group 259 is electrically connected with the positive electrode of the power supply so as to form positive conductors. The other part is grounded so as to form grounded conductors. As such, a closed circuit is formed between the positive conductors and the grounded conductors when the positive conductors and the grounded conductors contact with the clean liquid. Correspondingly, the second detection circuit 2510 may generate and output a reference electrical signal to the processing system 254 when the closed circuit is formed between the positive conductors and the grounded conductors. The second detection circuit 2510 may generate and output the reference electrical signal to the processing system 254 when the second conductor group 259 contacts with the clean liquid.

Optionally, a circuit structure of the second detection circuit 2510 may be implemented into a circuit structure shown in FIG. 25o. Descriptions about the circuit structure of the second detection circuit 2510 may refer to the related contents about the first detection circuit 2552. Elaborations are omitted herein.

Based on the second detection circuit 2510 shown in FIG. 25o, the processing system 254 may adjust states of multiple N-MOS transistors in the second detection circuit 2510 to keep the reference electrical signal output by the second detection circuit 2510 in a stable range. For example, the processing system 254 may, but not limited to, adjust the states of the multiple N-MOS transistors in the second detection circuit 2510 such that a reference voltage output by the second detection circuit 2510 is a median voltage of a voltage of the power supply. Correspondingly, the processing system 254 may adjust the states of the multiple N-MOS transistors in the first detection circuit 2552 to make the states of the multiple N-MOS transistors in the first detection circuit 2552 the same as those of the multiple N-MOS transistors in the second detection circuit 2510. As such, the overall resistance of the first detection circuit 2552 may be made the same as that of the second detection circuit 2510 to help to reduce subsequent calculations of the processing system 254 for determining the cleanliness of the cleaning object according to the difference between the second electrical signal and the reference electrical signal.

In the embodiment of the present disclosure, the processing system 254 may determine the cleanliness of the cleaning object according to a difference between the second electrical signal and the reference electrical signal.

Further, in each embodiment of the present disclosure, the processing system 254 may include a processor 254a, as shown in FIG. 25p. The processor 254a may be any hardware processing device. Optionally, the processor may be a CPU, a GPU, or an MCU. Alternatively, the processor may be a programmable device such as an FPGA, a PAL, a GAL, and a CPLD. Alternatively, the processor is an ARM, an SOC, or the like. However, the processor is not limited thereto.

Correspondingly, the processor 254a may match the difference between the second electrical signal and the reference electrical signal in a known corresponding relationship between an electrical signal difference and a cleanliness grade so as to determine a cleanliness grade of the cleaning object. That is, a cleanliness grade corresponding to the difference between the second electrical signal and the reference electrical signal is determined as the cleanliness grade of the cleaning object. Optionally, the processor 254a may calculate the difference between the second electrical signal and the reference electrical signal. Alternatively, as shown in FIG. 25p, the processing system 254 may further include a differential operational circuit 254b. A first input end DW-R of the differential operational circuit 254b is connected to an output end of the first detection circuit 2552, and is configured to receive the second electrical signal. A second input end PW-R of the differential operational circuit 254b receives the reference electrical signal. Further, an output end DL of the differential operational circuit 254b is electrically connected with the processor 254a, and is configured to output the difference between the second electrical signal and the reference electrical signal to the processor 254a. Correspondingly, the processor 254a may determine the cleanliness of the cleaning object according to the difference between the second electrical signal and the reference electrical signal.

Optionally, as shown in FIG. 25p, the differential operational circuit 254b may include an operational amplifier U3 and an RC filter circuit. An in-phase input end 1 of the operational amplifier U3 is electrically connected with the output end of the first detection circuit 2552 as the first input end of the differential operational circuit, and is configured to receive the second electrical signal. An inverting input end 3 of the operational amplifier U3 receives the reference electrical signal as the second input end of the differential operational circuit 254b. Further, an RC shunt circuit is connected in parallel between the inverting input end 3 and output end 4 of the operational amplifier U3. The RC shunt circuit consists of a shunt-wound resistor R24 and capacitor C10. Further, an RC filter circuit is connected in parallel between the output end 4 of the operational amplifier U3 and the ground. The RC filter circuit consists of a series-wound resistor R23 and capacitor C9. A series-connection point of the resistor R23 and the capacitor C9 is electrically connected with the processing system 254 as the output end DL of the differential operational circuit 254b. Optionally, the operational amplifier U3 further includes positive and negative power supply ends 2 and 5. The positive power supply end 2 is electrically connected with the positive electrode of the power supply of the cleaning device S10. The negative power supply end 5 is grounded.

It is to be noted that, in some embodiments, in order to improve the accuracy of cleanliness detection for the cleaning object, the cleanliness of the cleaning object may be determined by the optical property value and the second electrical signal together. A specific implementation mode may refer to the related contents in the above-mentioned embodiment, and will not be elaborated herein.

In each embodiment of the present disclosure, the processing system 254 may further adjust a working state of the cleaning device according to the cleanliness of the cleaning object. For example, the processing system 254 may adjust power of a water pump of the cleaning device to that adapted to the cleanliness of the cleaning object according to the cleanliness of the cleaning object. Correspondingly, the processing system 254 may preset a corresponding relationship between a cleanliness grade and power of the water pump. Based on the corresponding relationship, the processing system 254 may determine power of the water pump according to a cleanliness grade of the cleaning object. Preferably, if the cleanliness grade is higher, the power of the water pump is lower, a water discharge of the cleaning device is smaller, and it indicates that the cleaning object is cleaner.

For another example, the processing system 254 may adjust power of a main motor of the cleaning device and/or a floor brush motor to that adapted to the cleanliness of the cleaning object according to the cleanliness of the cleaning object. Correspondingly, the processing system 254 may preset a corresponding relationship between a cleanliness grade and power of the main motor and/or the floor brush motor. Based on the corresponding relationship, the processing system 254 may determine power of the main motor and/or the floor brush motor according to a cleanliness grade of the cleaning object. Preferably, if the cleanliness grade is higher, the power of the main motor and/or the floor brush motor is lower, a water suction capacity of the cleaning device is lower, and it indicates that the cleaning object is cleaner. In the embodiment of the present disclosure, the main motor sucks the dirty liquid by the suction nozzle 251a on the floor brush of the cleaning device and delivers the dirty liquid into the recycling tank of the cleaning device through the suction passage in the cleaning device. The floor brush motor drives the floor brush to clean the cleaning object.

For another example, the processing system 254 may adjust task execution time of the cleaning device to that adapted to the cleanliness of the cleaning object according to the cleanliness of the cleaning object. Correspondingly, the processing system 254 may preset a corresponding relationship between a cleanliness grade and cleaning time. Based on the corresponding relationship, the processing system 254 may determine cleaning time according to a cleanliness grade of the cleaning object. Preferably, if the cleanliness grade is higher, the power of the main motor and/or the floor brush motor is lower, cleaning time is shorter, and it indicates that the cleaning object is cleaner.

Optionally, the cleaning device S10 may be controlled to stop working if the processing system 254 determines that the cleanliness of the cleaning object reaches a standard. That the cleanliness of the cleaning object reaches the standard may refer to that the cleanliness grade of the cleaning object is the highest cleanliness grade. Optionally, the processing system 254 may control the water pump, the main motor and/or the floor brush motor to stop, etc., if the cleanliness grade of the cleaning object is the highest cleanliness grade.

It is to be noted that, as shown in FIG. 25q, the embodiment of the present disclosure also provides a power management circuit 2511. The power management circuit 2511 is configured to convert an output voltage of a battery into a voltage needed by the cleaning device S10. In the present embodiment, the voltage needed by the cleaning device S10 is, for example, +5 V. As shown in FIG. 25q, the power management circuit 2511 includes a voltage management chip U4. An input end of the voltage management chip U4 is configured to be electrically connected with a cathode of the battery, while a grounding end is grounded, and an output end is configured to be electrically connected with a power supply end of each of the above-mentioned circuits. The voltage management chip U4 may convert an input battery voltage into a +5 V voltage and output the +5 V voltage. Optionally, an LED D2 may be connected in series between the cathode of the battery and the input end of the voltage management chip U4. An anode of the LED D2 is electrically connected with the cathode of the battery, while a cathode is electrically connected with the input end of the voltage management chip U4. The LED D2 may be configured to display a power supply state of the cleaning device S10.

Further, a filter circuit may be connected in parallel between the input end of the voltage management chip U4 and the ground to filter ripples of the output voltage of the battery, and may further filter noises in the output voltage of the battery 251. Optionally, the filter circuit consists of a shunt-wound active capacitor EC1 and passive capacitor C18.

Further, a filter circuit may be connected in parallel between the output end of the voltage management chip and the ground to avoid a voltage drop caused by a sudden change of a current output by the power management chip U4, equivalent to filtering ripples of the voltage output by the power management chip U4, and may further filter noises in the voltage output by the power management chip U4. Optionally, the filter circuit connected in parallel between the output end of the power management chip and the ground may consist of a shunt-wound active capacitor EC2 and passive capacitor C19.

It is to be noted that the structure and implementation form of the cleaning device provided in the present embodiment shown in FIGs. 25a to 25q as well as a form and arrangement position of each component of the cleaning device are only exemplary and nonrestrictive. In addition, besides the components shown in FIGs. 25a to 25q, the cleaning device S10 may further include a communication assembly, a roller, a driving component and the like according to a disclosure requirement, which are not shown in FIGs. 25a to 25q. FIGs. 25a to 25q only schematically show part of components. This does not mean that the cleaning device S10 must include all the components shown in FIGs. 25a to 25q or the cleaning device S10 may include the components shown in FIGs. 25a to 25q only. It is also to be noted that, in each schematic circuit diagram provided in the embodiment of the present disclosure, the same port signs represent that the corresponding ports are electrically connected.

In addition to the cleaning device provided in the above-mentioned embodiment, the embodiment of the present disclosure also provides a cleanliness detection method. The cleanliness detection method provided in the embodiment of the present disclosure will be exemplarily described below from the angle of the processing system.

FIG. 26 is a schematic flowchart of a cleanliness detection method according to an embodiment of the present disclosure. As shown in FIG. 26, the method includes the following steps.

At 2601, a physical property value, provided by a first detector, of dirty liquid on a cleaning object is received.

At 2602, cleanliness of the cleaning object is determined according to the physical property value of the dirty liquid.

In the present embodiment, a cleaning device may be, but not limited to, a cleaning machine configured to clean a region such as a ground, a floor, a carpet, a wall, a ceiling, or glass. The dirty liquid is sucked by a suction nozzle on a floor brush of the cleaning device and delivered into a recycling tank of the cleaning device through a suction passage in the cleaning device. The first detector is partially or completely arranged on a circulation path of the dirty liquid. Descriptions about a structure and arrangement manner of the first detector may refer to the related contents in the above-mentioned embodiments. Elaborations are omitted herein.

In the present embodiment, the detector capable of detecting the physical property value of the dirty liquid on the cleaning object is additionally arranged on the cleaning device. That is, the detector is partially or completely arranged on the circulation path of the dirty liquid. Then, a processing system may determine the cleanliness of the cleaning object according to the physical property value of the dirty liquid detected by the detector. As such, the cleanliness of the cleaning object may be detected independently, and whether the cleaning object is clean needs not to be determined manually. Therefore, the improvement of user experiences is facilitated.

In the present embodiment, different physical properties of the dirty liquid may be detected if the first detector uses different working principles. For example, some optical detectors may detect optical property values of the dirty liquid. For another example, some electrical detectors may detect electrical property values of the dirty liquid. In the embodiment of the present disclosure, a physical property of the dirty liquid includes an optical property and/or electrical property thereof. The optical property of the dirty liquid may be a color, turbidity, transparency or the like of the dirty liquid. The electrical property of the dirty liquid may be resistance, resistivity, current, voltage or the like of the dirty liquid.

In some embodiments, the first detector may include a light source and a photo-detector if the first detector detects an optical property value of the dirty liquid. Descriptions about arrangement positions, implementation forms and working principles of the light source and the photo-detector may refer to the related contents in the above-mentioned embodiments. Elaborations are omitted herein. In this implementation mode, the first detector may provide a first electrical signal for the processing. The first electrical signal reflects an optical property of the dirty liquid. Correspondingly, in an optional implementation mode of Step 2602, an optical property value of the dirty liquid is calculated according to the first electrical signal provided by the first detector, and the cleanliness of the cleaning object is determined according to the optical property value of the dirty liquid. A specific implementation mode of determining the cleanliness of the cleaning object according to the optical property value of the dirty liquid may refer to the related contents in the above-mentioned embodiments, and will not be elaborated herein.

In some other embodiments, the first detector may include a first conductor group and a first detection circuit if the first detector detects an electrical property value of the dirty liquid. The first conductor group is arranged on the circulation path of the dirty liquid. The first detection circuit is electrically connected between the first conductor group and the processing system. Descriptions about the first conductor group and the first detection circuit may refer to the related contents in the above-mentioned embodiments. Elaborations are omitted herein. In the present embodiment, the first detection circuit may provide a second electrical signal for the processing system. The second electrical signal reflects an electrical property of the dirty liquid. Correspondingly, in another optional implementation mode of Step 2602, the cleanliness of the cleaning object is determined according to the second electrical signal provided by the first detector.

In some other embodiments, the first detector may include a light source, a photo-detector, a first conductor group and a first detection circuit if the first detector detects both an electrical property value and optical property value of the dirty liquid. In another optional implementation mode of Step 2602, the cleanliness of the cleaning object is determined according to the optical property value of the dirty liquid and a second electrical signal provided by the first detector.

In each embodiment of the present disclosure, after the cleanliness of the cleaning object is determined, a working state of the cleaning device may further be adjusted according to the cleanliness of the cleaning object. For example, the processing system may adjust power of a water pump of the cleaning device to that adapted to the cleanliness of the cleaning object according to the cleanliness of the cleaning object. Correspondingly, the processing system may preset a corresponding relationship between a cleanliness grade and power of the water pump. Based on the corresponding relationship, the processing system may determine power of the water pump according to a cleanliness grade of the cleaning object. Preferably, if the cleanliness grade is higher, the power of the water pump is lower, a water discharge of the cleaning device is smaller, and it indicates that the cleaning object is cleaner.

For another example, power of a main motor of the cleaning device and/or a floor brush motor may be adjusted to that adapted to the cleanliness of the cleaning object according to the cleanliness of the cleaning object. Correspondingly, the processing system may preset a corresponding relationship between a cleanliness grade and power of the main motor and/or the floor brush motor. Based on the corresponding relationship, the processing system may determine power of the main motor and/or the floor brush motor according to a cleanliness grade of the cleaning object. Preferably, if the cleanliness grade is higher, the power of the main motor and/or the floor brush motor is lower, a water suction capacity of the cleaning device is lower, and it indicates that the cleaning object is cleaner. In the embodiment of the present disclosure, the main motor sucks the dirty liquid by the suction nozzle on the floor brush of the cleaning device and delivers the dirty liquid into the recycling tank of the cleaning device through the suction passage in the cleaning device. The floor brush motor drives the floor brush to clean the cleaning object.

For another example, task execution time of the cleaning device may be adjusted to that adapted to the cleanliness of the cleaning object according to the cleanliness of the cleaning object. Correspondingly, the processing system may preset a corresponding relationship between a cleanliness grade and cleaning time. Based on the corresponding relationship, the processing system may determine cleaning time according to a cleanliness grade of the cleaning object. Preferably, if the cleanliness grade is higher, the power of the main motor and/or the floor brush motor is lower, cleaning time is shorter, and it indicates that the cleaning object is cleaner. Optionally, the cleaning device may be controlled to stop working if the processing system determines that the cleanliness of the cleaning object reaches a standard. That the cleanliness of the cleaning object reaches the standard may refer to that the cleanliness grade of the cleaning object is the highest cleanliness grade. Optionally, the processing system may control the water pump, the main motor and/or the floor brush motor to stop, etc., if the cleanliness grade of the cleaning object is the highest cleanliness grade.

Correspondingly, the embodiment of the present disclosure also provides a computer-readable storage medium storing a computer instruction. When the computer instruction is executed by one or more processors, the one or more processors are caused to execute the steps in the above-mentioned method.

It is to be noted that execution bodies for each step of the method provided in the above-mentioned embodiment may be the same device. Alternatively, different devices may be involved in the method as execution bodies. For example, the execution bodies for Steps 2601 and 2602 may be device A. For another example, the execution body for Step 2601 may be device A, and the execution body for Step 2602 may be device B.

In addition, some flows described in the above-mentioned embodiments and the drawings include multiple operations executed according to a specific sequence. However, it is to be clearly understood that these operations may be executed in sequences different from those specified herein or concurrently. The sequence numbers of the operations, such as 2601 and 2602, are only for distinguishing different operations and do not represent any execution sequence. In addition, these flows may include more or fewer operations, and these operations may be executed in sequence or concurrently.

For the technical problem that liquid remains on a target object when an existing cleaning device is turned off, in some embodiments of the present disclosure, a movable device, responsive to an instruction of instructing the movable device to stop operation, may control a fluid supply apparatus to stop spraying liquid to the target object or control the fluid supply apparatus to reduce a spraying amount, and control a recycling apparatus to continue recycling liquid on the target object. This helps to reduce liquid residuals on the target object and further helps to improve user experiences.

The technical solution provided in each embodiment of the present disclosure will be described below in detail in combination with the drawings.

It is to be noted that the same reference signs represent the same objects in the following drawings and embodiments. Therefore, a certain object, once defined in a drawing or embodiment, needs not to be further discussed in subsequent drawings and embodiments.

FIG. 27a is a structural schematic diagram of a movable device according to an embodiment of the present disclosure. As shown in FIG. 27a, the movable device includes a fluid supply apparatus 271, a recycling apparatus 272, and a control system 273. The control system 273 is electrically connected with the fluid supply apparatus 271 and the recycling apparatus 272, and may control working states of the fluid supply apparatus 271 and the recycling apparatus 272. In the present embodiment, the fluid supply apparatus 271 is responsible for spraying liquid out. For the ease of description and distinction, the liquid sprayed out by the fluid supply apparatus 271 is defined as first liquid. The recycling apparatus 272 is responsible for recycling second liquid produced by the first liquid.

Implementation forms of the movable device and chemical components of the first liquid and the second liquid in different application scenes are different. For example, in a cleaning scene, the movable device may be a cleaning device. The first liquid may be, but not limited to, clean liquid such as clean water and/or liquid doped with a cleaning agent. Correspondingly, the second liquid may be dirty liquid produced after the first liquid is sprayed to a target object (cleaning object and/or cleaning brush) for cleaning by a cleaning assembly of the cleaning device. In this application scene, the first liquid is released onto the target object for cleaning. For another example, in some application scenes, the movable device may be a chemical reaction device. The first liquid may be a chemical reagent for reaction. Correspondingly, the second liquid may be liquid formed after a chemical reaction of the first liquid on the target object. However, the embodiment is not limited thereto. FIG. 27a only shows a cleaning device as an example of the movable device and does not limit an implementation form of the movable device.

The movable device may execute a related operation by use of each component when moving. The movable device refers, but not limited, to a device capable of moving, or an autonomous mobile device such as a sweeping robot and a window cleaning robot, or a device capable of moving under an external force such as a handheld cleaning machine, a handheld dust collector and a handheld dust mite controller.

In the present embodiment, when the movable device works, the control system 273 may control the fluid supply apparatus 271 to spray the first liquid to the target object and control the recycling apparatus 272 to recycle the second liquid on the target object. However, in the conventional art, the fluid supply apparatus 271 and the recycling apparatus 272 may be controlled to stop operation at the same time when the movable device receives the instruction of instructing the device to stop operation, and thus a large amount of liquid remains on the target object. In order to solve this problem, in the present embodiment, the control system 273 may control the fluid supply apparatus 271 to stop spraying the first liquid to the target object responsive to the instruction of instructing the movable device to stop operation. Optionally, the control system 273 may control the fluid supply apparatus 271 to stop operation immediately, or may control the fluid supply apparatus 271 to gradually reduce a spraying amount till stopping operation. Correspondingly, for the recycling apparatus 272, the control system 273 may control the recycling apparatus 272 to continue recycling the second liquid on the target object, and control the recycling apparatus 272 to stop recycling the second liquid on the target object when a set condition is satisfied.

The set condition is different in different embodiments. For example, in some embodiments, the set condition may be that time that the recycling apparatus 272 keeps recycling the second liquid on the target object after the control system 273 may respond to the instruction of instructing the movable device to stop operation reaches set time. Correspondingly, the control system 273 controls the recycling apparatus 272 to stop operation when the time that the recycling apparatus 272 keeps recycling the second liquid on the target object reaches the set time. In some other embodiments, the set condition may be that wetness of the target object is less than or equal to a set wetness threshold. Correspondingly, the control system 273 controls the recycling apparatus 272 to stop operation when the wetness of the target object is less than or equal to the set wetness threshold. In some other embodiments, the set condition may be that time that the recycling apparatus 272 keeps recycling the second liquid on the target object reaches set time and wetness of the target object is less than or equal to a set wetness threshold. Correspondingly, the control system 273 controls the recycling apparatus 272 to stop operation when the time that the recycling apparatus 272 keeps recycling the second liquid on the target object reaches the set time and the wetness of the target object is less than or equal to the set wetness threshold.

It is to be noted that, in each embodiment of the present disclosure, if the control system 273 controls a certain component to operate by use of an electrical signal, controlling a certain component on the movable device to stop working may refer to that the control system 273 outputs no more electrical signals to the component, excluding the inertial operation of the component.

The movable device provided in the present embodiment, responsive to the instruction of instructing the movable device to stop operation, may control the fluid supply apparatus to stop spraying the liquid to the target object and control the recycling apparatus to continue recycling the liquid on the target object. This helps to reduce liquid residuals on the target object and further helps to improve user experiences.

In the embodiment of the present disclosure, the instruction of instructing the movable device to stop operation may be an instruction of instructing the movable device to be turned off, or an instruction of instructing the movable device to pause operation. In some embodiments, as shown in FIG. 27b, an operation stopping button is arranged on the movable device. The operation stopping button may be a power-off button or a pause button. In the present embodiment, the control system 273 may detect a state of the operation stopping button on the movable device, and when it is detected that the operation stopping button is pressed down, determine that the instruction of instructing the movable device to stop operation is received. Optionally, as shown in FIG. 27b, the operation stopping button may be electrically connected with a power supply. Another circuit may be arranged between the button and the power supply. No limits are made in the embodiment of the present disclosure. Optionally, the power supply may be an external power supply or a built-in battery module.

Further, the movable device further includes a button detection circuit 274. The button detection circuit 274 may work with the control system 273 to detect whether the operation pressing button is pressed down. That is, the control system 273 may detect a change of a level of an interface of the button detection circuit 274 electrically connected with the control system 273 to detect whether the operation stopping button is pressed down. Optionally, it is determined that the operation stopping button is pressed down if the control system 273 detects that the level of the interface of the button detection circuit 274 electrically connected with the control system 273 changes from a high level to a low level. Alternatively, in some embodiments, it is determined that the operation stopping button is pressed down if the control system 273 detects that the level of the interface of the button detection circuit 274 electrically connected with the control system 273 changes from a low level to a high level. A specific level change mode of the interface of the button detection circuit 274 electrically connected with the control system 273 is determined by a specific circuit connection mode. A circuit connection structure shown in FIG. 27b is only exemplary, and no limits are made thereto.

Optionally, the button detection circuit 274 may be integrated to the same Printed Circuit Board (PCB) as the control system 273, or may be independently integrated to another PCB different from that where the control system 273 is located.

In some other embodiments, the movable device has a voice interaction function. The movable device may implement voice interaction with a user through an audio component thereon (not shown in FIGs. 27a and 27b). The user may transmit a voice instruction to the movable device to control the movable device to stop operation. Correspondingly, the control system 273 may monitor a voice instruction received by the movable device, and when it is monitored that the movable device receives a voice instruction of instructing the movable device to stop operation, determine that the instruction of instructing the movable device to stop operation is received. The control system 273 controls the movable device to stop operation after receiving the voice instruction of instructing the movable device to stop operation.

In the embodiment of the present disclosure, an implementation form of the target object includes at least one of a cleaning brush and a cleaning object. The cleaning object may be any one of the following multiple implementation modes: a ground, a glass window, a glass wall, a wall, an automobile, a pipeline, etc. The target object is in different forms in case of different structures and cleaning scenes of the movable device. No limits are made herein. Optionally, the target object is a ground and a cleaning brush. In some other implementation modes, the target object is a ground.

In the embodiment of the present disclosure, the fluid supply apparatus 271 is controlled to stop operation in different manners in case of different implementation forms of the fluid supply apparatus 271. In an embodiment, as shown in FIG. 27a, the fluid supply apparatus 271 may include a water pump 271a, a water delivery pipe 271b, and a spray nozzle (not shown in FIG. 27a). The movable device may further include a solution tank 275. The first liquid is stored in the solution tank 275. The first liquid in the solution tank 275 may be pumped out by the water pump 271a and flow to the spray nozzle through the water delivery pipe 271b. Then, the first liquid is sprayed to the target object by the spray nozzle. In this embodiment, the control system 273 may transmit a driving signal to the water pump 271a. The water pump 271a is driven by the driving signal to rotate to pump the first liquid in the solution tank 275 to the water delivery pipe 271b. For the ease of description and distinction, the driving signal output to the water pump 271a by the control system 273 is defined as a first driving signal. Correspondingly, the control system 273 may stop transmitting the first driving signal to the water pump 271a to further stop the operation of the fluid supply apparatus 271.

Optionally, the first driving signal is in different forms in case of different implementation forms of the water pump 271a. If the water pump 271a is a direct-current water pump, the first driving signal is a PWM signal, and a parameter value thereof may be a duty ratio of the PWM signal. If the water pump 271a is an alternating-current water pump that may be controlled by a silicon controlled rectifier, the first driving signal is a pulse signal, and a parameter value thereof may be delay time $\Delta t$ between the pulse signal and a zero crossing point of a sinusoidal signal. The sinusoidal signal may be a 220 V mains supply signal. The control system 273 may control the delay time of the pulse signal relative to the zero crossing point of the sinusoidal signal to control a size of a turn-on angle of the silicon controlled rectifier to further control power of the water pump 271a. If the delay time of the pulse signal relative to the zero crossing point of the sinusoidal signal is longer, the turn-on angle of the silicon controlled rectifier is smaller, and the power of the water pump 271a is lower. Correspondingly, if the delay time of the pulse signal relative to the zero crossing point of the sinusoidal signal is shorter, the turn-on angle of the silicon controlled rectifier is larger, and the power of the water pump 271a is higher. Optionally, in some embodiments, the delay time of the pulse signal relative to the zero crossing point of the sinusoidal signal may be a time interval between a rising edge or falling edge of a first pulse and the zero crossing point of the sinusoidal signal. There may be one or more pulse signals. FIG. 27c only shows an example that there are three pulse signals and the delay time of the pulse signal relative to the zero crossing point of the sinusoidal signal is the time interval $\Delta t$ of the falling edge of the first pulse.

In the present embodiment, the fluid supply apparatus 271 may have different spraying amount grades. If the power of the water pump 271a is higher, the spraying amount of the fluid supply apparatus 271 is larger. Correspondingly, the parameter value of the first driving signal may determine the power of the water pump 271a. For a direct-current water pump, if a duty ratio of a PWM signal is higher, the power of the water pump 271a is higher. For an alternating-current water pump controlled by a silicon controlled rectifier, if delay time between a pulse signal and a zero crossing point of a sinusoidal signal is shorter, a turn-on angle of the silicon controlled rectifier is larger, and the power of the water pump 271a is higher. Based on this, in the embodiment of the present disclosure, the control system 273 may gradually change the parameter value of the first driving signal so as to gradually stop the operation of the water pump 271a. For example, if the water pump 271a is a direct-current water pump, PWM signals of which duty ratios gradually decrease may be output to the water pump 271a according to a set duty ratio decrease gradient until the duty ratio decreases to 0. For another example, if the water pump 271a is an alternating-current water pump, pulse signals of which delay time relative to a zero crossing point of a sinusoidal signal increases may be output to the water pump 271a according to a set delay gradient until no pulse signals are output in a half cycle of the sinusoidal signal, namely until a turn-on angle of a silicon controlled rectifier is 0°. For example, as shown in FIG. 27c, if the water pump 271a is an alternating-current water pump, that no pulse signals are output in a half cycle of a sinusoidal signal refers to that the first driving signal is always a high-level signal in the half cycle of the sinusoidal signal. In some other embodiments, the fluid supply apparatus 271 is provided with a corresponding valve. The control system 273 may control a closing degree of the valve to control the fluid supply apparatus 271 to stop spraying the first liquid. For example, the control system 273 may control a brake mechanism corresponding to the valve to act, but not limited, to partially close the valve, completely close the valve, etc. In a word, the control system 273 may control the fluid supply apparatus 271 through the brake mechanism of the valve to start or stop spraying the first liquid, and correspondingly, may control a flow of the first liquid to increase gradually or control the flow of the first liquid to decrease gradually.

In some other embodiments, the fluid supply apparatus 271 supplies the first liquid through an air pump or under the self weight of the first liquid. The control system 273 may control the fluid supply apparatus 271 to start or stop spraying the first liquid, and correspondingly, may control a flow of the first liquid to increase gradually or control the flow of the first liquid to decrease gradually.

For the recycling apparatus 272, the control system 273 may also output a driving signal to the recycling apparatus to control a working state thereof. For the ease of description and distinction, in the embodiment of the present disclosure, the driving signal output to the recycling apparatus 272 by the control system 273 is defined as a second driving signal. That is, the control system 273, responsive to the instruction of instructing the movable device to stop operation, may output a second driving signal to a motor of the recycling apparatus 272 so as to control the recycling apparatus 272 to continue recycling the second liquid on the target object. A parameter value of the second driving signal may be the same as or different from that of a driving signal output to the recycling apparatus 272 by the control system 273 before responding to the instruction of instructing the movable device to stop operation. The recycling apparatus 272 continues recycling the second liquid on the target object under original power if the parameter value of the second driving signal is the same as that of the driving signal output to the recycling apparatus 272 by the control system 273 before responding to the instruction of instructing the movable device to stop operation. Correspondingly, the recycling apparatus 272 continues recycling the second liquid on the target object under adjusted power if the parameter value of the second driving signal is different from that of the driving signal output to the recycling apparatus 272 by the control system 273 before responding to the instruction of instructing the movable device to stop operation. The adjusted power may be higher than the original power or lower than the original power. Alternatively, the adjusted power may be kept higher than the original power for predetermined time, and then is reduced stepwise or linearly or nonlinearly.

In the present embodiment, as shown in FIG. 27a, the recycling apparatus 272 may include a suction nozzle 272a and a corresponding motor 272b. Optionally, the motor 272b corresponding to the recycling apparatus 272 may be a main motor of the movable device. The movable device may further include a recycling tank 276. The main motor operates to generate suction. The suction nozzle 272a sucks the second liquid on the target object into the recycling tank 276. Precisely, outputting the second driving signal to the recycling apparatus 272 by the control system 273 refers to outputting the second driving signal to the motor 272b of the recycling apparatus 272. Working power of the motor 272b is different in case of different parameter values of the second driving signal. If the motor 272b is a direct-current motor, the second driving signal is a PWM signal, and a parameter thereof may be a duty ratio of the PWM signal. If the duty ratio of the PWM signal is higher, the power of the motor 272b is higher. If the motor 272b is an alternating-current motor that may be controlled by a silicon controlled rectifier, the second driving signal is a pulse signal, and a parameter thereof may be delay time of the pulse signal relative to a zero crossing point of a sinusoidal signal. If the delay time is shorter, a turn-on angle of the silicon controlled rectifier is larger, and the power of the motor 272c is higher.

In the embodiment of the present disclosure, a parameter value of the second driving signal may be the same as that of a driving signal output to the recycling apparatus 272 by the control system 273 before responding to the instruction of instructing the movable device to stop operation, or may be different from that of the driving signal output to the recycling apparatus 272 by the control system 273 before responding to the instruction of instructing the movable device to stop operation.

Further, a specific parameter value of the second driving signal may be preset in the movable device, or may be determined according to a practical condition. In an embodiment, the fluid supply apparatus 271 has different spraying amount grades. Different spraying amount grades correspond to different spraying amounts. Different amounts of second liquid is produced on the target object if the fluid supply apparatus 271 works under different spraying amount grades before the control system 273 responds to the instruction of instructing the movable device to stop operation. Based on this, the control system 273 may determine a first target parameter value needed by the second driving signal according to a spraying amount of the fluid supply apparatus 271 before responding to the instruction of instructing the movable device to stop operation, and output the second driving signal to the recycling apparatus 272 according to the first target parameter value. In this embodiment, the second driving signal has the first target parameter value. Optionally, the control system 273 may determine a spraying amount grade of the fluid supply apparatus 271 before responding to the instruction of instructing the movable device to stop operation and match the spraying amount grade in a preset corresponding relationship between a spraying amount grade and a parameter value to further obtain the first target parameter value adapted to the spraying amount grade of the fluid supply apparatus 271 before responding to the instruction of instructing the movable device to stop operation.

In another embodiment, a second target parameter value needed by the second driving signal may be determined according to wetness of the target object. The second driving signal is output to the recycling apparatus 272 according to the second target parameter value. In this embodiment, the second driving signal has the second target parameter value. Optionally, a wetness sensor may be arranged at a position of the movable device contacting with the target object. The wetness sensor is electrically connected with the control system 273, and may acquire the wetness of the target object. Optionally, if the movable device is a cleaning device, the wetness sensor may be arranged at, but not limited to, a position of a machine body close to the target object, such as a bottom of the machine body and a bottom of a cleaning brush.

Further, the control system 273 may determine a corresponding wetness grade according to the wetness of the target object and match the wetness grade corresponding to the target object in a preset corresponding relationship between a wetness grade and a parameter value to further obtain the second target parameter value adapted to the wetness grade of the target object.

In some other embodiments, a target parameter value needed by the second driving signal may be determined according to a spraying amount of the fluid supply apparatus 271 before responding to the instruction of instructing the movable device to stop operation and wetness of the target object. The second driving signal with the target parameter value is output to the recycling apparatus 272.

In some other embodiments, the specific parameter value of the second driving signal may be preset in the movable device. For the ease of description and distinction, the preset parameter value of the second driving signal is defined as a third target parameter value. The third target parameter value is different from that of a driving signal output to the recycling apparatus 272 before responding to the instruction of instructing the movable device to stop operation. Correspondingly, the control system 273 generates the second driving signal according to the preset third target parameter value and outputs the second driving signal to the motor 272b of the recycling apparatus 272 according to the third target parameter value. In this embodiment, the second driving signal has the third target parameter value.

In the embodiment of the present disclosure, as shown in FIG. 27a, the movable device further includes a cleaning assembly 277. The cleaning assembly 277 includes a cleaning brush and a motor driving the cleaning brush to operate. In the embodiment of the present disclosure, for the cleaning assembly 277, the control system 273 may control the cleaning assembly 277 to stop operation responsive to the instruction of instructing the movable device to stop operation, or may control the cleaning assembly 277 to continue operation responsive to the instruction of instructing the movable device to stop operation and control the cleaning assembly 277 to stop operation after the set condition is satisfied.

Optionally, the control system 273 transmits a third driving signal to a motor of the cleaning assembly 277 so as to control the cleaning assembly 277 to continue operation. A parameter value of the third driving signal may be the same as that of a driving signal output to the motor of the cleaning assembly 277 by the control system 273 before responding to the instruction of instructing the movable device to stop operation, such that the cleaning assembly 277 may execute a cleaning operation under original power. Optionally, the parameter value of the third driving signal may be different from that of the driving signal output to the motor of the cleaning assembly 277 by the control system 273 before responding to the instruction of instructing the movable device to stop operation, such that the cleaning assembly 277 may continue executing the cleaning operation under adjusted power. For example, the cleaning assembly 277 may continue the cleaning operation under reduced power, or may continue executing the cleaning operation under increased power. Different power corresponds to different parameter values. That is, the control system 273 may output different parameter values to the motor of the cleaning assembly 277 to adjust working power of the cleaning assembly 277.

The parameter value of the third driving signal may be preset in the movable device, or may be determined according to a spraying amount of the fluid supply apparatus 271 before the control system 273 responds to the instruction of instructing the movable device to stop operation and/or wetness of the target object. A specific implementation mode may refer to the related contents about the target parameter value of the second driving signal, and will not be elaborated herein.

It is to be noted that the structure and implementation form of the movable device provided in the present embodiment shown in FIGs. 27a and 27b as well as a form and arrangement position of each component of the movable device are only exemplary and nonrestrictive. In addition, besides the components shown in FIGs. 27a and 27b, the movable device may further include a communication assembly, a roller, a driving component and the like according to a disclosure requirement, which are not shown in FIGs. 27a and 27b. FIGs. 27a and 27b only schematically show part of components. This does not mean that the movable device must include all the components shown in FIGs. 27a and 27b or the movable device may include the components shown in FIGs. 27a and 27b only.

In addition to the movable device, the embodiment of the present disclosure also provides an operation method, which is applied to the above-mentioned control system. Exemplary descriptions will be made below.

FIG. 28 is a schematic flowchart of an operation method according to an embodiment of the present disclosure. As shown in FIG. 28, the method includes the following steps.

At 2801, responsive to an instruction of instructing a movable device to stop operation, a fluid supply apparatus is controlled to stop spraying first liquid to a target obj ect.

At 2802, a recycling apparatus is controlled to continue recycling second liquid on the target object.

At 2803, the recycling apparatus is controlled to stop recycling the second liquid on the target object when a set condition is satisfied.

In the present embodiment, the fluid supply apparatus and the recycling apparatus are included. In the present embodiment, the fluid supply apparatus is responsible for spraying liquid out. For the ease of description and distinction, the liquid sprayed out by the fluid supply apparatus is defined as the first liquid. The recycling apparatus is responsible for recycling the second liquid produced by the first liquid. Implementation forms of the movable device and chemical components of the first liquid and the second liquid in different application scenes are different. For example, in a cleaning scene, the movable device may be a cleaning device. The first liquid may be, but not limited to, clean liquid such as clean water or liquid doped with a cleaning agent. Correspondingly, the second liquid may be dirty liquid produced after the first liquid is sprayed to a target object (cleaning object and/or cleaning brush) for cleaning by a cleaning assembly of the cleaning device. For another example, in some application scenes, the movable device may be a chemical reaction device. The first liquid may be a chemical reagent for reaction. Correspondingly, the second liquid may be liquid formed after a chemical reaction of the first liquid on the target object. However, the embodiment is not limited thereto.

The movable device may execute a related operation by use of each component when moving. The movable device refers, but not limited, to a device capable of moving, or an autonomous mobile device such as a sweeping robot and a window cleaning robot, or a device capable of moving under an external force such as a handheld cleaning machine, a handheld dust collector and a handheld dust mite controller.

In the present embodiment, when the movable device works, the fluid supply apparatus may spray the first liquid to the target object, and the recycling apparatus may recycle the second liquid on the target object. However, in the conventional art, the fluid supply apparatus and the recycling apparatus may stop operation at the same time when the movable device receives the instruction of instructing the device to stop operation, and thus a large amount of liquid remains on the target object. In order to solve this problem, in Step 2801, the fluid supply apparatus may stop spraying the first liquid to the target object responsive to the instruction of instructing the movable device to stop operation. Optionally, the fluid supply apparatus may be controlled to stop operation immediately. Alternatively, the fluid supply apparatus may be controlled to gradually reduce a spraying amount till stopping operation. Correspondingly, for the recycling apparatus, the recycling apparatus may be controlled to continue recycling the second liquid on the target object in Step 2802. The recycling apparatus may be controlled to stop recycling the second liquid on the target object when the set condition is satisfied in Step 2803.

The set condition is different in different embodiments. For example, in some embodiments, the set condition may be that time that the recycling apparatus keeps recycling the second liquid on the target object after responding to the instruction of instructing the movable device to stop operation reaches set time. Correspondingly, the recycling apparatus is controlled to stop operation when the time that the recycling apparatus keeps recycling the second liquid on the target object reaches the set time. In some other embodiments, the set condition may be that wetness of the target object is less than or equal to a set wetness threshold. Correspondingly, the recycling apparatus is controlled to stop operation when the wetness of the target object is less than or equal to the set wetness threshold. In some other embodiments, the set condition may be that time that the recycling apparatus keeps recycling the second liquid on the target object reaches set time and wetness of the target object is less than or equal to a set wetness threshold. Correspondingly, the recycling apparatus is controlled to stop operation when the time that the recycling apparatus keeps recycling the second liquid on the target object reaches the set time and the wetness of the target object is less than or equal to the set wetness threshold.

It is to be noted that, in each embodiment of the present disclosure, if a certain component is controlled to operate by use of an electrical signal, controlling a certain component on the movable device to stop working may refer to outputting no more electrical signals to the component, excluding the inertial operation of the component. In the present embodiment, the movable device, responsive to the instruction of instructing the movable device to stop operation, may control the fluid supply apparatus to stop spraying the liquid to the target object and control the recycling apparatus to continue recycling the liquid on the target object. This helps to reduce liquid residuals on the target object and further helps to improve user experiences.

In the embodiment of the present disclosure, the instruction of instructing the movable device to stop operation may be an instruction of instructing the movable device to be turned off, or an instruction of instructing the movable device to pause operation. Before Step 2801, a state of an operation stopping button on the movable device may be detected. When it is detected that the operation stopping button is pressed down, it is determined that the instruction of instructing the movable device to stop operation is received. The operation stopping button may be a power-off button or a pause button.

In some other embodiments, the movable device has a voice interaction function. A user may transmit a voice instruction to the movable device to control the movable device to stop operation. Correspondingly, before Step 2801, a voice instruction received by the movable device may be monitored. When it is monitored that the movable device receives a voice instruction of instructing the movable device to stop operation, it is determined that the instruction of instructing the movable device to stop operation is received.

In the embodiment of the present disclosure, the fluid supply apparatus is controlled to stop operation in different manners in case of different implementation forms of the fluid supply apparatus. In an embodiment, the fluid supply apparatus may include a water pump, a water delivery pipe, and a spray nozzle. A working principle of the fluid supply apparatus may refer to the related contents in the above-mentioned embodiments, and will not be elaborated herein. A driving signal may be transmitted to the water pump. The water pump is driven by the driving signal to rotate to pump the first liquid in a solution tank to the water delivery pipe. For the ease of description and distinction, the driving signal output to the water pump is defined as a first driving signal. Correspondingly, in an optional implementation mode of Step 2801, the first driving signal is stopped to be transmitted to the water pump to further stop the operation of the fluid supply apparatus. Descriptions about an implementation form of a motor of the water pump, the first driving signal and an implementation mode of stopping transmitting the first driving signal to the water pump may refer to the related contents in the above-mentioned embodiments. Elaborations are omitted herein.

In some other embodiments, the fluid supply apparatus is provided with a corresponding valve. In another implementation mode of Step 2801, a closing degree of the valve is controlled to control the fluid supply apparatus to stop spraying the first liquid. For example, a brake mechanism corresponding to the valve may be controlled to act, but not limited, to close the valve, etc. In a word, the control system may control the fluid supply apparatus through the brake mechanism of the valve to start or stop spraying the first liquid, and correspondingly, may control a flow of the first liquid to increase gradually or control the flow of the first liquid to decrease gradually. In some other embodiments, the fluid supply apparatus supplies the first liquid through an air pump or under the self weight of the first liquid. The control system may control the fluid supply apparatus to start or stop spraying the first liquid, and correspondingly, may control a flow of the first liquid to increase gradually or control the flow of the first liquid to decrease gradually.

For the recycling apparatus, a driving signal may also be output to the recycling apparatus to control a working state thereof. For the ease of description and distinction, in the embodiment of the present disclosure, the driving signal output to the recycling apparatus is defined as a second driving signal. Correspondingly, in an implementation of Step 2802, responsive to the instruction of instructing the movable device to stop operation, a second driving signal is output to a motor of the recycling apparatus so as to control the recycling apparatus to continue recycling the second liquid on the target object. A parameter value of the second driving signal may be the same as or different from that of a driving signal output to the recycling apparatus before responding to the instruction of instructing the movable device to stop operation.

In the present embodiment, the recycling apparatus may include a vacuum pump, a suction nozzle, a recycling tank, and a corresponding motor. Optionally, the motor corresponding to the recycling apparatus may be a main motor of the movable device. Precisely, outputting the second driving signal to the recycling apparatus refers to outputting the second driving signal to the motor of the recycling apparatus. Working power of the motor is different in case of different parameter values of the second driving signal. An implementation form of the second driving signal and a corresponding relationship between a parameter value of the second driving signal and working power of the motor may refer to the related contents in the above-mentioned embodiments, and will not be elaborated herein.

In the embodiment of the present disclosure, the parameter value of the second driving signal may be the same as that of a driving signal output to the recycling apparatus before responding to the instruction of instructing the movable device to stop operation, or may be different from that of the driving signal output to the recycling apparatus before responding to the instruction of instructing the movable device to stop operation.

Further, a specific parameter value of the second driving signal may be preset in the movable device, or may be determined according to a practical condition. In an embodiment, the fluid supply apparatus has different spraying amount grades. Different spraying amount grades correspond to different spraying amounts. Different amounts of second liquid is produced on the target object if the fluid supply apparatus works under different spraying amount grades before responding to the instruction of instructing the movable device to stop operation. Based on this, a first target parameter value needed by the second driving signal may be determined according to a spraying amount of the fluid supply apparatus before responding to the instruction of instructing the movable device to stop operation. The second driving signal is output to the recycling apparatus according to the first target parameter value. In this embodiment, the second driving signal has the first target parameter value. A specific implementation mode of determining the first target parameter value may refer to the related contents in the above-mentioned embodiment, and will not be elaborated herein.

In another embodiment, a second target parameter value needed by the second driving signal may be determined according to wetness of the target object. The second driving signal is output to the recycling apparatus according to the second target parameter value. In this embodiment, the second driving signal has the second target parameter value. Specific implementation modes of determining the wetness of the target object and determining the second target parameter value may refer to the related contents in the above-mentioned embodiment, and will not be elaborated herein.

In some other embodiments, a target parameter value needed by the second driving signal may be determined according to a spraying amount of the fluid supply apparatus before responding to the instruction of instructing the movable device to stop operation and wetness of the target object. The second driving signal with the target parameter value is output to the recycling apparatus.

In some other embodiments, the specific parameter value of the second driving signal may be preset in the movable device. For the ease of description and distinction, the preset parameter value of the second driving signal is defined as a third target parameter value. The third target parameter value is different from that of a driving signal output to the recycling apparatus before responding to the instruction of instructing the movable device to stop operation. Correspondingly, the second driving signal may be generated according to the preset third target parameter value. The second driving signal is output to the motor of the recycling apparatus according to the third target parameter value. In this embodiment, the second driving signal has the third target parameter value.

In the embodiment of the present disclosure, the movable device further includes a cleaning assembly. The cleaning assembly includes a cleaning brush and a motor driving the cleaning brush to operate. In the embodiment of the present disclosure, for the cleaning assembly, the cleaning assembly may be controlled to stop operation responsive to the instruction of instructing the movable device to stop operation.

Alternatively, the cleaning assembly may be controlled to continue operation responsive to the instruction of instructing the movable device to stop operation, and the cleaning assembly is controlled to stop operation after the set condition is satisfied.

Optionally, a third driving signal may be transmitted to a motor of the cleaning assembly so as to control the cleaning assembly to continue operation. A parameter value of the third driving signal may be the same as that of a driving signal output to the motor of the cleaning assembly by the control system before responding to the instruction of instructing the movable device to stop operation, such that the cleaning assembly may execute a cleaning operation under original power. Optionally, the parameter value of the third driving signal may be different from that of the driving signal output to the motor of the cleaning assembly before responding to the instruction of instructing the movable device to stop operation, such that the cleaning assembly may continue executing the cleaning operation under adjusted power. For example, the cleaning assembly may continue the cleaning operation under reduced power, or may continue executing the cleaning operation under increased power. Different power corresponds to different parameter values. That is, different parameter values may be output to the motor of the cleaning assembly to adjust working power of the cleaning assembly.

The parameter value of the third driving signal may be preset in the movable device, or may be determined according to a spraying amount of the fluid supply apparatus before responding to the instruction of instructing the movable device to stop operation and/or wetness of the target object. A specific implementation mode may refer to the related contents about the target parameter value of the second driving signal, and will not be elaborated herein.

Correspondingly, the embodiment of the present disclosure also provides a computer-readable storage medium storing a computer instruction. When the computer instruction is executed by one or more processors, the one or more processors are caused to execute the steps in the above-mentioned operation method.

FIG. 29 is a structural schematic diagram of another movable device according to an embodiment of the present disclosure. As shown in FIG. 29, the movable device includes a fluid supply apparatus 291, a recycling apparatus 292, and a control system 293. The control system 293 is electrically connected with the fluid supply apparatus 291 and the recycling apparatus 292, and may control working states of the fluid supply apparatus 291 and the recycling apparatus 292. In the present embodiment, the fluid supply apparatus 291 is responsible for spraying liquid out. For the ease of description and distinction, the liquid sprayed out by the fluid supply apparatus 291 is defined as first liquid. The recycling apparatus 292 is responsible for recycling second liquid produced by the first liquid. Descriptions about an implementation form of the movable device, the first liquid and the second liquid may refer to the related contents in the above-mentioned embodiment. Elaborations are omitted herein.

However, in the conventional art, the fluid supply apparatus 291 and the recycling apparatus 292 may be controlled to stop operation at the same time when the movable device receives the instruction of instructing the device to stop operation, and thus a large amount of liquid remains on the target object. In order to solve this problem, in the present embodiment, the control system 293, responsive to an instruction of instructing the movable device to stop operation, may control the fluid supply apparatus to continue spraying the first liquid to a target object according to a reduced spraying amount, control the recycling apparatus 292 to continue recycling the second liquid on the target object, and control the fluid supply apparatus and the recycling apparatus to stop operation at the same time when a set condition is satisfied. Descriptions about the instruction of instructing the movable device to stop operation, how to determine whether the instruction is received and the set condition may refer to the related contents in the above-mentioned embodiment. Elaborations are omitted herein.

It is to be noted that, in each embodiment of the present disclosure, if the control system 293 controls a certain component to operate by use of an electrical signal, controlling a certain component on the movable device to stop working may refer to that the control system 293 outputs no more electrical signals to the component, excluding the inertial operation of the component.

The movable device provided in the present embodiment, responsive to the instruction of instructing the movable device to stop operation, may control the fluid supply apparatus to spray the liquid according to a reduced spraying amount, control the recycling apparatus to continue recycling the liquid on the target object, and control the fluid supply apparatus and the recycling apparatus to stop operation at the same time when the set condition is satisfied. This helps to reduce liquid residuals on the target object and further helps to improve user experiences.

In the embodiment of the present disclosure, the fluid supply apparatus is controlled to stop operation in different manners in case of different implementation forms of the fluid supply apparatus. In an embodiment, as shown in FIG. 29, the fluid supply apparatus 291 may include a water pump 291a, a water delivery pipe 291b, and a spray nozzle (not shown in FIG. 29). Optionally, the movable device may further include a solution tank 294. The first liquid is stored in the solution tank 294. A working principle of the fluid supply apparatus 291 may refer to the related contents in the above-mentioned embodiments, and will not be elaborated herein. In this embodiment, the control system 293 may transmit a driving signal to the water pump 291a. The water pump 291a is driven by the driving signal to rotate to pump the first liquid in the solution tank 294 to the water delivery pipe 291b. For the ease of description and distinction, the driving signal output to the water pump 291a by the control system 293 is defined as a first driving signal. Correspondingly, the control system 293 may adjust a parameter value of the first driving signal to reduce a spraying amount of the fluid supply apparatus 291. That is, power corresponding to the first driving signal output to the water pump by the control system 293 responsive to the instruction of instructing the movable device to stop operation is lower than that corresponding to a driving signal output to the water pump before responding to the instruction of instructing the movable device to stop operation.

Further, if the water pump 291a is a direct-current water pump, the first driving signal is a PWM signal, and a parameter value thereof may be a duty ratio of the PWM signal. Correspondingly, the duty ratio of the PWM signal may be reduced to reduce the working power of the water pump 291a to further reduce the spraying amount of the fluid supply apparatus 291. If the water pump 291a is an alternating-current water pump that is controlled by a silicon controlled rectifier, the first driving signal is a pulse signal, and a parameter value thereof may be delay time of the pulse signal relative to a zero crossing point of a sinusoidal signal. Correspondingly, delay time between a rising edge or falling edge of the pulse signal and the zero crossing point of the sinusoidal signal may be prolonged to further reduce a turn-on angle of the silicon controlled rectifier so as to reduce the working power of the water pump 291a and further reduce the spraying amount of the fluid supply apparatus 291. The sinusoidal signal is 220 V mains supply that powers the movable device. The parameter value of the first driving signal output to the water pump by the control system 293 responsive to the instruction of instructing the movable device to stop operation may be preset in the movable device.

In some other embodiments, the fluid supply apparatus 291 is provided with a corresponding valve. The control system 293 may control a closing degree of the valve to adjust a spraying amount of the fluid supply apparatus 291. For example, the control system 293 may control a brake mechanism corresponding to the valve to act, but not limited, to reduce an opening degree of the valve, thereby reducing the spraying amount of the fluid supply apparatus 291, etc.

For the recycling apparatus 292, the control system 293 may also output a driving signal to the recycling apparatus to control a working state thereof. For the ease of description and distinction, in the embodiment of the present disclosure, the driving signal output to the recycling apparatus 292 by the control system 293 is defined as a second driving signal. That is, the control system 293, responsive to the instruction of instructing the movable device to stop operation, may output a second driving signal to a motor of the recycling apparatus 292 so as to control the recycling apparatus 292 to continue recycling the second liquid on the target object. A parameter value of the second driving signal may be the same as or different from that of a driving signal output to the recycling apparatus 292 by the control system 293 before responding to the instruction of instructing the movable device to stop operation. The recycling apparatus 292 continues recycling the second liquid on the target object under original power if the parameter value of the second driving signal is the same as that of the driving signal output to the recycling apparatus 292 by the control system 293 before responding to the instruction of instructing the movable device to stop operation. Correspondingly, the recycling apparatus 292 continues recycling the second liquid on the target object under adjusted power if the parameter value of the second driving signal is different from that of the driving signal output to the recycling apparatus 292 by the control system 293 before responding to the instruction of instructing the movable device to stop operation. The adjusted power may be higher than the original power or lower than the original power.

Preferably, if the adjusted power of the recycling apparatus 292 is lower than the original power, a unit recycling amount of the recycling apparatus 292 when working under the reduced power is higher than a unit spraying amount of the fluid supply apparatus 291 when operating under the reduced power. The unit recycling amount refers to the amount of liquid the recycling apparatus 292 may recycle within unit time. However, the amount of the liquid on the target object may be smaller than the unit recycling amount of the recycling apparatus 292 during practical operations. The unit spraying amount refers to the amount of liquid the fluid supply apparatus 291 may spray within unit time.

Further, a specific parameter value of the second driving signal may be preset in the movable device, or may be determined according to a practical condition. In an embodiment, the fluid supply apparatus 291 has different spraying amount grades. Different spraying amount grades correspond to different spraying amounts. Different amounts of second liquid is produced on the target object if the fluid supply apparatus 291 works under different spraying amount grades before the control system 293 responds to the instruction of instructing the movable device to stop operation. Similarly, different amounts of second liquid is produced on the target object if the fluid supply apparatus 291 works under different spraying amount grades after the control system 293 responds to the instruction of instructing the movable device to stop operation. Based on this, the control system 293 may determine a first target parameter value needed by the second driving signal according to a spraying amount of the fluid supply apparatus 291 before or after responding to the instruction of instructing the movable device to stop operation, and output the second driving signal to the recycling apparatus 292 according to the first target parameter value. In this embodiment, the second driving signal has the first target parameter value. A specific implementation mode of determining the first target parameter value may refer to the related contents in the above-mentioned embodiment, and will not be elaborated herein.

In another embodiment, a second target parameter value needed by the second driving signal may be determined according to wetness of the target object. The second driving signal is output to the recycling apparatus 292 according to the second target parameter value. In this embodiment, the second driving signal has the second target parameter value. A specific implementation mode of determining the second target parameter value and the wetness of the target object may refer to the related contents in the above-mentioned embodiment, and will not be elaborated herein.

In some other embodiments, a target parameter value needed by the second driving signal may be determined according to a spraying amount of the fluid supply apparatus 291 before or after responding to the instruction of instructing the movable device to stop operation and wetness of the target object. The second driving signal with the target parameter value is output to the recycling apparatus 292.

In some other embodiments, the specific parameter value of the second driving signal may be preset in the movable device. For the ease of description and distinction, the preset parameter value of the second driving signal is defined as a third target parameter value. The third target parameter value is different from that of a driving signal output to the recycling apparatus 292 before responding to the instruction of instructing the movable device to stop operation. Correspondingly, the control system 293 generates the second driving signal according to the preset third target parameter value and outputs the second driving signal to the motor of the recycling apparatus 292 according to the third target parameter value. In this embodiment, the second driving signal has the third target parameter value.

In the embodiment of the present embodiment, as shown in FIG. 29, the recycling apparatus 292 may include a suction nozzle 292a and a corresponding motor 292b. Optionally, the motor 292b corresponding to the recycling apparatus 292 may be a main motor of the movable device. The movable device may further include a recycling tank 295. The recycling apparatus 292 may recycle the second liquid on the target object into the recycling tank 295.

In the embodiment of the present disclosure, as shown in FIG. 29, the movable device further includes a cleaning assembly 296. The cleaning assembly 296 includes a cleaning brush and a motor driving the cleaning brush to operate. In the embodiment of the present disclosure, for the cleaning assembly 296, the control system 293 may control the cleaning assembly 296 to stop operation responsive to the instruction of instructing the movable device to stop operation, or may control the cleaning assembly 296 to continue operation responsive to the instruction of instructing the movable device to stop operation and control the cleaning assembly 296 to stop operation after the set condition is satisfied. In the present embodiment, that the cleaning assembly continues operation includes any one of the following conditions. The cleaning brush continues running under original power. The cleaning brush runs under reduced power. The cleaning brush runs under increased power. The cleaning brush runs for predetermined time (e.g., 5 seconds) under the original power and then under linearly or nonlinearly reduced power. The cleaning brush runs for predetermined time (e.g., 5 seconds) under increased power and then under linearly reduced power. In some other embodiments, a running parameter during the continuous operation of the cleaning brush may be changed from power to rotational speed. The cleaning brush runs at an original rotational speed. The cleaning brush runs at a reduced rotational speed. The cleaning brush runs at an increased rotational speed. The cleaning brush runs for predetermined time (e.g., 5 seconds) at the original rotational speed and then at a linearly or nonlinearly reduced rotational speed. The cleaning brush runs for predetermined time (e.g., 5 seconds) at an increased rotational speed and then at a linearly reduced rotational speed. In some other embodiments, the running parameter during the continuous operation of the cleaning brush may be changed from power to rotational direction. That the cleaning brush continues operation includes any one of the following conditions. The cleaning brush runs in an original rotational direction. The cleaning brush runs reversely after switched to a rotational direction opposite to the original rotational direction. The cleaning brush runs for predetermined time (e.g., 5 seconds) in the original rotational direction, and then is switched to runs reversely. The cleaning brush runs reversely for predetermined time (e.g., 5 seconds), and then is switched to run in the original directional direction. Specific implementation modes about how to stop the operation of the cleaning assembly 296 and how to control the cleaning assembly 296 to continue operation may refer to the related contents in the above-mentioned embodiments, and will not be elaborated herein.

It is to be noted that the structure and implementation form of the movable device provided in the present embodiment shown in FIG. 29 as well as a form and arrangement position of each component of the movable device are only exemplary and nonrestrictive. In addition, besides the components shown in FIG. 29, the movable device may further include a communication assembly, a roller, a driving component and the like according to a disclosure requirement, which are not shown in FIG. 29. FIG. 29 only schematically shows part of components. This does not mean that the movable device must include all the components shown in FIG. 29 or the movable device may include the components shown in FIG. 29 only.

In addition to the movable device, the embodiment of the present disclosure also provides another operation method, which is applied to the above-mentioned control system. Exemplary descriptions will be made below.

FIG. 30 is a schematic flowchart of another operation method according to an embodiment of the present disclosure. As shown in FIG. 4, the method includes the following steps.

At 3001, responsive to an instruction of instructing a movable device to stop operation, a fluid supply apparatus is controlled to continue spraying first liquid to a target object according to a reduced spraying amount.

At 3002, a recycling apparatus is controlled to continue recycling second liquid on the target object.

At 3003, the fluid supply apparatus and the recycling apparatus are controlled to stop operation at the same time when a set condition is satisfied.

In the present embodiment, the fluid supply apparatus and the recycling apparatus are included. In the present embodiment, the fluid supply apparatus is responsible for spraying liquid out. For the ease of description and distinction, the liquid sprayed out by the fluid supply apparatus is defined as the first liquid. The recycling apparatus is responsible for recycling the second liquid produced by the first liquid. Descriptions about an implementation form of the movable device, the first liquid and the second liquid may refer to the related contents in the above-mentioned embodiment. Elaborations are omitted herein.

The movable device may execute a related operation by use of each component when moving. The movable device refers, but not limited, to a device capable of moving, or an autonomous mobile device such as a sweeping robot and a window cleaning robot, or a device capable of moving under an external force such as a handheld dust collector and a handheld dust mite controller.

In the present embodiment, when the movable device works, the fluid supply apparatus may spray the first liquid to the target object, and the recycling apparatus may recycle the second liquid on the target object. However, in the conventional art, the fluid supply apparatus and the recycling apparatus may stop operation at the same time when the movable device receives the instruction of instructing the device to stop operation, and thus a large amount of liquid remains on the target object. In order to solve this problem, in Step 3001, responsive to an instruction of instructing the movable device to stop operation, the fluid supply apparatus is controlled to continue spraying the first liquid to the target object according to the reduced spraying amount. In Step 3002, the recycling apparatus is controlled to continue recycling the second liquid on the target object. In Step 3003, the fluid supply apparatus and the recycling apparatus are controlled to stop operation at the same time when the set condition is satisfied. Descriptions about the instruction of instructing the movable device to stop operation, how to determine whether the instruction is received and the set condition may refer to the related contents in the above-mentioned embodiment. Elaborations are omitted herein.

In the present embodiment, the movable device, responsive to the instruction of instructing the movable device to stop operation, may control the fluid supply apparatus to spray the liquid according to the reduced spraying amount, control the recycling apparatus to continue recycling the liquid on the target object, and control the fluid supply apparatus and the recycling apparatus to stop operation at the same time when the set condition is satisfied. This helps to reduce liquid residuals on the target object and further helps to improve user experiences.

In the embodiment of the present disclosure, the fluid supply apparatus is controlled to stop operation in different manners in case of different implementation forms of the fluid supply apparatus. In an embodiment, the fluid supply apparatus may include a water pump, a water delivery pipe, and a spray nozzle. A working principle of the fluid supply apparatus may refer to the related contents in the above-mentioned embodiments, and will not be elaborated herein. In this embodiment, a driving signal may be transmitted to the water pump. The water pump is driven by the driving signal to rotate to pump the first liquid in a solution tank to the water delivery pipe. For the ease of description and distinction, the driving signal output to the water pump is defined as a first driving signal. Correspondingly, a parameter value of the first driving signal may be adjusted to reduce a spraying amount of the fluid supply apparatus. That is, power corresponding to the first driving signal output to the water pump responsive to the instruction of instructing the movable device to stop operation is lower than that corresponding to a driving signal output to the water pump before responding to the instruction of instructing the movable device to stop operation. Further, if the water pump is a direct-current water pump, the first driving signal is a PWM signal, and a parameter value thereof may be a duty ratio of the PWM signal. Correspondingly, the duty ratio of the PWM signal may be reduced to reduce the working power of the water pump to further reduce the spraying amount of the fluid supply apparatus. If the water pump is an alternating-current water pump that may be controlled by a silicon controlled rectifier, the first driving signal is a pulse signal, and a parameter value thereof may be delay time of the pulse signal relative to a zero crossing point of a sinusoidal signal, specifically, delay time of a rising edge or falling edge of the pulse signal relative to the zero crossing point of the sinusoidal signal. Correspondingly, the delay time of the rising edge or falling edge of the pulse signal relative to the zero crossing point of the sinusoidal signal may be prolonged to further reduce a turn-on angle of the silicon controlled rectifier so as to reduce the working power of the water pump and further reduce the spraying amount of the fluid supply apparatus. The parameter value of the first driving signal output to the water pump responsive to the instruction of instructing the movable device to stop operation may be preset in the movable device.

In some other embodiments, the fluid supply apparatus is provided with a corresponding valve. A closing degree of the valve may be controlled to adjust a spraying amount of the fluid supply apparatus. For example, a brake mechanism corresponding to the valve may be controlled to act, but not limited, to reduce an opening degree of the valve, thereby reducing the spraying amount of the fluid supply apparatus, etc.

For the recycling apparatus, a driving signal may also be output to the recycling apparatus to control a working state thereof. For the ease of description and distinction, in the embodiment of the present disclosure, the driving signal output to the recycling apparatus is defined as a second driving signal. That is, a second driving signal may be output to a motor of the recycling apparatus responsive to the instruction of instructing the movable device to stop operation so as to control the recycling apparatus to continue recycling the second liquid on the target object. A parameter value of the second driving signal may be the same as or different from that of a driving signal output to the recycling apparatus by the control system before responding to the instruction of instructing the movable device to stop operation. The recycling apparatus continues recycling the second liquid on the target object under original power if the parameter value of the second driving signal is the same as that of the driving signal output to the recycling apparatus by the control system before responding to the instruction of instructing the movable device to stop operation. Correspondingly, the recycling apparatus continues recycling the second liquid on the target object under adjusted power if the parameter value of the second driving signal is different from that of the driving signal output to the recycling apparatus by the control system before responding to the instruction of instructing the movable device to stop operation. The adjusted power may be higher than the original power or lower than the original power.

Preferably, if the adjusted power of the recycling apparatus is lower than the original power, a unit recycling amount of the recycling apparatus when working under the reduced power is higher than a unit spraying amount of the fluid supply apparatus when operating under the reduced power. The unit recycling amount refers to the amount of liquid the recycling apparatus may recycle within unit time. However, the amount of the liquid on the target object may be smaller than the unit recycling amount of the recycling apparatus during practical operations. The unit spraying amount refers to the amount of liquid the fluid supply apparatus may spray within unit time.

Further, a specific parameter value of the second driving signal may be preset in the movable device, or may be determined according to a practical condition. In an embodiment, a first target parameter value needed by the second driving signal may be determined according to a spraying amount of the fluid supply apparatus before or after responding to the instruction of instructing the movable device to stop operation. The second driving signal is output to the recycling apparatus according to the first target parameter value. In this embodiment, the second driving signal has the first target parameter value. A specific implementation mode of determining the first target parameter value may refer to the related contents in the above-mentioned embodiment, and will not be elaborated herein.

In another embodiment, a second target parameter value needed by the second driving signal may be determined according to wetness of the target object. The second driving signal is output to the recycling apparatus according to the second target parameter value. In this embodiment, the second driving signal has the second target parameter value. A specific implementation mode of determining the second target parameter value and the wetness of the target object may refer to the related contents in the above-mentioned embodiment, and will not be elaborated herein.

In some other embodiments, a target parameter value needed by the second driving signal may be determined according to a spraying amount of the fluid supply apparatus before or after responding to the instruction of instructing the movable device to stop operation and wetness of the target object. The second driving signal with the target parameter value is output to the recycling apparatus.

In some other embodiments, the specific parameter value of the second driving signal may be preset in the movable device. For the ease of description and distinction, the preset parameter value of the second driving signal is defined as a third target parameter value. The third target parameter value is different from that of a driving signal output to the recycling apparatus before responding to the instruction of instructing the movable device to stop operation. Correspondingly, the control system generates the second driving signal according to the preset third target parameter value and outputs the second driving signal to the motor of the recycling apparatus according to the third target parameter value. In this embodiment, the second driving signal has the third target parameter value.

In the embodiment of the present disclosure, the movable device further includes a cleaning assembly. The cleaning assembly includes a cleaning brush and a motor driving the cleaning brush to operate. In the embodiment of the present disclosure, for the cleaning assembly, the cleaning assembly may be controlled to stop operation responsive to the instruction of instructing the movable device to stop operation. Alternatively, the cleaning assembly may be controlled to continue operation responsive to the instruction of instructing the movable device to stop operation, and the cleaning assembly is controlled to stop operation after the set condition is satisfied. Specific implementation modes about how to stop the operation of the cleaning assembly and how to control the cleaning assembly to continue operation may refer to the related contents in the above-mentioned embodiments, and will not be elaborated herein.

Correspondingly, the embodiment of the present disclosure also provides a computer-readable storage medium storing a computer instruction. When the computer instruction is executed by one or more processors, the one or more processors are caused to execute the steps in the above-mentioned operation method. It is to be noted that execution bodies for each step of the method provided in the above-mentioned embodiment may be the same device. Alternatively, different devices may be involved in the method as execution bodies. For example, the execution bodies for Steps 3001 and 3002 may be device A. For another example, the execution body for Step 3001 may be device A, and the execution body for Step 3002 may be device B.

In addition, some flows described in the above-mentioned embodiments and the drawings include multiple operations executed according to a specific sequence. However, it is to be clearly understood that these operations may be executed in sequences different from those specified herein or concurrently. The sequence numbers of the operations, such as 3001 and 3002, are only for distinguishing different operations and do not represent any execution sequence. In addition, these flows may include more or fewer operations, and these operations may be executed in sequence or concurrently. It is to be noted that descriptions such as "first" and "second" herein are used to distinguish different messages, devices, modules and the like and do not represent any sequence and limit "first" and "second" to be different in type.

The operation method provided in the embodiment of the present disclosure is applied to various movable devices. For example, the movable device may be, but not limited to, a cleaning device such as a sweeping robot, a handheld dust collector and a window cleaning robot, or a chemical reaction device, or the like. The operation method provided in the embodiment of the present disclosure will be exemplarily described below with a cleaning device as an example in combination with related operation scenes.

Application scene 10

The embodiment of the present disclosure provides a cleaning device, which includes a fluid supply apparatus, a recycling apparatus, and a control system. The control system is electrically connected with the fluid supply apparatus and the recycling apparatus, and may control working states of the fluid supply apparatus and the recycling apparatus. In the present embodiment, the fluid supply apparatus is responsible for spraying clean liquid out, such as, but not limited to, clean water or liquid doped with a cleaning agent. Correspondingly, second liquid may be dirty liquid produced after first liquid is sprayed to a target object (cleaning object and/or cleaning brush) for cleaning by a cleaning assembly of the cleaning device. In the present embodiment, the control system may control the fluid supply apparatus to stop spraying the clean liquid to the target object responsive to an instruction of instructing the cleaning device to stop operation. Optionally, the control system may control the fluid supply apparatus to stop operation immediately, or may control the fluid supply apparatus to gradually reduce a spraying amount till stopping operation. Correspondingly, for the recycling apparatus, the control system may control the recycling apparatus to continue recycling the dirty liquid on the target object, and control the recycling apparatus to stop recycling the dirty liquid on the target object when a set condition is satisfied. This helps to reduce the dirty liquid remaining on the target object and further helps to improve user experiences.

Application scene 11

The embodiment of the present disclosure provides a cleaning device, which includes a fluid supply apparatus, a recycling apparatus, and a control system. The control system is electrically connected with the fluid supply apparatus and the recycling apparatus, and may control working states of the fluid supply apparatus and the recycling apparatus. In the present embodiment, the fluid supply apparatus is responsible for spraying clean liquid out, such as, but not limited to, clean water or liquid doped with a cleaning agent. Correspondingly, second liquid may be dirty liquid produced after first liquid is sprayed to a target object (cleaning object and/or cleaning brush) for cleaning by a cleaning assembly of the cleaning device. In the present embodiment, the control system, responsive to an instruction of instructing the movable device to stop operation, may control the fluid supply apparatus to continue spraying the clean liquid to the target object according to a reduced spraying amount, control the recycling apparatus to continue recycling the dirty liquid on the target object, and control the fluid supply apparatus and the recycling apparatus to stop operation at the same time when a set condition is satisfied. This helps to reduce the dirty liquid remaining on the target object and further helps to improve user experiences.

Application scene 12

In the present application scene, the cleaning device is a cleaning machine. The cleaning machine includes a solution tank, a recycling tank, a main motor, a control system, and a floor brush. The control system is electrically connected with the main motor, the solution tank, the recycling tank and the floor brush, and may control working states of the main motor, the solution tank, the recycling tank and the floor brush. After the cleaning machine is turned on, the control system, responsive to a power-on signal of a user, controls the main motor to start collecting dust, and controls a floor brush motor to start running. A water pump of the solution tank starts spraying water responsive to a signal of the control system. The recycling tank collects dirts such as dust and water sucked by the floor brush from the ground. When the cleaning machine is turned off by the user, the control system responds to a power-off signal. A timer starts timing. The water pump of the solution tank is controlled to stop spraying water. The floor brush motor continues running under original power. The main motor continues running under original power to continue sucking the dirts such as dust and water on the ground. Predetermined time (e.g., 3 seconds) later when the power-off signal arrives, responsive to a control signal of the control system, the floor brush motor and the main motor stop running, and the cleaning machine is turned off. After the cleaning machine is turned off, the water pump stops spraying water, while the main motor continues running. Therefore, the dirts on the ground may be sucked timely, liquid residuals on the ground may be reduced, and user experiences are improved.

Application scene 13

In the present application scene, the cleaning device is a cleaning machine. The cleaning machine includes a solution tank, a recycling tank, a main motor, a control system, and a floor brush. The control system is electrically connected with the main motor, the solution tank, the recycling tank and the floor brush, and may control working states of the main motor, the solution tank, the recycling tank and the floor brush. After the cleaning machine is turned on, the control system, responsive to a power-on signal of a user, controls the main motor to start collecting dust, and controls a floor brush motor to start running. A water pump of the solution tank starts spraying water responsive to a signal of the control system. The recycling tank collects dirts such as dust and water sucked by the floor brush from the ground. When the cleaning machine is turned off by the user, the control system responds to a power-off signal. A timer starts timing. The water pump of the solution tank is controlled to stop spraying water. The floor brush motor continues running under reduced power. The main motor continues running under reduced power to continue sucking the dirts such as dust and water on the ground. Predetermined time (e.g., 5 seconds) later when the power-off signal arrives, responsive to a control signal of the control system, the floor brush motor and the main motor stop running, and the cleaning machine is turned off. After the cleaning machine is turned off, the water pump stops spraying water, while the main motor continues running. Therefore, the dirts on the ground may be sucked timely, liquid residuals on the ground may be reduced, and user experiences are improved.

Application scene 14

In the present application scene, the cleaning device is a cleaning machine. The cleaning machine includes a solution tank, a recycling tank, a main motor, a control system, a voice module, and a floor brush. The control system is electrically connected with the main motor, the solution tank, the recycling tank, the floor brush and the voice module, and may control working states of the main motor, the solution tank, the recycling tank, the floor brush and the voice module. A user inputs a voice power-on signal to the cleaning machine. The voice module of the cleaning machine receives and sends voice information of the user to the control system. The control system, responsive to the power-on signal of the user, controls the main motor to start collecting dust, and controls a floor brush motor to start running. A water pump of the solution tank starts spraying water responsive to a signal of the control system. The recycling tank collects dirts such as dust and water sucked by the floor brush from the ground. The user inputs a voice power-off signal to the cleaning machine. The voice module of the cleaning machine receives and sends voice information of the user to the control system. The control system responds to the power-off signal. A timer starts timing. The water pump of the solution tank is controlled to stop spraying water. The floor brush motor continues running under reduced power. The main motor continues running under reduced power to continue sucking the dirts such as dust and water on the ground. Predetermined time (e.g., 5 seconds) later when the power-off signal arrives, responsive to a control signal of the control system, the floor brush motor and the main motor stop running, and the cleaning machine is turned off. After the cleaning machine is turned off, the water pump stops spraying water, while the main motor continues running. Therefore, the dirts on the ground may be sucked timely, liquid residuals on the ground may be reduced, and user experiences are improved.

Application scene 15

In the present application scene, the cleaning device is a cleaning machine. The cleaning machine includes a solution tank, a recycling tank, a main motor, a control system, and a floor brush. The control system is electrically connected with the main motor, the solution tank, the recycling tank and the floor brush, and may control working states of the main motor, the solution tank, the recycling tank and the floor brush. A wetness sensor for detecting ground wetness is arranged at a bottom of the floor brush. After the cleaning machine is turned on, the control system, responsive to a power-on signal of a user, controls the main motor to start collecting dust, and controls a floor brush motor to start running. A water pump of the solution tank starts spraying water responsive to a signal of the control system. The recycling tank collects dirts such as dust and water sucked by the floor brush from the ground. When the cleaning machine is turned off by the user, the control system receives ground wetness detected by the wetness sensor in real time responsive to a power-off signal. When the ground wetness is higher than a predetermined wetness value, the control system controls the water pump of the solution tank to stop spraying water. The floor brush motor continues running under original power. The main motor continues running under increased power to continue sucking the dirts such as dust and water on the ground. After the ground wetness detected by the wetness sensor reaches the predetermined wetness value, responsive to a control signal of the control system, the floor brush motor and the main motor stop running, and the cleaning machine is turned off. After the cleaning machine is turned off, the water pump stops spraying water, while the main motor continues running. Therefore, the dirts on the ground may be sucked timely, liquid residuals on the ground may be reduced, and user experiences are improved.

Application scene 16

In the present application scene, the cleaning device is a sweeping robot. The sweeping robot includes a clean water tank, a dust chamber, a main motor, a control system, and a rolling brush. The control system is electrically connected with the main motor, the clean water tank, the dust chamber and the rolling brush, and may control working states of the main motor, the clean water tank, the dust chamber and the rolling brush. After the sweeping robot is turned on, the control system, responsive to a power-on signal, controls the main motor to start collecting dust, and controls the rolling brush to start running. The clean water tank starts spraying water responsive to a signal of the control system. The dust chamber collects dirts such as dust and water sucked by the sweeping robot from the ground. When the sweeping robot is turned off, the control system responds to a power-off signal. A timer starts timing. The clean water tank is controlled to stop spraying water. The rolling brush continues running under reduced power. The main motor continues running under reduced power to continue sucking the dirts such as dust and water on the ground. Predetermined time (e.g., 5 seconds) later when the power-off signal arrives, responsive to a control signal of the control system, the rolling brush and the main motor stop running, and the sweeping robot is turned off. After the sweeping robot is turned off, the clean water tank stops spraying water, while the main motor continues running. Therefore, the dirts on the ground may be sucked timely, liquid residuals on the ground may be reduced, and user experiences are improved.

Application scene 17

In the present application scene, the cleaning device is a sweeping robot. The sweeping robot includes a clean water tank, a dust chamber, a main motor, a control system, a voice module, and a rolling brush. The control system is electrically connected with the main motor, the clean water tank, the dust chamber, the rolling brush and the voice module, and may control working states of the main motor, the clean water tank, the dust chamber, the rolling brush and the voice module. A user inputs a voice power-on signal to the sweeping robot. The voice module of the sweeping robot receives and sends voice information of the user to the control system. The control system, responsive to the power-on signal, controls the main motor to start collecting dust, and controls the rolling brush to start running. The clean water tank starts spraying water responsive to a signal of the control system. The dust chamber collects dirts such as dust and water sucked by the sweeping robot from the ground. The user inputs a voice power-off signal to the cleaning machine. The voice module of the cleaning machine receives and sends voice information of the user to the control system. The control system responds to the power-off signal. A timer starts timing. The clean water tank is controlled to stop spraying water. The rolling brush continues running under reduced power. The main motor continues running under reduced power to continue sucking the dirts such as dust and water on the ground. Predetermined time (e.g., 5 seconds) later when the power-off signal arrives, responsive to a control signal of the control system, the rolling brush and the main motor stop running, and the sweeping robot is turned off. After the sweeping robot is turned off, the clean water tank stops spraying water, while the main motor continues running. Therefore, the dirts on the ground may be sucked timely, liquid residuals on the ground may be reduced, and user experiences are improved.

Application scene 18

In the present application scene, the cleaning device is a sweeping robot. The sweeping robot includes a clean water tank, a dust chamber, a main motor, a control system, and a rolling brush. The control system is electrically connected with the main motor, the clean water tank, the dust chamber and the rolling brush, and may control working states of the main motor, the clean water tank, the dust chamber and the rolling brush. A wetness sensor for detecting ground wetness is arranged at a bottom of the sweeping robot. After the sweeping robot is turned on, the control system, responsive to a power-on signal, controls the main motor to start collecting dust, and controls the rolling brush to start running. The clean water tank starts spraying water responsive to a signal of the control system. The dust chamber collects dirts such as dust and water sucked by the sweeping robot from the ground. When the sweeping robot is turned off, the control system receives ground wetness detected by the wetness sensor in real time responsive to a power-off signal. When the ground wetness is higher than a predetermined wetness value, the clean water tank is controlled to stop spraying water. The rolling brush continues running under reduced power. The main motor continues running under reduced power to continue sucking the dirts such as dust and water on the ground. After the ground wetness detected by the wetness sensor reaches the predetermined wetness value, responsive to a control signal of the control system, the rolling brush and the main motor stop running, and the sweeping robot is turned off. After the sweeping robot is turned off, the clean water tank stops spraying water, while the main motor continues running. Therefore, the dirts on the ground may be sucked timely, liquid residuals on the ground may be reduced, and user experiences are improved.

In the embodiment of the present disclosure, a memory is configured to store a computer program, and may be configured to store various other data so as to support the operations on the movable device. A processor may execute the computer program stored in the memory so as to implement a corresponding control logic. The memory may be implemented by a volatile or non-volatile storage device of any type or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, a magnetic disk, or an optical disk.

In the embodiment of the present disclosure, the control system may include a processor and a peripheral circuit thereof. The processor may be any hardware processing device capable of executing the above-mentioned method logic. Optionally, the processor may be a CPU, a GPU, or an MCU. Alternatively, the processor may be a programmable device such as an FPGA, a PAL, a GAL, and a CPLD. Alternatively, the processor is an ARM, an SOC, or the like. However, the processor is not limited thereto.

In the embodiment of the present disclosure, the communication assembly is configured to facilitate wired or wireless communication between the movable device and another device. The movable device may access a communication-standard-based wireless network, such as WiFi, 2G, 3G, 4G, 5G, or a combination thereof. In an exemplary embodiment, the communication assembly receives a broadcast signal or broadcast related information from an external broadcast management system through a broadcast channel. In an exemplary embodiment, the communication assembly may be implemented based on an NFC technology, an RFID technology, an IrDA technology, an UWB technology, a BT technology, or other technologies.

In the embodiment of the present disclosure, a power component is configured to provide power for various components of the movable device. The power component may include a power management system, one or more power supplies, and other components associated with the generation, management and distribution of power for the device with the power component.

In the embodiment of the present disclosure, the audio component may be configured to output and/or input an audio signal. For example, the audio component includes a Microphone (MIC) configured to receive an external audio signal when the device with the audio component is in an operation mode, such as a call mode, a recording mode, and a voice recognition mode. The received audio signal may be further stored in the memory or sent by the communication assembly. In some embodiments, the audio component further includes a speaker to output audio signals. For example, the movable device with a voice interaction function may implement voice interaction and the like with the user through the audio component.

In the conventional art, a cleaning device produces relatively loud noises when working, such as noises produced when a main motor of the cleaning device generates negative pressure, noises produced by the rotation of a rolling brush motor, noises produced by water pumping of a water pump, noises produced by a dust collection passage, and noises produced by the rolling of an action wheel of the cleaning device. These noises bring relatively great interferences to a voice interaction function of the cleaning device. For example, when the cleaning device works, a voice prompt given by the cleaning device may not be heard by a user clearly, and a voice instruction given by the user may not be acquired by the cleaning device accurately.

For the above technical problem, some embodiments of the present disclosure provide a cleaning device and a voice interaction method for a cleaning device. The technical solutions provided by each embodiment of the present disclosure will be described below in detail in combination with the drawings.

It is to be noted that the same reference signs represent the same objects in the following drawings and embodiments. Therefore, a certain object, once defined in a drawing, needs not to be further discussed in subsequent drawings.

FIG. 31 is a structural schematic diagram of a cleaning device according to an exemplary embodiment of the present disclosure. As shown in FIG. 31, the cleaning device includes a body 311, and a load 312, controller 313 and audio component 314 which are mounted to the body 311.

In the present embodiment, the cleaning device may be implemented into various cleaning devices, such as, but not limited to, a cleaning machine for cleaning a ground, a wall, a ceiling, glass, a motor vehicle, and the like, a wet dust collector, a handheld dust collector, and a sweeping robot.

The load 312 refers to a component mounted to the cleaning device to realize a cleaning function of the cleaning device. The load 312 is in different implementation forms on different types of cleaning devices. For example, when the cleaning device is implemented into a cleaning machine, the load 312 may be implemented into a vacuum-source main motor configured to generate negative pressure, a rolling brush motor, a water pump and the like on the cleaning machine. For another example, when the cleaning device is implemented into a dust collector, the load 312 may be implemented into a cyclone separator, main motor, rolling brush motor and the like on the dust collector. It is to be understood that different types of loads listed above are used to exemplarily describe the load in combination with different cleaning devices and do not form any limits to the implementation form of the load 312.

The controller 313 is configured to realize a central control function in the cleaning device, and may control a working state of the load on the cleaning device according to a preset control logic or a control instruction of a user. The controller 313 may be implemented by various ASICs, DSPs, DSPDs, PLDs, FPGAs, micro central controllers, microprocessors, MCUs or other electronic components. No limits are made in the present embodiment.

In the present embodiment, the controller 313 may acquire a voice interaction triggering event for the cleaning device, responsive to the voice interaction triggering event, control a working noise of the load 312 on the cleaning device in a set range, and send a voice interaction instruction to the audio component 314. The voice interaction triggering event refers to an event capable of triggering a voice interaction function of the cleaning device, and may be a user event or a system event of the cleaning device. No limits are made in the present embodiment.

The audio component 314 is configured to output and/or input an audio signal in a voice interaction mode. The audio component 314 may execute a voice interaction operation corresponding to the voice interaction triggering event after receiving the voice interaction instruction sent by the controller 313. Optionally, the voice interaction operation may include at least one of a voice message playing operation and a voice instruction recording operation.

In some embodiments, as shown in FIG. 32, the audio component 314 may include a voice chip 3141, a storage unit 3142, a driving unit 3143, a MIC 3144, and a speaker 3145. When the audio component 314 executes the voice instruction recording operation, the voice chip 3141 may drive the MIC 3144 through the driving unit 3143 to record an external audio signal. The MIC 3144 may receive and send the external audio signal to the voice chip 3141. The voice chip 3141 may perform voice recognition according to the audio signal so as to acquire interactive information in the external audio signal. When the audio component 314 executes the voice message playing operation, the voice chip 3141 may determine an audio signal required to be played, and drive the speaker 3145 through the driving unit 3143 to output the audio signal.

In the present embodiment, the controller 313, when acquiring the voice interaction triggering event for the cleaning device, controls the working noise of the load 312 on the cleaning device in the set range, and then controls the audio component 314 on the cleaning device to execute the voice interaction operation corresponding to the voice interaction triggering event. Furthermore, interferences of the working noise of the load to the voice interaction operation of the audio component may be reduced, which contributes to improving the voice interaction performance of the cleaning device.

In some exemplary embodiments, an optional implementation mode that the controller 313 controls the working noise of the load 312 on the cleaning device in the set range may include the following operations. A working circuit of the load 312 is controlled to be off. Alternatively, power of the load 312 is controlled to be lower than a set power threshold.

It is to be understood that different loads 312 are mounted to different types of cleaning devices, and the controller 313 further controls the loads 312 in different manners. In multiple cleaning devices, a main motor, a rolling brush motor, a water pump and an action wheel are relatively common loads. Exemplary descriptions will be made below in combination with these common loads.

Generally, the main motor on the cleaning device is configured to generate negative pressure to form a relatively strong vacuum suction to suck dust and/or sewage into a recycling tank, and thus may produce relatively loud noises. The rolling brush motor, the water pump and the action wheel may produce relatively low noises.

Based on this, in some optional embodiments, when the working circuit of the load 312 is controlled to be off, a working circuit of the main motor may be mainly controlled to be off, and a working circuit of another load such as the rolling brush motor, the water pump and the action wheel is controlled to be normally on, so as to reduce main noises. In some other embodiments, working circuits of the main motor, the rolling brush motor, the water pump and the action wheel may all be controlled to be off, so as to further reduce noises.

Generally, the noise produced by the load 312 is positively related to the power thereof. If the power of the load is higher, the noise is louder. In the cleaning device, power of the main motor is relatively high (usually ranging from 150 to 450 W), and power of the rolling brush motor is relatively low (usually ranging from 20 to 50 W). Based on this, optionally, in some embodiments, when the power of the load 312 is controlled to be lower than the set power threshold, the power of the main motor may be controlled to be lower than a certain set power threshold, but power of the rolling brush motor, the water pump and the action wheel are kept unchanged, so as to reduce main noises. In some other embodiments, power of the main motor may be controlled to be lower than a certain set threshold, and meanwhile, the power of the rolling brush motor, the water pump and the action wheel is correspondingly controlled to be lower than respectively corresponding power thresholds.

When the working circuit of the load 312 is controlled to be off, the following optional implementation modes may be included.

In implementation mode C, if the load 312 is in a working state, the working circuit of the load 312 is turned off such that the load 312 enters a non-working state. After the working circuit of the load 312 is turned off, the load 312 gradually stops action, and the working noise may be reduced.

Based on the above, the operation that the audio component 314 on the cleaning device is controlled to execute the voice interaction operation corresponding to the voice interaction triggering event may include the following operations.

Optionally, after the working circuit is turned off to stop the action of the load 312, the controller 313 may send a voice interaction instruction corresponding to the voice interaction triggering event to the audio component 314 so as to control the audio component 314 to execute the voice interaction operation corresponding to the voice interaction triggering event. Generally, after the working circuit of the load 312 is turned off, the load 312 may continue moving under inertia so as to further keep producing noises. Therefore, executing the voice interaction operation after the load 312 stops action may avoid interferences of the noises produced by the inertial actions of the load 312.

Optionally, after off-time of the working circuit of the load 312 reaches set time, the controller 313 may send a voice interaction instruction corresponding to the voice interaction triggering event to the audio component 314 so as to control the audio component 314 to execute the voice interaction operation corresponding to the voice interaction triggering event. After the working circuit is turned off, an action amplitude and speed of the load 312 under inertia may decrease gradually with time. After certain time, noises produced by inertial actions may be reduced to a certain value and bring less interferences to the voice interaction operation of the cleaning device. In such case, the voice interaction operation may be executed. Optionally, in some embodiments, the set time may be 2 seconds, 3 seconds, or 4 seconds, and is set according to a specific cleaning device. No limits are made in the present embodiment.

In implementation mode D, if the load 312 is in a non-working state after the device is turned on, the working circuit of the load 312 on the cleaning device may be delayed to be turned on so as to keep the load in the non-working state temporarily. After the cleaning device is turned on, if the load 312 is in the non-working state and the working circuit of the load 312 is off, the load 312 may not perform any action and produce working noises. Therefore, no interferences may be brought to the voice interaction operation of the cleaning device.

Based on the above, the controller 313 may send a voice interaction instruction corresponding to the voice interaction triggering event to the audio component 314 when the working circuit of the load 312 is delayed to be turned on.

When the power of the load 312 is controlled to be lower than the set power threshold, the following optional implementation modes may be included.

In implementation mode E, the power of the load 312 is reduced if the load 312 is in a working state. Based on the above, the operation that the audio component 314 on the cleaning device is controlled to execute the voice interaction operation corresponding to the voice interaction triggering event may include the following operation. The controller 313 sends a voice interaction instruction corresponding to the voice interaction triggering event to the audio component 314 after the power of the load 312 is reduced to a first power threshold.

The first power threshold may be calculated according to a practical corresponding relationship between power and a noise. No limits are made in the present embodiment. It is to be understood that the first power threshold may be valued to meet the following requirement. That is, the working noise produced by the load 312 affects the voice interaction operation of the cleaning device less when the power of the load 312 is lower than the first power threshold. This helps a voice interaction content to be transmitted clearly and accurately.

In implementation mode F, if the load 312 is in a non-working state after the device is turned on, the controller 313 may turn on the circuit of the load 312, and increase the power of the load 312 according to a set power increasing speed. The set power increasing speed may ensure that power of the load 312 is increased to a value needed by the work of the load at a controllable speed. The working noise of the load 312 increases gradually when the power of the load 312 is increased.

Based on the above, the operation that the audio component 314 on the cleaning device is controlled to execute the voice interaction operation corresponding to the voice interaction triggering event may include the following operation. The controller 313 may send a voice interaction instruction corresponding to the voice interaction triggering event to the audio component 314 before the power of the load 312 is increased to a second power threshold. The second power threshold may be calculated according to a practical corresponding relationship between power and a noise. No limits are made in the present embodiment. It is to be understood that the second power threshold may be valued to meet the following requirement. That is, the working noise produced by the load 312 affects the voice interaction operation of the cleaning device less before the power of the load 312 is increased to the second power threshold. This helps a voice interaction content to be transmitted clearly and accurately.

It is to be noted that, in each of the above-mentioned and following embodiments of the present disclosure, the voice interaction triggering event may include at least one of a power-on event of the cleaning device, a power-off event of the cleaning device, a failure event of the cleaning device, a component state updating event of the cleaning device, and a voice recording function wakeup event of the cleaning device. Implementation modes D and F recorded in the above-mentioned embodiment are applicable to a application scene that the voice interaction triggering event is implemented into a power-on event of the cleaning device.

The power-on event of the cleaning device may be triggered by the user through a switch component (e.g., a physical button or a touch button) on the cleaning device, or is triggered by a power-on voice instruction given to the cleaning device by the user, or is triggered by a power-on voice instruction given by a terminal device (e.g., a smart phone and an intelligent speaker), or is triggered by a wireless communication signal sent to the cleaning device by a terminal device. The present embodiment includes but is not limited to this.

Optionally, when the voice interaction triggering event is the power-on event, the controller 313 may execute implementation mode D to, responsive to the power-on event, delay turning on the working circuit of the load 312 and send a voice interaction instruction of broadcasting a power-on prompting message to the audio component 314. That is, a power-on voice prompting operation is executed at first through the audio component 314, and then the load 312 is powered on. Interferences of the working noise of the load 312 to the power-on voice prompting operation are avoided effectively.

Optionally, when the voice interaction triggering event is the turn-on power, the controller 313 may execute implementation mode E to turn on the working circuit of the load 312 and increase the power of the load 312 according to a set power increasing speed. Meanwhile, the controller 313 may control the audio component 314 to execute a power-on voice prompting operation before the power of the load 312 is increased to a second threshold. Furthermore, a good voice interaction effect is ensured at the same time of turning on the load rapidly.

Implementation modes C and E recorded in the above-mentioned embodiment are applicable to application scenes that the voice interaction triggering event is implemented into a power-off event of the cleaning device, a failure event of the cleaning device, an Internet of things-based connection event of the cleaning device, a component state updating event of the cleaning device and a voice recording function wakeup event of the cleaning device. Implementation modes C and E will be further exemplarily described below in combination with the above events.

Optionally, the voice interaction triggering event is implemented into a power-off event of the cleaning device. The power-off event of the cleaning device may be triggered by the user through a switch component (e.g., a physical button or a touch button) on the cleaning device, or is triggered by a power-off voice instruction given to the cleaning device by the user, or is triggered by a power-off voice instruction given by a terminal device (e.g., a smart phone and an intelligent speaker), or is triggered by a wireless communication signal sent to the cleaning device by a terminal device. The present embodiment includes but is not limited to this.

Responsive to the power-off event, the controller 313 may execute implementation mode C to turn off the working circuit of the load 312 and send a voice interaction instruction of broadcasting a power-off prompting message to the audio component 314 when the load 312 stops action. Alternatively, the controller 313 may execute implementation mode C to send a voice interaction instruction of broadcasting a power-off prompting message to the audio component 314 after off-time of the working circuit of the load 312 reaches set time (e.g., 2 seconds). Alternatively, the controller 313 may execute implementation mode E to reduce working power of the load 312 and send a voice interaction instruction of broadcasting a power-off prompting message to the audio component 314 after the power of the load 312 is reduced to a first power threshold. After receiving the voice interaction instruction, the audio component 314 may play a voice message like "The device is being powered off, "The device has been powered off and "Please put the device back to the base".

Optionally, the voice interaction triggering event is implemented into a failure event of the cleaning device. The failure event includes at least one of a main motor failure, a rolling brush motor failure, a charger failure, and a dust sensor failure.

The main motor of the cleaning device is a vacuum source generating negative pressure. The controller 313 detects a working state of the main motor in real time. The controller 313 may acquire working state information of the main motor on the cleaning device in real time when the cleaning device is on, and when the main motor fails, execute implementation mode C to turn off the working circuit of the load 312 and send a voice interaction instruction of broadcasting that the main motor fails to the audio component 314 when the load 312 stops action. Alternatively, implementation mode C is executed to turn off the working circuit of the load 312 and send a voice interaction instruction of broadcasting that the main motor fails to the audio component 314 after off-time of the working circuit of the load 312 reaches set time (e.g., 2 seconds). Alternatively, the controller 313 may execute implementation mode E to reduce working power of the load 312 and send a voice interaction instruction of broadcasting that the main motor fails to the audio component 314 after the power of the load 312 is reduced to a first power threshold. After receiving the instruction, the audio component 314 may play a voice message like "the main motor fails". In this application scene, the load 312 is at least one of the main motor, the rolling brush motor, the water pump, and the action wheel. Furthermore, when the main motor of the cleaning device fails, the cleaning device may give a main motor failure early-warning to the user through a voice prompt under relatively low noise interferences, so as to avoid improper use.

The rolling brush motor of the cleaning device is a power source for a cleaning operation of a rolling brush. The controller 313 detects a working state of the rolling brush motor in real time. The controller 313 may acquire working state information of the rolling brush motor on the cleaning device in real time when the cleaning device is on, and when the rolling brush motor fails, execute implementation mode C to turn off the working circuit of the load 312 and send a voice interaction instruction of broadcasting that the rolling brush motor fails to the audio component 314 when the load 312 stops action. Alternatively, implementation mode C is executed to turn off the working circuit of the load 312 and send a voice interaction instruction of broadcasting that the rolling brush motor fails to the audio component 314 after off-time of the working circuit of the load 312 reaches set time (e.g., 2 seconds). Alternatively, the controller 313 may execute implementation mode E to reduce working power of the load 312 and send a voice interaction instruction of broadcasting that the rolling brush motor fails to the audio component 314 after the power of the load 312 is reduced to a first power threshold. After receiving the instruction, the audio component 314 may play a voice message like "the rolling brush motor fails". In this application scene, the load 312 is at least one of the main motor, the rolling brush motor, the water pump, and the action wheel. Furthermore, when the rolling brush motor of the cleaning device fails, the cleaning device may give a rolling brush motor failure early-warning to the user through a voice prompt under relatively low noise interferences, so as to avoid improper use.

The cleaning device has two wired and wireless modes. A wired cleaning device may work only when directly connected with a power supply. A wireless cleaning device needs a rechargeable battery charged through a charger. The cleaning device is connected with an external charger. The controller 313 detects a failure event of the charger in real time, including whether a model of the charger is matched, a charger body failure, etc. The controller 313 may acquire working state information of the charger connected with the cleaning device in real time when the cleaning device is on, and when the charger fails, execute implementation mode C to turn off the working circuit of the load 312 and send a voice interaction instruction of broadcasting that the charger fails to the audio component 314 when the load 312 stops action. Alternatively, implementation mode C is executed to turn off the working circuit of the load 312 and send a voice interaction instruction of broadcasting that the charger fails to the audio component 314 after off-time of the working circuit of the load 312 reaches set time (e.g., 2 seconds). Alternatively, the controller 313 may execute implementation mode E to reduce working power of the load 312 and send a voice interaction instruction of broadcasting that the charger fails to the audio component 314 after the power of the load 312 is reduced to a first power threshold. After receiving the instruction, the audio component 314 may play a voice message like "the charger fails". In this application scene, the load 312 is at least one of the main motor, the rolling brush motor, the water pump, and the action wheel. In this application scene, the load 312 is at least one of the main motor, the rolling brush motor, the water pump, and the action wheel. Furthermore, when the charger of the cleaning device fails, the cleaning device may give a charger failure early-warning to the user through a voice prompt under relatively low noise interferences, so as to avoid improper use.

Optionally, the cleaning device is further provided with a sensor capable detecting dirtiness and/or cleanliness of at least one of a surface to be cleaned, a dust collection inlet, a dust collection passage and a recycling tank. Generally, the sensor is of a photoelectric or density type and a contact or non-contact type, which is collectively referred to as a dust sensor. The controller 313 may acquire working state information of the dust sensor on the cleaning device in real time when the cleaning device is on, and when the dust sensor fails, execute implementation mode C to turn off the working circuit of the load 312 and send a voice interaction instruction of broadcasting that the dust sensor fails to the audio component 314 when the load 312 stops action. Alternatively, implementation mode C is executed to turn off the working circuit of the load 312 and send a voice interaction instruction of broadcasting that the dust sensor fails to the audio component 314 after off-time of the working circuit of the load 312 reaches set time (e.g., 2 seconds). Alternatively, the controller 313 may execute implementation mode E to reduce working power of the load 312 and send a voice interaction instruction of broadcasting that the dust sensor fails to the audio component 314 after the power of the load 312 is reduced to a first power threshold. After receiving the instruction, the audio component 314 may play a voice message like "the dust sensor fails". In this application scene, the load 312 is at least one of the main motor, the rolling brush motor, the water pump, and the action wheel. Furthermore, when the dust sensor of the cleaning device fails, the cleaning device may give a dust sensor failure early-warning to the user through a voice prompt under relatively low noise interferences, so as to avoid improper use. Optionally, the voice interaction triggering event is implemented into a network configuration event of the cleaning device. A communication assembly is arranged on the body 311 of the cleaning device, and may be connected with an external wireless network device in a wireless communication manner such as WiFi and BT so as to implement the network configuration of the cleaning device. The controller 313 may acquire network connection state information of the communication assembly on the cleaning device in real time when the cleaning device is on, and when the communication assembly succeeds in network configuration, execute implementation mode C to turn off the working circuit of the load 312 and send a voice interaction instruction of broadcasting that network configuration succeeds to the audio component 314 when the load 312 stops action. Alternatively, implementation mode C is executed to turn off the working circuit of the load 312 and send a voice interaction instruction of broadcasting that network configuration succeeds to the audio component 314 after off-time of the working circuit of the load 312 reaches set time (e.g., 2 seconds). Alternatively, the controller 313 may execute implementation mode E to reduce working power of the load 312 and send a voice interaction instruction of broadcasting that network configuration succeeds to the audio component 314 after the power of the load 312 is reduced to a first power threshold. After receiving the instruction, the audio component 314 may play a voice message like "network configuration succeeds". In this application scene, the load 312 is at least one of the main motor, the rolling brush motor, the water pump, and the action wheel. Furthermore, when the network configuration of the cleaning device succeeds, the cleaning device may give the user a voice prompt that network configuration succeeds under relatively low noise interferences, so as to help the user to execute other operations.

Optionally, the voice interaction triggering event is implemented into an Internet of things-based connection event of the cleaning device. A communication assembly is arranged on the body 311 of the cleaning device, and may be connected with an external wireless network device in a wireless communication manner such as WiFi and BT so as to implement the network configuration of the cleaning device. After successful network configuration, the cleaning device is connected with a server or another terminal device through a wireless network. The terminal device includes, but not limited to, a smart phone, a smart band, an intelligent speaker, a smart watch, smart home, a refrigerator, a television, a router, a sweeping robot, an intelligent box, etc. The cleaning device may be connected with another intelligent terminal device through the network to implement the interconnection and intercommunication of smart home devices. The controller 313 may acquire Internet of things-based connection state information of the cleaning device in real time when the cleaning device is on, and when the cleaning device succeeds in Internet of things-based connection with another smart home device, execute implementation mode C to turn off the working circuit of the load 312 and send a voice interaction instruction of broadcasting that Internet of things-based connection succeeds to the audio component 314 when the load 312 stops action. Alternatively, implementation mode C is executed to turn off the working circuit of the load 312 and send a voice interaction instruction of broadcasting that Internet of things-based connection succeeds to the audio component 314 after off-time of the working circuit of the load 312 reaches set time (e.g., 2 seconds). Alternatively, the controller 313 may execute implementation mode E to reduce working power of the load 312 and send a voice interaction instruction of broadcasting that Internet of things-based connection succeeds to the audio component 314 after the power of the load 312 is reduced to a first power threshold. After receiving the instruction, the audio component 314 may play a voice message like "Internet of things-based connection succeeds". In this application scene, the load 312 is at least one of the main motor, the rolling brush motor, the water pump, and the action wheel. Furthermore, when the cleaning device succeeds in Internet of things-based connection, the cleaning device may give the user a voice prompt that Internet of things-based connection succeeds under relatively low noise interferences, so as to help the user to execute other operations.

Optionally, the voice interaction triggering event is implemented into a remaining battery capacity updating event. A battery component on the cleaning device is configured to power various loads on the cleaning device. In some scenes, the cleaning device may give the user a prompt about a remaining battery capacity in a voice prompting manner every time when the remaining battery capacity is updated to set threshold. In some other scenes, the cleaning device may prompt the user to replace or charge a battery in a voice prompting manner when the remaining battery capacity reaches a remaining capacity lower limit value. Exemplary descriptions will be made below in combination with the latter.

The controller 313 may acquire a remaining battery capacity of the battery component on the cleaning device in real time when the cleaning device is on, and when the remaining battery capacity is lower than a set battery capacity threshold, execute implementation mode C to turn off the working circuit of the load 312 and send a voice interaction instruction of broadcasting a battery capacity early-warning to the audio component 314 when the load 312 stops action. Alternatively, implementation mode C is executed to turn off the working circuit of the load 312 and send a voice interaction instruction of broadcasting a battery capacity early-warning to the audio component 314 after off-time of the working circuit of the load 312 reaches set time (e.g., 2 seconds). Alternatively, the controller 313 may execute implementation mode E to reduce working power of the load 312 and send a voice interaction instruction of broadcasting a battery capacity early-warning to the audio component 314 after the power of the load 312 is reduced to a first power threshold. After receiving the instruction, the audio component 314 may play a voice message like "low battery". In this application scene, the load 312 is at least one of the main motor, the rolling brush motor, the water pump, and the action wheel. Furthermore, when a battery capacity of the cleaning device reaches a set battery capacity lower limit, the cleaning device may give a low-battery early-warning to the user through a voice prompt under relatively low noise interferences, so as to prompt the user to charge the battery timely. Optionally, a solution tank is mounted to the body 311 of the cleaning device. The solution tank is a container configured to store clean water or a cleaning agent on the cleaning device. A first liquid level detection apparatus may be mounted inside or outside the solution tank so as to detect a liquid level in the solution tank. The voice interaction triggering event is a surplus water updating event of the solution tank.

The first liquid level detection apparatus may send a detected liquid level value to the controller 313 when the cleaning device is on. After receiving the liquid level value sent by the first liquid level detection apparatus, the controller 313 may judge whether surplus water of the solution tank is less than a set water volume threshold according to the liquid level value. If YES, implementation mode C may be executed to turn off the working circuit of the load 312 and send a voice interaction instruction of broadcasting the surplus water of the solution tank to the audio component 314 when the load 312 stops action. Alternatively, implementation mode C is executed to turn off the working circuit of the load 312 and send a voice interaction instruction of broadcasting the surplus water of the solution tank to the audio component 314 after off-time of the working circuit of the load 312 reaches set time (e.g., 2 seconds). Alternatively, the controller 313 may execute implementation mode E to reduce working power of the load 312 and send a voice interaction instruction of broadcasting the surplus water of the solution tank to the audio component 314 after the power of the load 312 is reduced to a first power threshold. After receiving the instruction, the audio component 314 may play a voice message like "the solution tank is in water deficiency". In this application scene, the load 312 is at least one of the main motor, the rolling brush motor, the water pump, and the action wheel. Furthermore, when the surplus water of the solution tank reaches a set water volume lower limit, the cleaning device may give a water deficiency early-warning to the user through a voice prompt under relatively low noise interferences, so as to prompt the user to add liquid into the solution tank.

Optionally, a recycling tank is mounted to the body 311 of the cleaning device. The recycling tank is a container configured to store sewage recycled in a cleaning process on the cleaning device. For example, when the cleaning device is implemented into a cleaning machine, negative pressure generated by the main motor may suck dirty water on the ground into the recycling tank during the use of the cleaning machine. A second liquid level detection apparatus is mounted inside or outside the recycling tank so as to detect a liquid level in the recycling tank. The voice interaction triggering event may be an available capacity updating event of the recycling tank.

The second liquid level detection apparatus may send a detected liquid level value to the controller 313 when the cleaning device is on. The controller 313 may judge whether an available capacity of the recycling tank is higher than a set capacity threshold according to the solution value sent by the second liquid level detection apparatus. If YES, implementation mode C may be executed to turn off the working circuit of the load 312 and send a voice interaction instruction of broadcasting the available capacity of the recycling tank to the audio component 314 when the load 312 stops action. Alternatively, implementation mode C is executed to turn off the working circuit of the load 312 and send a voice interaction instruction of broadcasting available capacity of the recycling tank to the audio component 314 after off-time of the working circuit of the load 312 reaches set time (e.g., 2 seconds). Alternatively, the controller 313 may execute implementation mode E to reduce working power of the load 312 and send a voice interaction instruction of broadcasting the available capacity of the recycling tank to the audio component 314 after the power of the load 312 is reduced to a first power threshold. After receiving the instruction, the audio component 314 may play a voice message like "the recycling tank is full". In this application scene, the load 312 is at least one of the main motor, the rolling brush motor, the water pump, and the action wheel. Furthermore, the cleaning device may give the user an early-warning that the recycling tank is getting full through a voice prompt under relatively low noise interferences, so as to prompt the user to dispose the sewage in the recycling tank to avoid the overflow of the sewage.

Optionally, the voice interaction triggering event is implemented into a floor brush state updating event. The floor brush includes a water pump and a rolling brush. A rolling brush motor is configured to drive the rolling brush to rotate so as to implement cleaning. During the use of the cleaning device, the water pump may pump liquid out of the solution tank, pressurize the liquid, and spray the pressurized liquid to the rolling brush. With the continuous rotation of the rolling brush motor, bristles of the rolling brush may carry the liquid sprayed out by the water pump to the ground so as to wet the ground. With the continuous rotation of the rolling brush, the bristles may wipe the wet ground.

The floor brush includes the rolling brush motor. The rolling brush motor includes an internal motor and an external motor. During the rotation of the rolling brush motor, the controller 313 may acquire a rotational state of the rolling brush motor in real time when the cleaning device is on, and when the rolling brush motor is blocked (for example, the rolling brush is tangled with hair), execute implementation mode C to turn off the working circuit of the load 312 and send a voice interaction instruction of broadcasting that the rolling brush motor is blocked to the audio component 314 when the load 312 stops action. Alternatively, implementation mode C is executed to turn off the working circuit of the load 312 and send a voice interaction instruction of broadcasting that the rolling brush motor is blocked to the audio component 314 after off-time of the working circuit of the load 312 reaches set time (e.g., 2 seconds). Alternatively, the controller 313 may execute implementation mode E to reduce working power of the load 312 and send a voice interaction instruction of broadcasting that the rolling brush motor is blocked to the audio component 314 after the power of the load 312 is reduced to a first power threshold. After receiving the instruction, the audio component 314 may play a voice message like "the rolling brush motor is blocked". In this application scene, the load 312 is at least one of the main motor, the rolling brush motor, the water pump, and the action wheel. Furthermore, when the motor is blocked in a cleaning process of the rolling brush, the cleaning device may play a voice prompting message indicating that the rolling brush motor is blocked under relatively low noise interferences, so as to avoid improper use. Optionally, the rolling brush on the floor brush is dismountable. The cleaning device may be turned on when the rolling brush is not mounted. The controller 313 may acquire a mounting state of the rolling brush in real time when the cleaning device is on, and when the rolling brush is not mounted, execute implementation mode C to turn off the working circuit of the load 312 and send a voice interaction instruction of broadcasting that the rolling brush is not mounted to the audio component 314 when the load 312 stops action. Alternatively, implementation mode C is executed to turn off the working circuit of the load 312 and send a voice interaction instruction of broadcasting that the rolling brush is not mounted to the audio component 314 after off-time of the working circuit of the load 312 reaches set time (e.g., 2 seconds). Alternatively, the controller 313 may execute implementation mode E to reduce working power of the load 312 and send a voice interaction instruction of broadcasting that the rolling brush is not mounted to the audio component 314 after the power of the load 312 is reduced to a first power threshold. After receiving the instruction, the audio component 314 may play a voice message like "the rolling brush is not mounted". In this application scene, the load 312 is at least one of the main motor, the rolling brush motor, the water pump, and the action wheel. Furthermore, when the rolling brush is not mounted in a cleaning process of the rolling brush, the cleaning device may play a voice prompting message indicating that the rolling brush is not mounted under relatively low noise interferences, so as to avoid improper use.

Optionally, in some application scenes, the floor brush includes a water pump configured to pressurize liquid in the solution tank and spray the liquid to the rolling brush or a surface to be cleaned. When the water pump works, the controller 313 may acquire a working state of the rolling brush in real time when the cleaning device is on, and when the water pump fails, execute implementation mode C to turn off the working circuit of the load 312 and send a voice interaction instruction of broadcasting that the water pump fails to the audio component 314 when the load 312 stops action. Alternatively, implementation mode C is executed to turn off the working circuit of the load 312 and send a voice interaction instruction of broadcasting that the water pump fails to the audio component 314 after off-time of the working circuit of the load 312 reaches set time (e.g., 2 seconds). Alternatively, the controller 313 may execute implementation mode E to reduce working power of the load 312 and send a voice interaction instruction of broadcasting that the water pump fails to the audio component 314 after the power of the load 312 is reduced to a first power threshold. After receiving the instruction, the audio component 314 may play a voice message like "the water pump fails". In this application scene, the load 312 is at least one of the main motor, the rolling brush motor, the water pump, and the action wheel. Furthermore, when the water pump fails in a cleaning process of the rolling brush, the cleaning device may play a voice prompting message indicating that the water pump fails under relatively low noise interferences, so as to avoid improper use.

Optionally, the voice interaction triggering event is implemented into a voice recording function wakeup event of the cleaning device. The voice recording function wakeup event is configured to wake up an external audio signal recording function of the audio component 314.

In some scenes, the user, when needing to perform voice interaction with the cleaning device, may operate a physical button or touch button on the cleaning device so as to wake up a voice interaction function of the cleaning device. The physical button or the touch button may send a voice recording function wakeup event to the controller 313 after detecting an operation of the user.

Responsive to the voice recording function wakeup event, the controller 313 may execute implementation mode C when the cleaning device is on to turn off the working circuit of the load 312 and send a voice interaction instruction of inputting an external audio signal to the audio component 314 when the load 312 stops action. Alternatively, implementation mode C is executed to turn off the working circuit of the load 312 and send a voice interaction instruction of inputting an external audio signal to the audio component 314 after off-time of the working circuit of the load 312 reaches set time (e.g., 2 seconds). Alternatively, the controller 313 may execute implementation mode E to reduce working power of the load 312 and send a voice interaction instruction of inputting an external audio signal to the audio component 314 after the power of the load 312 is reduced to a first power threshold. The audio component 314 may enter an external audio signal input state according to the instruction and play a voice message such as "Please speak" and "Please tell me what you need" so as to prompt the user to start outputting a voice instruction. In this application scene, the load 312 is at least one of the main motor, the rolling brush motor, the water pump, and the action wheel.

In some other scenes, the user, when needing to perform voice interaction with the cleaning device, may output a voice message including specific information (e.g., the name of the cleaning device or a specific character) to the cleaning device so as to wake up a voice interaction function of the cleaning device. After detecting the voice message, the audio component 314 may send a voice recording function wakeup event to the controller 313 if recognizing that the voice message includes the specific information.

Responsive to the voice recording function wakeup event, the controller 313 may execute implementation mode C or implementation mode E so as to control a working noise of the load 312 in a set range and send a control instruction of entering a voice recording state to the audio component 314. The audio component 314 may play a voice message like "Again please, I did not hear you clearly" according to the instruction.

In some other scenes, the user, when needing to perform voice interaction with the cleaning device, may wakeup a voice interaction function of the cleaning device through a terminal device. The terminal device may send a wireless communication signal corresponding to a voice recording function wakeup event to the controller 313 according to an operation of the user. The terminal device may be implemented into a smart phone, a smart band, an intelligent speaker, a smart watch, etc. For example, the user may send a voice instruction to an intelligent speaker or a smart phone connected with a BT earphone the user wears through the BT earphone. The intelligent speaker or the smart phone may send a wireless communication signal corresponding to a voice recording function wakeup event to the controller 313 in a wireless communication manner according to the voice instruction.

After receiving the wireless communication signal, the controller 313 may execute implementation mode C or implementation mode E and send a voice interaction instruction of inputting an external audio signal to the audio component 314. The audio component 314 may enter an external audio signal input state according to the instruction and play a voice message such as "Please speak" and "Please tell me what you need" so as to prompt the user to start outputting a voice instruction.

Of course, besides the events listed in each of the above-mentioned embodiments, the voice interaction triggering event may be implemented into other events on the cleaning device, such as an action wheel state updating event (jamming or idling of an action wheel), a startup failure event of the cleaning device, a startup timeout event, a load over-temperature event, inclination or overturning of the cleaning device, and a load over-wetting event. Enumerations are omitted in the present embodiment.

In some exemplary embodiments, the controller 313 may further receive an ending message of the voice interaction operation after controlling the audio component 314 on the cleaning device to execute the voice interaction operation corresponding to the voice interaction triggering event. Optionally, the ending message may be sent by the audio component 314 executing the voice interaction operation. Then, the controller 313 may judge whether the voice interaction triggering event is the power-off event, and if NO, may control the working circuit of the load 312 to be on or control the power of the load 312 to be more than or equal to the set power threshold. Descriptions will be made below in combination with the implementation modes listed above.

Based on implementation mode C, the controller 313 may turn on the working circuit of the load 312 again according to a working state of the load 312 before the voice interaction operation when the controller 313 receives the ending message of the voice interaction operation and the voice interaction triggering event is not the power-off event.

Based on implementation mode D, the controller 313 may turn on the working circuit of the load 312 according to a working state needed when the cleaning device is started when the controller 313 receives the ending message of the voice interaction operation and the voice interaction triggering event is not the power-off event.

Based on implementation mode E, the controller 313 may increase the power of the load 312 again according to a working state of the load 312 before the voice interaction operation when the controller 313 receives the ending message of the voice interaction operation and the voice interaction triggering event is not the power-off event.

Based on implementation mode F, and based on implementation mode D, the controller 313 may increase the power of the load 312 according to a startup requirement of the cleaning device when the controller 313 receives the ending message of the voice interaction operation and the voice interaction triggering event is not the power-off event.

Based on the above, the working noise of the load on the cleaning device may be controlled flexibly when a voice interaction triggering event occurs to the cleaning device. Therefore, noise interferences in a voice interaction process are reduced, it is ensured that a voice message sent by the cleaning device is perceived by the user effectively and that the cleaning device may acquire a voice message sent by the user relatively accurately, and the implementation of a good man-machine interaction process is facilitated.

In addition to the cleaning device recorded in each of the above-mentioned embodiments, the embodiment of the present disclosure also provides a voice interaction method for a cleaning device. Specific descriptions will be made below. FIG. 33 is a schematic flowchart of a voice interaction method for a cleaning device according to an exemplary embodiment of the present disclosure. As shown in FIG. 33, the method includes the following steps.

At Step 3301, a voice interaction triggering event for the cleaning device is acquired. At Step 3302, a working noise of a load on the cleaning device is controlled in a set range.

At Step 3303, an audio component on the cleaning device is controlled to execute a voice interaction operation corresponding to the voice interaction triggering event.

In some exemplary implementation modes, the voice interaction operation includes at least one of a voice message playing operation and a voice instruction recording operation.

In some exemplary implementation modes, a mode that a working noise of a load on the cleaning device is controlled in a set range includes the following operations. A working circuit of the load is controlled to be off so as to control the working noise of the load in the set range. Alternatively, power of the load is controlled to be lower than a set power threshold so as to control the working noise of the load in the set range.

In some exemplary implementation modes, a mode that a working circuit of the load is controlled to be off includes the following operations. The working circuit of the load is turned off if the load is in a working state. The working circuit of the load is delayed to be turned off if the load is in a non-working state after the device is turned on.

In some exemplary implementation modes, if the load is in the working state a mode that an audio component on the cleaning device to execute a voice interaction operation corresponding to the voice interaction triggering event includes the following operations. A voice interaction instruction corresponding to the voice interaction triggering event is sent to the audio component if the load stops action after the working circuit is turned off. Alternatively, a voice interaction instruction corresponding to the voice interaction triggering event is sent to the audio component after off-time of the working circuit reaches set time.

In some exemplary implementation modes, if the load is in the non-working state after the device is turned on, a mode that an audio component on the cleaning device is controlled to execute a voice interaction operation corresponding to the voice interaction triggering event includes the following operation. A voice interaction instruction corresponding to the voice interaction triggering event is sent to the audio component when the working circuit of the load is delayed to be turned on.

In some exemplary implementation modes, a mode that power of the load is controlled to be lower than a set power threshold includes that: the power of the load is reduced if the load is in a working state. Correspondingly, a mode that an audio component on the cleaning device is controlled to execute a voice interaction operation corresponding to the voice interaction triggering event includes that: a voice interaction instruction corresponding to the voice interaction triggering event is sent to the audio component after the power of the load is reduced to a first power threshold. In some exemplary implementation modes, a mode that power of the load is controlled to be lower than a set power threshold includes that: if the load is in a non-working state after the device is turned on, the circuit of the load is turned on, and the power of the load is increased according to a set power increasing speed. Correspondingly, a mode that an audio component on the cleaning device is controlled to execute a voice interaction operation corresponding to the voice interaction triggering event includes that: a voice interaction instruction corresponding to the voice interaction triggering event is sent to the audio component before the power of the load is increased to a second power threshold.

In some exemplary implementation modes, after the operation that an audio component on the cleaning device is controlled to execute a voice interaction operation corresponding to the voice interaction triggering event, the method further includes the following operations. An ending message of the voice interaction operation is received. Whether the voice interaction triggering event is a power-off event is judged. If NO, the working circuit of the load is controlled to be on, or the power of the load is controlled to be more than or equal to the set power threshold.

In some exemplary implementation modes, the load includes at least one of a main motor, rolling brush motor, water pump and action wheel on the cleaning device.

In some exemplary implementation modes, the voice interaction triggering event includes at least one of a power-on event of the cleaning device, a power-off event of the cleaning device, a component state updating event of the cleaning device, and a voice recording function wakeup event of the cleaning device.

In some exemplary implementation modes, the component state updating event of the cleaning device includes at least one of a remaining battery capacity updating event of the cleaning device, a surplus water updating event of a solution tank, an available capacity updating event of a recycling tank, a floor brush state updating event, and an action wheel state updating event.

In the present embodiment, when the voice interaction triggering event for the cleaning device is acquired, the working noise of the load on the cleaning device is controlled in the set range, and then the audio component on the cleaning device is controlled to execute the voice interaction operation corresponding to the voice interaction triggering event. Furthermore, interferences of the working noise of the load to the voice interaction operation of the audio component may be reduced, which contributes to improving the voice interaction performance of the cleaning device.

It is to be noted that execution bodies for each step of the method provided in the above-mentioned embodiment may be the same device. Alternatively, different devices may be involved in the method as execution bodies. For example, the execution bodies for Steps 3301 to 3302 may be device A. For another example, the execution bodies for Steps 3302 and 3302 may be device A, and the execution body for Step 3303 may be device B.

In addition, some flows described in the above-mentioned embodiments and the drawings include multiple operations executed according to a specific sequence. However, it is to be clearly understood that these operations may be executed in sequences different from those specified herein or concurrently. The sequence numbers of the operations, such as 3301 and 3302, are only for distinguishing different operations and do not represent any execution sequence.

It is to be noted that the embodiment of the present disclosure also provides a computer-readable storage medium storing a computer program. When the computer program is executed, each step for implementing the voice interaction operation of the cleaning device in the method embodiment may be implemented.

It is to be noted that descriptions such as "first" and "second" herein are used to distinguish different messages, devices, modules and the like and do not represent any sequence and limit "first" and "second" to be different in type.

Those skilled in the art should know that the embodiment of the present disclosure may be provided as a method, a system or a computer program product. Therefore, the present disclosure may adopt a form of pure hardware embodiment, pure software embodiment and embodiment combining software and hardware. Moreover, the present disclosure may adopt a form of computer program product implemented on one or more computer-available storage media (including, but not limited to, a disk memory, a Compact Disc Read-Only Memory (CD-ROM) and an optical memory) including computer-available program codes.

The present disclosure is described with reference to flowcharts and/or block diagrams of the method, device (system) and computer program product according to the embodiments of the present disclosure. It is to be understood that each flow and/or block in the flowcharts and/or the block diagrams and combinations of the flows and/or blocks in the flowcharts and/or the block diagrams may be implemented by computer program instructions. These computer program instructions may be provided for a universal computer, a dedicated computer, an embedded processor or a processor of another programmable data processing device to generate a machine, so that a device for realizing a function specified in one flow or multiple flows in the flowcharts and/or one block or multiple blocks in the block diagrams is generated by the instructions executed through the computer or the processor of the other programmable data processing device.

Alternatively, these computer program instructions may be stored in a computer-readable memory capable of guiding the computer or the other programmable data processing device to work in a specific manner, so that a product including an instruction device may be generated by the instructions stored in the computer-readable memory, the instruction device realizing the function specified in one flow or multiple flows in the flowcharts and/or one block or multiple blocks in the block diagrams.

Alternatively, these computer program instructions may be loaded onto the computer or the other programmable data processing device, so that a series of operating steps are executed in the computer or the other programmable data processing device to generate processing implemented by the computer, and steps for realizing the function specified in one flow or multiple flows in the flowcharts and/or one block or multiple blocks in the block diagrams are provided by the instructions executed on the computer or the other programmable data processing device.

In a typical configuration, a computing device includes one or more CPUs, an input/output interface, a network interface, and a memory.

The memory may include a volatile memory, a Random Access Memory (RAM), a non-volatile memory and/or other forms in computer-readable media, such as a ROM or a flash RAM. The memory is an example of the computer-readable medium.

The computer-readable media include non-volatile, volatile, removable and non-removable media. Information may be stored by any method or technology. The information may be a computer-readable instruction, a data structure, a program module, or other data. Examples of the computer storage medium include, but not limited to, a Phase-change RAM (PRAM), an SRAM, a Dynamic RAM (DRAM), a RAM of another type, a ROM, an EEPROM, a flash memory or other memory technologies, a CD-ROM, a Digital Video Disk (DVD) or other optical memories, a cassette tape, a tape disk memory or other magnetic storage devices, or any other non-transmission media. The storage medium may be configured to store information accessible for the computing device. As defined herein, the computer-readable medium does not include transitory media, for example, a modulated data signal and a carrier.

It is also to be noted that terms "include" and "contain" or any other variations thereof are intended to include nonexclusive inclusions, thereby ensuring that a process, method, commodity or device including a series of elements not only includes those elements, but also includes other elements which are not clearly listed, or further includes elements inherent to the process, the method, the commodity or the device. Without more restrictions, an element defined by statement "including a/an" does not exclude existence of another same element in a process, method, commodity or device including the element.

The above is only the embodiment of the present disclosure and not intended to limit the present disclosure. Those skilled in the art may make various modifications and variations to the present disclosure. Any modifications, equivalent replacements, improvements and the like made within the spirit and principle of the present disclosure shall fall within the scope of the claims of the present disclosure.

**Claims**

1.  A cleaning machine, comprising a handle assembly, a main body, a cleaning assembly, a processing system, and a display arranged on the main body; wherein the display is electrically connected with the processing system, and is configured to display working state information of at least one component provided with the cleaning machine.

2.  The cleaning machine according to claim 1, wherein the display comprises at least one display region, configured to display working state information of different components.

3.  The cleaning machine according to claim 2, wherein the working state information of the at least one component comprises at least one of:

    (1) liquid level information of a liquid storage apparatus;
    (2) cleanliness information of a cleaning object achieved by the cleaning assembly;
    (3) electric power information of a power supply unit;
    (4) self-cleaning information of the cleaning machine;
    (5) power information of a main motor;
    (6) blocking information of the cleaning assembly; and
    (7) working state information of a communication assembly.

4.  The cleaning machine according to claim 2, wherein the at least one display region comprises: a first display region formed by multiple first display tubes, configured to display cleanliness information of a cleaning object achieved by the cleaning assembly under a control of the processing system.

5.  The cleaning machine according to claim 4, wherein the multiple first display tubes are different in color, and configured to display different color-brightness-shape combinations under the control of the processing system, and wherein the different color-brightness-shape combinations represent different cleanliness of the cleaning object achieved by the cleaning assembly; or, the multiple first display tubes are the same in color, and configured to display different shapes and/or brightness under the control of the processing system, and wherein the different shapes and/or brightness represent different cleanliness of the cleaning object achieved by the cleaning assembly.

6.  The cleaning machine according to claim 4, wherein the multiple first display tubes are arranged in an array form or distributed along an edge of the display.

7.  The cleaning machine according to claim 4, wherein a suction passage and recycling tank sequentially connected with the cleaning assembly are further arranged on the main body, and wherein dirty liquid on the cleaning object is sucked by a suction nozzle on the cleaning assembly and delivered into the recycling tank through the suction passage;

    the cleaning machine further comprises a cleanliness detector, partially or completely arranged on a circulation path of the dirty liquid and configured to detect and provide a physical property value of the dirty liquid for the processing system; and
    the processing system is configured to determine cleanliness of the cleaning object achieved by the cleaning assembly according to the physical property value and control the multiple first display tubes to display a color-brightness-shape combination adapted to the cleanliness of the cleaning object.

8.  The cleaning machine according to claim 2, wherein the at least one display region further comprises a second display region formed by a first indicator lamp, and the first indicator lamp is on when a self-cleaning function of the cleaning machine is used.

9.   The cleaning machine according to claim 8, wherein the processing system is further configured to execute the following operations:

   when time that the cleaning machine executes a cleaning task on a cleaning object reaches preset time, starting the self-cleaning function of the cleaning machine, and controlling the first indicator lamp to be turned on; or, when it is detected that a self-cleaning function control switch is turned on, starting the self-cleaning function of the cleaning machine, and controlling the first indicator lamp to be turned on.

10.   The cleaning machine according to claim 2, wherein the at least one display region further comprises a third display region configured to display liquid level information of a liquid storage apparatus of the cleaning machine.

11.   The cleaning machine according to claim 10, wherein the third display region comprises a first subregion formed by at least one second indicator lamp, configured to display different liquid level states of the liquid storage apparatus under the control of the processing system.

12.   The cleaning machine according to claim 11, wherein the at least one second indicator lamp comprises a first-type indicator lamp and a second-type indicator lamp;

   the first-type indicator lamp is configured to be turned on or flicker when clean liquid in a solution tank of the cleaning machine is lower than a set first liquid level threshold so as to give a user a prompt that the solution tank is in a liquid-deficient state; the second-type indicator lamp is configured to be turned on or flicker when dirty liquid in a recycling tank of the cleaning machine is higher than a set second liquid level threshold so as to give the user a prompt that the recycling tank is in a full-liquid-level state; the first liquid level threshold is lower than the second liquid level threshold; and the first-type indicator lamp and the second-type indicator lamp are distributed in the same row or column.

13.   The cleaning machine according to claim 10, wherein the third display region further comprises a second subregion formed by at least one first nixie tube, configured to display a liquid level value of the liquid storage apparatus under the control of the processing system.

14.   The cleaning machine according to claim 2, wherein the at least one display region further comprises a fourth display region formed by multiple second display tubes, configured to display power of a main motor under the control of the processing system, and wherein the number of on-state display tubes in the multiple second display tubes is positively related to the power of the main motor.

15.   The cleaning machine according to claim 14, wherein the multiple second display tubes are distributed in rows, in columns, annularly, or in a matrix.

16.   The cleaning machine according to claim 2, wherein the at least one display region further comprises a fifth display region, configured to display electric power of a power supply unit of the cleaning machine under the control of the processing system.

17.   The cleaning machine according to claim 16, wherein the fifth display region comprises a third subregion formed by multiple second nixie tubes, configured to display a percentage of the electric power of the power supply unit under the control of the processing system.

18.   The cleaning machine according to claim 16, wherein the fifth display region further comprises a fourth subregion formed by multiple third indicator lamps of different colors, configured to display a color adapted to the electric power of the power supply unit under the control of the processing system.

19.   The cleaning machine according to claim 1, wherein the display is arranged at a top or front of the main body.

20.   The cleaning machine according to claim 19, wherein the display is arranged above a liquid storage apparatus; or, a plane where the display is located is perpendicular to an axis of the main body.

21.   The cleaning machine according to claim 19, wherein the display is retractably arranged at the top or front of the main body.

22. A cleaning device, comprising a main body and a display arranged on the main body, wherein the display is electrically connected with a processing system, and is configured to display related state information of the cleaning device during use;

and the related state information of the cleaning device during use comprises at least one of:

(1) capacity information of a recycling tank,
(2) liquid level information of a solution tank,
(3) cleanliness information of a cleaning object achieved by the cleaning assembly,
(4) electric power information of a power supply unit,
(5) self-cleaning information of the cleaning device,
(6) power information of a main motor,
(7) blocking information of the cleaning assembly, and
(8) working state information of a communication assembly.

23. An information display method, comprising:

acquiring working state information of at least one component on a cleaning device; and
displaying the working state information of the at least one component on a display,
wherein the working state information of the at least one component comprises at least one of:

(1) capacity information of a recycling tank;
(2) liquid level information of a solution tank;
(3) cleanliness information of a cleaning object achieved by a cleaning assembly;
(4) electric power information of a power supply unit;
(5) self-cleaning information of the cleaning device;
(6) power information of a main motor;
(7) blocking information of the cleaning assembly; and
(8) working state information of a communication assembly.

24. A computer-readable storage medium storing a computer instruction, wherein, when the computer instruction is executed by one or more processors, the one or more processors are caused to execute the steps in the method according to claim 23.

25. A cleaning device, comprising:

a liquid storage apparatus, a non-contact liquid detection apparatus, and a control apparatus; wherein,
the non-contact liquid detection apparatus is arranged at an outer side of the liquid storage apparatus, and is configured to detect liquid level information of liquid in the liquid storage apparatus; and
the control apparatus is electrically connected with the non-contact liquid detection apparatus, and is configured to calculate a liquid storage state of the liquid storage apparatus according to the liquid level information and output a control instruction corresponding to the liquid storage state.

26. The device according to claim 25, wherein the non-contact liquid detection apparatus comprises at least one liquid level detection sensor;

the at least one liquid level detection sensor is arranged on an outer wall of the liquid storage apparatus or a side wall of a machine body of the cleaning device; and the side wall of the machine body is close to the outer wall of the liquid storage apparatus.

27. The device according to claim 26, wherein the at least one liquid level detection sensor comprises at least one liquid level detection sensor group;

the at least one liquid level detection sensor group is scattered on an outer wall of the liquid storage apparatus in at least one direction or a side wall of the machine body of the cleaning device in at least one direction; and the at least one direction comprises at least one of a front-side direction, a rear-side direction, a left-side direction, and a right-side direction.

28. The device according to claim 27, wherein each liquid level detection sensor group is arranged on the outer wall of the liquid storage apparatus or the side wall of the machine body in a height direction of the liquid storage apparatus.

**29.** The device according to claim 28, wherein each liquid level detection sensor group comprises a capacitance sensor; and wherein a detection range of the capacitance sensor covers at least one of a storage upper limit position and storage lower limit position of the liquid storage apparatus.

**30.** The device according to claim 28, wherein each liquid level detection sensor group comprises multiple capacitance sensors; and in the multiple capacitance sensors, a detection range of at least one capacitance sensor covers a storage upper limit position of the liquid storage apparatus, and/or a detection range of at least one capacitance sensor covers a storage lower limit position of the liquid storage apparatus.

**31.** The device according to any one of claims 26-30, wherein the non-contact liquid detection apparatus further comprises at least one angle sensor; and the at least one angle sensor is arranged at the outer side of the liquid storage apparatus or on the cleaning device, and is configured to detect an inclination angle of the liquid storage apparatus.

**32.** The device according to claim 31, wherein the control apparatus is configured to calculate at least one of a liquid surface position, liquid volume and liquid surface inclination angle of the liquid in the liquid storage apparatus according to an electrical signal output by the at least one liquid level detection sensor and the angle detected by the at least one angle sensor, and wherein the electrical signal output by the at least one liquid level detection sensor changes with a liquid level.

**33.** The device according to any one of claims 25-30, further comprising a multimedia output apparatus connected with the control apparatus; wherein the multimedia output apparatus is configured to output the liquid storage state of the liquid storage apparatus in a voice broadcast or display manner according to the control instruction output by the control apparatus and corresponding to the liquid storage state.

**34.** The device according to claim 33, wherein the multimedia output apparatus comprises at least one of a display screen, a nixie tube, and an audio device.

**35.** The device according to any one of claims 25-30, wherein the control apparatus is further configured to:

output an instruction of controlling a vacuum-source fan of the cleaning device to be turned off when time that a liquid surface inclination angle of the liquid in the liquid storage apparatus is kept larger than a set angle threshold is greater than a first time threshold; and/or, output an instruction of turning off the cleaning device when time that a liquid surface position in the liquid storage apparatus is kept in a rest state is greater than a second time threshold.

**36.** A control method for a cleaning device, the cleaning device comprising a liquid storage apparatus, comprising:

acquiring liquid level information detected by a non-contact liquid level detection apparatus arranged at an outer side of the liquid storage apparatus; calculating a liquid storage state of the liquid storage apparatus according to the liquid level information; and controlling correspondingly the cleaning device according to the liquid storage state.

**37.** The method according to claim 36, wherein the acquiring liquid level information detected by a non-contact liquid level detection apparatus arranged at an outer side of the liquid storage apparatus comprises at least one of:

acquiring an electrical signal output by at least one liquid level detection sensor in the non-contact liquid detection apparatus and changing with a liquid level; and acquiring an angle detected by at least one angle sensor in the non-contact liquid detection apparatus.

**38.** The method according to claim 37, wherein the calculating a liquid storage state of the liquid storage apparatus according to the liquid level information comprises: calculating at least one of a liquid surface position, liquid volume and liquid surface inclination angle of liquid in the liquid storage apparatus according to the electrical signal output by the at least one liquid level detection sensor and changing with the liquid level and the angle detected by the at least one angle sensor.

**39.** The method according to any one of claims 36-38, wherein the controlling correspondingly the cleaning device according to the liquid storage state comprises at least one of the following operations:

controlling a multimedia output apparatus of the cleaning device according to the liquid volume in the liquid storage apparatus to output a used capacity and/or remaining capacity of the liquid storage apparatus;

turning off a power supply of the cleaning device when the liquid volume in the liquid storage apparatus reaches a set upper limit threshold or lower limit threshold;

turning off a power supply of a vacuum-source fan of the cleaning device when the liquid volume in the liquid storage apparatus reaches the set upper limit threshold or lower limit threshold;

controlling the multimedia output apparatus of the cleaning device to output liquid surface inclination risk early-warning information when the liquid surface inclination angle of the liquid in the liquid storage apparatus is larger than a set angle threshold;

turning off the power supply of the vacuum-source fan of the cleaning device when time that the liquid surface inclination angle of the liquid in the liquid storage apparatus is kept larger than the set angle threshold is greater than a first time threshold; and

turning off the cleaning device when time that the liquid surface position in the liquid storage apparatus is kept in a rest state is greater than a second time threshold.

40. A computer-readable storage medium storing a computer program, wherein, when the computer program is executed, the steps in the method according to any one of claims 36-39 are implemented.

41. A cleaning device, comprising:

a liquid storage apparatus;

a liquid spraying apparatus;

a liquid flow passage, connected between the liquid storage apparatus and the liquid spraying apparatus; and

a detection module, arranged at the liquid flow passage and configured to detect liquid in the liquid flow passage so as to determine whether the liquid flow passage is in a water-filled state or water-free state.

42. The cleaning device according to claim 41, wherein a detection cavity is formed in the liquid flow passage, and the detection module is arranged at the detection cavity.

43. The cleaning device according to claim 42, wherein a cross-sectional area of the detection cavity is smaller than that at another position on the liquid flow passage.

44. The cleaning device according to claim 42, wherein the detection module is arranged on a side wall or bottom wall of the detection cavity.

45. The cleaning device according to claim 42, wherein the detection cavity comprises a straight cavity; and/or, the detection cavity comprises a curved cavity curved in a liquid flow direction.

46. The cleaning device according to claim 45, wherein a thickness of the detection cavity ranges from 1 mm to 1.5 mm; a length of the detection cavity ranges from 15 mm to 25 mm; and a width of the detection cavity ranges from 5 mm to 15 mm.

47. The cleaning device according to claim 42, wherein a water pipe is arranged between the liquid storage apparatus and the liquid spraying apparatus; and an inner cavity of the water pipe is communicated with that of the detection cavity to form the liquid flow passage.

48. The cleaning device according to claim 42, wherein the detection cavity comprises a water inlet end, a main portion, and a water outlet end;

a cross-sectional area of the water inlet end gradually decreases from a direction away from the main portion to a direction close to the main portion; and a cross-sectional area of the water outlet end gradually increases from the direction close to the main portion to the direction away from the main portion.

49. The cleaning device according to claim 41, wherein a first water outlet, a second water outlet and a third water outlet are formed in a bottom of the liquid storage apparatus; the second water outlet is located in the middle of the bottom of the liquid storage apparatus; and the first water outlet and the third water outlet are located at front and rear sides of the second water outlet respectively.

50. The cleaning device according to any one of claims 42-49, further comprising a control element, wherein the detection module is electrically connected with the control element; and

the control element is configured to correspondingly control the cleaning device according to state information detected by the detection module, the state information comprising the water-filled state and the water-free state.

51. The cleaning device according to claim 50, wherein the control element comprises a circuit board; an opening is formed in a side portion of the detection cavity; a side cover is arranged at the opening; one side of the side cover is detachably connected with an open end of the detection cavity in a sealing manner; and an accommodating space for accommodating the circuit board is formed at the other side of the side cover.

52. The cleaning device according to claim 50, further comprising an alarming apparatus, electrically connected with the control element;

wherein the control element controls the alarming apparatus to send an alarming signal when the liquid flow passage is in the water-free state.

53. The cleaning device according to claim 50, wherein the detection module comprises a liquid level detection sensor.

54. The cleaning device according to claim 53, wherein the detection module is a contact liquid level detection sensor; the contact liquid level detection sensor comprises a sensing electrode; and the sensing electrode extends into the liquid flow passage, and is configured to contact with the liquid in the liquid flow passage.

55. The cleaning device according to claim 53, wherein the detection module is a non-contact liquid level sensor, and the non-contact liquid level sensor is arranged on an outer wall of the liquid flow passage.

56. A control method for a cleaning device, the cleaning device comprising a liquid storage apparatus, a liquid spraying apparatus, a liquid flow passage connected between the liquid storage apparatus and the liquid spraying apparatus, a detection module, and a control element, comprising:

acquiring, by the control element, state information of the liquid flow passage detected by the detection module arranged at the liquid flow passage, the state information comprising a water-filled state and a water-free state; and

controlling correspondingly, by the control element, the cleaning device according to the state information.

57. The control method for the cleaning device according to claim 56, wherein the correspondingly controlling, by the control element, the cleaning device according to the state information comprises:

controlling, by the control element, an alarming apparatus to alarm when the state information is the water-free state;

and/or, controlling, by the control element, the cleaning device to be turned off when the state information is the water-free state.

58. A computer-readable storage medium storing a computer program, wherein, when the computer program is executed, the steps in the method according to claim 56 or 57 are implemented.

59. A cleaning device, comprising a floor brush, a suction passage and a recycling tank sequentially connected, wherein dirty liquid on a cleaning object is sucked by a suction nozzle on the floor brush and delivered into the recycling tank through the suction passage;

the cleaning device further comprises a processing system and a first detector; the first detector is partially or completely arranged on a circulation path of the dirty liquid, and is configured to detect and provide a physical property value of the dirty liquid for the processing system; and

the processing system is configured to determine cleanliness of the cleaning object according to the physical property value.

60. The cleaning device according to claim 59, wherein at least one part of a cavity of the floor brush, the suction nozzle of the floor brush, the suction passage and the recycling tank is provided with at least one such first detector.

61. The cleaning device according to claim 59 or 60, wherein the first detector comprises a light source and a photo-detector;

an optical signal emitted by the light source arrives at the photo-detector after passing through the dirty liquid; the photo-detector converts the arriving optical signal into a first electrical signal and outputs the first electrical signal to the processing system, the first electrical signal reflecting an optical property of the dirty liquid; and the processing system is specifically configured to calculate an optical property value of the dirty liquid according to the first electrical signal and determine the cleanliness of the cleaning object according to the optical property value.

62. The cleaning device according to claim 61, wherein the light source is arranged opposite to the photo-detector, and the optical signal emitted by the light source is transmitted to the photo-detector by the dirty liquid;

or,

the light source is arranged at the same side as the photo-detector, and the optical signal emitted by the light source is reflected to the photo-detector by the dirty liquid.

63. The cleaning device according to claim 61, wherein the light source is a LED light source; the photo-detector is a color sensor; the color sensor converts the arriving optical signal into a RGB voltage and outputs the RGB voltage to the processing system; and

the processing system is specifically configured to calculate a color of the dirty liquid according to the RGB voltage and determine the cleanliness of the cleaning object according to the color of the dirty liquid.

64. The cleaning device according to claim 61, wherein the processing system is further configured to:

before the cleaning device executes a cleaning task on the cleaning object, adjust brightness of the light source until a reference electrical signal output by the photo-detector meets a set requirement; and

if the reference electrical signal output by the photo-detector does not meet the set requirement when the brightness of the light source is adjusted to a maximum, output first prompting information so as to prompt a user to clean the circulation path of the dirty liquid.

65. The cleaning device according to claim 61, wherein the processing system, when determining the cleanliness of the cleaning object, is specifically configured to match the optical property value in a known corresponding relationship between an optical property value and a cleanliness grade so as to determine a cleanliness grade of the cleaning object.

66. The cleaning device according to claim 59 or 60, wherein the first detector comprises a first conductor group and a first detection circuit, wherein the first conductor group is arranged on the circulation path of the dirty liquid;

the first detection circuit is electrically connected between the first conductor group and the processing system, and is configured to generate and output a second electrical signal to the processing system when the first conductor group contacts with the dirty liquid, the second electrical signal reflecting an electrical property of the dirty liquid; and

the processing system is specifically configured to determine the cleanliness of the cleaning object according to the second electrical signal.

67. The cleaning device according to claim 66, wherein the first conductor group comprises a conductor A and conductor B which do not contact with each other; the first detection circuit comprises a voltage detection circuit;

a power supply end of the voltage detection circuit is electrically connected with the conductor A; a grounding end and output end of the voltage detection circuit are electrically connected with the conductor B respectively; and the output end of the voltage detection circuit is electrically connected to the processing system.

68. The cleaning device according to claim 67, wherein the first detection circuit further comprises a buffer circuit;

an input end of the buffer circuit is electrically connected with the output end of the voltage detection circuit; and an output end of the buffer circuit is electrically connected to the processing system.

69. The cleaning device according to claim 68, wherein the buffer circuit comprises an operational amplifier and a RC filter circuit;

an in-phase input end of the operational amplifier is electrically connected with the output end of the voltage detection circuit, while an inverting input end and an output end are electrically connected;

the RC filter circuit consists of a series-wound resistor R1 and capacitor C1, and is connected in parallel between the output end of the operational amplifier and the ground; and a series-connection point of the resistor R1 and the capacitor C1 is electrically connected with the processing system.

70. The cleaning device according to claim 68, wherein the first detection circuit further comprises a variable resistance circuit;

    a first end of the variable resistance circuit is electrically connected with a reference sampling resistor in the voltage detection circuit, while a second end is electrically connected with the processing system, and a third end is grounded; and
    the processing system is further configured to adjust resistance of the variable resistance circuit so as to adjust overall resistance of the first detection circuit to reference resistance.

71. The cleaning device according to claim 70, wherein the variable resistance circuit comprises multiple series-wound optional sampling resistors, wherein the multiple optional sampling resistors are connected in series between the reference sampling resistor and the ground; an N-MOS transistor is connected in parallel with each series-connection point of the resistors, and a drain of each N-MOS transistor is electrically connected with the series-connection point; a source of each N-MOS transistor is grounded as the third end; and a gate of each N-MOS transistor is electrically connected with the processing system as the second end.

72. The cleaning device according to claim 66, wherein the processing system is specifically configured to determine the cleanliness of the cleaning object according to a difference between the second electrical signal and a reference electrical signal.

73. The cleaning device according to claim 72, wherein the processing system comprises a processor; and
    the processor is specifically configured to match the difference between the second electrical signal and the reference electrical signal in a known corresponding relationship between an electrical signal difference and a cleanliness grade so as to determine a cleanliness grade of the cleaning object.

74. The cleaning device according to claim 73, wherein the processing system further comprises a differential operational circuit; and
    a first input end of the differential operational circuit is connected to an output end of the first detection circuit, and is configured to receive the second electrical signal; a second input end of the differential operational circuit receives the reference electrical signal; and an output end of the differential operational circuit is electrically connected with the processor, and is configured to output the difference between the second electrical signal and the reference electrical signal to the processor.

75. The cleaning device according to claim 72, further comprising a water outlet pipeline and solution tank which are sequentially connected with a spray nozzle of the floor brush, wherein clean liquid in the solution tank is delivered into the spray nozzle through the water outlet pipeline so as to be sprayed onto the cleaning object by the spray nozzle;

    the cleaning device further comprises a second conductor group and a second detection circuit; the second conductor group is arranged on a circulation path of the clean liquid; and
    the second detection circuit is electrically connected between the second conductor group and the processing system, and is configured to generate and output the reference electrical signal to the processing system when the second conductor group contacts with the clean liquid.

76. The cleaning device according to claim 61, wherein the first detector further comprises a first conductor group and a first detection circuit, wherein the first conductor group is arranged on the circulation path of the dirty liquid;

    the first detection circuit is electrically connected between the first conductor group and the processing system, and is configured to generate and output a second electrical signal to the processing system when the first conductor group contacts with the dirty liquid, the second electrical signal reflecting an electrical property of the dirty liquid; and
    the processing system is specifically configured to determine the cleanliness of the cleaning object according to the second electrical signal and the optical property value.

77. The cleaning device according to claim 59 or 60, wherein the processing system is further configured to adjust a working state of the cleaning device according to the cleanliness of the cleaning object.

**78.** The cleaning device according to claim 77, wherein the processing system, when adjusting the working state of the cleaning device, is specifically configured to execute at least one of the following operations:

adjusting power of a water pump of the cleaning device to that adapted to the cleanliness of the cleaning object according to the cleanliness of the cleaning object;
adjusting power of a main motor and/or a floor brush motor of the cleaning device to that adapted to the cleanliness of the cleaning object according to the cleanliness of the cleaning object; and
adjusting task execution time of the cleaning device to that adapted to the cleanliness of the cleaning object according to the cleanliness of the cleaning object.

**79.** A cleanliness detection method, applied to a cleaning device, comprising:

receiving a physical property value, provided by a first detector, of dirty liquid on a cleaning object; and
determining cleanliness of the cleaning object according to the physical property value of the dirty liquid,
wherein the dirty liquid is sucked by a suction nozzle on a floor brush of the cleaning device and delivered into a recycling tank of the cleaning device through a suction passage in the cleaning device; and the first detector is partially or completely arranged on a circulation path of the dirty liquid.

**80.** The method according to claim 79, wherein the determining cleanliness of the cleaning object according to the physical property value comprises:

calculating an optical property value of the dirty liquid according to a first electrical signal provided by the first detector, the first electrical signal reflecting an optical property of the dirty liquid; and
determining the cleanliness of the cleaning object according to the optical property value of the dirty liquid.

**81.** The method according to claim 79, wherein the determining cleanliness of the cleaning object according to the physical property value comprises:
determining the cleanliness of the cleaning object according to a second electrical signal provided by the first detector, the second electrical signal reflecting an electrical property of the dirty liquid.

**82.** The method according to claim 80, wherein the determining the cleanliness of the cleaning object according to the optical property value of the dirty liquid comprises:

determining the cleanliness of the cleaning object according to the optical property value of the dirty liquid and a second electrical signal provided by the first detector,
the second electrical signal reflecting an electrical property of the dirty liquid.

**83.** The method according to any one of claims 79-82, further comprising:
adjusting a working state of the cleaning device according to the cleanliness of the cleaning object.

**84.** The method according to claim 83, wherein the adjusting a working state of the cleaning device according to the cleanliness of the cleaning object comprises at least one of the following operations:

adjusting power of a water pump of the cleaning device to that adapted to the cleanliness of the cleaning object according to the cleanliness of the cleaning object;
adjusting power of a main motor and/or a floor brush motor of the cleaning device to that adapted to the cleanliness of the cleaning object according to the cleanliness of the cleaning object; and
adjusting task execution time of the cleaning device to that adapted to the cleanliness of the cleaning object according to the cleanliness of the cleaning object.

**85.** A computer-readable storage medium storing a computer instruction, wherein, when the computer instruction is executed by one or more processors, the one or more processors are caused to execute the steps in the method according to any one of claims 79-84.

**86.** An operation method, applied to a movable device, the movable device comprising a fluid supply apparatus for spraying first liquid out and a recycling apparatus responsible for recycling second liquid produced by the first liquid, comprising:
responsive to an instruction of instructing the movable device to stop operation, controlling the fluid supply apparatus to stop spraying the first liquid to a target object, controlling the recycling apparatus to continue recycling the second liquid on the target object, and controlling the recycling apparatus to stop recycling the second liquid on the target object when a set condition is satisfied.

87. The method according to claim 86, wherein before responding to the instruction of instructing the movable device to stop operation, further comprising:

detecting a state of an operation stopping button on the movable device, and when it is detected that the operation stopping button is pressed down, determining that the instruction of instructing the movable device to stop operation is received;
or,
monitoring a voice instruction received by the movable device, and when it is monitored that the movable device receives a voice instruction of instructing the movable device to stop operation, determining that the instruction of instructing the movable device to stop operation is received.

88. The method according to claim 86, wherein the controlling the fluid supply apparatus to stop spraying the first liquid comprises: stopping transmitting a first driving signal to a water pump of the fluid supply apparatus such that the fluid supply apparatus stops operation.

89. The method according to claim 86, wherein the controlling the recycling apparatus to continue recycling the second liquid on the target object comprises:
outputting a second driving signal to a motor of the recycling apparatus so as to control the recycling apparatus to continue recycling the second liquid on the target obj ect.

90. The method according to claim 89, wherein a parameter value of the second driving signal is the same as or different from that of a driving signal output to the recycling apparatus before responding to the instruction of instructing the movable device to stop operation.

91. The method according to claim 89, wherein the outputting a second driving signal to a motor of the recycling apparatus comprises:

determining a first target parameter value needed by the second driving signal according to a spraying amount of the fluid supply apparatus before the movable device responds to the instruction of instructing the movable device to stop operation, and outputting the second driving signal to the recycling apparatus according to the first target parameter value;
and/or,
determining a second target parameter value needed by the second driving signal according to wetness of the target object, and outputting the second driving signal to the recycling apparatus according to the second target parameter value.

92. The method according to claim 89, wherein the outputting a second driving signal to a motor of the recycling apparatus comprises:

generating the second driving signal according to a preset third target parameter value, the third target parameter value being different from a parameter value of a driving signal output to the recycling apparatus before responding to the instruction of instructing the movable device to stop operation; and
outputting the second driving signal to the motor of the recycling apparatus according to the third target parameter value.

93. The method according to claim 86, wherein the controlling the recycling apparatus to stop recycling the second liquid on the target object when a set condition is satisfied comprises at least one of the following operations:

controlling the recycling apparatus to stop recycling the second liquid when time that the recycling apparatus continues recycling the second liquid reaches set time;
and
controlling the recycling apparatus to stop recycling the second liquid when wetness of the target object is less than or equal to a set wetness threshold.

94. The method according to claim 86, wherein the movable device is a cleaning device, the cleaning device further comprises a cleaning assembly, and the method further comprises any one of the following operations:

controlling the cleaning assembly to stop operation responsive to the instruction of instructing the device to stop operation; and

controlling the cleaning assembly to continue operation responsive to the instruction of instructing the device to stop operation, and controlling the cleaning assembly to stop operation after the set condition is satisfied.

95. The method according to claim 94, wherein the controlling the cleaning assembly to continue operation comprises: transmitting a third driving signal to a motor of the cleaning assembly so as to control the cleaning assembly to continue operation, a parameter value of the third driving signal being the same as or different from that of a driving signal output to the motor of the cleaning assembly before responding to the instruction of instructing the movable device to stop operation.

96. An operation method, applied to a movable device, the movable device comprising a fluid supply apparatus for spraying first liquid out and a recycling apparatus responsible for recycling second liquid produced by the first liquid, comprising:

responsive to an instruction of instructing the movable device to stop operation, controlling the fluid supply apparatus to continue spraying the first liquid to a target object according to a reduced spraying amount, controlling the recycling apparatus to continue recycling the second liquid on the target object, and controlling the fluid supply apparatus and the recycling apparatus to stop operation at the same time when a set condition is satisfied.

97. A movable device, comprising: a fluid supply apparatus for spraying first liquid out, a recycling apparatus responsible for recycling second liquid produced by the first liquid, and a control system, wherein the control system is electrically connected with the fluid supply apparatus and the recycling apparatus; and

the control system is configured to, responsive to an instruction of instructing the movable device to stop operation, control the fluid supply apparatus to stop spraying the first liquid to a target object, control the recycling apparatus to continue recycling the second liquid on the target object, and control the recycling apparatus to stop recycling the second liquid on the target object when a set condition is satisfied.

98. A movable device, comprising: a fluid supply apparatus for spraying first liquid out, a recycling apparatus responsible for recycling second liquid produced by the first liquid, and a control system, wherein the control system is electrically connected with the fluid supply apparatus and the recycling apparatus; and

the control system is configured to, responsive to an instruction of instructing the movable device to stop operation, control the fluid supply apparatus to continue spraying the first liquid to a target object according to a reduced spraying amount, control the recycling apparatus to continue recycling the second liquid on the target object, and control the fluid supply apparatus and the recycling apparatus to stop operation at the same time when a set condition is satisfied.

99. A voice interaction method for a cleaning device, comprising:
acquiring a voice interaction triggering event for the cleaning device; controlling a working noise of a load on the cleaning device in a set range; and controlling an audio component on the cleaning device to execute a voice interaction operation corresponding to the voice interaction triggering event.

100. The method according to claim 99, wherein the voice interaction operation comprises at least one of a voice message playing operation and a voice instruction recording operation.

101. The method according to claim 99, wherein the controlling a working noise of a load on the cleaning device in a set range comprises:

controlling a working circuit of the load to be off so as to control the working noise of the load in the set range; or, controlling power of the load to be lower than a set power threshold so as to control the working noise of the load in the set range.

102. The method according to claim 101, wherein the controlling a working circuit of the load to be off comprises:
turning off the working circuit of the load if the load is in a working state; and delaying turning on the working circuit of the load if the load is in a non-working state after the device is turned on.

103. The method according to claim 102, wherein if the load is in the working state, the controlling an audio component on the cleaning device to execute a voice interaction operation corresponding to the voice interaction triggering event comprises:

sending a voice interaction instruction corresponding to the voice interaction triggering event to the audio component if the load stops action after the working circuit is turned off; or,
sending a voice interaction instruction corresponding to the voice interaction triggering event to the audio component after off-time of the working circuit reaches set time.

104. The method according to claim 102, wherein if the load is in the non-working state after the device is turned on, the controlling an audio component on the cleaning device to execute a voice interaction operation corresponding to the voice interaction triggering event comprises:
sending a voice interaction instruction corresponding to the voice interaction triggering event to the audio component when the working circuit of the load is delayed to be turned on.

105. The method according to claim 101, wherein the controlling power of the load to be lower than a set power threshold comprises:

reducing the power of the load if the load is in a working state; and
the controlling an audio component on the cleaning device to execute a voice interaction operation corresponding to the voice interaction triggering event comprises:

sending a voice interaction instruction corresponding to the voice interaction triggering event to the audio component after the power of the load is reduced to a first power threshold.

106. The method according to claim 101, wherein the controlling power of the load to be lower than a set power threshold comprises:

if the load is in a non-working state after the device is turned on, turning on the circuit of the load, and increasing the power of the load according to a set power increasing speed; and
the controlling an audio component on the cleaning device to execute a voice interaction operation corresponding to the voice interaction triggering event comprises:
sending a voice interaction instruction corresponding to the voice interaction triggering event to the audio component before the power of the load is increased to a second power threshold.

107. The method according to any one of claims 101-106, wherein after the controlling an audio component on the cleaning device to execute a voice interaction operation corresponding to the voice interaction triggering event, further comprising:

receiving an ending message of the voice interaction operation;
judging whether the voice interaction triggering event is a power-off event; and
if NO, controlling the working circuit of the load to be on, or controlling the power of the load to be more than or equal to the set power threshold.

108. The method according to any one of claims 99-106, wherein the load comprises at least one of a main motor, rolling brush motor, water pump and action wheel on the cleaning device.

109. The method according to any one of claims 99-106, wherein the voice interaction triggering event comprises at least one of:
a power-on event of the cleaning device, a power-off event of the cleaning device, a main motor failure event of the cleaning device, a rolling brush motor failure event of the cleaning device, a charger failure event of the cleaning device, a dust sensor failure event of the cleaning device, a network configuration event of the cleaning device, an Internet of things-based connection event of the cleaning device, a remaining battery capacity updating event of the cleaning device, a surplus water updating event of a solution tank of the cleaning device, an available capacity updating event of a recycling tank of the cleaning device, a rolling brush motor blocking event of the cleaning device, an event that a rolling brush of the cleaning device is not mounted, a water pump failure event of the cleaning device, an action wheel state updating event of the cleaning device, and a voice recording function wakeup event of the cleaning device.

110. A cleaning device, comprising a body, wherein a load, a controller and an audio component are mounted to the body;

the controller is configured to, responsive to a voice interaction triggering event for the cleaning device, control a working noise of the load on the cleaning device in a set range and send a voice interaction instruction to the audio component; and
the audio component is configured to execute a voice interaction operation corresponding to the voice interaction triggering event according to the voice interaction instruction.

111. The cleaning device according to claim 110, wherein the controlling a working noise of the load on the cleaning device in a set range comprises:

controlling a working circuit of the load to be off so as to control the working noise of the load in the set range;
or, controlling power of the load to be lower than a set power threshold so as to control the working noise of the load in the set range.

112. The cleaning device according to claim 110, wherein the voice interaction triggering event comprises:

a network configuration event, wherein the controller is configured to send a voice interaction instruction of broadcasting that network configuration succeeds to the audio component responsive to the network configuration event of the cleaning device;
or, an Internet of things-based connection event, wherein the controller is configured to send a voice interaction instruction of broadcasting that Internet of things-based connection succeeds to the audio component responsive to the Internet of things-based connection event of the cleaning device.

113. The cleaning device according to claim 110, wherein the voice interaction triggering event comprises:

a power-on event, wherein the controller is configured to, responsive to the power-on event, delay turning on a working circuit of the load and send a voice interaction instruction of broadcasting a power-on prompting message to the audio component, or turn on the circuit of the load, increase power of the load according to a set power increasing speed and send a voice interaction instruction of broadcasting a power-on prompting message to the audio component;
or, a power-off event, wherein the controller is configured to, responsive to the power-off event, turn off a working circuit of the load, and send a voice interaction instruction of broadcasting a power-off prompting message to the audio component when the load stops action or after off-time of the working circuit of the load reaches set time.

114. The cleaning device according to claim 110, wherein the voice interaction triggering event comprises:

a main motor failure event, wherein the controller is configured to send a voice interaction instruction of broadcasting that a main motor fails to the audio component responsive to a main motor failure of the cleaning device;
or, a rolling brush motor failure event, wherein the controller is configured to send a voice interaction instruction of broadcasting that a rolling brush motor fails to the audio component responsive to a rolling brush motor failure of the cleaning device;
or, a charger failure event, wherein the controller is configured to send a voice interaction instruction of broadcasting that a charger fails to the audio component responsive to the charger failure event of the cleaning device;
or, a water pump failure event, wherein the controller is configured to send a voice interaction instruction of broadcasting that a water pump fails to the audio component responsive to the water pump failure event of the cleaning device;
or, a dust sensor failure event, wherein the controller is configured to send a voice interaction instruction of broadcasting that a dust sensor fails to the audio component responsive to the dust sensor failure event of the cleaning device.

115. The cleaning device according to claim 110, wherein a solution tank and a liquid level detection apparatus are further mounted to the body;

the liquid level detection apparatus is configured to detect a liquid level of the solution tank and send a detected liquid level value to the controller; and
the controller is configured to judge whether surplus water of the solution tank is less than a set water volume threshold according to the liquid level value, and if YES, control the working noise of the load in the set range and send a voice interaction instruction of broadcasting the surplus water of the solution tank and/or a prompt that the solution tank is in water deficiency to the audio component.

116. The cleaning device according to claim 110, wherein a recycling tank and a liquid level detection apparatus are further mounted to the body;

the liquid level detection apparatus is configured to detect a liquid level of the recycling tank and send a detected liquid level value to the controller; and

the controller is configured to judge whether an available capacity of the recycling tank is higher than a set capacity threshold according to the solution value, and if YES, control the working noise of the load in the set range and send a voice interaction instruction of broadcasting the available capacity of the recycling tank and/or a prompt that the recycling tank is full of water to the audio component.

117. The cleaning device according to claim 110, wherein the controller is further configured to:

acquire a remaining battery capacity of a battery component on the cleaning device, and when the remaining battery capacity is lower than a set battery capacity threshold, control the working noise of the load in the set range and send a voice interaction instruction of broadcasting a battery capacity early-warning to the audio component; or,

acquire a rotational state of a rolling brush motor, and when the rolling brush motor is blocked, control the working noise of the load in the set range and send a voice interaction instruction of broadcasting that the rolling brush motor is blocked to the audio component; or

acquire a mounting state of a rolling brush motor, and when the rolling brush is not mounted, control the working noise of the load in the set range and send a voice interaction instruction of broadcasting that the rolling brush motor is not mounted to the audio component.

118. The cleaning device according to claim 110, wherein the controller is further configured to, responsive to a voice recording function wakeup event, control the working noise of the load in the set range and send a voice interaction instruction of inputting an external audio signal to the audio component.

Display 15

11

12

14

13

FIG. 1a

15f
15b
15e1 — 15e
15g
15a
15c1 — 15c
15c2
Low-power indicator lamp
High-power indicator lamp
15d

FIG. 1b

15f 15b 15e 15e 15e

15g

15a

15c1
15c
15c2

Low-power
indicator lamp

High-power
indicator lamp

15d

FIG. 1c

Cleaning machine

Forward

Recycling tank 17

Front

Back

Processing
system 14

Cleaning assembly 13

Suction
passage 16

Dirty liquid

Cleaning object

Cleanliness detector 18

Suction
nozzle 13a

FIG. 2a

Light source 18a · · · · · · Dirty liquid

Transmit

Photo-detector 18b

FIG. 2b

Dirty liquid

Reflect

Light source 18a · · · · · · Photo-detector 18b

FIG. 2c

Light source 18a

Dirty liquid

Transmit

Photo-detector 18b

FIG. 2d

Dirty liquid

Transmit

Light source 18a · · · · · · Photo-detector 18b

FIG. 2e

Photo-detector 18b

Light source 18a

Reflect

Dirty liquid

FIG. 2f

Dirty liquid

First conductor group 181

First detection circuit 182

Second electrical signal

Processing system 14

FIG. 2g

181

Dirty liquid

181

FIG. 2h

FIG. 2i

FIG. 2j

FIG. 2k

FIG. 2l

FIG. 2m

FIG. 2n

FIG. 2o

FIG. 2p

FIG. 2q

Dimension chart

FIG. 2r

FIG. 2s

FIG. 3a

FIG. 3b

FIG. 3c

FIG. 4a

FIG. 4b

FIG. 4c

FIG. 4d

FIG. 4e

FIG. 4f

Liquid storage apparatus

117a

Inflow direction of the liquid

FIG. 4g

117b

Processing system  14

Liquid

FIG. 5a

Forward          Backward

Generatrix

Right

Storage
upper limit

117b

Front          Back

Storage lower limit

Left

FIG. 5b

Forward          Backward

Generatrix

Storage
upper limit

Right

117b

Front          Rear

Storage lower limit          Left

FIG. 5c

Processing system   14 — Main motor current detection circuit 117c — Main motor   120

FIG. 6a

120a

P+    Q14    C28    D15    M+

Main motor 120

Q12

R59

R58    D14

R57

M-

Q13    R55   Second PWM signal

R56

GND

117c2

AR1

VCC    GND    R60    117c1

C31

GND

Processing system 14    R64

C30    C29    R61

R63

R62

GND

GND

FIG. 6b

Processing system   14 — Power supply unit voltage detection circuit 119 — Power supply unit

FIG. 6c

113

The processing system controls the main motor to run under power of 90 W — S1

Whether a rotational speed of the main motor is higher than a preset first rotational speed threshold is judged after running for 2s — S2

YES

NO

whether the power of the main motor changes is monitored — S3

YES

whether a rotational speed of the main motor is higher than a rotational speed threshold corresponding to the changed power is judged after running for 2s — S4

YES

NO

NO

A rotational speed of the main motor is detected according to a set sampling period, and a rotational speed increment in each sampling period is calculated — S5

whether the rotational speed increment in each sampling period is more than or equal to a preset increment threshold is judged — S6

NO

YES

The processing system controls the second-type indicator lamp to be turned on or flicker, and controls the cleaning machine to stop — S7

FIG. 6d

15e1

15e2

I88

Remaining working time

15e3

FIG. 7

Acquire working state information of at least one component on a cleaning device — 801

Display the working state information of the at least one component on a display — 802

FIG. 8

91    S1    93

Control apparatus

92
(921)

FIG. 9a

94    91    S2

93

Control apparatus

92
(921)

FIG. 9b

94
92
(921)
91

93

Control
apparatus

S3

FIG. 9c

Handle

Machine body

Front side

Clean water
tank

Push
forwards

Pull
backwards

922

Sewage tank

Rear side

Floor brush

Vacuum-source fan

Ground

FIG. 9d

Handle

Machine body

Clean water tank

922

Sewage tank

Vacuum-source fan

Front side

Rear side

Floor
brush

Push
forwards

Pull
backwards

Ground

FIG. 9e

Handle

Machine body

Clean water
tank

Sewage tank

Right side

Left side

Floor brush

Ground

FIG. 9f

Push forwards    Pull backwards

Right side

921    91

Front
side    Rear
side

Left side

FIG. 10a

Push forwards    Pull backwards

Right side

91

921

Front
side    Rear
side

Left side

FIG. 10b

Push forwards    Pull backwards

Right side

91

921

Front
side

Rear
side

Left side

FIG. 10c

Push forwards    Pull backwards

Right side

91

921

Front side

Rear side

Left side

FIG. 10d

Push forwards    Pull backwards

Right side

91

921

Front
side    Rear
side

Left side

FIG. 10e

Push forwards    Pull backwards

Right side

91

921

Front side    Rear side

Left side

FIG. 10f

Push forwards    Pull backwards

⟷

Generatrix

Right side                                    91

                                              921
Storage
upper limit

Front side                            Rear side

Storage lower limit

Left side

FIG. 11a

Push forwards    Pull backwards

⟷

Generatrix

Right side                                    91

                                              921
Storage
upper limit

Front side                            Rear side

Storage lower limit

Left side

FIG. 11b

P1

91

Front side

Rear side

x1

2R

FIG. 12a

P₁

P₂

x1

x3

x2

α

P₃

FIG. 12b

FIG. 12c

FIG. 12d

FIG 12e

91

93

Control apparatus

Multimedia
output
apparatus

92

95

FIG. 12f

| Acquire liquid level information detected by a non-contact liquid level detection apparatus arranged at an outer side of the liquid storage apparatus | 1301 |

| Calculate a liquid storage state of the liquid storage apparatus according to the liquid level information | 1302 |

| Correspondingly control the cleaning device according to the liquid storage state | 1303 |

FIG. 13

FIG. 14

FIG. 15a

FIG. 15b

FIG. 15c

1411

1412

141

1414

1413

Front

Rear

142

1415

Surface to be cleaned

FIG. 15d

147a

147

148

147b

FIG. 16

147a

147

148

147b

FIG. 17

147a

147c

147 { 147d

147e

145a

148

147b

FIG. 18

147a

147

147b

FIG. 19

147c

147d

147

147e

FIG. 20

147a

147

147b

FIG. 21

143

145a

144

FIG. 22

143

145a

144

FIG. 23

| The control element acquires state information of the liquid flow passage detected by the detection module arranged at the liquid flow passage, the state information including a water-filled state and a water-free state | S2401 |

| The control element correspondingly controls the cleaning device according to the state information | S2402 |

FIG. 24

Cleaning device
S10

Forward

Recycling tank 253

Processing
system
254

Front

Back
Suction
passage 252

Floor brush 251

Cleaning object

Dirty liquid

First detector 255

Suction 251a
nozzle

FIG. 25a

Light 255a   Dirty liquid
source

Transmit

Photo-detector 255b

FIG. 25b

Reflect

Light source 255a   Photo-detector 255b   Dirty liquid

FIG. 25c

Light 255a
source

Transmit

Dirty
liquid

Photo-detector 255b

FIG. 25d

Dirty liquid

Transmit

Photo-detector
255b

Light 255a
source

FIG. 25e

Photo-detector 255b

Light 255a
source

Reflect

Dirty liquid

FIG. 25f

Dirty liquid

First conductor
group
2551

First detection
circuit
2552

Second
electrical
signal

Processing
system
254

FIG. 25g

2551

Dirty liquid

2551

FIG. 25h

Inflow direction
of the liquid

253

Dirty liquid

2551

FIG. 25i

253

Inflow direction
of the liquid

253

Dirty liquid

2551

FIG. 25j

2551

Inflow direction of
the liquid

253

Dirty liquid

FIG. 25k

Dirty liquid

B    A

First conductor
group
2551

+    P

GND

Voltage
detection
circuit
2552a

Q

Processing
system
254

FIG. 25l

FIG. 25m

FIG. 25n

FIG. 25o

FIG. 25p

Power
management
circuit
2511

FIG. 25q

| Receive a physical property value, provided by a first detector, of dirty liquid on a cleaning object | 2601 |

| Determine cleanliness of the cleaning object is determined according to the physical property value of the dirty liquid | 2602 |

FIG. 26

FIG. 27a

FIG. 27b

FIG. 27c

Responsive to an instruction of instructing a movable device to stop operation, control a fluid supply apparatus to stop spraying first liquid to a target object — 2801

Control a recycling apparatus to continue recycling second liquid on the target object — 2802

Control the recycling apparatus to stop recycling the second liquid on the target object when a set condition is satisfied — 2803

FIG. 28

Movable device

Solution tank 294

Recycling apparatus
292

Main 292b
motor

First liquid

Control
system
293

Recycling
tank 295

Suction nozzle 292a

Water 291a
pump

Fluid supply
apparatus
291

Second
liquid

Water 291b
delivery
pipe

Cleaning assembly 296

Target object

FIG. 29

| Responsive to an instruction of instructing a movable device to stop operation, control a fluid supply apparatus to continue spraying first liquid to a target object according to a reduced spraying amount | 3001 |

| Control a recycling apparatus to continue recycling second liquid on the target object | 3002 |

| Control the fluid supply apparatus and the recycling apparatus to stop operation at the same time when a set condition is satisfied | 3003 |

FIG. 30

FIG. 31

FIG. 32

Acquire a voice interaction triggering event for the cleaning device ⌐3301

Controlling a working noise of a load on the cleaning device in a set range ⌐3302

Control an audio component on the cleaning device to execute a voice interaction operation corresponding to the voice interaction triggering event ⌐3303

FIG. 33

## INTERNATIONAL SEARCH REPORT

| | International application No. |
|---|---|
| | **PCT/CN2020/100471** |

**A.    CLASSIFICATION OF SUBJECT MATTER**

A47L 11/28(2006.01)i;  B08B 1/00(2006.01)i;  G01N 21/27(2006.01)i;  G10L 15/22(2006.01)i

According to International Patent Classification (IPC) or to both national classification and IPC

**B.    FIELDS SEARCHED**

Minimum documentation searched (classification system followed by classification symbols)

A47L11/-,  B08B1/-,  G01N21/-,  G10L15/-

Documentation searched other than minimum documentation to the extent that such documents are included in the fields searched

Electronic data base consulted during the international search (name of data base and, where practicable, search terms used)

CNPAT, WPI, EPODOC, CNKI: 添可智能, 清洁程度, 卫生, 清洁, 干净, 程度, 自清洁, 自清洗, 液位, 颜色, 回收, 抽吸, 吸液, 汲液, 存液, 储液, 堵转, 停止, 结束, 终止, 流体, 液流, 控制, 浊度, 等级, 有水, 无水, 显示, 指令, 通道, 亮度, clean???, channel, suck???, absorb+, level, liquid, fluid, water

**C.    DOCUMENTS CONSIDERED TO BE RELEVANT**

| Category* | Citation of document, with indication, where appropriate, of the relevant passages | Relevant to claim No. |
|---|---|---|
| PX | CN 111359921 A (TIANKE INTELLIGENT TECHNOLOGY CO., LTD.) 03 July 2020 (2020-07-03)<br>    claims 1-24 | 1-24 |
| PX | CN 111360014 A (TIANKE INTELLIGENT TECHNOLOGY CO., LTD.) 03 July 2020 (2020-07-03)<br>    claims 25-40 | 25-40 |
| PX | CN 111358380 A (TIANKE INTELLIGENT TECHNOLOGY CO., LTD.) 03 July 2020 (2020-07-03)<br>    claims 41-58 | 41-58 |
| PX | CN 111366546 A (TIANKE INTELLIGENT TECHNOLOGY CO., LTD.) 03 July 2020 (2020-07-03)<br>    claims 59-85 | 59-85 |
| PX | CN 111358392 A (TIANKE INTELLIGENT TECHNOLOGY CO., LTD.) 03 July 2020 (2020-07-03)<br>    claims 86-98 | 86-98 |

☑ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **25 September 2020** | **15 October 2020** |

| Name and mailing address of the ISA/CN | Authorized officer |
|---|---|
| **China National Intellectual Property Administration (ISA/CN)**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

## INTERNATIONAL SEARCH REPORT

| | International application No. |
|---|---|
| | **PCT/CN2020/100471** |

### C. DOCUMENTS CONSIDERED TO BE RELEVANT

| Category* | Citation of document, with indication, where appropriate, of the relevant passages | Relevant to claim No. |
|---|---|---|
| PX | CN 111369989 A (TIANKE INTELLIGENT TECHNOLOGY CO., LTD.) 03 July 2020 (2020-07-03)<br>claims 99-118 | 99-118 |
| X | CN 204744020 U (TIANJIN ANZHENG ELECTRIC POWER HIGH POLYMER MATERIAL CO., LTD.) 11 November 2015 (2015-11-11)<br>description, paragraphs [0002]-[0022], and figure 1 | 1-24, 41-58 |
| Y | CN 204744020 U (TIANJIN ANZHENG ELECTRIC POWER HIGH POLYMER MATERIAL CO., LTD.) 11 November 2015 (2015-11-11)<br>description, paragraphs [0002]-[0022], and figure 1 | 25-40 |
| Y | CN 106679766 A (XI'AN JUN HUI AVIATION TECHNOLOGY CO., LTD.) 17 May 2017 (2017-05-17)<br>description, paragraphs [0015]-[0018], and figures 1-2 | 25-40 |
| X | CN 108720743 A (TVX CLEANING EQUIPMENT CO., LTD.) 02 November 2018 (2018-11-02)<br>description, paragraphs [0021]-[0026], and figure 1 | 59-85 |
| X | CN 107485342 A (IDING DESIGN INC.) 19 December 2017 (2017-12-19)<br>description, paragraphs [0021]-[0033], and figure 1 | 86-98 |
| X | CN 109119078 A (BEIJING ROBOROCK TECHNOLOGY CO., LTD.) 01 January 2019 (2019-01-01)<br>description, paragraphs [0056]-[0139] | 99-118 |
| A | CN 107854057 A (CHANGXING MANERSHEN MACHINERY TECHNOLOGY CO., LTD.) 30 March 2018 (2018-03-30)<br>entire document | 1-118 |
| A | US 2014115816 A1 (SAPPHIRE SCIENTIFIC INC.) 01 May 2014 (2014-05-01)<br>entire document | 1-118 |

Form PCT/ISA/210 (second sheet) (January 2015)

## INTERNATIONAL SEARCH REPORT

International application No.

**PCT/CN2020/100471**

**Box No. III    Observations where unity of invention is lacking (Continuation of item 3 of first sheet)**

This International Searching Authority found multiple inventions in this international application, as follows:

[1]   Independent claim 1 relates to a cleaning machine, independent claim 22 relates to a cleansing device, claim 23 relates to an information display method, independent claim 25 relates to a cleansing device, independent claim 26 relates to a cleansing device control method, independent claim 41 relates to a cleansing device, independent claim 56 relates to a cleansing device control method, independent claim 59 relates to a cleansing device, independent claim 79 relates to a cleanliness measurement method, independent claims 86 and 96 relate to a working method, independent claims 97-98 relate to a mobile device, independent claim 99 relates to a voice interaction method of a cleansing device, and independent claim 110 relates to a cleansing device. Said claims thus relate to the following multiple inventions: claims 1 and 22-23, claims 25 and 36, claims 41 and 56, claims 59 and 79, claims 86 and 96-98, and claims 99-110. The described multiple inventions do not share any same or corresponding special technical features, and thus do not comply with PCT Rule 13.1.

1. ☐   As all required additional search fees were timely paid by the applicant, this international search report covers all searchable claims.

2. ☐   As all searchable claims could be searched without effort justifying additional fees, this Authority did not invite payment of additional fees.

3. ☐   As only some of the required additional search fees were timely paid by the applicant, this international search report covers only those claims for which fees were paid, specifically claims Nos.:

4. ☐   No required additional search fees were timely paid by the applicant. Consequently, this international search report is restricted to the invention first mentioned in the claims; it is covered by claims Nos.:

**Remark on Protest**          ☐   The additional search fees were accompanied by the applicant's protest and, where applicable, the payment of a protest fee.

☐   The additional search fees were accompanied by the applicant's protest but the applicable protest fee was not paid within the time limit specified in the invitation.

☐   No protest accompanied the payment of additional search fees.

Form PCT/ISA/210 (continuation of first sheet) (January 2015)

Form PCT/ISA/210 (patent family annex) (January 2015)

**INTERNATIONAL SEARCH REPORT**
Information on patent family members

International application No.

**PCT/CN2020/100471**

| Patent document cited in search report | | | Publication date (day/month/year) | Patent family member(s) | | | Publication date (day/month/year) |
|---|---|---|---|---|---|---|---|
| CN | 111359921 | A | 03 July 2020 | None | | | |
| CN | 111360014 | A | 03 July 2020 | None | | | |
| CN | 111358380 | A | 03 July 2020 | None | | | |
| CN | 111366546 | A | 03 July 2020 | None | | | |
| CN | 111358392 | A | 03 July 2020 | None | | | |
| CN | 111369989 | A | 03 July 2020 | None | | | |
| CN | 204744020 | U | 11 November 2015 | None | | | |
| CN | 106679766 | A | 17 May 2017 | None | | | |
| CN | 108720743 | A | 02 November 2018 | None | | | |
| CN | 107485342 | A | 19 December 2017 | None | | | |
| CN | 109119078 | A | 01 January 2019 | None | | | |
| CN | 107854057 | A | 30 March 2018 | None | | | |
| US | 2014115816 | A1 | 01 May 2014 | GB | 2521776 | A | 01 July 2015 |
| | | | | WO | 2014066891 | A1 | 01 May 2014 |
| | | | | AU | 2013334023 | A1 | 19 March 2015 |
| | | | | CA | 2884452 | A1 | 01 May 2014 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2019108318104
- CN 2019108599273
- CN 2019109556985
- CN 2019112053375
- CN 2019113104196
- CN 2019113481040